# EUROPEAN PATENT APPLICATION

(11) **EP 3 978 218 A1**
(43) Date of publication of application: **06.04.2022**
(21) Application number: 20861707.6
(22) Date of filing: 20.04.2020
(51) Int. Cl.: B29C 45/44, B29C 33/44

(54) **SLIDE MECHANISM, FIXING MOLD, MOVABLE MOLD, AND MOLDING MOLD**

(30) Priority: 02.09.2019 WO PCT/JP2019/034492; 08.01.2020 WO PCT/JP2020/000217
(71) Applicant: Technocrats Corporation, Minami-ku Hiroshima-shi Hiroshima 732-0824 (JP)
(72) Inventor: SORIMOTO, Masanori, Hiroshima 735-0026 (JP)
(74) Representative: Slingsby Partners LLP
(86) International application number: PCT/JP2020/016996
(87) International publication number: WO 2021/044664

(57) **Abstract**

Provided is a sliding mechanism capable of moving a slider in at least two different directions with a simple structure. The sliding mechanism includes a guide body including a guide unit configured to guide a slider in predetermined directions; and the slider is guided by the guide unit to move in the predetermined directions. The predetermined directions at least include a first direction and a second direction which are different from each other, and the guide unit at least includes a first guide unit configured to guide the slider in the first direction and a second guide unit configured to guide the slider in the second direction.

## Description

### BACKGROUND OF THE INVENTION

### (Field of the Invention)

The present invention relates to a sliding mechanism as well as an undercut processing mechanism, a gate cutting mechanism, a gate pulling mechanism, and a molding mold or molding die including the same.

### (Description of Related Art)

For use in molding dies which mold a molded product including an undercut portion, many undercut processing mechanisms have been developed in accordance with shapes of undercut portions. For example, well-known processing mechanisms include: a processing mechanism having a slide core structure used for a molded product including a hole in a lateral face thereof; and a processing mechanism having a loose core structure used for a molded product including a projection on an inner side of a core thereof.

Further, there is an undercut processing mechanism capable of being compactly incorporated into a mold (for example, see Patent Document 1). The undercut processing mechanism as described in Patent Document 1 includes a slider which supports an undercut molding core, a base member which is slidably coupled to the slider, and a holder, and the undercut processing mechanism is configured to operate in conjunction with an ejector mechanism to move the slider and demold an undercut.

### [Related Document]

### [Patent Document]

[Patent Document 1] JP Laid-open Patent Publication No. 2011-068040

### SUMMARY OF THE INVENTION

As mentioned above, there are various mechanisms for moving a molding core in an undercut processing mechanism. Such a mechanism for moving a core member is also used in, besides an undercut processing mechanism, a gate cutter which cuts a gate inside an injection molding die as well as a cutter which cuts a processing target in a molding die.

If the size of a sliding mechanism for moving a core member such as an undercut molding core, a gate cutter, and a cutter for cutting a processing target can be reduced, a molding die including these components can also be made compact. Further, a sliding mechanism capable of moving a core member in at least two different directions with a simple structure may be employed in various applications.

An object of the present invention is to provide: a sliding mechanism capable of moving a slider in at least two different directions with a simple structure; an undercut processing mechanism, a gate cutting mechanism, and a gate pulling mechanism including the sliding mechanism; a fixed die, a movable die, and a molding die including the same; as well as a molded product.

The present invention provides a sliding mechanism including: a slider; and a guide body including a guide unit configured to guide the slider in predetermined directions. The slider is guided by the guide unit to move in the predetermined directions. The predetermined directions at least include a first direction and a second direction which are different from each other, and the guide unit at least includes: a first guide unit configured to guide the slider in the first direction; and a second guide unit configured to guide the slider in the second direction.

The sliding mechanism according to the present invention may further include an engaging member configured to slidably engage with the slider, and an engaging member guide unit configured to guide the engaging member such that the slider can advance and retract.

In the sliding mechanism according to the present invention, the guide body may include the engaging member guide unit.

In the sliding mechanism according to the present invention, the guide body may be a holder.

The sliding mechanism according to the present invention may be assembled as a single unit.

In the sliding mechanism according to the present invention, the guide unit may be capable of moving the slider in the first direction and subsequently in the second direction or in the second direction and subsequently in the first direction.

In the sliding mechanism according to the present invention, the first direction may extend in one of four shapes including a linear shape, a linear shape having a partially curved part, a curved shape, and a curved shape having a partially linear part, and the second direction may extend in one of four shapes including a linear shape, a linear shape having a partially curved part, a curved shape, and a curved shape having a partially linear part.

In the sliding mechanism according to the present invention, the slider may include an engagement unit configured to slidably engage with the guide unit, wherein the engagement unit may include: a first engagement unit configured to slidably engage with the first guide unit; and a second engagement unit configured to slidably engage with the second guide unit.

In the sliding mechanism according to the present invention, the guide unit may include a recessed groove, and the engagement unit may include a click or a protrusion or a protruding line configured to be slidably fitted into the recessed groove.

In the sliding mechanism according to the present invention, the guide unit may include a click or a protrusion or a protruding line, and the engagement unit may include a recessed groove configured to slidably receive the click or the protrusion or the protruding line.

In the sliding mechanism according to the present invention, the engagement unit may include two or more sliding surfaces configured to come into surface contact with the guide unit, or two or more sliding sides configured to come into line contact with the guide unit, or three or more sliding points configured to come into point contact with the guide unit.

The present invention provides an undercut processing mechanism including the sliding mechanism, the undercut processing mechanism being configured to remove, from an undercut portion of a molded product, a molding core configured to mold the undercut portion.

In the undercut processing mechanism according to the present invention, the guide body may be a holder, the slider may be a sliding piece including the molding core, and the guide unit may be configured to guide the sliding piece such that the molding core is removed from the undercut portion, and the molding core avoids collision with another member.

The undercut processing mechanism according to the present invention may be assembled as a single unit.

The present invention provides a gate cutting mechanism including the sliding mechanism, the gate cutting mechanism being configured to cut a gate connected to a molded product.

In the gate cutting mechanism according to the present invention, the guide body may be a holder, the slider may be a sliding piece including a cutter configured to cut the gate, and the guide unit may be configured to guide the sliding piece such that the cutter cuts the gate, and the cutter after cutting the gate is moved away from the gate.

The gate cutting mechanism according to the present invention may include a sliding piece including a cutter configured to cut the gate and a pressing unit configured to press an area in the vicinity of the gate of the molded product so as to prevent the area in the vicinity of the gate from moving when the cutter cuts the gate, wherein the guide body may be a holder, the slider may be a pressing unit, and the guide unit may be configured to guide the pressing unit so as to prevent the area in the vicinity of the gate from moving when the cutter cuts the gate and to guide the pressing unit such that the pressing unit is moved away from the molded product after the cutter cuts the gate.

In the gate cutting mechanism according to the present invention, the guide body may be a holder, the slider may be a cutting piece configured to cut the gate, and the guide unit may be configured to guide the cutting piece such that the cutting piece cuts the gate, and the cutting piece after cutting the gate is moved away from the gate, or a runner connected to the gate, or a part of the runner.

The gate cutting mechanism according to the present invention may be assembled as a single unit.

The present invention provides a gate pulling mechanism including the sliding mechanism as claimed in any one of claims 1 to 11, the gate pulling mechanism being configured to pull a gate connected to a molded product to apply a load to the gate, or to extend the gate, or to crack the gate, or to tear the gate.

In the gate pulling mechanism according to the present invention, the guide body may be a holder, the slider may be a pulling piece configured to pull the gate, the guide unit may be configured to guide the pulling piece such that the pulling piece applies a load to the gate, or extends the gate, or cracks the gate, or tears the gate, and the guide unit may further be configured to guide the pulling piece such that the pulling piece after applying the load to the gate, or extending the gate, or cracking the gate, or tearing the gate is moved away from the gate, or a runner connected to the gate, or a part of the runner.

The gate pulling mechanism according to the present invention may be assembled as a single unit.

The present invention provides a fixed die or a movable die including the sliding mechanism, or the undercut processing mechanism, or the gate cutting mechanism, or the gate pulling mechanism.

The present invention provides a molding die including the sliding mechanism, or the undercut processing mechanism, or the gate cutting mechanism, or the gate pulling mechanism.

The present invention provides a molded product molded by the fixed die, or the movable die, or the molding die.

### EFFECTS OF THE INVENTION

According to the present invention, it is possible to provide a sliding mechanism capable of moving a slider in at least two different directions with a simple structure; an undercut processing mechanism, a gate cutting mechanism, and a gate pulling mechanism including the sliding mechanism; a fixed die, a movable die, and a molding die including the same; as well as a molded product.

### BRIEF DESCRIPTION OF THE DRAWINGS

Fig. 1 illustrates an operation of a sliding mechanism 1 according to a first embodiment of the present invention;
Fig. 2 is an exploded view showing features of the sliding mechanism 1 according to the first embodiment of the present invention;
Fig. 3 illustrates an exemplary application of the sliding mechanism 1 according to the first embodiment of the present invention;
Fig. 4 illustrates an operation of a sliding mechanism 50 according to a second embodiment of the present invention;
Fig. 5 is an exploded view showing features of the sliding mechanism 50 according to the second embodiment of the present invention;
Fig. 6 is a cross-sectional view of a molding die 100 including an undercut processing mechanism 101 according to a third embodiment of the present invention in a mold closed state;
Fig. 7 is a cross-sectional view of the molding die 100 including the undercut processing mechanism 101 according to the third embodiment of the present invention after mold opening;
Fig. 8 is a cross-sectional view of the molding die 100 including the undercut processing mechanism 101 according to the third embodiment of the present invention during a process of ejecting a molded product P;
Fig. 9 is a cross-sectional view of the molding die 100 including the undercut processing mechanism 101 according to the third embodiment of the present invention during the process of ejecting the molded product P;
Fig. 10 is an exploded view showing features of the undercut processing mechanism 101 according to the third embodiment of the present invention;
Fig. 11 is a cross-sectional view of a molding die 200 including a gate cutting mechanism 201 according to a fourth embodiment of the present invention in a mold closed state;
Fig. 12 is a cross-sectional view of the molding die 200 including the gate cutting mechanism 201 according to the fourth embodiment of the present invention during a process of opening the mold;
Fig. 13 is a cross-sectional view of the molding die 200 including the gate cutting mechanism 201 according to the fourth embodiment of the present invention during the process of opening the mold;
Fig. 14 is a cross-sectional view of the molding die 200 including the gate cutting mechanism 201 according to the fourth embodiment of the present invention after mold opening;
Fig. 15 is a cross-sectional view of the molding die 200 including the gate cutting mechanism 201 according to the fourth embodiment of the present invention during a process of ejecting a molded product P;
Fig. 16 is an exploded view showing features of the gate cutting mechanism 201 according to the fourth embodiment of the present invention;
Fig. 17 is an exploded view showing features of a gate cutting mechanism 202, which is a variant of the gate cutting mechanism 201 according to the fourth embodiment of the present invention;
Fig. 18 illustrates an operation of a molding die 300 including a gate cutting mechanism 301 according to a fifth embodiment of the present invention;
Fig. 19 illustrates an operation of the molding die 300 including the gate cutting mechanism 301 according to the fifth embodiment of the present invention;
Fig. 20 illustrates an operation of the molding die 300 including the gate cutting mechanism 301 according to the fifth embodiment of the present invention;
Fig. 21 illustrates an operation of the molding die 300 including the gate cutting mechanism 301 according to the fifth embodiment of the present invention;
Fig. 22 illustrates an operation of the molding die 300 including the gate cutting mechanism 301 according to the fifth embodiment of the present invention;
Fig. 23 is an exploded view showing features of a gate cutting mechanism 301 according to the fifth embodiment of the present invention;
Fig. 24 is a cross-sectional view showing a main part of a molding die 400 including the gate cutting mechanism 401 according to a sixth embodiment of the present invention in a mold closed state;
Fig. 25 is a cross-sectional view showing the main part of the molding die 400 including the gate cutting mechanism 401 according to the sixth embodiment of the present invention during a process of opening the mold;
Fig. 26 is a cross-sectional view showing the main part of the molding die 400 including the gate cutting mechanism 401 according to the sixth embodiment of the present invention during the process of opening the mold;
Fig. 27 is an exploded view showing features of the gate cutting mechanism 401 according to the sixth embodiment of the present invention;
Fig. 28 is a cross-sectional view showing a main part of a molding die 500 including a gate cutting mechanism 501 according to a seventh embodiment of the present invention in a mold closed state;
Fig. 29 is a cross-sectional view showing the main part of the molding die 500 including the gate cutting mechanism 501 according to the seventh embodiment of the present invention during a process of opening the mold;
Fig. 30 is a cross-sectional view showing the main part of the molding mold 500 including the gate cutting mechanism 501 according to the seventh embodiment of the present invention during the process of opening the mold;
Fig. 31 is an exploded view showing features of the gate cutting mechanism 501 according to the seventh embodiment of the present invention;
Fig. 32 is an exploded view showing features of a sliding mechanism 6 according to an eighth embodiment of the present invention;
Fig. 33 illustrates an exemplary application of the sliding mechanism 6 according to the eighth embodiment of the present invention;
Fig. 34 is an exploded view showing features of an undercut processing mechanism 103 according to a ninth embodiment of the present invention;
Fig. 35 is a cross-sectional view of a molding die 102 including the undercut processing mechanism 103 according to the ninth embodiment of the present invention in a mold closed state;
Fig. 36 is a cross-sectional view of the molding die 102 including the undercut processing mechanism 103 according to the ninth embodiment of the present invention after mold opening;
Fig. 37 is a cross-sectional view of the molding die 102 including the undercut processing mechanism 103 according to the ninth embodiment of the present invention during a process of ejecting a molded product P;
Fig. 38 is a cross-sectional view of the molding die 102 including the undercut processing mechanism 103 according to the ninth embodiment of the present invention during the process of ejecting the molded product P;
Fig. 39 is a cross-sectional view of the molding die 102 including the undercut processing mechanism 103 according to the ninth embodiment of the present invention during the process of ejecting the molded product P;
Fig. 40 is an exploded view showing features of an undercut processing mechanism 105 according to a tenth embodiment of the present invention;
Fig. 41 is a cross-sectional view of a molding die 104 including the undercut processing mechanism 105 according to the tenth embodiment of the present invention in a mold closed state;
Fig. 42 is a cross-sectional view of the molding die 104 including the undercut processing mechanism 105 according to the tenth embodiment of the present invention after mold opening;
Fig. 43 is a cross-sectional view of the molding die 104 including the undercut processing mechanism 105 according to the tenth embodiment of the present invention during a process of ejecting a molded product P;
Fig. 44 is a cross-sectional view of the molding die 104 including the undercut processing mechanism 105 according to the tenth embodiment of the present invention during the process of ejecting the molded product P;
Fig. 45 is a cross-sectional view of the molding die 104 including the undercut processing mechanism 105 according to the tenth embodiment of the present invention during the process of ejecting the molded product P;
Fig. 46 is an exploded view showing features of an undercut processing mechanism 107 according to an eleventh embodiment of the present invention;
Fig. 47 is a cross-sectional view of a molding die 106 including the undercut processing mechanism 107 according to the eleventh embodiment of the present invention in a mold closed state;
Fig. 48 is a cross-sectional view of the molding die 106 including the undercut processing mechanism 107 according to the eleventh embodiment of the present invention after mold opening;
Fig. 49 is a cross-sectional view of the molding die 106 including the undercut processing mechanism 107 according to the eleventh embodiment of the present invention during a process of ejecting a molded product P;
Fig. 50 is a cross-sectional view of the molding die 106 including the undercut processing mechanism 107 according to the eleventh embodiment of the present invention during the process of ejecting the molded product P;
Fig. 51 is an exploded view showing features of an undercut processing mechanism 109 according to a twelfth embodiment of the present invention;
Fig. 52 is a cross-sectional view of a molding die 108 including the undercut processing mechanism 109 according to the twelfth embodiment of the present invention in a mold closed state;
Fig. 53 is a cross-sectional view of the molding die 108 including the undercut processing mechanism 109 according to the twelfth embodiment of the present invention after mold opening;
Fig. 54 is a cross-sectional view of the molding die 108 including the undercut processing mechanism 109 according to the twelfth embodiment of the present invention during a process of ejecting a molded product P;
Fig. 55 is a cross-sectional view of the molding die 108 including the undercut processing mechanism 109 according to the twelfth embodiment of the present invention during the process of ejecting the molded product P;
Fig. 56 is a cross-sectional view of the molding die 108 including the undercut processing mechanism 109 according to the twelfth embodiment of the present invention during the process of ejecting the molded product P;
Fig. 57 is an exploded view showing features of an undercut processing mechanism 111 according to a thirteenth embodiment of the present invention;
Fig. 58 is a cross-sectional view of a molding die 110 including the undercut processing mechanism 111 according to the thirteenth embodiment of the present invention in a mold closed state;
Fig. 59 is an exploded view showing features of an undercut processing mechanism 112 according to a fourteenth embodiment of the present invention;
Fig. 60 includes a left-side view, a front view, and a right-side view of a sliding piece 179 including a molding core 191 for the undercut processing mechanism 112 according to the fourteenth embodiment of the present invention;
Fig. 61 illustrates an operation of the undercut processing mechanism 112 according to the fourteenth embodiment of the present invention;
Fig. 62 is an exploded view showing features of an undercut processing mechanism 113 according to a fifteenth embodiment of the present invention;
Fig. 63 includes a left-side view, a front view, a right-side view, and a bottom view of a sliding piece 194 including the molding core 191 for the undercut processing mechanism 113 according to the fifteenth embodiment of the present invention;
Fig. 64 illustrates an operation of the undercut processing mechanism 113 according to the fifteenth embodiment of the present invention;
Fig. 65 is a cross-sectional view of a molding die 800 including a gate tearing mechanism 801 according to a sixteenth embodiment of the present invention in a mold closed state;
Fig. 66 is a cross-sectional view of the molding die 800 including the gate tearing mechanism 801 according to the sixteenth embodiment of the present invention during a process of opening the mold;
Fig. 67 is a cross-sectional view of the molding die 800 including the gate tearing mechanism 801 according to the sixteenth embodiment of the present invention after mold opening;
Fig. 68 is an exploded view showing features of the gate tearing mechanism 801 according to the sixteenth embodiment of the present invention;
Fig. 69 is a cross-sectional view of a molding die 900 including the gate tearing mechanism 901 according to a seventeenth embodiment of the present invention in a mold closed state;
Fig. 70 is a cross-sectional view of a molding die 1000 including a gate tearing mechanism 1001 according to an eighteenth embodiment of the present invention in a mold closed state;
Fig. 71 is a cross-sectional view of a molding die 1100 including a gate tearing mechanism 1101 according to a nineteenth embodiment of the present invention in a mold closed state;
Fig. 72 is a perspective view illustrating an operation of a gate tearing mechanism 1201 according to a twentieth embodiment of the present invention;
Fig. 73 is a perspective view illustrating an operation of the gate tearing mechanism 1201 according to the twentieth embodiment of the present invention;
Fig. 74 is a perspective view illustrating an operation of the gate tearing mechanism 1201 according to the twentieth embodiment of the present invention;
Fig. 75 is a perspective view illustrating an operation of the gate tearing mechanism 1201 according to the twentieth embodiment of the present invention;
Fig. 76 is an exploded view showing features of the gate tearing mechanism 1201 according to the twentieth embodiment of the present invention;
Fig. 77 is a perspective view illustrating an operation of a gate tearing mechanism 1301 according to a twenty-first embodiment of the present invention;
Fig. 78 is a perspective view illustrating an operation of the gate tearing mechanism 1301 according to the twenty-first embodiment of the present invention;
Fig. 79 is a perspective view illustrating an operation of the gate tearing mechanism 1301 according to the twenty-first embodiment of the present invention;
Fig. 80 is an exploded view showing features of the gate tearing mechanism 1301 according to the twenty-first embodiment of the present invention;
Fig. 81 is a perspective view illustrating an operation of a gate tearing mechanism 1401 according to a twenty-second embodiment of the present invention;
Fig. 82 is a perspective view illustrating an operation of the gate tearing mechanism 1401 according to the twenty-second embodiment of the present invention;
Fig. 83 is a perspective view illustrating an operation of a gate tearing mechanism 1501 according to a twenty-third embodiment of the present invention;
Fig. 84 is a perspective view illustrating an operation of the gate tearing mechanism 1501 according to the twenty-third embodiment of the present invention;
Fig. 85 is a perspective view illustrating an operation of the gate tearing mechanism 1501 according to the twenty-third embodiment of the present invention;
Fig. 86 is a perspective view illustrating an operation of the gate tearing mechanism 1501 according to the twenty-third embodiment of the present invention; and
Fig. 87 is an exploded view showing features of the gate tearing mechanism 1501 according to the twenty-third embodiment of the present invention.

### DESCRIPTION OF THE EMBODIMENTS

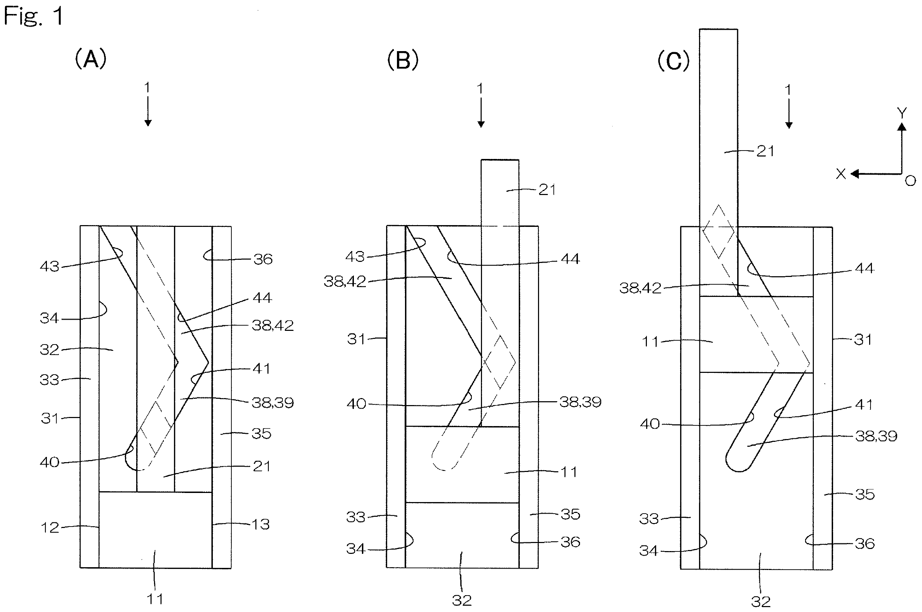

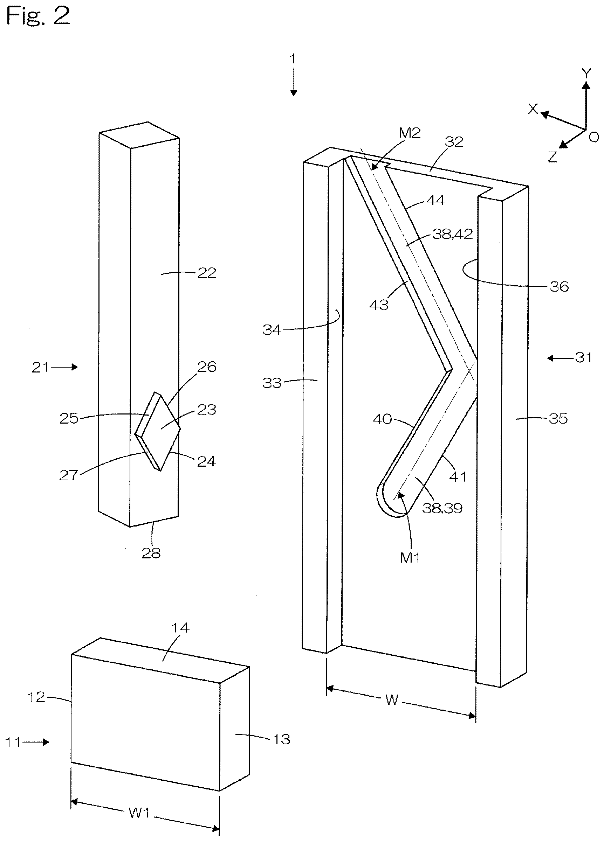

Fig. 1 illustrates an operation of a sliding mechanism 1 according to a first embodiment of the present invention. Fig. 2 is an exploded view showing features of the sliding mechanism 1 according to the first embodiment of the present invention. Fig. 1 illustrates the sliding mechanism 1 as viewed from the front; for the sake of convenience, in the following description, the "left" side corresponds to the left side in Chart (A) of Fig. 1, and the "upper" side corresponds to the upper side in Chart (A) of Fig. 1. The X direction, Y direction, and Z direction in the drawings and the specification correspond to the X-axis direction, Y-axis direction, and Z-axis direction of a three-dimensional rectangular coordinate system, respectively. In the present specification, the +X direction means a direction indicated by an arrow on the X axis in the drawings, and the -X direction means a direction opposite to the direction indicated by the arrow on the X axis. The same applies to the +Y direction, -Y direction, +Z direction, and -Z direction.

The sliding mechanism 1 according to the first embodiment of the present invention includes a slider capable of moving in a first direction and subsequently in a second direction. The first direction and the second direction are predetermined directions, and the first direction is different from the second direction. Hereinafter, the features will be specifically described with reference to Fig. 1 and Fig. 2.

The sliding mechanism 1 includes a first piece 11, a second piece 21, and a guiding body 31 which guides the first piece 11 and the second piece 21. In the present embodiment, the second piece 21 corresponds to a slider; and the guiding body 31 corresponds to a guide body. As described later, a guiding groove 38 corresponds to a guide unit; a first guiding part 39 corresponds to a first guide unit; and a second guiding part 42 corresponds to a second guide unit. A click 23 corresponds to an engagement unit; a first sliding surface of the click 23 corresponds to a first engagement unit; and a second sliding surface of the click 23 corresponds to a second engagement unit.

The guiding body 31 has a channel-shaped or U-shaped transverse section and includes a rectangular bottom plate 32 and side walls 33, 35 at opposite ends of the rectangular bottom plate 32. Inner surfaces 34, 36 of the left side wall 33 and the right side wall 35 are parallel to each other. The left-side-wall inner surface 34 and the right-side-wall inner surface 36 function as guides for the first piece 11. The bottom plate 32 includes a dog-legged guiding groove 38 on an inner surface of the bottom plate 32.

The guiding groove 38 is a recessed groove and includes a first guiding part 39 which guides the second piece 21 in a primary direction (i.e., first direction) and a second guiding part 42 which guides the second piece 21 in a secondary direction (second direction). In the present embodiment, the first direction extends diagonally upward to the right, and the second direction extends diagonally upward to the left. The first guiding part 39 and the second guiding part 42 are connected to each other, and a center axis M1 of the first guiding part 39 and a center axis M2 of the second guiding part 42 intersect with each other. The first guiding part 39 includes opposite side surfaces 40, 41 that are parallel to each other, and the second guiding part 42 includes opposite side surfaces 43, 44 that are parallel to each other.

The first piece 11 has a cuboid shape and includes left and right side faces 12, 13 that are parallel to each other. A width W1 between the left and right side faces 12, 13 is substantially equal to a width W between the left- and right-side-wall inner surfaces 34, 36 of the guiding body 31. Thus, when the first piece 11 is placed on the guiding body 31, the left and right side faces 12, 13 come into contact with the left- and right-side-wall inner surfaces 34, 36 of the guiding body 31.

The second piece 21 is a columnar member having a rectangular cross section and includes a back face 22 including the click 23 configured to be fitted into the guiding groove 38 in the guiding body 31. The click 23 protrudes from the back face 22 and, therefore, may be considered as a protrusion. The click 23 has a height (thickness) substantially equal to a depth of the guiding groove 38. The click 23 has a rhombic shape when the back face 22 of the second piece 21 is viewed straightforwardly, and includes four side surfaces 24, 25, 26, 27. The side surface 24 and the side surface 25 are parallel to each other, and the side surface 26 and the side surface 27 are parallel to each other. In the present embodiment, the click 23 is an engagement unit configured to slidably engage with the guiding groove 38 and is arranged such that when the click 23 is fitted into the guiding groove 38, a longitudinal direction of the second piece 21 is parallel to a longitudinal direction of the guiding body 31.

The opposite side surfaces 24, 25 of the click 23 serve as first sliding surfaces, and the opposite side surfaces 26, 27 of the click 23 serve as second sliding surfaces. The first sliding surfaces slidably come into contact with the opposite side surfaces 40, 41 of the first guiding part 39 of the guiding groove 38 in the guiding body 31. The second sliding surfaces slidably come into contact with the opposite side surfaces 43, 44 of the second guiding part 42 of the guiding groove 38 in the guiding body 31.

An operation of the sliding mechanism 1 will be described with reference to Fig. 1. In the following description, the first piece 11 is an input end, and the second piece 21 is an output end. The click 23 is fitted into the first guiding part 39, and the first piece 11 is placed on the guiding body 31 such that the first piece 11 comes into contact with a bottom face of the second piece 21. In this state, the opposite side faces 12, 13 of the first piece 11 are slidably in contact with the opposite side-wall inner surfaces 34, 36 of the guiding body 31, and the first sliding surfaces of the click 23 are slidably in contact with the opposite side surfaces 40, 41 of the first guiding part 39 (see Chart (A) of Fig. 1).

When the first piece 11 is pushed upward (i.e., in the Y direction), the first piece 11 ascends while the opposite side faces 12, 13 slide on the opposite side-wall inner surfaces 34, 36 of the guiding body 31, which serve as guides. The second piece 21 is pushed out by the first piece 11 and moves along the first guiding part 39 in the first direction (diagonally upward to the right), while the first sliding surfaces of the click 23 slide on the opposite side surfaces 40, 41 of the first guiding part 39, with the first guiding part 39 of the guiding body 31 serving as a guide.

When the second piece 21 is pushed out by the first piece 11, and the side surface 26 of the click 23 reaches a point where the side surface 26 comes into contact with the side surface 44 of the second guiding part 42, the side surface 24 of the click 23 leaves the side surface 40 of the first guiding part 39, which the side surface 24 has been in contact with (see Chart (B) of Fig. 1). When the first piece 11 is pushed up from this state, the second piece 21 moves along the second guiding part 42 in the second direction (diagonally upward to the left), while the second sliding surfaces of the click 23 slide on the opposite side surfaces 43, 44 of the second guiding part 42, with the second guiding part 42 serving as a guide.

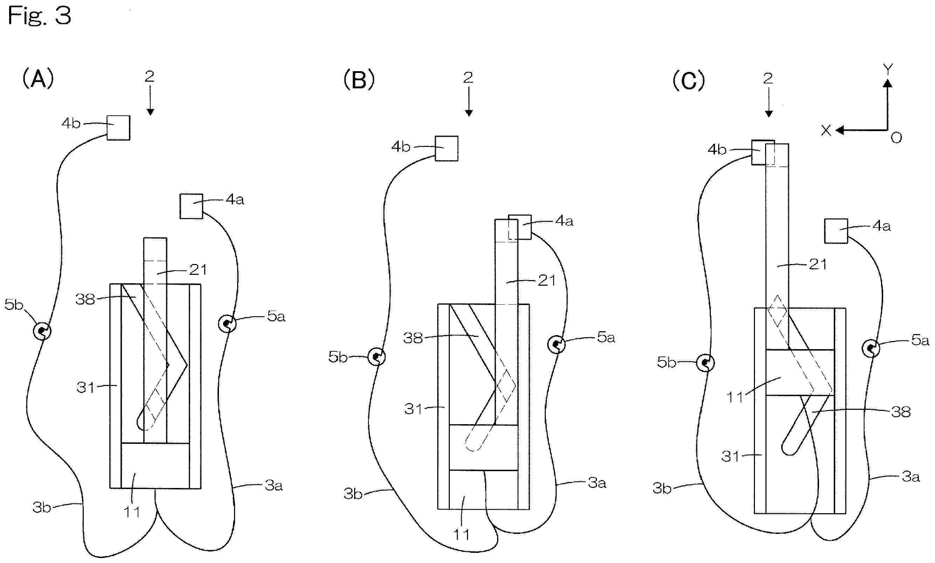

Fig. 3 shows a changeover switch 2 which employs the sliding mechanism 1 according to the first embodiment of the present invention. Features corresponding to the features of the sliding mechanism 1 of the first embodiment as shown in Fig. 1 and Fig. 2 are denoted with like reference numerals, and description thereof is omitted.

The changeover switch 2 includes a first terminal 4a connected to the first piece 11 through a lead wire 3a and a second terminal 4b connected to the first piece 11 through a lead wire 3b. In the middle of the lead wires 3a, 3b, a first lamp 5a and a second lamp 5b are arranged. The first piece 11 and the second piece 21 have conductivity, and the first piece 11 includes a battery (not illustrated) therein.

The first terminal 4a is located at a position where an upper end portion of the second piece 21 comes into contact when the click 23 on the second piece 21 reaches a tip end portion (upper right) of the first guiding part 39 of the guiding groove 38. On the other hand, the second terminal 4b is located at a position where the upper end portion of the second piece 21 comes into contact when the click 23 on the second piece 21 reaches a tip end portion (upper left) of the second guiding part 42 of the guiding groove 38. In the present embodiment, the first terminal 4a is arranged in such a position that the second piece 21 comes in contact with the first terminal 4a when moved to a rightmost position, and the second terminal 4b is arranged in such a position that the second piece 21 comes in contact with the second terminal 4b when moved to a leftmost position.

In the changeover switch 2 having the above constitution, when the second piece 21 is pushed up through the first piece 11, and the upper end portion of the second piece 21 comes into contact with the first terminal 4a, a circuit is formed to turn on the first lamp 5a. When the second piece 21 is pushed up further, the upper end portion of the second piece 21 leaves the first terminal 4a, so that the first lamp 5a is turned off. When the second piece 21 is pushed up to a highest position, the upper end portion of the second piece 21 comes into contact with the second terminal 4b, so that the second lamp 5b is turned on.

As discussed above, the sliding mechanism 1 of the first embodiment, the guiding body 31 includes the guiding groove 38 which guides the second piece 21 in two different directions, and therefore, the second piece 21 can be surely moved in the two different directions. Since the sliding mechanism 1 of the present embodiment is constructed such that the first piece 11 ejects the second piece 21 with the click 23 fitted into the recessed guiding groove 38 in the guiding body 31, the sliding mechanism 1 has a simple structure and thus can be realized easily.

The click 23 to be fitted into the recessed guiding groove 38 includes: first sliding surfaces which slide on the side surfaces 40, 41 when moving in the first guiding part 39 of the guiding groove 38; and second sliding surfaces which slide on the side surfaces 43, 44 when moving in the second guiding part 42 of the guiding groove 38. The first sliding surfaces are constituted by the opposing two side surfaces 24, 25, and the second sliding surfaces are constituted by the opposing two side surfaces 26, 27, so that two surfaces of the click 23 make surface contact in each case, i.e., when the click moves in the first guiding part 39 or in the second guiding part 42. Thus, the second piece 21 can be moved stably without rattling.

Further, since the guiding body 31 includes a guide for guiding the first piece 11 which is different from the guiding groove 38 for guiding the second piece 21, the second piece 21 can be easily moved in the first direction and subsequently in the second direction through the first piece 11.

In the sliding mechanism 1, the directions of the first guiding part 39 and the second guiding part 42 are not limited to specific directions. In the present embodiment, the first guiding part 39 extends diagonally upward to the right, and the second guiding part 42 extends diagonally upward to the left. However, the second guiding part 42 may extend diagonally upward to the right at a different angle from the angle at which the first guiding part 39 extends. Further, one of the first guiding part 39 and the second guiding part 42 may extend in a direction corresponding to a direction in which the first piece 11 is pushed up (i.e., in the Y direction). These also apply to a sliding mechanism 50 according to a second embodiment as described later as well as in other embodiments.

The first guiding part 39 and the second guiding part 42 of the guiding groove 38 may not necessarily be linear lines, and may be circular arcs or a combination of a circular arc and a linear line. In short, the first direction and the second direction may extend in one of four shapes including a linear shape, a linear shape having a partially curved part, a curved shape, and a curved shape having a partially linear part. The guiding groove 38 may further include a third guiding part subsequently to the second guiding part 42, or the guiding groove may include four or more guiding parts. These also apply to the sliding mechanism 50 according to the second embodiment as well as in other embodiments.

The configuration of the click 23 to be fitted into the guiding groove 38 is not limited to that of the present embodiment. In the present embodiment, the first sliding surfaces of the click 23 make surface contact with the opposite side surfaces 40, 41 of the first guiding part 39 of the guiding groove 38. However, this may be achieved through line contact or point contact. In the case of line contact, it is only necessary that one or more sides of the click 23 come into contact with each of the opposite side surfaces 40, 41 of the first guiding part 39 of the guiding groove 38. In the case of point contact, it is only necessary that one or more points of the click 23 come into contact with each of the opposite side surfaces 40, 41 of the first guiding part 39 of the guiding groove 38, and three points of the click 23 in total come into contact with the opposite side surfaces 40, 41. The same applies to the second guiding part 42 of the guiding groove 38. These also apply to the sliding mechanism 50 according to the second embodiment as well as in other embodiments.

The sliding mechanism 1 may include a coupling mechanism having a dovetail groove structure between an upper face 14 of the first piece 11 and a bottom face 28 of the second piece 21. Specifically, one of the upper face 14 of the first piece 11 and the bottom face 28 of the second piece 21 may include a protruding line (dovetail-groove protruding line), and the other may include a dovetail groove which slidably receives the protruding line. In the sliding mechanism having such a configuration, the first piece 11 corresponds to a coupling member; the second piece 21 corresponds to a slider; the guiding body 31 corresponds to a guide body; and the left- and right-side-wall inner surfaces 34, 36 of the guiding body 31 correspond to a coupling member guide unit.

The opposite side faces 12, 13 of the first piece 11 and the opposite side-wall inner surfaces 34, 36 of the guiding body 31 may be constructed as a coupling mechanism having a dovetail groove structure through a protruding line (dovetail-groove protruding line) and a dovetail groove. Further, the guiding groove 38 and the click 23 may be coupled together through a protruding line (dovetail-groove protruding line) and a dovetail groove. Such a structure prevents the components from being disassembled, and therefore, the sliding mechanism 1 can be easily assembled into a single unit. These also apply to the sliding mechanism 50 according to the second embodiment as well as in other embodiments.

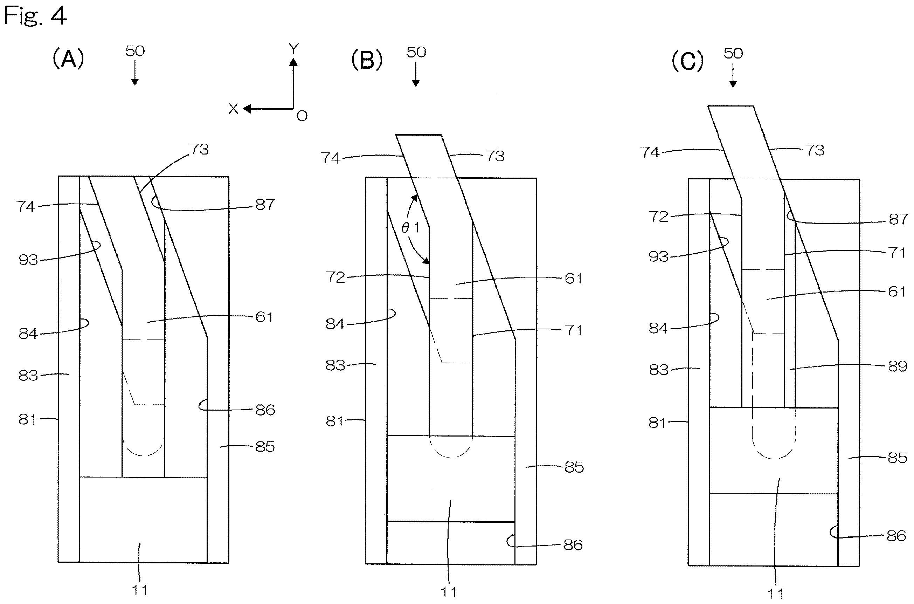

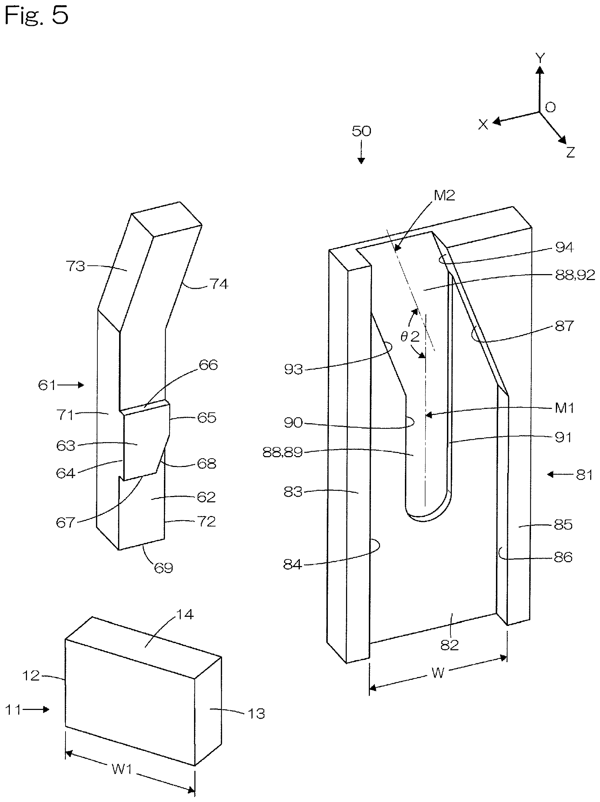

Fig. 4 illustrates an operation of the sliding mechanism 50 according to the second embodiment of the present invention. Fig. 5 is an exploded view showing features of the sliding mechanism 50 according to the second embodiment of the present invention. Features corresponding to the features of the sliding mechanism 1 of the first embodiment as shown in Fig. 1 and Fig. 2 are denoted with like reference numerals, and description thereof is omitted. Fig. 4 is a front view of the sliding mechanism 50. For the sake of convenience, in the following description, the "left" side corresponds to the left side in Chart (A) of Fig. 4, and the "upper" side corresponds to the upper side in Chart (A) of Fig. 4.

As with the sliding mechanism 1 of the first embodiment, the sliding mechanism 50 according to the second embodiment of the present invention includes a slider capable of moving in a first direction and subsequently in a second direction. The first direction and the second direction are predetermined directions, and the first direction is different from the second direction (see Fig. 5). Hereinafter, the features will be specifically described with reference to Fig. 4 and Fig. 5.

The sliding mechanism 50 includes a first piece 11, a second piece 61, and a guiding body 81 which guides the first piece 11 and the second piece 61. In the present embodiment, the second piece 61 corresponds to a slider; and the guiding body 81 corresponds to a guide body. As described later, a guiding groove 88 and an upper inner surface 87 of the guiding body 81 correspond to a guide unit; a first guiding part 89 corresponds to a first guide unit; and a side surface 93 of a second guiding part 92 and the upper inner surface 87 of the guiding body 81 correspond to a second guide unit. A click 63 and a side face 73 of the second piece 61 correspond to an engagement unit; a first sliding surface of the click 63 corresponds to a first engagement unit; and an inclined surface 68 of the click 63 and the side face 73 of the second piece 61 correspond to a second engagement unit.

The guiding body 81 has a channel-shaped or U-shaped transverse section and includes a rectangular bottom plate 82 and side walls 83, 85 at opposite ends of the rectangular bottom plate 82. The left side wall 83 has a linear shape in a front view, and the right side wall 85 includes an upper part protruding to the left. A lower inner surface 86 of the right side wall 85 located below a center of the right side wall extends parallel to an inner surface 84 of the left side wall 83, and the upper inner surface 87 of the right side wall 85 is an inclined surface which is inclined toward an upper left side. The left-side-wall inner surface 84 and the right-side-wall inner surface 86 serve as guides for the first piece 11. A guiding groove 88 is located on an inner surface of the bottom plate 82.

The guiding groove 88 is a recessed groove and includes a first guiding part 89 which guides the second piece 61 in a primary direction (i.e., first direction) and a second guiding part 92 which guides the second piece 61 in a secondary direction (second direction). In the present embodiment, the first direction corresponds to the Y direction, and the second direction extends diagonally upward to the left. The first guiding part 89 and the second guiding part 92 are connected to each other, and a center axis M1 of the first guiding part 89 and a center axis M2 of the second guiding part 92 intersect with each other (see Fig. 5). The first guiding part 89 includes a left side surface 90 and a right side surface 91 that are parallel to each other. Similarly, the second guiding part 92 includes a left side surface 93 and a right side surface 94 that are parallel to each other.

The left side surface 93 of the second guiding part 92 is connected to the left side surface 90 of the first guiding part 89 at substantially middle position in a height direction of the bottom plate 82 (i.e., Y direction), and the right side surface 94 of the second guiding part 92 is connected to the right side surface 91 of the first guiding part 89 at an upper position in the height direction of the bottom plate 82 (i.e., Y direction). For this reason, the right side surface 94 of the second guiding part 92 is shorter than the left side surface 93 of the second guiding part 92. Further, the right side surface 94 of the second guiding part 92 is flush with the upper inner surface 87 of the right side wall 85.

Since the first piece 11 has the same configuration as that of the first piece 11 of the sliding mechanism 1 of the first embodiment, description thereof is omitted.

The second piece 61 is a columnar member having a rectangular cross section and includes an upper part that is bent diagonally upward to the left in a front view. Opposite lower side faces 71, 72 of the second piece 61 located below a center of the second piece 61 are parallel to each other, and opposite upper side faces 73, 74 of the second piece 61 are parallel to each other. A bending angle θ1 of the second piece 61 (see Chart (B) of Fig. 4) is the same as an intersecting angle θ2 (see Fig. 5) between the center axis M1 of the first guiding part 89 and the center axis M2 of the second guiding part 92 of the guiding groove 88.

The second piece 61 includes, on a lower part of a back face 62 thereof, a click 63 configured to be fitted into the first guiding part 89 of the guiding groove 88 on the guiding body 81. The click 63 protrudes from the back face 62 and, therefore, may be considered as a protrusion. The click 63 has a height (thickness) substantially equal to a depth of the first guiding part 89 of the guiding groove 88. The click 63 has a pentagonal shape when the back face 62 of the second piece 61 is viewed straightforwardly, and includes an inclined surface 68 in a lower part of the right side surface of the click 63.

The click 63 includes five side faces 64, 65, 66, 67, 68. The opposing side faces 64, 65 of the click 63 are parallel to each other. The side face 64 is flush with the lower side face 71 of the second piece 61, and the side face 65 is flush with the lower side face 72 of the second piece 61. The side faces 64, 65 of the click 63 serve as first sliding surfaces. The first sliding surfaces slidably come into contact with the opposite side surfaces 90, 91 of the first guiding part 89 of the guiding groove 88 in the guiding body 81.

The inclined side face 68 of the click 63 is parallel to the upper side faces 73, 74 of the second piece 61. When the click 63 of the second piece 61 is fitted into the second guiding part 92 of the guiding groove 88, the inclined side face 68 of the click 63 comes into contact with the left side surface 93 of the second guiding part 92. At the same time, the upper side face 73 of the second piece 61 comes into contact with the upper, right side surface 87 of the part of the guiding body 81. The inclined side face 68 of the click 63 and the upper side face 73 of the second piece 61 serve as second sliding surfaces which slidably come into contact with the left side surface 93 of the second guiding part 92 and the upper, right side surface 87 of the guiding body 81, respectively.

An operation of the sliding mechanism 50 will be described with reference to Fig. 4. In the following description, the first piece 11 is an input end, and the second piece 61 is an output end. The click 63 is fitted into the first guiding part 89, and the first piece 11 is placed on the guiding body 81 such that the first piece 11 comes into contact with a bottom face of the second piece 61. In this state, the opposite side faces 12, 13 of the first piece 11 are slidably in contact with the opposite side-wall inner surfaces 84, 86 of the guiding body 81, and the first sliding surfaces of the click 63 are slidably in contact with the opposite side surfaces 90, 91 of the first guiding part 89 (see Chart (A) of Fig. 4).

When the first piece 11 is pushed upward (i.e., in the Y direction), the first piece 11 moves upward while the opposite side faces 12, 13 slide on opposite side-wall inner surfaces 84, 86 of the guiding body 81, which serve as guides. The second piece 61 is pushed out by the first piece 11 and moves along the first guiding part 89 in the first direction (i.e., Y direction), while the first sliding surfaces of the click 63 slide on the opposite side surfaces 90, 91 of the first guiding part 89, with the first guiding part 89 of the guiding body 81 serving as a guide.

When the second piece 61 is pushed out by the first piece 11, and the upper side face 73 reaches a point where the side face 73 comes into contact with the upper, right side surface 87 of the guiding body 81, the side face 65 of the click 63 leaves the side surface 90 of the first guiding part 89, which the side face 65 has been in contact with (see Chart (B) of Fig. 4). When the first piece 11 is pushed up from this state, the second piece 61 moves in the second direction (diagonally upward to the left), while the side face 68 of the click 63 slides on the left side surface 93 of the second guiding part 92, and the side face 73 of the second piece 61 slides on the upper, right side surface 87 of the guiding body 81, with the second guiding part 92 and the upper, right side surface 87 of the guiding body 81 serving as guides (see Chart (C) of Fig. 4).

Where the sliding mechanism 50 of the second embodiment and the sliding mechanism 1 of the first embodiment are compared, they differ in the mechanisms for guiding the second piece in the second direction. In the sliding mechanism 1 of the first embodiment, the second piece 21 is guided by the second guiding part 42 of the guiding groove 38 of the guiding body 31 to move in the second direction. The second guiding part 42 of the guiding groove 38 is located on a same plane as the first guiding part 39 of the guiding groove 38, and the click 23 includes the first sliding surfaces and the second sliding surfaces which slide on the side surfaces of the guiding groove 38.

On the other hand, in the sliding mechanism 50 of the second embodiment, the second piece 61 is guided by the left side surface 93 of the second guiding part 92 of the guiding groove 88 of the guiding body 81 and the upper, right side surface 87 of the guiding body 81 to move in the second direction. That is, in the sliding mechanism 50 of the second embodiment, the guiding groove 88 and the side surfaces of the guiding body 81 operate in conjunction with each other to guide the second piece 61 in the second direction. Although the second guiding part 92 of the guiding groove 88 is located on a same plane as the first guiding part 89 of the guiding groove 88, the upper, right side surface 87 of the guiding body 81 has a different height from that of the first guiding part 89 of the guiding groove 88. Further, the sliding mechanism 50 of the second embodiment also differs from the sliding mechanism 1 of the first embodiment in that the side face 73 of the second piece 61 serves as a sliding surface in addition to the click 63.

As discussed above, the sliding mechanism 50 of the second embodiment shares a common point with the sliding mechanism 1 of the first embodiment in that the second piece can be moved in two different directions essentially by the guiding groove, although they have different mechanisms for guiding the second piece 61 in the second direction. In addition, the click 61 provides essentially the same effects and advantages as those of the click 21 of the sliding mechanism 1.

The sliding mechanism 50 may include a coupling mechanism having a dovetail groove structure between the upper face 14 of the first piece 11 and the bottom face 69 of the second piece 61. Specifically, a protruding line (dovetail-groove protruding line) may be located on one of the upper face 14 of the first piece 11 and the bottom face 69 of the second piece 61, and a dovetail groove which slidably receives the protruding line may be located on the other. In the sliding mechanism having such a constitution, the first piece 11 corresponds to a coupling member; the second piece 61 corresponds to a slider; the guiding body 81 corresponds to a guide body; and the left- and right-side-wall inner surfaces 84, 86 of the guiding body 81 correspond to a coupling member guide unit.

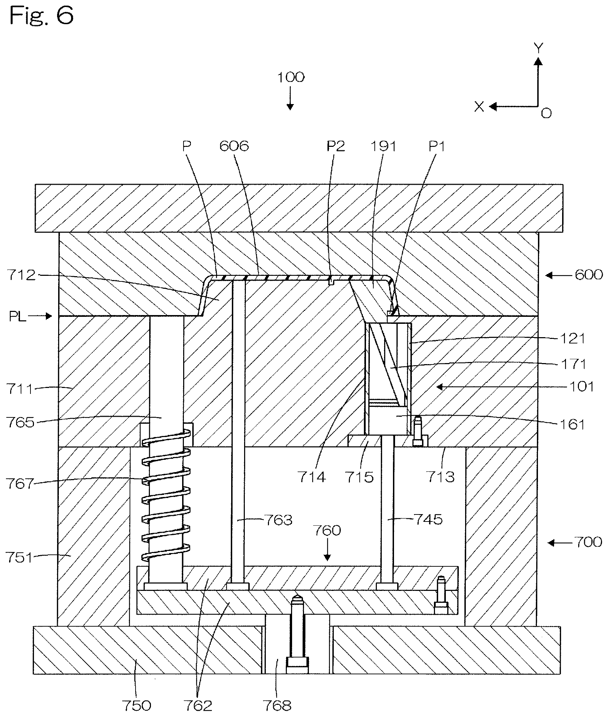

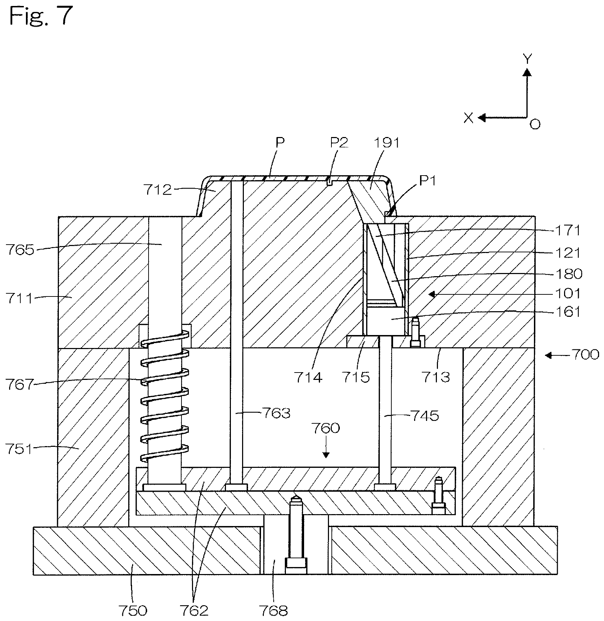

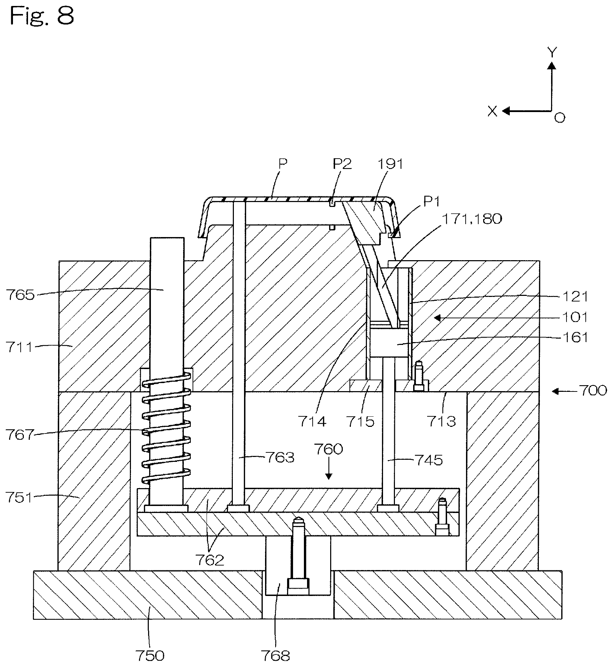

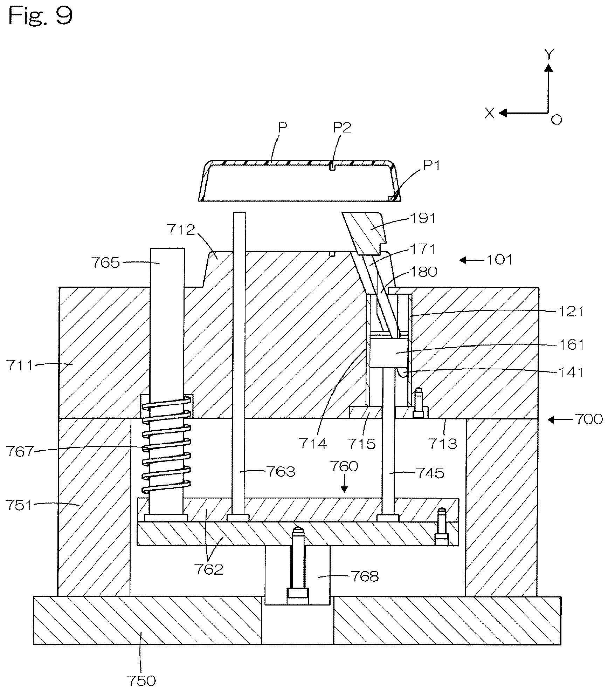

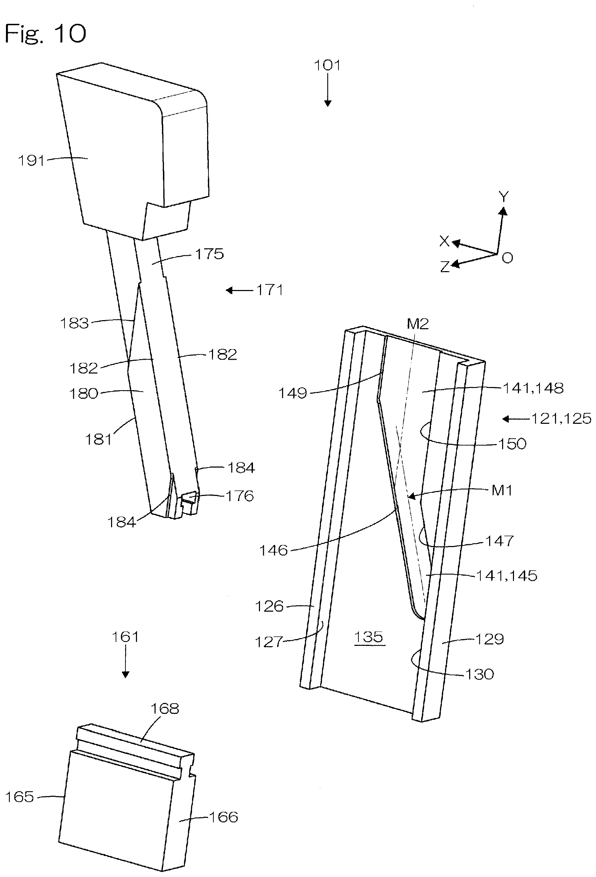

Fig. 6 is a cross-sectional view of a molding mold or molding die 100 including an undercut processing mechanism 101 according to a third embodiment of the present invention in a mold closed state, and Fig. 7 is a cross-sectional view of the molding die 100 after mold opening. Fig. 8 and Fig. 9 show cross-sectional views of the molding die 100 including the undercut processing mechanism 101 according to the third embodiment of the present invention during a process of ejecting a molded product P. Fig. 10 is an exploded view showing features of the undercut processing mechanism 101 according to the third embodiment of the present invention. Features corresponding to the features of the sliding mechanism 1 of the first embodiment as shown in Fig. 1 and Fig. 2 are denoted with like reference numerals, and description thereof is omitted.

As with a known injection molding die, the molding die 100 of the third embodiment of the present invention includes: a fixed mold or fixed die 600 which molds an external surface of the molded product P; a movable mold or movable die 700 which molds an internal surface of the molded product P; and further the undercut processing mechanism 101. For the sake of convenience, in the following description, the "upper" side means the side of the fixed die 600 in Fig. 6, and the "lower" side means the side of the movable die 700 in Fig. 6. In the following description, the "left" side corresponds to the left side in Fig. 6, and the "right" side means the opposite side, unless otherwise specifically noted.

The fixed die 600 includes a cavity 606 for molding the external surface of a molded product P. The movable die 700 includes: a movable mold plate 711 including a core 712 for forming an internal surface of the molded product P; a movable attachment plate 750; a spacer block 751; two ejector mount plates 762; an ejector pin 763; a return pin 765; a spring 767; and an ejector rod 768. The ejector mount plates 762, the ejector pin 763, the ejector rod 768 and the like are assembled into an ejector mechanism 760. The ejector mechanism 760 is a single-stage ejecting mechanism.

After the processes of molding and cooling, the molding die 100 is opened, and the ejector mount plates 762 move in a demolding direction of the molded product P (upward direction or Y direction in Fig. 6) to approach the movable mold plate 711, so that the ejector pin 763 operates to eject the molded product P. Since such a constitution and an operation are the same as those in a known molding die, description thereof is omitted.

In the present embodiment, an undercut portion PI is a protruding portion PI which protrudes from an end portion of the molded product P toward an inner side of the molded product P and extends in a direction which intersects with the demolding direction of the molded product P (i.e., Y direction). The molded product P in the present embodiment also includes a protruding portion P2 which is located ahead in a direction in which the undercut portion PI is demolded (i.e., X direction) and protrudes toward the inner side of the molded product P. The shapes of the molded product P, the protruding portion PI, and the protruding portion P2 are not limited to specific ones. The material of the molded product P is not limited to a synthetic resin such as a plastic or the like, either, and may be a metal such as iron, copper, aluminum or the like.

The undercut processing mechanism 101 molds the undercut portion PI when the molded product P is molded, and is removed from the undercut portion PI upon ejection of the molded product P in a synchronized manner with the ejector mechanism 760, so that the molded product P can be demolded from the molding die 100. The undercut processing mechanism 101 of the present embodiment employs the sliding mechanism 1 of the first embodiment.

The undercut processing mechanism 101 includes: a holder 121 which is incorporated in and is fixed to the movable mold plate 711; a sliding piece 171 including, at a tip end of the sliding piece 171, a molding core 191 which molds the undercut portion PI of the molded product P; and a retaining piece 161 which slidably retains the sliding piece 171

The holder 121 of the present embodiment corresponds to the guiding body 31 of the sliding mechanism 1 of the first embodiment; the sliding piece 171 including the molding core 191 at the tip end thereof corresponds to the second piece 21; and the retaining piece 161 corresponds to the first piece 11. Also, in the present embodiment, the sliding piece 171 corresponds to a slider; and the holder 121 corresponds to a guide body. As described later, a guiding groove 141 corresponds to a guide unit; a first guiding part 145 corresponds to a first guide unit; and a second guiding part 148 corresponds to a second guide unit. A click 180 corresponds to an engagement unit; a first sliding surface of the click 180 corresponds to a first engagement unit; and a second sliding surface of the click 180 corresponds to a second engagement unit. The retaining piece 161 and the sliding piece 171 are slidably coupled together through a dovetail groove structure. The retaining piece 161 corresponds to a coupling member, and left- and right-side-wall inner surfaces 127, 130 of the holder 121 correspond to a coupling member guide unit.

The holder 121 is fitted into a recessed part 714 which opens on a bottom face 713 of the movable mold plate 711, and is incorporated in and fixed to the movable mold plate 711 through the fixed plate 715. The holder 121 houses the sliding piece 171 and the retaining piece 161, and restricts a movement direction of the sliding piece 171 and the retaining piece 161. As used herein, the expression that the holder 121 houses the sliding piece 171 and the retaining piece 161 may include a case where the holder 121 houses the entirety of the sliding piece 171 and the retaining piece 161 as well as a case where the holder 121 partially houses the sliding piece 171 and the retaining piece 161.

The holder 121 includes two half holder members 125 of a same shape which are assembled together, and has a box-like column shape which defines an inner space therein with an open upper end face and an open lower end face (see Fig. 10). The holder 121 may be constituted by a plurality of divided members or be integrated with the movable mold plate 711. The holder 121 includes an inner surface 127 of a left side wall 126 and an inner surface 130 of a right side wall 129 which function as guides for the retaining piece 161. The holder 121 includes guiding grooves 141 which guide the sliding piece 171 on a front-face-wall inner surface and on a back-face-wall inner surface 135 of the holder 121.

Each guiding groove 141 is a recessed groove and includes a first guiding part 145 which guides the sliding piece 171 in the first direction and a second guiding part 148 which guides the sliding piece 171 in the second direction. The first guiding part 145 is inclined with respect to a mold opening direction of the molding die 100 (i.e., Y direction), and the second guiding part 148 is parallel to a mold opening direction of the molding die 100 (i.e., Y direction). The first guiding part 145 and the second guiding part 148 are connected to each other, and a center axis M1 of the first guiding part 145 and a center axis M2 of the second guiding part 148 intersect with each other (see Fig. 10).

The first guiding part 145 guides the sliding piece 171 diagonally upward to the left (i.e., in the first direction) such that the molding core 191 attached to the sliding piece 171 is removed from the undercut portion PI in a synchronized manner with the ejector mechanism 760. In this regard, the direction in which the molding core 191 is removed from the undercut portion PI means a direction in which the molding core 191 is removed from the undercut portion PI without deforming or damaging the undercut portion PI.

The center axis M1 of the first guiding part 145 is defined depending on the shape of the undercut portion PI of the molded product P, in particular, on an extent of projection of the undercut portion PI in the X direction and a stroke of an ejection pin 745, so that the molding core 191 can be removed from the undercut portion PI of the molded product P upon ejection of the molded product P.

The second guiding part 148 guides the molding core 191 such that the molding core 191 which has been removed from the undercut portion PI does not collide with the protruding portion P2 which is located ahead in a removal direction of the undercut portion PI (i.e., X direction). In the present embodiment, the second guiding part 148 is arranged so as to guide the molding core 191 in the mold opening direction (i.e., second direction or Y direction). This makes it possible to prevent the molding core 191 from moving in the X direction and to avoid collision of the molding core with the protruding portion P2.

In the present embodiment, the center axis (guiding direction) M2 of the second guiding part 148 is parallel to the mold opening direction of the molding die 100 (i.e., Y direction). However, the arrangement of the center axis M2 is not limited to this arrangement. As long as the molding core 191 which has been removed from the undercut portion PI can avoid collision with the protruding portion P2 and can be kept removed from the undercut portion PI, the center axis M2 of the second guiding part 148 may not necessarily coincide with the mold opening direction of the molding die 100 (i.e., Y direction).

The retaining piece 161 has a cuboid shape and includes a bottom face to which the ejection pin 745 fixed to the ejector mount plates 762 is connected. The retaining piece 161 is housed in the holder 121. The retaining piece 161 is ejected by the ejection pin 745 and is guided on the left-side-wall inner surface 127 and the right-side-wall inner surface 130 to move in the demolding direction (i.e., Y direction), with a left side face 165 and a right side face 166 of the retaining piece slidably in contact with the left-side-wall inner surface 127 and the right-side-wall inner surface 130 of the holder 121.

The retaining piece 161 includes an upper face including a protruding line (dovetail-groove protruding line) 168 extending in the X direction. The protruding line 168 extends parallel to the direction in which the undercut portion PI is demolded, and a dovetail groove 176 at a lower end of a body 175 of the sliding piece 171 slidably comes into engagement with the protruding line 168, so as to guide the sliding piece 171 such that the molding core 191 is removed from the undercut portion PI.

The sliding piece 171 includes the linear body 175 having a rectangular cross section, and the body 175 includes a tip end portion to which the molding core 191 is attached and a lower end including the dovetail groove 176 which slidably engages with the protruding line 168 of the retaining piece 161. The protruding line (dovetail-groove protruding line) 168 of the retaining piece 161 and the dovetail groove 176 of the sliding piece 171 constitute a dovetail groove structure for slidable coupling. The sliding piece 171 also includes clicks 180 on a part of the front face and on a part of the back face of the sliding piece 171, the clicks 180 being configured to be fitted into the guiding grooves 141 of the holder 121. Each click 180 corresponds to the click 23 on the second piece 21 of the sliding mechanism 1 of the first embodiment. The clicks 180 have a rectangular cross section and extend from middle parts of the body 175 to the lower end of the body 175 in a protruding manner on a front face and a back face of the sliding piece. Therefore, the clicks 180 may be considered as protruding lines.

Until the molding core 191 is removed from the undercut portion PI, left side faces 181 and right side faces 182 of the clicks 180 are in contact with left side surfaces 146 and right side surfaces 147 of the first guiding parts 145 of the guiding grooves 141 in the holder 121, respectively. Upper side faces 183 and lower side faces 184 of the clicks 180 come into contact with left side surfaces 149 and right side surfaces 150 of the second guiding parts 148 of the guiding grooves 141 in the holder 121, respectively, in order to guide the molding core 191 which has been removed from the undercut portion PI in the demolding direction (i.e., Y direction). The opposite left side faces 181 and right side faces 182 of the clicks 180 serve as first sliding surfaces, and the opposite upper side faces 183 and lower side faces 184 of the clicks 180 serve as second sliding surfaces.

The molding core 191 is a block member having a shape matching a part of the molded product P including the undercut portion PI and is fixed to an upper end face of the sliding piece 171 by screwing or the like. The shape of the molding core 191 depends on the shape of the molded product P. The molding core 191 may be integrated with the sliding piece 171.

An operation and effects of the molding die 100 of the present embodiment will be described with reference to an exemplary case where a molded product P is molded by injection molding in the molding die 100. When molding the molded product P, the sliding piece 171 is housed in the holder 121, and the molding core 191 is placed so as to mold an undercut portion PI of the molded product P (see Fig. 6). In the molding die 100, parting faces (PL faces) of the fixed die 600 and the movable die 700 are fitted together to define a cavity part, and a molten material is injected into the cavity to mold the molded product P.

Once the steps of injecting and cooling the molten material are completed, the process proceeds to steps of opening the mold and taking out the molded product P. In the steps of opening the mold and taking out the molded product, the molding die 100 operates as follows.

After the mold is opened (see Fig. 7), the ejector rod 768 is pushed up through a non-illustrated ejection device, and the ejector mount plates 762 move upward (i.e., in the Y direction). In association therewith, the ejector pin 763 which is disposed so as to stand on the ejector mount plates 762 ejects the molded product P in the Y direction (see Fig. 8).

At the same time, the retaining piece 161 housed in the holder 121 is ejected by the ejection pin 745 and is moved in the Y direction to the same extent as the ejector pin 763. In association with the movement of the retaining piece 161 in the Y direction, the sliding piece 171 is moved from a molding position as shown in Fig. 6 along the first guiding parts 145 of the holder 121, while the first sliding surfaces of the clicks 180 slide on the left side surfaces 146 and the right side surfaces 147 of the first guiding parts 145 of the guiding groove 141 in the holder 121. Thus, the molding core 191 is moved simultaneously in the Y direction and the X direction away from the undercut portion PI.

When the ejector mount plates 762 are moved upward by ΔH1 from a mold clamped state, the upper side faces 183 of the clicks 180 of the sliding piece 171 come into contact with the left side surfaces 149 of the second guiding parts 148 of the guiding grooves 141 in the holder 121. At this point, the molding core 191 attached to the sliding piece 171 is completely removed from the undercut portion PI (see Fig. 8). As for the sliding piece 171, the upper side faces 183 of the clicks 180 are in contact with the left side surfaces 149 of the second guiding parts 148 of the holder 121, and the right side faces 182 of the clicks 180 are separated from the right side surfaces 147 of the first guiding parts 145 of the guiding grooves 141 in the holder 121.

When the ejector mount plates 762 are moved upward by ΔH1 from the mold clamped state, the molded product P has not reached a position where the molded product P can be taken out (see Fig. 8). Therefore, the ejector mount plates 762 continue to move upward, and the ejector pin 763 in contact with an inner side of the molded product P continues to eject the molded product P. The retaining piece 161 also moves upward in a same manner, and the sliding piece 171 moves upward while the second sliding surfaces of the clicks 180 slide on the left and right side surfaces 149, 150 of the second guiding parts 148 of the guiding grooves 141 in the holder 121.

Since the center axes M2 of the second guiding parts 148 of the guiding grooves 141 of the holder 121 are parallel to the Y direction, the molding core 191 moves upward without moving in the +X direction or the -X direction. Although the molded product P includes the protruding portion P2 which is located ahead in the removal direction of the undercut portion PI (i.e., +X direction), the molding core 191 does not collide with the protruding portion P2 because the molding core 191 does not move in the +X direction. Further, since the molding core 191 does not move in the -X direction, either, the undercut portion PI will not be caught on the molding core 191 when the molded product P is taken out (see Fig. 9). Thus, the molded product P can be taken out without damage.

After the molded product P is taken out, the molding die 100 is clamped again in order to mold a next molded product P. Upon mold clamping, the entire movable die 700 is moved in the upward direction in Fig. 9, and the ejector mount plates 762 are moved in the downward direction in Fig. 9. As for the undercut processing mechanism 101, the retaining piece 161 is moved in an opposite direction to the previous direction in conjunction with the movement of the movable die 700, and an upper face of the molding core 191 becomes flush with an upper face of the core 712. Once the mold clamping is completed, a molding material is injected, and a next molded product P is molded. An operation of the molding die 100 from a mold open state to a mold clamped state is essentially the same as a conventional molding die including an undercut processing mechanism.

As described above, the molding die 100 and the undercut processing mechanism 101 can achieve compact and simple configurations and allow an undercut portion PI to be demolded easily and reliably because in conjunction with an operation of taking out the molded product P from the molding die 100, the retaining piece 161 moves upward while sliding inside the holder 121, and the sliding piece 171 is guided by the holder 121 to move such that the molding core 191 is removed from the undercut portion PI.

In addition, the molding die 100 and the undercut processing mechanism 101 can further allow even a molded product P, including a protruding portion P2 which is located ahead in the direction of demolding an undercut portion PI, to be demolded easily and reliably because after the molding core 191 is moved so as to demold the undercut portion PI, the molding core 191 is moved in the demolding direction (i.e., Y direction) in conjunction with the operation of taking out the molded product P.

Moreover, the undercut processing mechanism 101 can be incorporated into the molding die 100 with the sliding piece 171 and the retaining piece 161 housed in the holder 121, and therefore, the undercut processing mechanism can have a compact configuration and be easily attached to the molding die 100. In particular, the holder 121, the retaining piece 161, the sliding piece 171, and the molding core 191 can be assembled into a single independent unit; the undercut processing mechanism 101 as a single unit can be more easily attached to the molding die 100.

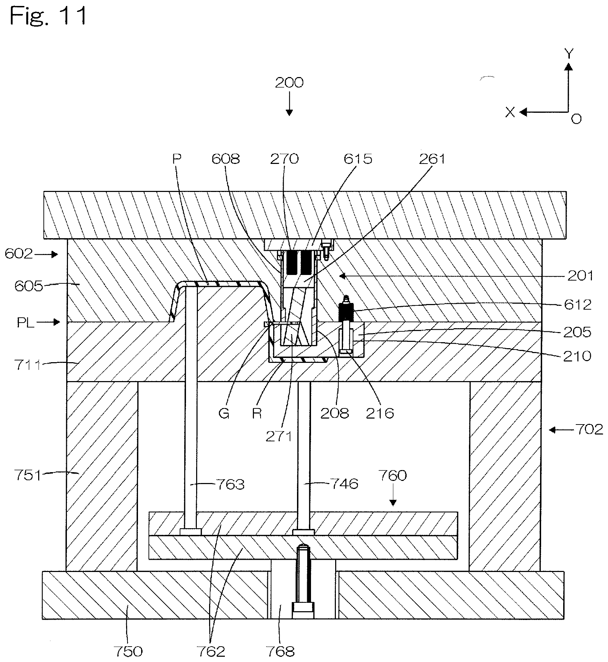

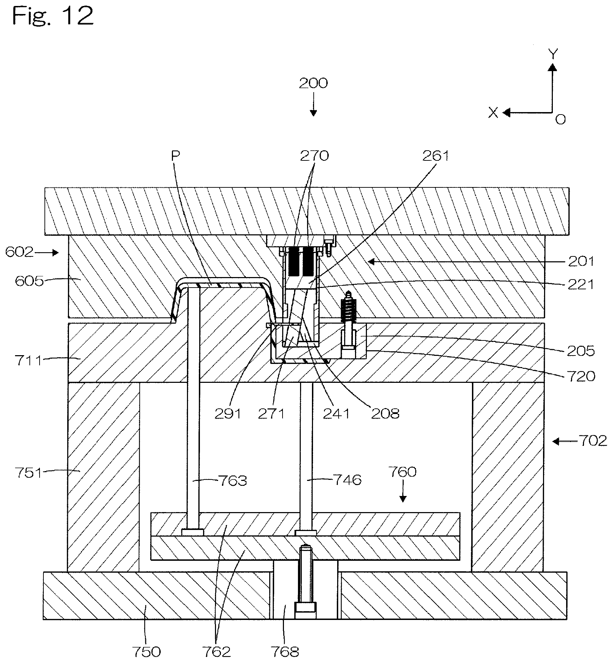

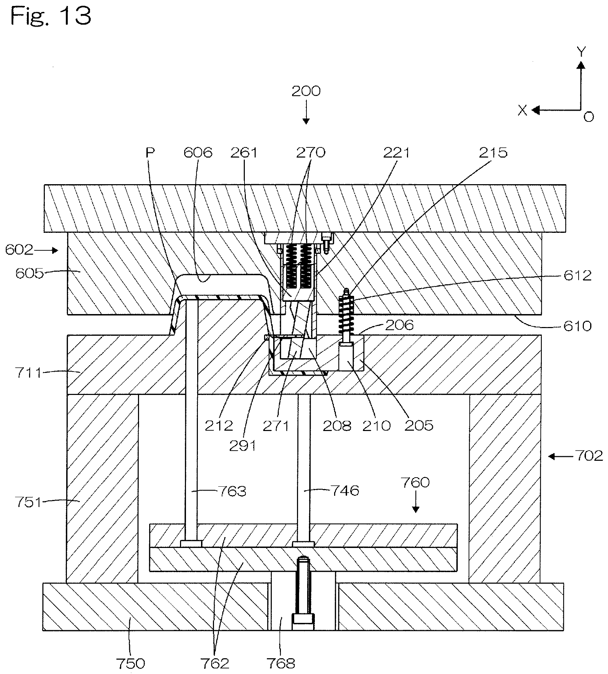

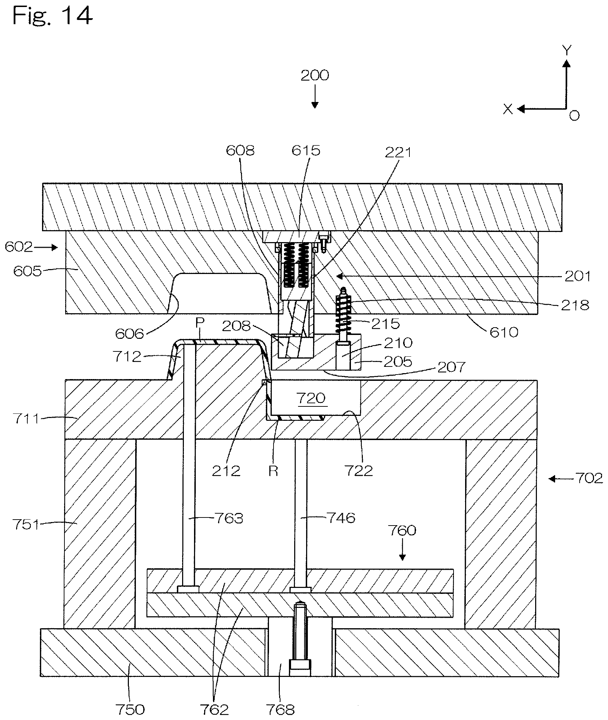

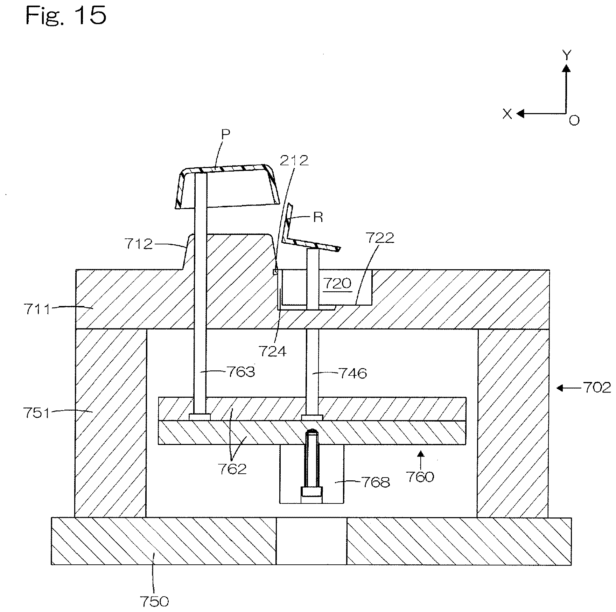

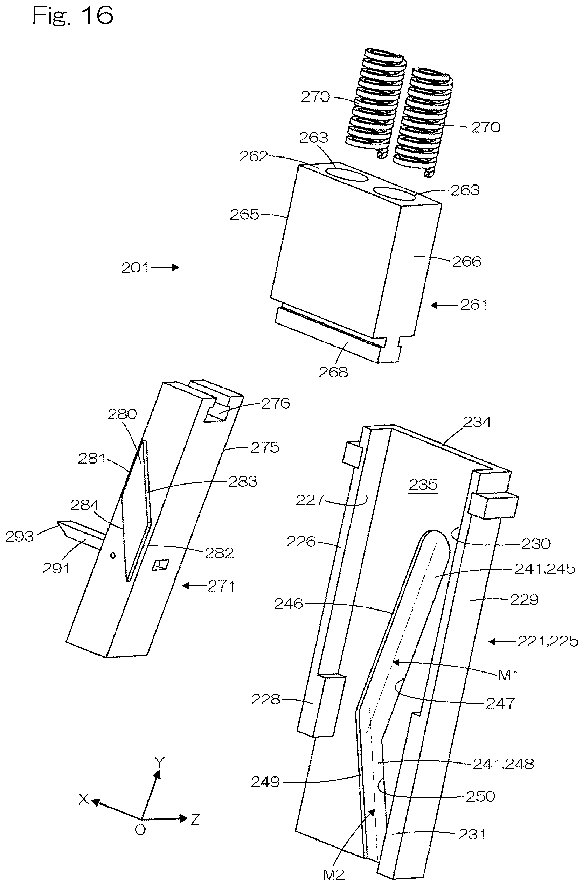

Fig. 11 is a cross-sectional view of a molding die 200 including a gate cutting mechanism 201 according to a fourth embodiment of the present invention in a mold closed state, and Fig. 12 is a cross-sectional view of the molding die 200 during a process of opening the mold. Fig. 13 is a cross-sectional view of the molding die 200 including the gate cutting mechanism 201 according to the fourth embodiment of the present invention during the process of opening the mold; Fig. 14 is a cross-sectional view of the molding die 200 after mold opening; and Fig. 15 is a cross-sectional view of the molding die 200 during a process of ejecting a molded product P. Fig. 16 is an exploded view showing features of the gate cutting mechanism 201 according to the fourth embodiment of the present invention. Features corresponding to the features of the molding die 100 and the undercut processing mechanism 101 according to the third embodiment of the present invention as shown in Fig. 6 to Fig. 10 are denoted with like reference numerals, and description thereof is omitted.

As with the molding die 100, the molding die 200 includes: a fixed die 602 which molds an external surface of a molded product P; a movable die 702 which molds an internal surface of the molded product P; and further a gate cutting mechanism 201 which cuts a gate G. For the sake of convenience, in the following description, the "upper" side means the side of the fixed mold 602 in Fig. 11, and the "lower" side means the side of the movable mold 702 in Fig. 11. In the following description, the "left" side corresponds to the left side in Fig. 11, and the "right" side means the opposite side, unless otherwise specifically noted.

As with the fixed die 600 of the third embodiment, the fixed die 602 includes a fixed mold plate 605 including a cavity 606 for molding the external surface of the molded product P. The fixed mold plate 605 includes, adjacent to the cavity 606, a housing part 608 which houses the gate cutting mechanism 201. The housing part 608 is arranged so as to penetrate the fixed mold plate 605 in a vertical direction. The fixed mold plate 605 also includes a recessed part 612 on a bottom face 610 thereof, which receives a spring 218 for advancing and retracting a movable piece 205.

As with the movable die 700, the movable die 702 includes a movable mold plate 711 including a core 712 which molds the inner surface of the molded product P. The movable mold plate 711 includes a housing part 720 which receives the movable piece 205. The movable piece 205 is fitted into the housing part 720 to shape a runner R. The movable mold plate 711 includes, in addition to an insertion hole through which the ejector pin 763 is inserted to push out (eject) the molded product P, an insertion hole through which an ejector pin 746 is inserted to push out (eject) a material left in the runner R after cutting the gate G.

The movable piece 205 has a cuboid shape and includes a recessed part 208 which opens on an upper face of the movable piece 205 and receives a lower part of the holder 221. The movable piece 205 also includes a recessed part 210 for attaching a coupling pin 215, the recessed part extending from a bottom part to an upper part of the movable piece 205; and a through hole extending from the upper face of the movable piece 205 to the recessed part 210. The diameter of the through hole is smaller than the diameter of the recessed part 210.

The movable piece 205 is coupled to the fixed mold plate 605 through the coupling pin 215. The coupling pin 215 includes a pin body having a smaller diameter than that of the through hole connecting to the recessed part 210 and, at a tip end portion of the pin body, a flange 216 having a smaller diameter than that of the recessed part 210. The coupling pin 215 is inserted into the through hole connecting to the recessed part 210 such that the flange 216 is located within the recessed part 210, and a base end portion of the coupling pin 215 is fixed to the bottom of the recessed part 612. The spring 218 for pushing out the movable piece 205 is inserted onto the coupling pin 215 and is attached so as to be housed in the recessed part 612, with a lower end of the spring in contact with an upper face 206 of the movable piece 205.

The housing part 720 is a substantially rectangular recessed part in a front view (see Fig. 15) and includes a recessed part 724 which shapes the runner R on the left side of a bottom face 722 of the housing part 720 (see Fig. 15). Further, a cushioning material 212 for protecting a tip end portion 293 of a cutter 291 is attached to the core 712 which is into contact with an upper left end of the housing part 720 (see Fig. 15). The cushioning material 212 is made of a material softer than the tip end portion 293 of the cutter 291, such as soft iron.

The gate cutting mechanism 201 is operable to cut the gate G connecting the molded product P to the runner R. The gate cutting mechanism 201 can cut the gate G with the cutter 291 in conjunction with a mold opening operation of the molding die 200, and move the cutter 291 after cutting the gate G away from the gate G, so that a material left in the runner R can be removed. The gate cutting mechanism 201 of the present embodiment employs the sliding mechanism 1 of the first embodiment.

The gate cutting mechanism 201 includes: the cutter 291 which cuts the gate G; a sliding piece 271 which is coupled to the cutter 291 to slide the cutter 291; and a retaining piece 261 which slidably retains the sliding piece 271; and a holder 221 which houses the retaining piece 261 in an advanceable and retractable manner.

The sliding piece 271 of the present embodiment corresponds to the second piece 21 of the sliding mechanism 1 of the first embodiment; the retaining piece 261 corresponds to the first piece 11; and the holder 221 corresponds to the guiding body 31. Also, in the present embodiment, the sliding piece 271 corresponds to a slider, and the holder 221 corresponds to a guide body. As described later, a guiding groove 241 corresponds to a guide unit; a first guiding part 245 corresponds to a first guide unit; and a second guiding part 248 corresponds to a second guide unit. A click 280 corresponds to an engagement unit; a first sliding surface of the click 280 corresponds to a first engagement unit; and a second sliding surface of the click 280 corresponds to a second engagement unit. The retaining piece 261 and the sliding piece 271 are slidably coupled together through a dovetail groove structure. The retaining piece 261 corresponds to a coupling member, and left- and right-side-wall inner surfaces 227, 230 of the holder 221 correspond to a coupling member guide unit.

The holder 221 houses the retaining piece 261 in an advanceable and retractable manner, and guides the retaining piece 261 in the vertical direction. Further, the holder 221 guides the sliding piece 271 such that the cutter 291 attached to the sliding piece 271 cuts the gate G, and the cutter 291 after cutting the gate G is moved away from the gate G. The holder 221 includes two half holder members 225 of a same shape which are assembled together, and has a box-like column shape which defines an inner space therein with an open upper face and an open lower face. The holder 221 may be constituted by a plurality of divided members or be integrated with the fixed mold plate 605.

The holder 221 shares a common point with the holder 121 of the third embodiment in that the sliding piece 271 is guided in the first direction and subsequently in the second direction. In contrast, the holder 221 has a different configuration from the holder 121 of the third embodiment in that the sliding piece 271 including the cutter 291 is slidably housed.

The holder 221 includes a left side wall 226 which is shorter than a back face wall 234 of the holder 221 and is opened below the left side surface thereof. This opening allows the cutter 291 to move in and out. At a lower part of the left side wall 226, there is a stepped portion 228 which protrudes inward. At a lower part of a right side wall 229, there is also a stepped portion 231 which protrudes inward. A left-side-wall inner surface 227 and a right-side-wall inner surface 230 serve as guides for the retaining piece 261, and the left and right stepped portions 228, 231 serve as stoppers for the retaining piece 261. As with the holder 121 of the third embodiment, the holder 221 includes guiding grooves 241 for guiding the sliding piece 271 on a front-face-wall inner surface and a back-face-wall inner surface 235 of the holder.

Each guiding groove 241 is a recessed groove and has a dog-legged shape when the back-face-wall inner surface 235 is viewed straightforwardly (see Fig. 16). Each guiding groove 241 includes a first guiding part 245 which guides the sliding piece 271 in the first direction and a second guiding part 248 which guides the sliding piece 271 in the second direction. The first guiding part 245 is inclined diagonally upward to the right such that an upper part thereof is located on the right side with respect to a lower part thereof. The second guiding part 248 is inclined diagonally upward to the left such that an upper part thereof is located on the left side with respect to a lower part thereof. The first guiding part 245 and the second guiding part 248 are connected to each other, and a center axis M1 of the first guiding part 245 and a center axis M2 of the second guiding part 248 intersect with each other (see Fig. 16).

The first guiding part 245 guides the sliding piece 271 such that the cutter 291 coupled to the sliding piece 271 cuts the gate G in a synchronized manner with the ejector mechanism 760. On the other hand, the second guiding part 248 guides the sliding piece 271 such that the cutter 291 after cutting the gate G is moved away from the gate G in a synchronized manner with the ejector mechanism 760.

The holder 221 is attached to the housing part 608 such that a lower end of the left side wall 226 is flush with the bottom face 610 of the fixed mold plate 605. For this reason, a lower part of the holder 221 including the opening for the cutter 291 to move in and out projects downward from the bottom face 610 of the fixed mold plate 605. The part of the holder 221 which projects downward from the bottom face 610 of the fixed mold plate 605 can be accommodated in the recessed part 208 of the movable piece 205 when the mold is closed.

The retaining piece 261 has a cuboid shape and includes a protruding line (dovetail-groove protruding line) 268 extending in the X direction on the bottom face of the retaining piece 261. The protruding line 268 slidably comes into engagement with a dovetail groove 276 at an upper end of a body 275 of the sliding piece 271, and guides the cutter 291 attached to the sliding piece 271 in the +X direction and the -X direction. The retaining piece 261 also includes recessed parts 263 which open on an upper face 262 of the retaining piece 261. The recessed parts 263 serve as housing parts for springs 270 which push out the retaining piece 261 downward. There are two recessed parts 263.

A left side face 265 and a right side face 266 of the retaining piece 261 are slidably in contact with the left-side-wall inner surface 227 and the right-side-wall inner surface 230 of the holder 221, and the retaining piece 261 advances and retract in the demolding direction (i.e., Y direction) in conjunction with opening and closing of the molding die 200.

The sliding piece 271 includes the linear body 275 having a rectangular cross section, and the body 275 includes a middle part to which the cutter 291 is attached and an upper end including the dovetail groove 276 which slidably comes into engagement with the protruding line 268 of the retaining piece 261. The protruding line (dovetail-groove protruding line) 268 of the retaining piece 261 and the dovetail groove 276 of the sliding piece 271 constitute a dovetail groove structure for slidable coupling. The sliding piece 271 also includes clicks 280 which are configured to be fitted into the guiding grooves 241 of the holder 221. The clicks 280 are located at middle parts of the body 275 in a protruding manner on a front face and a back face of the sliding piece 271. Therefore, the clicks 280 may be considered as protruding lines.

Left side faces 281 and right side faces 282 of the clicks 280 serve as first sliding surfaces which are in contact with the left side surfaces 246 and right side surfaces 247 of the first guiding parts 245 of the holder 221, respectively, until the cutter 291 cuts the gate G. Upper side faces 283 and lower side faces 284 of the clicks 280 serve as second sliding surfaces which come into contact with right side surfaces 250 and left side surfaces 249 of the second guiding parts 248 of the holder 221, respectively, in order to move the cutter 291 after cutting the gate G away from the gate G.

The cutter 291 has a rod shape and includes a base end fixed to the sliding piece 271 and a blade for cutting the gate G at the tip end portion 293. The cutter 291 is removably attached to the sliding piece 271. Although the cutter 291 may be integrated with the sliding piece 271, the cutter 291 is preferably removable from the sliding piece 271, so that only the cutter 291 can be replaced when the blade has worn out.

The gate cutting mechanism 201 having the above constitution is incorporated into the holder 221, with the cutter 291 attached to the sliding piece 271, and the dovetail groove 276 of the sliding piece 271 receiving the protruding line 268 of the retaining piece 261. In this state, the clicks 280 of the sliding piece 271 are fitted into the guiding grooves 241 of the holder 221, and the cutter 291 protrudes from the opening at the left side face of the holder 221. The gate cutting mechanism 201 including the respective pieces and the springs 270 incorporated therein is fitted into the housing part 608 in the fixed mold plate 605, and is fixed to the fixed mold plate 605 through the fixed plate 615.

An operation and effects of the molding die 200 and gate cutting mechanism 201 of the present embodiment will be described with reference to an exemplary case where a molded product P is molded by injection molding in the molding die 200.

In a mold closed state, the upper face 206 of the movable piece 205 is in contact with the bottom face 610 of the fixed mold plate 605, and the bottom face 207 of the movable piece 205 is in contact with a bottom 722 of the housing part 720 in the movable mold plate 711. Thus, the runner R is shaped. As for the gate cutting mechanism 201, a bottom part of the holder 221 and a bottom part of the sliding piece 271 are in contact with a bottom of recessed part 208 of the movable piece 205, and the sliding piece 271 is located at a highest lift position with respect to the holder 221. Then, the clicks 280 are located in the first guiding parts 245, and the tip end portion 293 of the cutter 291 is located at a slightly rightward position with respect to the gate G (see Fig. 11).

When the mold is closed, parting faces (PL faces) of the fixed die 602 and the movable die 702 are fitted together to define a cavity part. Then, a molten resin is injected from a non-illustrated injection device, and the resin passes through a sprue (not illustrated), then through the runner R and the gate G and fills in the cavity part. After a pressure holding step and a cooling step, the mold is opened, and a molded product P is taken out. The processes of opening the mold and taking out the molded product P are performed according to the following procedure.

Once the movable mold 702 retracts and the mold starts to open, a gap (space) is created between the bottom face of the holder 221 and the bottom of the recessed part 208 of the movable piece 205. Thus, the spring 270 extends, so that the retaining piece 261 is pushed out downward. The sliding piece 271 slidably coupled to the retaining piece 261 moves downward along the first guiding parts 245, while the first sliding surfaces slide in the first guiding parts 245 of the guiding grooves 241 in the holder 221. Since the first guiding parts 245 are inclined downward to the left, the cutter 291 attached to the sliding piece 271 moves in the X direction while moving downward.

In conjunction with mold opening, the sliding piece 271 descends, and when the lower side faces 284 of the clicks 280 come into contact with the left side faces 249 of the second guiding parts 248 of the guiding grooves 241, the gate G is completely cut by the cutter 291 (see Fig. 12). As the gap further increases between the fixed die 602 and the movable die 702 increases, the sliding piece 271 moves along the second guiding parts 248, while the second sliding surfaces slide in the second guiding part 248 of the guiding grooves 241, and the cutter 291 moves in the -X direction so as to move away from the gate G (see Fig. 13). When the bottom part of the retaining piece 261 comes into contact with the left and right stepped portions 228, 231 of the holder 221, the sliding piece 271 stops descending, and the cutter 291 also stops moving.

When the flange 216 of the coupling pin 215 comes into contact with a ceiling surface of the recessed part 210 of the movable piece 205, the movable piece 205 is integrated with the fixed die 602. Thereafter, the holder 221 and the movable piece 205 have a fixed positional relation. When a necessary space to remove the resin left in the runner R is secured between the movable piece 205 and the movable mold plate 711 (see Fig. 14), the ejector mount plates 762 move upward. Thus, the molded product P is ejected by the ejector pin 763, and the resin left in the runner R is ejected by the ejector pin 746 (see Fig. 15).

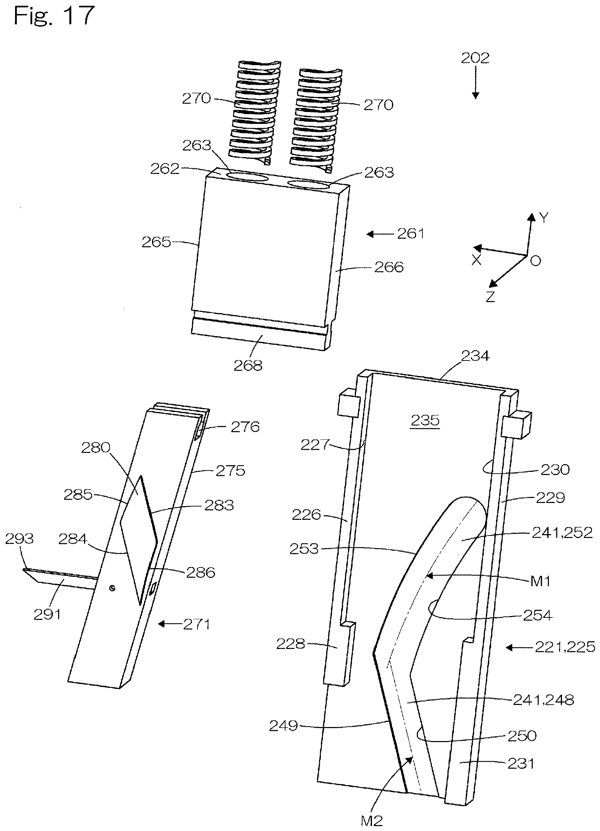

Fig. 17 is an exploded view showing features of a gate cutting mechanism 202, which is a variant of the gate cutting mechanism 201 of the molding die 200 according to the fourth embodiment of the present invention. Features corresponding to the features of the gate cutting mechanism 201 as shown in Fig. 16 are denoted with like reference numerals, and description thereof is omitted.

The difference between the gate cutting mechanism 202 and the gate cutting mechanism 201 is the shape of the first guiding parts of the guiding grooves 241 in the holder 221. Correspondingly, the shapes of left side faces 285 and right side faces 286 of the clicks 280 of the sliding piece 271, which serve as the first sliding surfaces, also differ from those in the gate cutting mechanism 201.

The first guiding parts 245 of the guiding grooves 241 of the gate cutting mechanism 201 have the linear center axes M1 and the linear left and right side surfaces 246, 247, whereas the first guiding parts 252 of the guiding grooves 241 of the gate cutting mechanism 202 have slightly curved center axes M1 and slightly curved left and right side surfaces 253, 254. Correspondingly, the left side faces 285 and the right side faces 286 of the clicks 280 of the sliding piece 271, which serve as the first sliding surface, are also curved.

Although, as with the gate cutting mechanism 201, the second guiding parts 248 of the guiding grooves 241 of the gate cutting mechanism 202 extend linearly, the second guiding parts 248 may also be curved. As described above, the first guiding parts and the second guiding parts of the guiding grooves 241 may have a linear shape, or a curved shape, or a combination of a linear shape and a curved shape.

As described above, the molding die 200 and the gate cutting mechanism 201, 202 can achieve compact and simple configurations and can operate such that the gate G can be cut easily and reliably prior to taking out the molded product P. In addition, the cutter 291 after cutting the gate G is moved away from the gate G in conjunction with mold opening, so that the cutter 291 does not interfere when the molded product P is taken out.

Further, the molding die 200 moves the movable piece 205 in conjunction with mold opening and allows a material left in the runner to be removed, and therefore, the molding die 200 is highly convenient for use. Moreover, the gate cutting mechanism 201, 202 can be incorporated into the molding die 200 with the sliding piece 271 and the retaining piece 261 housed in the holder 221, and therefore, the gate cutting mechanism 201, 202 can have a compact configuration and be easily attached to the molding die 200. In particular, the holder 221, the retaining piece 261, the sliding piece 271, and the cutter 291 can be assembled into a single independent unit; the gate cutting mechanism 201, 202 as a single unit can be more easily attached to the molding die 200.

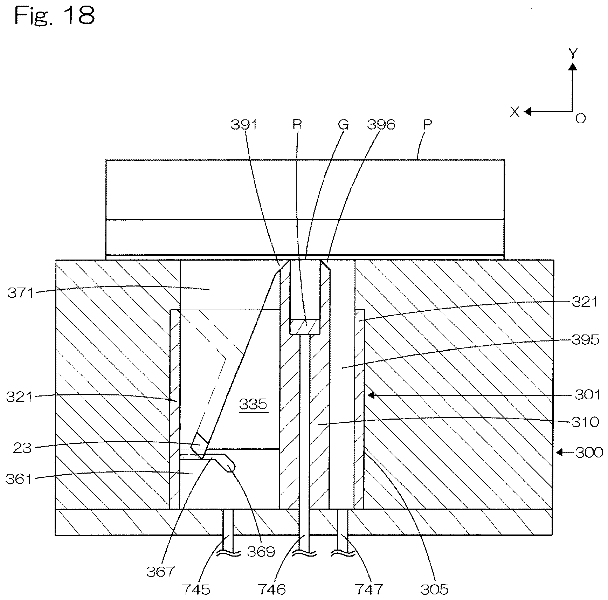

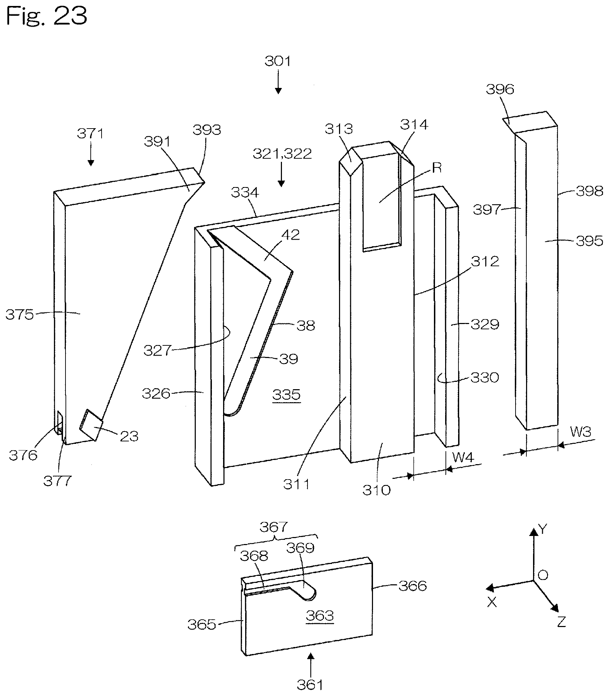

Fig. 18 to Fig. 22 illustrate operations of a molding die 300 including a gate cutting mechanism 301 according to a fifth embodiment of the present invention. Fig. 23 is an exploded view showing features of the gate cutting mechanism 301 according to the fifth embodiment of the present invention. Features corresponding to the features of the sliding mechanism 1 according to the first embodiment of the present invention as shown in Fig. 1 and Fig. 2 are denoted with like reference numerals, and description thereof is omitted. For the sake of convenience, in the following description, the "upper" side means the side of the molded product P in Fig. 18, and the "lower" side means the side of the molding die 300 in Fig. 18. In the following description, the "left" side corresponds to the left side in Fig. 18, and the "right" side means the opposite side, unless otherwise specifically noted.

The molding die 300 includes a gate cutting mechanism 301 which cuts a gate G. The gate cutting mechanism 301 is operable to cut a gate G connecting a molded product P to a runner R, and employs the sliding mechanism 1 of the first embodiment. The gate cutting mechanism 301 is incorporated in the housing part 305 of the molding die 300. The housing part 305 is arranged so as to penetrate the molding die 300 in the vertical direction and includes a bottom part closed by another member.

The gate cutting mechanism 301 includes: a first cutter 391 which cuts the gate G; a second cutter 395; a sliding piece 371 including the first cutter 391; a retaining piece 361 which slidably holds the sliding piece 371; and a holder 321 which houses the retaining piece 361 in an advanceable and retractable manner.

The sliding piece 371 of the present embodiment corresponds to the second piece 21 of the sliding mechanism 1 of the first embodiment; the retaining piece 361 corresponds to the first piece 11; and the holder 321 corresponds to the guiding body 31. In the present embodiment, the sliding piece 371 corresponds to a slider; the holder 321 corresponds to a guide body; the guiding groove 38 corresponds to a guide unit; the first guiding part 39 corresponds to a first guide unit; and the second guiding part 42 corresponds to a second guide unit. A click 23 corresponds to an engagement unit; a first sliding surface of the click 23 corresponds to a first engagement unit; and a second sliding surface of the click 23 corresponds to a second engagement unit. The retaining piece 361 and the sliding piece 371 are slidably coupled together through a dovetail groove structure. The retaining piece 361 corresponds to a coupling member, and a left-side-wall inner surface 327 of the holder 321 and a left side face 311 of a middle piece 310 correspond to a coupling member guide unit.

The holder 321 shares a common point with the guiding body 31 of the sliding mechanism 1 of the first embodiment in that the sliding piece 371 is guided in the first direction and subsequently in the second direction, and in that the retaining piece 361 is guided in the demolding direction (i.e., Y direction). In contrast, the holder 321 differs in the structure from the guiding body 31 in that the middle piece 310 including a runner R at a middle part thereof is attached to the holder 321.

The holder 321 includes a channel-shaped member 322 having a channel-shaped or U-shaped transverse section and a flat plate (not illustrated) which provides a front face wall for closing a front side (fore side) of the channel-shaped member 322, and has a box-like column shape which defines an inner space therein with an open upper face and an open lower face. The holder 321 may include two half holder members of a same shape which are assembled together as in other embodiments, or be constituted by a plurality of divided members, or be integrated with the molding die 300.

The channel-shaped member 322 includes a rectangular back face wall 334 and side walls 326, 329 at opposite ends of the rectangular back face wall 334. The middle piece 310 is a linear member having a rectangular transverse section and is attached on a rightward position on a back-face-wall inner surface 335 of the channel-shaped member 322. The left-side-wall inner surface 327 of the channel-shaped member 322 is parallel to the left side face 311 of the middle piece 310, and the right-side-wall inner surface 330 of the channel-shaped member 322 is parallel to the right side face 312 of the middle piece 310.

The left-side-wall inner surface 327 of the channel-shaped member 322 and the left side face 311 of the middle piece 310 serve as guides for the retaining piece 361, and the right-side-wall inner surface 330 of the channel-shaped member 322 and the right side face 312 of the middle piece 310 serve as guides for the second cutter 395. Guiding grooves 38 are located on the back-face-wall inner surface 335 of the channel-shaped member 322 and a front-face-wall inner surface (not illustrated) which closes the front side of the channel-shaped member 322, each guiding groove having a dog-legged shape when the back-face-wall inner surface 335 is viewed straightforwardly. The guiding grooves 38 have a same basic configuration as that of the guiding groove 38 in the holder 31 of the first embodiment, and guide the sliding piece 371.

The first guiding parts 39 of the guiding grooves 38 guide the sliding piece 371 such that the first cutter 391 in the sliding piece 371 cuts the gate G. On the other hand, the second guiding part 42 guides the sliding piece 371 such that the first cutter 391 in the sliding piece 371 after cutting the gate G is moved away from the gate G.

The retaining piece 361 has a cuboid shape and includes lock grooves 367 in upper parts of the front face wall 363 and the back face wall, the lock grooves 367 being configured to slidably lock or engage clicks 377 in a dovetail groove 376 at a lower end of the sliding piece 371. Each lock groove 367 includes, at a position slightly below an upper face of the retaining piece 361, a first lock groove 368 which extends parallel to the X direction from a left end to a middle part of the retaining piece 361 and a second lock groove 369 which continues from the first lock groove 368 and extends diagonally downward to the right. An upper part of the retaining piece 361 including the first lock groove 368 is constructed as a protruding line (dovetail-groove protruding line).

The retaining piece 361 is ejected in the Y direction through the ejection pin 745, while the left side face 365 and the right side face 366 are slidably in contact with the left-side-wall inner surface 327 of the holder 321 and the left side face 311 of the middle piece 310.

The middle piece 310 includes a runner R connected to the gate G at an upper part thereof. The middle piece 310 includes inclined surfaces 313, 314 at left and right upper ends. The left inclined surface 313 is inclined at a same angle as that of an inclined surface of the first cutter 391, and the right inclined surface 314 is inclined at a same angle as that of an inclined surface at a tip end portion of the second cutter 395 (see Fig. 18). Further, the middle piece 310 is coupled to an ejector pin 746 configured to remove a material left in the runner R after the molded product P is taken out.

The sliding piece 371 includes a substantially triangular body 375 with an inclined right side in a front view. The sliding piece 371 includes the first cutter 391 at an upper right end of the body 375 and the dovetail groove 376 at a lower end of the body 375, which are configured to be slidably locked into the lock grooves 367 of the retaining piece 361. The protruding line (dovetail-groove protruding line) of the retaining piece 361 and the dovetail groove 376 of the sliding piece 371 constitute a dovetail groove structure for slidable coupling. The sliding piece 371 also includes the clicks 23 configured to be fitted into the guiding grooves 38 of the holder 321. The clicks 23 are located at lower positions on the front face side and the back face side of the body 375 in a protruding manner. Therefore, the clicks 23 may be considered as protruding lines. The clicks 23 have a same basic configuration as that of the click 23 on the second piece 21 of the sliding mechanism 1 of the first embodiment and includes first sliding surfaces which slidably come into contact with the first guiding parts 39 of the guiding grooves 38 and second sliding surfaces which slidably come into contact with the second guiding parts 42 of the guiding grooves 38.

The first cutter 391 is integrated with the body 375 at an upper right end portion of the body 375 of the sliding piece 371, and a tip end portion 393 of the first cutter 391 is a blade for cutting the gate G. In the present embodiment, the sliding piece 371 is integrated with the first cutter 391. However, the sliding piece 371 and the first cutter 391 may be constituted as separate members and be coupled together.

The second cutter 395 is a columnar body having a rectangular cross section and includes a blade 396 for cutting the gate G at an upper left end portion of the second cutter 395. The width W3 of the second cutter 395 is substantially equal to a width W4 between the right side face 312 of the middle piece 310 of the holder 321 and the right-side-wall inner surface 330 of the holder 321. When the second cutter 395 is fitted into the holder 321, the left side face 397 slidably comes into contact with the right side face 312 of the middle piece 310, and the right side face 398 slidably comes into contact with the right-side-wall inner surface 330 of the holder 321. An ejection pin 747 is coupled to a bottom face of the second cutter 395.

The gate cutting mechanism 301 having the above constitution is incorporated into the holder 321, with the clicks 377 of the dovetail groove 376 of the sliding piece 371 fitted into the lock groove 367 of the retaining piece 361. The second cutter 395 is incorporated into the holder 321 and is fitted into the housing part 305 in the molding mold 300 to be fixed therein.

An operation and effects of the molding die 300 and the gate cutting mechanism 301 of the present embodiment will be described.

During molding, the retaining piece 361 is located at lowermost end of the holder 321, and the sliding piece 371 slidably coupled to the retaining piece 361 is also at a lowermost position. The first cutter 391 and the second cutter 395 are separated to a maximum extent, and both of the first cutter 391 and the second cutter 395 are located away from the gate G (see Fig. 18).

When the molded product P is taken out, the ejection pins 745, 747 and the ejector pin 746 are pushed up simultaneously by a same distance. At the same time, the sliding piece 371 including the first cutter 391 at the upper right tip end portion thereof is guided by the first guiding parts 39 to move upward to the right, while the first sliding surfaces of the clicks 23 slide in the first guiding parts 39 of the guiding grooves 38. On the other hand, the second cutter 395 is guided by the right side face 312 of the middle piece 310 and the right-side-wall inner surface 330 of the holder 321 to move in the Y direction.

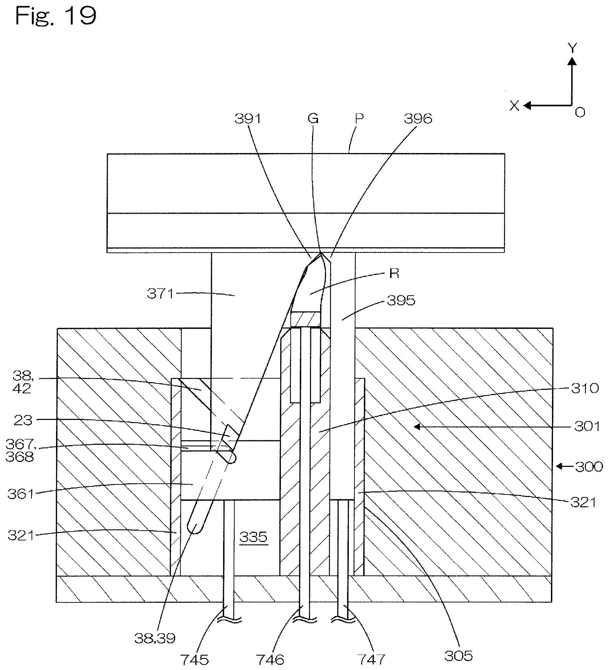

Thus, the first cutter 391 moves to the right (i.e., in the -X direction), and the first cutter 391 and the second cutter 395 cut the gate G. At this point, the clicks 377 of the dovetail groove 376 of the sliding piece 371 are located at rightmost positions in the first lock grooves 368 of the retaining piece 361. The clicks 23 on the sliding piece 371 are located in the first guiding parts 39 of the guiding grooves 38 (see Fig. 19).

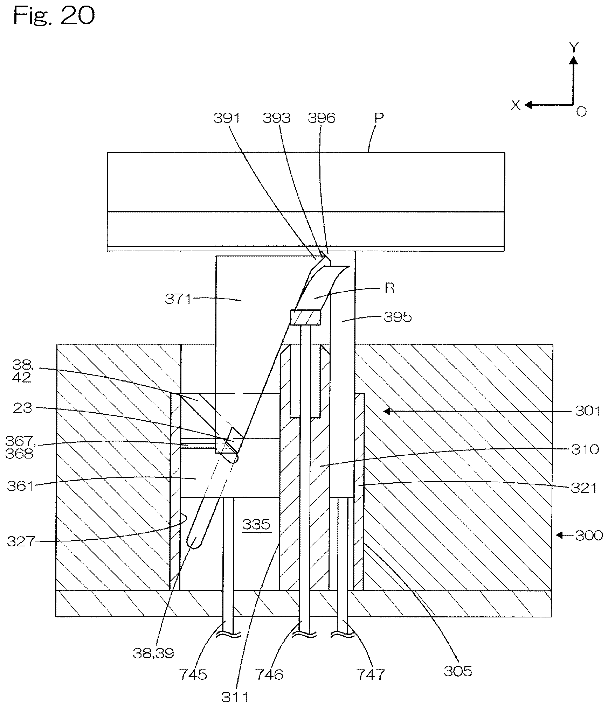

When the ejection pins 745, 747 and the ejector pin 746 are pushed up further, the molded product P is pushed up by the second cutter 395, and with the gate G cut, the runner R is also pushed up by the ejector pin 746. On the other hand, the sliding piece 371 is guided by the first guiding parts 39 of the guiding grooves 38 to move to the upper right side, while the clicks 377 of the dovetail groove 376 enter the second lock grooves 369 of the retaining piece 361. Since the second lock grooves 369 extend downward to the right, the first cutter 391 moves in the upward direction (i.e., Y direction) to a lesser extent than that of the second cutter 395. Thus, the tip end portion 393 of the first cutter 391 moves so as to enter a lower side of the blade 396 of the second cutter 395 (see Fig. 20). This makes it possible to cut the gate G reliably.

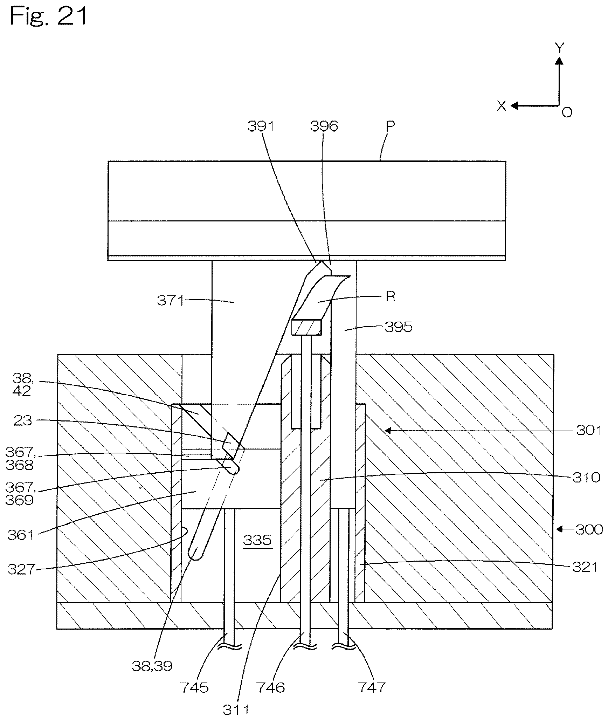

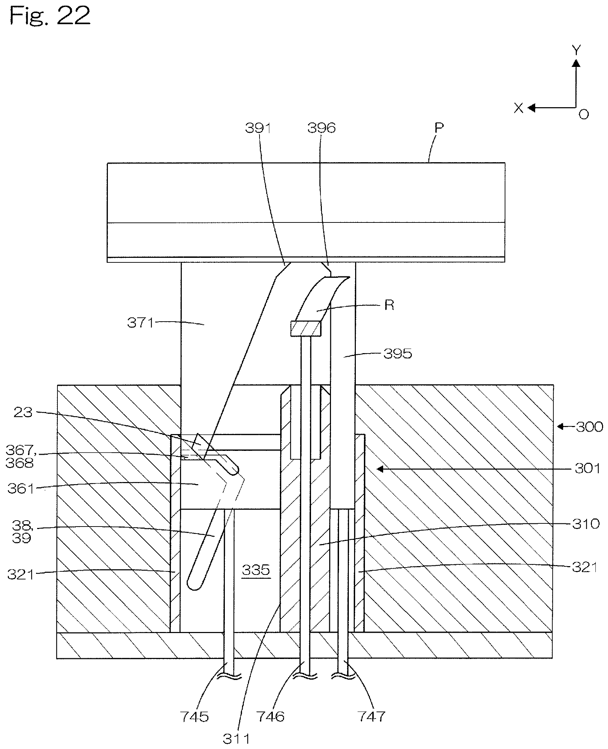

When the ejection pins 745, 747 and the ejector pin 746 are pushed up further, the clicks 23 of the sliding piece 371 enter the second guiding parts 42 of the guiding grooves 38. Since the second guiding parts 42 extend upward to the left, when the clicks 23 enter the second guiding parts 42 of the guiding grooves 38, the clicks 377 of the dovetail groove 376 enter the first lock grooves 368 of the retaining piece 361. Thus, the positions of the first cutter 391 and the second cutter 395 are aligned, and the molded product P is pushed up by the first cutter 391 and the second cutter 395. At the same time, a material (molding material) left in the runner R after the gate G is cut is also pushed up by the ejector pin 746 (see Fig. 21). Then, the sliding piece 371 is guided by the second guiding parts 42 of the guiding grooves 38 to move to the upper left side, so that the first cutter 391 is moved away from the second cutter 395 (see Fig. 22).

The above operation makes it possible to take out the molded product P from the molding die 300 and also to remove, from the runner R, a molding material left in the runner R after the gate G is cut.

As described above, the molding die 300 and the gate cutting mechanism 301 can achieve compact and simple configurations and can operate such that the gate G can be cut easily and reliably in conjunction with taking out the molded product P. Further, the molding die 300 allows a material left in the runner R to be removed, and therefore, the molding die 300 is highly convenient for use.

Moreover, the gate cutting mechanism 301 can be incorporated into the molding die 300 with the sliding piece 371 including the first cutter 391, the second cutter 395, and the retaining piece 361 housed in the holder 321, and therefore, the gate cutting mechanism 301 can have a compact configuration and be easily attached to the molding die 300. In particular, the sliding piece 371 including the first cutter 391, the second cutter 395, the retaining piece 361, and the holder 321 can be assembled into a single independent unit; the gate cutting mechanism 301 as a single unit can be more easily attached to the molding die 300.

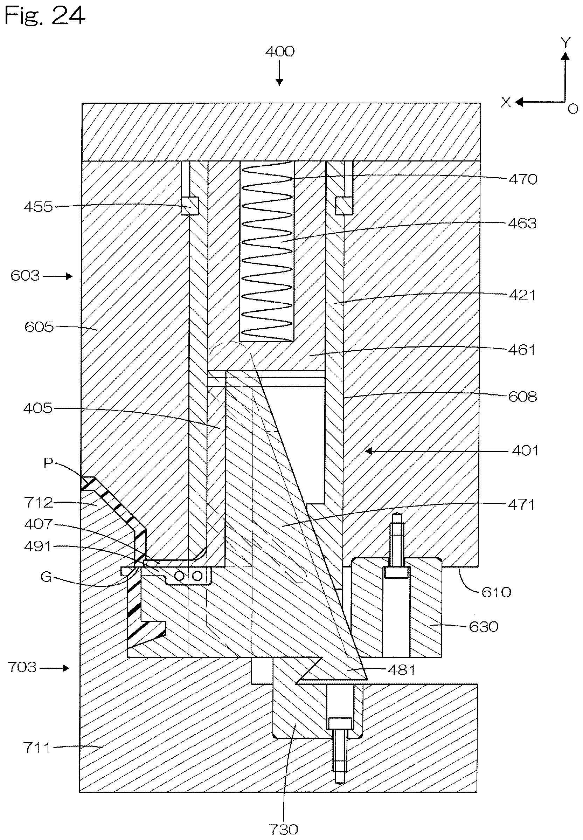

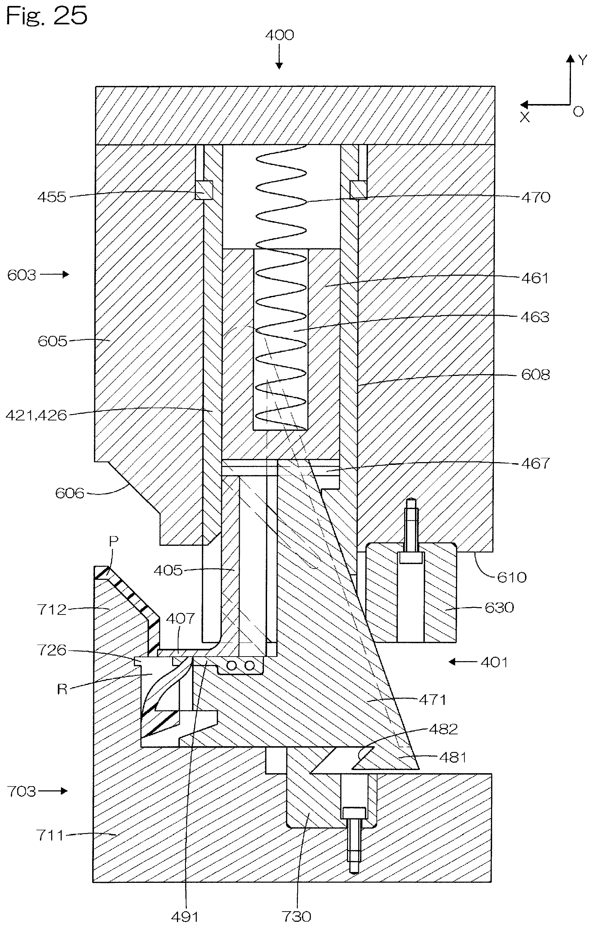

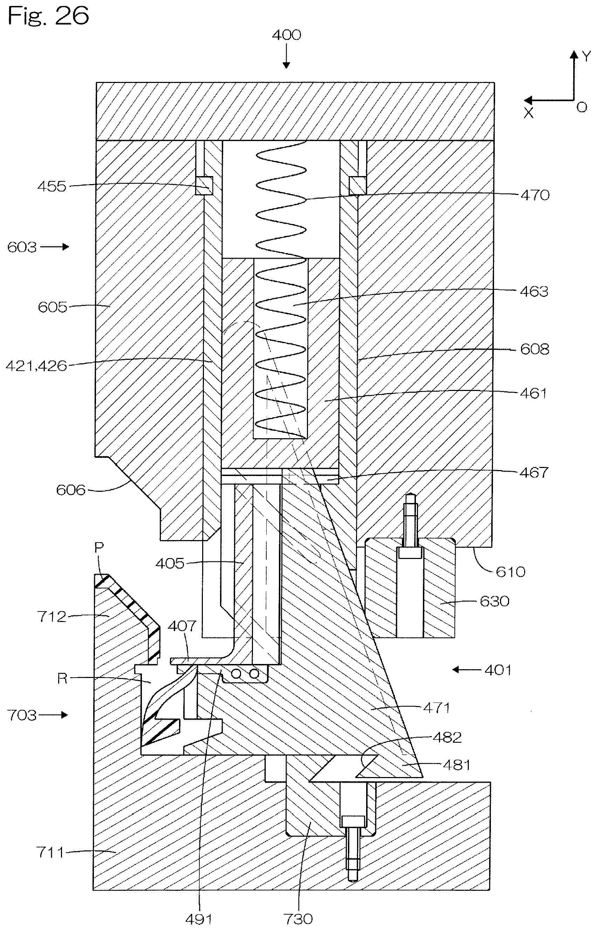

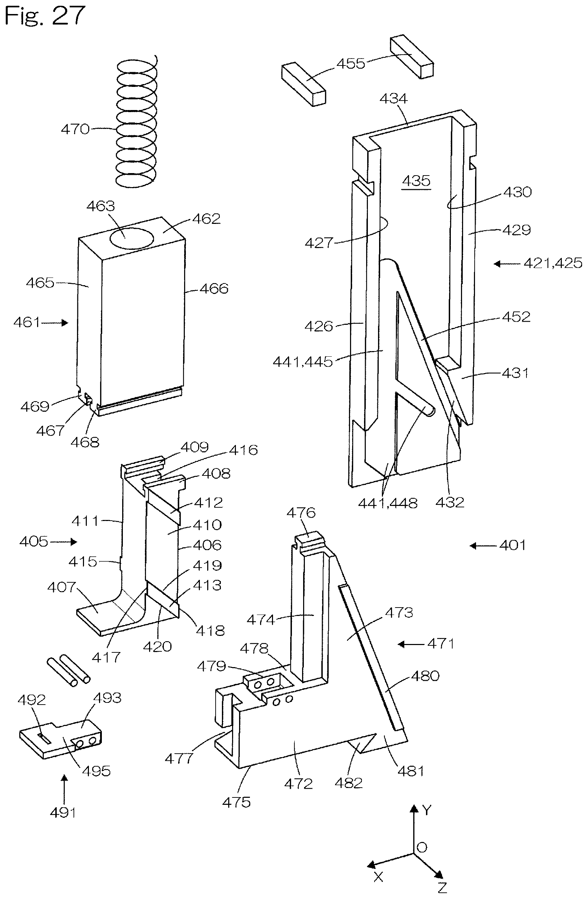

Fig. 24 is a cross-sectional view showing a main part of a molding die 400 including a gate cutting mechanism 401 according to the sixth embodiment of the present invention when the mold is closed. Fig. 25 and Fig. 26 show cross-sectional views showing the main part of the molding die 400 including the gate cutting mechanism 401 according to the sixth embodiment of the present invention during a process of opening the mold. Fig. 27 is an exploded view showing features of the gate cutting mechanism 401 of the sixth embodiment of the present invention. Features corresponding to the features of the molding die 200 including the gate cutting mechanism 201 according to the fourth embodiment of the present invention as shown in Fig. 11 to Fig. 17 are denoted with like reference numerals, and description thereof is omitted.

As with the molding die 200 of the fourth embodiment, the molding die 400 includes: a fixed die 603 which molds an external surface of a molded product P; a movable die 703 which molds an internal surface of the molded product P; and further a gate cutting mechanism 401 which cuts a gate G. For the sake of convenience, in the following description, the "upper" side means the side of the fixed die 603 in Fig. 24, and the "lower" side means the side of the movable die 703 in Fig. 24. In the following description, the "left" side corresponds to the left side in Fig. 24, and the "right" side means the opposite side, unless otherwise specifically noted.

As with the fixed die 602 of the fourth embodiment, the fixed die 603 includes a fixed mold plate 605 including a cavity 606 for molding the external surface of the molded product P. The fixed mold plate 605 includes, adjacent to the cavity 606, a housing part 608 which houses the gate cutting mechanism 401. The housing part 608 is arranged so as to penetrate the fixed mold plate 605 in the vertical direction and includes a step in an upper part of the housing part 608. A guide piece 630 which guides a sliding piece 471 is attached at a rightward position on a bottom face of the housing part 608 of the fixed mold plate 605.

As with the movable die 702 of the fourth embodiment, the movable die 703 includes a movable mold plate 711 including a core 712 which molds the inner surface of the molded product P. A part of the movable mold plate 711 which shapes a runner R and a gate G connected to the molded product P is constructed as a recessed part, so that a space is defined between this part and the bottom face 610 of the fixed mold plate 605.

The gate cutting mechanism 401 is operable to cut a gate G connecting a molded product P to a runner R and includes: a cutter 491 which cuts the gate G; a sliding piece 471 which is coupled to the cutter 491 to slide the cutter 491; a retaining piece 461 which slidably retains the sliding piece 471; a holder 421 which houses the retaining piece 461 in an advanceable and retractable manner; and a movable piece 405 which presses the molded product P. The gate cutting mechanism 401 of the present embodiment employs the sliding mechanism 1 of the first embodiment.

The movable piece 405 of the present embodiment corresponds to the second piece 21 of the sliding mechanism 1 of the first embodiment; the retaining piece 461 corresponds to the first piece 11; and the holder 421 corresponds to the guiding body 31. In the present embodiment, the movable piece 405 corresponds to a slider, and the holder 421 corresponds to a guide body. As described later, a first guiding groove 441 corresponds to a guide unit; a first guiding part 445 corresponds to a first guide unit; and a second guiding part 448 corresponds to a second guide unit. Protruding lines 412, 413, 414 (not illustrated), 415 correspond to an engagement unit; first sliding surfaces of the protruding lines 412, 413, 415 correspond to a first engagement unit; and second sliding surfaces of the protruding lines 412, 413, 415 correspond to a second engagement unit. The retaining piece 461 and the movable piece 405 are slidably coupled together through a dovetail groove structure. The retaining piece 461 corresponds to a coupling member, and left- and right-side-wall inner surfaces 427, 430 of the holder 421 correspond to a coupling member guide unit.

The holder 421 includes two half holder members 425 of a same shape which are assembled together, each half holder member having a channel-shaped or U-shaped cross section, so as to have a box-like column shape which defines an inner space therein with an open upper face and an open lower face. The holder 421 may be constituted by a plurality of divided members or be integrated with the fixed mold plate 605. The holder 421 corresponds to the guiding body 31 of the sliding mechanism 1 of the first embodiment and, as with the guiding body 31, guides the movable piece 405, which corresponds to the second piece 21 of the sliding mechanism 1 of the first embodiment, in the first direction and subsequently in the second direction.

Further, the holder 421 houses the retaining piece 461, which corresponds to the first piece 11 of the sliding mechanism 1 of the first embodiment, in an advanceable and retractable manner and guides the retaining piece 461 in the vertical direction. The holder 421 also guides the cutter 491 attached to the sliding piece 471 such that the cutter 491 cuts the gate G, and the cutter 491 after cutting the gate G is moved away from the gate G.

The holder 421 includes a left side wall 426 which is shorter than a back face wall 434 of the holder 421 and is opened below the left side face. This opening allows the cutter 491 and a presser 407 for the movable piece 405 to move out. A right side wall 429 of the holder is also shorter than the back face wall 434, and the holder 421 is opened below the right side face. The right side wall 429 includes a stepped portion 431 protruding inward at a lower position on the right side wall 429. A left-side-wall inner surface 427 and a right-side-wall inner surface 430 serve as guides for the retaining piece 461, and the stepped portion 431 on the right side serves as a stopper for the retaining piece 461. An inner side of the stepped portion 431 of the right side wall 429 is an inclined surface 432 which is inclined downward to the right.

As with the guiding body 31 of the first embodiment, the holder 421 includes first guiding grooves 441 which guides the movable piece 405 on a front-face-wall inner surface (not illustrated) and a back-face-wall inner surface 435. Each first guiding groove 441 is a recessed groove and includes a first guiding part 445 which guides the movable piece 405 in the first direction and second guiding parts 448 which guide the movable piece 405 in the second direction. The first guiding part 445 is parallel to the left side wall 426 so as to extend along the left side wall 426 and guides the movable piece 405 in the Y direction (i.e., first direction). There are two second guiding parts 448 arranged in the vertical direction and inclined diagonally downward to the right, and the second guiding parts 448 guide the movable piece 405 diagonally downward to the right (i.e., in the second direction). The axes of the two second guiding parts 448 arranged in the vertical direction extend parallel to each other and intersect with the axis of the first guiding part 445. The second guiding parts 448 are connected to the first guiding part 445 (see Fig. 27).

The holder 421 includes second guiding grooves 452 which guide the sliding piece 471 on the front-face-wall inner surface (not illustrated) and the back-face-wall inner surface 435. Each second guiding groove 452 is a recessed groove and is inclined such that an upper part of the second guiding groove 452 is located at a middle leftward position, and a lower part of the second guiding groove 452 is located below the right side wall 429. The second guiding grooves 452 guide the sliding piece 471 such that the cutter 491 coupled to the sliding piece 471 cuts the gate G and further guides the sliding piece 471 such that the cutter 491 after cutting the gate G is moved away from the gate G.

The holder 421 is attached to the housing part 608 through a lock pin 455 such that an upper face 495 of the cutter 491 is flush with the bottom face 610 of the fixed mold plate 605 when the mold is clamped. Therefore, a lower part of the holder 421 including the opening for the cutter 491 to move in and out projects downward from the bottom face 610 of the fixed mold plate 605 (see Fig. 25).

The retaining piece 461 has a cuboid shape and includes a dovetail groove line 467 extending in the X direction at a middle part of the bottom face in the Z direction. The retaining piece 461 also includes protruding lines (dovetail-groove protruding lines) 468, 469 located on the front face side and the back face side and extending in the X direction on the opposite sides of the dovetail groove line 467 (see Fig. 27). The dovetail groove line 467 slidably receives a protruding line (dovetail-groove protruding line) 476 of the sliding piece 471, and the protruding lines 468, 469 are slidably fitted with front and back clicks 408, 409 of the movable piece 405, respectively. The retaining piece 461 also includes a recessed part 463 which opens on an upper face 462 of the retaining piece 461 and houses a spring 470. The spring 470 ejects the retaining piece 461 downward.

The retaining piece 461 advances and retracts in a demolding direction (i.e., Y direction) in conjunction with opening and closing of the molding die 400, while the left side face 465 and the right side face 466 are slidably in contact with the left-side-wall inner surface 427 and the right-side-wall inner surface 430 of the holder 421.

The sliding piece 471 includes a body 475 including: a cuboid-shaped part 472; a triangular-shaped part 473 which is connected to a right end of the cuboid-shaped part 472 and has a triangular shape in a front view; and a prismatic column part 474 which is connected to an upper face 478 of the cuboid-shaped part 472 and a left side face of the triangular-shaped part 473. The cuboid-shaped part 472 includes, at a left end thereof, a recessed part 477 which shapes a runner R. The cuboid-shaped part 472 also includes, at a middle part of the upper face 478, an attaching part 479 for attaching the cutter 491.

The triangular-shaped part 473 of the body 475 has a triangular shape such that a lower part thereof is wider than an upper part thereof in a front view, and is disposed perpendicular to the cuboid-shaped part 472. An upper end of the triangular-shaped part 473 is located above the upper face 478 of the cuboid-shaped part 472, and a bottom face of the triangular-shaped part 473 is flush with a bottom face of the cuboid-shaped part 472. The triangular-shaped part 473 includes, at right ends of front face and a back face of the triangular-shaped part 473, protruding lines 480 extending along a right side face of the triangular-shaped part 473. The protruding lines 480 are slidably fitted into second guiding grooves 452 of the holder 421.

The body 475 includes a protruding portion 481 having a triangular shape in a front view, at a right bottom part of the triangular-shaped part 473. The protruding portion 481 includes a left side face 482 which is an inclined surface and serves as a lock click configured to be locked to a pulling piece 730 attached to the movable mold plate 711.

An upper end of the prismatic column part 474 of the body 475 is at a same height as an upper end of the triangular-shaped part 473, and there is a protruding line (dovetail-groove protruding line) 476 protruding upward from the upper end of the prismatic column part 474 of the body 475. The protruding line 476 extends parallel to the X direction (see Fig. 27). A width (in the Z direction) of the prismatic column part 474 of the body 475 is smaller than a width (in the Z direction) of the cuboid-shaped part 472 and the triangular-shaped part 473.

The cutter 491 has a flat plate shape and includes, in the vicinity of a tip end portion thereof, a through hole 492 which shapes a gate G. The through hole 492 is tapered so as to have a smaller dimension on a side connected to a cavity part than on a side connected to a runner R, and a left side surface of the through hole 492 is a blade for cutting the gate G. The inclined part which makes the through hole 492 wider on the side of the runner R than on the side of the cavity part serves as a withdrawal space for a molding material left in the runner R after the gate G is cut. These features make it possible to cut the gate G reliably and clearly.

The base end portion 493 of the cutter 491 is fixed to the attaching part 479 on the upper face 478 of the cuboid-shaped part 472 of the sliding piece 471. Once the cutter 491 is attached to the sliding piece 471, the through hole 492 is located above the recessed part 477 at the left end of the cuboid-shaped part 472, so that the through hole 492 is communicated with the recessed part 477. Thus, a flow path is defined which connects the runner R, the gate G, and further the cavity part.

The movable piece 405 is configured to press a part of the molded product P adjacent to the gate G so as to prevent the molded product P from being pulled by the cutter 491 to move when the cutter 491 attached to the sliding piece 471 slides to cut the gate G. The movable piece 405 includes a body 406 having a prismatic column shape, and the body 406 integrally includes a presser 407 which protrudes to the left side at a lower part of the body 406. The presser 407 has a flat plate shape.

The movable piece 405 includes, at an upper part of the body 406, a pair of the front and back clicks 408, 409 which protrude from the upper face of the movable piece 405. The click 408 is located on an upper part of a front face wall 410 of the movable piece 405 and extends parallel to the X direction, and the click 409 is located in an upper part of a back face wall 411 of the movable piece 405 and extends parallel to the X direction. The protruding lines 468, 469 of the retaining piece 461 and the clicks 408, 409 of the movable piece 405 constitute a dovetail groove structure for slidable coupling. The movable piece 405 also includes, in a right side face of the body 406, a recessed part 416 which slidably receives the prismatic column part 474 of the sliding piece 471.

The movable piece 405 includes upper and lower protruding lines 412, 413 on the front face wall 410 as well as an upper protruding line (not illustrated) and a lower protruding line 415 on the back face wall 411. The upper protruding line 412 and the upper protruding line (not illustrated) correspond to each other in terms of the shape, position, and angle. Similarly, the lower protruding line 413 and the lower protruding line 415 correspond to each other in terms of the shape, position, and angle.

The upper and lower protruding lines 412, 413, 415 correspond to the clicks 280 of the gate cutting mechanism 201 of the fourth embodiment and are slidably fitted into the first guiding grooves 441. Each protruding line includes left and right wall surfaces which serve as first sliding surfaces, and upper and lower wall surfaces which serve as second sliding surfaces. With reference to the protruding line 413 as an example, the left side face 417 and the right side face 418 serve as the first sliding surfaces, and the upper side face 419 and the lower side face 420 serve as the second sliding surfaces.

In the gate cutting mechanism 401 having the above constitution, the protruding line 476 of the sliding piece 471 with the cutter 491 attached thereto is fitted into the dovetail groove 467 of the retaining piece 461, and further the clicks 408, 409 of the movable piece 405 are fitted so as to be engaged with the front and back protruding lines 468, 469 of the retaining piece 461. In this state, when the prismatic column part 474 of the sliding piece 471 is fitted into the recessed part 416 of the movable piece 405, the bottom face of the presser 407 of the movable piece 405 slidably comes into contact with the upper face 478 of the prismatic column part 474 of the sliding piece 471 and the upper face 495 of the cutter 491.

With the retaining piece 461, the sliding piece 471, and the movable piece 405 coupled to each other, they are incorporated into the holder 421 and are fixed to the housing part 608 of the fixed die 603.

An operation and effects of the molding die 400 and the gate cutting mechanism 401 of the present embodiment will be described with reference to an exemplary case where a molded product P is molded by injection molding in the molding die 400.

When the mold is closed, the sliding piece 471 is arranged such that a tip end of the cutter 491 is fitted into the recessed part 726 of the movable mold plate 711, and the bottom face of the body 475 of the sliding piece 471 is in contact with the upper face of the movable mold plate 711. Further the lock click 481 of the sliding piece 471 is locked to the pulling piece 730, and a lower part of the right side face of the sliding piece 471 is in contact with the guide piece 630. As for the movable piece 405, the left side face of the body 406 is in contact with the left-side-wall inner surface 427 of the holder 421, the right side face of the body 406 is in contact with the left side face of the triangular-shaped part 473 of the sliding piece 471, and a tip end of presser 407 is located within the cavity (see Fig. 24). The protruding lines 480 of the sliding piece 471 are fitted into the second guiding grooves 452, and the protruding lines 412, 413, 415 of the movable piece 405 are fitted into the first guiding parts 445 of the first guiding grooves 441.

In this state, the runner R, the gate G, and the cavity part are communicated with each other. The cavity part is a space for molding the molded product P to be shaped by the cavity 606 of the fixed die 603 and the core 712 of the movable die 703 when the mold is closed. When the mold is closed, a molten resin is injected from a non-illustrated injection device, and the resin passes through a sprue (not illustrated) in the fixed die 603, and then through the runner R and the gate G and fills in the cavity part. After a pressure holding step and a cooling step, the molded product P is taken out. The processes of opening the mold and taking out the molded product P are performed according to the following procedure.

Once the movable die 703 retracts and the mold starts to open, the retaining piece 461 is pushed downward (i.e., in the -Y direction) by the spring 470. The sliding piece 471 slidably coupled to the retaining piece 461 is guided by the second guiding grooves 452 and moves diagonally downward to the right with respect to the holder 421. Thus, the cutter 491 attached to the sliding piece 471 slides in the -X direction with respect to the movable mold plate 711, and the blade in the through hole 492 moves across the gate G to cut the gate G connected to the molded product P (see Fig. 25).

At the same time, the movable piece 405 slidably coupled to the retaining piece 461 is guided by the first guiding parts 445 of the first guiding grooves 441 in the holder 421 to move downward (i.e., in the -Y direction). Unlike the sliding piece 471, the movable piece 405 does not move in the +X direction or in the -X direction, so that the movable piece 405 remains in the same state with respect to the molded product P as it was at the time of the mold closed state (see Fig. 25).

Thus, the gate G can be cut with the molded product P pressed by the presser 407 of the movable piece 405 (see Fig. 25). In addition, as the cutter 491 slides rightward (i.e., in the -X direction), the through hole 492 also pulls the resin in the runner R rightward (i.e., in the -X direction). Thus, the resin in the runner R can be easily removed from the runner R.

When the movable mold 703 retracts further, the movable piece 405 is guided by the second guiding parts 448 of the first guiding grooves 441 to be guided downward to the right. Thus, the presser 407 of the movable piece 405 is moved away from the molded product P. Then, the molded product P is ejected by an ejector pin (not illustrated) such that it can be taken out.

As described above, the molding die 400 and the gate cutting mechanism 401 can achieve compact and simple configurations and can operate such that the gate G can be cut easily and reliably prior to taking out the molded product P. In particular, the gate G is cut with a part of the molded product P adjacent to the gate G pressed by the movable piece 405, and therefore, the gate G can be cut reliably and clearly. Further, the molding die 400 can move the movable piece 405 in conjunction with mold opening to allow a material left in the runner R to be removed, and therefore, the molding die 400 is highly convenient for use.

Moreover, the gate cutting mechanism 401 can be incorporated into the molding die 400 with the sliding piece 471, the movable piece 405, and the retaining piece 461 housed in the holder 421, and therefore, the gate cutting mechanism 401 can have a compact configuration and be easily attached to the molding die 400. In particular, the holder 421, the retaining piece 461, the sliding piece 471, and the movable piece 405 can be assembled into a single independent unit; the gate cutting mechanism 401 as a single unit can be more easily attached to the molding die 400.

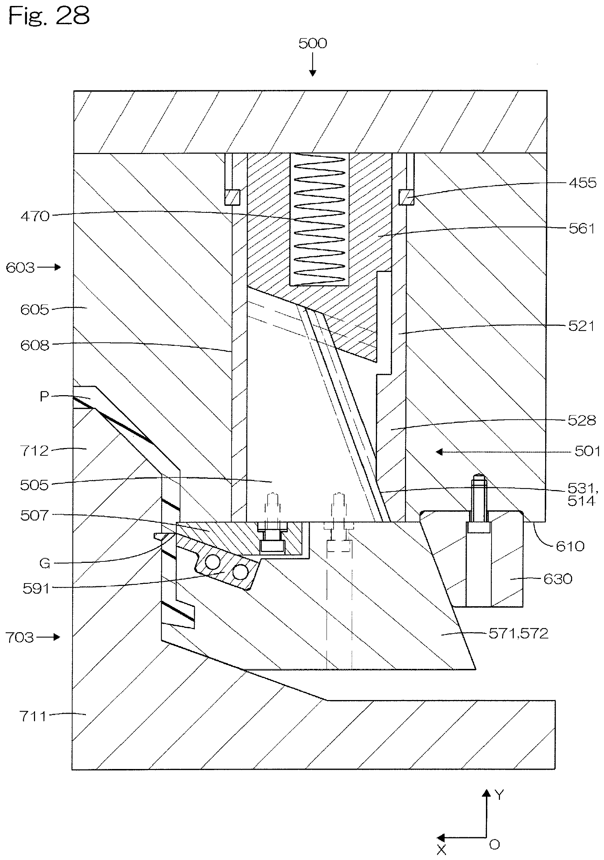

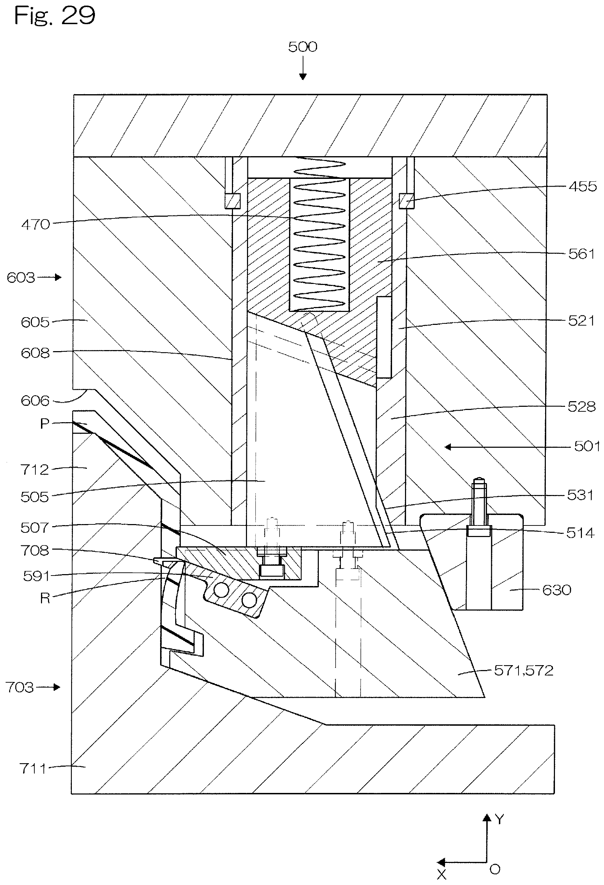

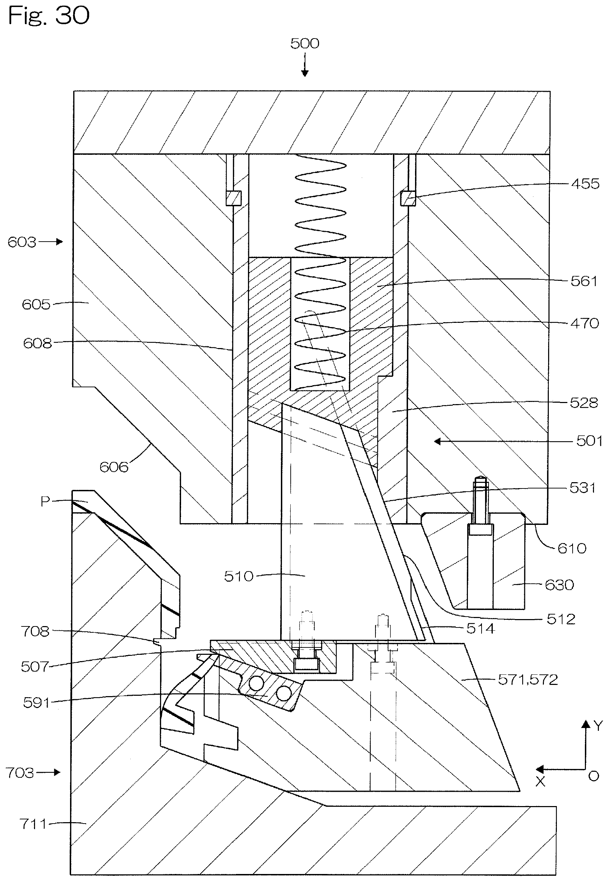

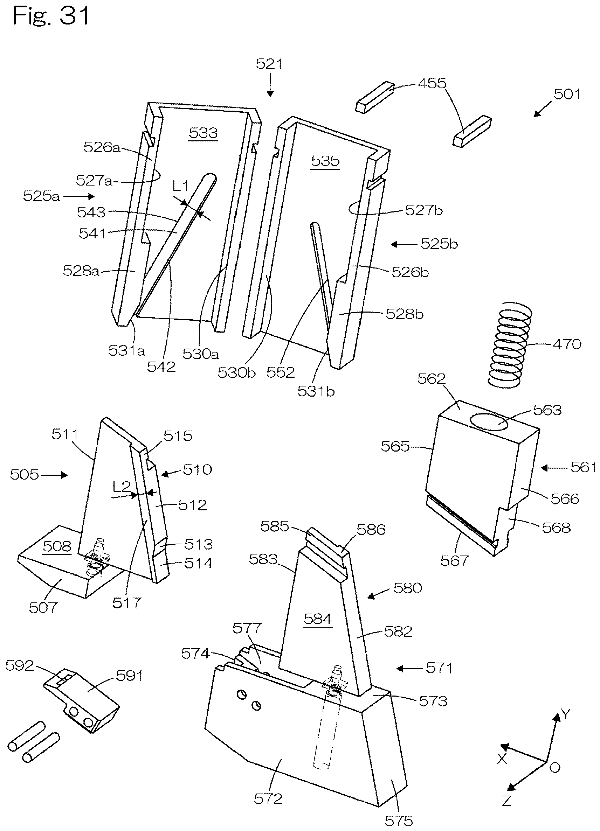

Fig. 28 is a cross-sectional view showing a main part of a molding die 500 including a gate cutting mechanism 501 according to a seventh embodiment of the present invention in a mold closed state. Fig. 29 and Fig. 30 show cross-sectional views showing the main part of the molding die 500 including the gate cutting mechanism 501 according to the seventh embodiment of the present invention during a process of opening the mold. Fig. 31 is an exploded view showing features of the gate cutting mechanism 501 according to the seventh embodiment of the present invention. Features corresponding to the features of the molding die 400 including the gate cutting mechanism 401 according to the sixth embodiment of the present invention as shown in Fig. 24 to Fig. 27 are denoted with like reference numerals, and description thereof is omitted.

As with the molding die 400 of the sixth embodiment, the molding mold 500 includes: a fixed die 603 which molds an external surface of a molded product P; a movable die 703 which molds an internal surface of the molded product P; and further a gate cutting mechanism 501 which cuts a gate G. For the sake of convenience, in the following description, the "upper" side means the side of the fixed die 603 in Fig. 28, and the "lower" side means the side of the movable die 703 in Fig. 28. In the following description, the "left" side corresponds to the left side in Fig. 28, and the "right" side means the opposite side, unless otherwise specifically noted.

Since the fixed die 603 of the seventh embodiment has a same configuration as that of the fixed die 603 of the sixth embodiment, the features are denoted with like reference numerals, and description thereof is omitted. Similarly, since the movable die 703 of the seventh embodiment has a same configuration as that of the movable mold 703 of the sixth embodiment, the features are denoted with like reference numerals, and description thereof is omitted.

The gate cutting mechanism 501 is operable to cut a gate G connecting a molded product P to a runner R and includes: a cutter 591 which cuts the gate G; a sliding piece 571 which is coupled to the cutter 591 to slide cutter 591; a retaining piece 561 which slidably retains the sliding piece 571; a holder 521 which houses the retaining piece 561 in an advanceable and retractable manner; and a movable piece 505 which presses the molded product P. The gate cutting mechanism 501 of the present embodiment employs the sliding mechanism 50 of the second embodiment.

The movable piece 505 of the present embodiment corresponds to the second piece 61 of the sliding mechanism 50 of the second embodiment; the retaining piece 561 corresponds to the first piece 11; and the holder 521 corresponds to the guiding body 81. In the present embodiment, the movable piece 505 corresponds to a slider, and the holder 521 corresponds to a guide body. The retaining piece 561 is slidably coupled to the movable piece 505. The retaining piece 561 corresponds to a coupling member, and left- and right-side-wall inner surfaces 527, 530 of the holder 521 correspond to a coupling member guide unit.

The holder 521 includes two half holder members 525 (525a, 525b) of a same shape which are assembled together, each half holder member having a channel-shaped or U-shaped cross section, and the holder has a box-like column shape which defines an inner space therein with an open upper face and an open lower face. The holder 521 may be constituted by a plurality of divided members or be integrated with the fixed mold plate 605. The holder 521 corresponds to the guiding body 81 of the sliding mechanism 50 of the second embodiment and, like the guiding body 81, guides the movable piece 505, which corresponds to the second piece 61 of the sliding mechanism 50 of the second embodiment, in the first direction and subsequently in the second direction.

Further, the holder 521 houses the retaining piece 561, which corresponds to the first piece 11 of the sliding mechanism 50 of the second embodiment, in an advanceable and retractable manner, and guides the retaining piece 561 in the vertical direction. The holder 521 also guides the cutter 591 attached to the sliding piece 571 such that the cutter 591 cuts the gate G, and the cutter 591 after cutting the gate G is moved away from the gate G.

The holder 521 includes stepped portions 528 (528a, 528b) protruding inward at lower parts of right side walls 526 (526a, 526b) of the holder 521, and lower inner surfaces of the stepped portions 528 are inclined surfaces 531 (531a, 531b). Right-side-wall inner surfaces 527 (527a, 527b) and left-side-wall inner surfaces 530 (530a, 530b) serve as guides for the retaining piece 561, and the stepped portions 528 serve as stoppers for the retaining piece 561.

As with the guiding body 81 of the second embodiment, the holder 521 includes a first guiding groove 541 which guides the movable piece 505 on a front-face-wall inner surface 533 of the holder 521. The first guiding groove 541 is a recessed, inclined linear groove which has an upper part located on the right and a lower part located on the left when the front-face-wall inner surface 533 is viewed straightforward. The left-side inner wall surface 530a of the front face wall of the holder 521 and the inclined surface 531a of the front-face-wall stepped portion 528a of the holder 521 serve as a first guide unit which guides the movable piece 505 in the first direction. A side surface 542 of the first guiding groove 541 and the inclined surface 531a of the front-face-wall stepped portion 528a of the holder 521 serve as a second guide unit which guides the movable piece 505 in the second direction.

The holder 521 also includes a second guiding groove 552 which guides the sliding piece 571 on a back-face-wall inner surface 535 of the holder 521. The second guiding groove 552 is a recessed, inclined linear groove which has an upper part located on the left and a lower part located on the right when the back-face-wall inner surface 535 is viewed straightforward. The second guiding groove 552 guides the sliding piece 571 such that the cutter 591 coupled to the sliding piece 571 cuts the gate G, and further guides the sliding piece 571 such that the cutter 591 after cutting the gate G is moved away from the gate G.

The holder 521 is attached to the housing part 608 in the fixed mold plate 605 through the lock pin 455. When the holder 521 is attached to the housing part 608, a bottom part of the holder 521 is flush with the bottom face 610 of the fixed mold plate 605 (see Fig. 28).

The retaining piece 561 has a block shape and includes a protruding line 567 (dovetail-groove protruding line) which extends from the left to the right, on a bottom face of the retaining piece 561 which extends downward to the right in a front view. The retaining piece 561 includes a cutout part 568 below a right side face 566 of the retaining piece 561. The cutout part 568 can be locked to the stepped portions 528 of the holder 521. The retaining piece 561 also includes a recessed part 563 which opens on an upper face 562 thereof and houses a spring 470 (see Fig. 31). The spring 470 ejects the retaining piece 561 downward.

The retaining piece 561 advances and retracts in a demolding direction (i.e., Y direction) in conjunction with opening and closing of the molding die 500, while the left side face 565 and the right side face 566 of the retaining piece 561 are slidably in contact with the left-side-wall inner surfaces 530 and the right-side-wall inner surfaces 527 of the holder 521.

The sliding piece 571 includes a body 572 and a second lock body 580 fixed to an upper face 573 of the body 572. The body 572 includes a recessed part 574 which shapes a runner R on the left side face of the body 572. The body 572 also includes an attaching part 577 for attaching the cutter 591 at an upper left part of the body 572, and an upper part of the attaching part 577 is a housing part for a presser plate 507 of the movable piece 505. A right side face 575 of the body 572 is an inclined surface which extends diagonally downward to the right in a front view.

The second lock body 580 is a plate-like member having a thickness equivalent to approximately half a width (in the Z direction) of the body 572. In a front view, an upper part of the second lock body 580 extends slightly downward to the right, and a right side face 582 of the second lock body 580 is also an inclined surface extending downward to the right. A left side face 583 of the second lock body 580 extends perpendicular to the bottom face of the second lock body 580, and when attached to the body 572, extends perpendicular to the upper face 573 of the body 572.

The second lock body 580 includes, at an upper part of a front face 584 thereof, a recessed groove so as to form a click 585. The click 585 is slidably locked to a back face of the protruding line 567 of the retaining piece 561. The second lock body 580 also includes, on a back face thereof, a protruding line 586 extending along the right side face 582. The protruding line 586 is slidably fitted into the second guiding groove 552 of the holder 521.

The cutter 591 has a flat plate shape and includes, near a tip end portion thereof, a through hole 592 which shapes a gate G. The through hole 592 is tapered so as to have a smaller dimension on a side connected to a cavity part than on a side connected to the runner R, and a left side surface of the through hole 592 is a blade for cutting the gate G. The inclined part which makes the through hole 592 wider on the side of the runner R than on the side of the cavity part serves as a withdrawal space for a molding material left in the runner R after the gate G is cut. These features make it possible to cut the gate G reliably and clearly.

A base end portion of the cutter 591 is fixed to the attaching part 577 which is located at an upper left part of the body 572 of the sliding piece 571. When the cutter 591 is attached to the sliding piece 571, the through hole 592 is located above the recessed part 574 at a left end of the body 572, and the through hole 592 is communicated with the recessed part 574. Thus, a flow path is defined which connects the runner R, the gate G, and further the cavity part.

The movable piece 505 is configured to press a part of the molded product P adjacent to the gate G so as to prevent the molded product P from being pulled by the cutter 591 to move when the cutter 591 attached to the sliding piece 571 slides to cut the gate G. The movable piece 505 includes a presser plate 507 and a first lock body 510 attached to an upper face of the presser plate 507.

The first lock body 510 is a plate-like member having a thickness equivalent to approximately half a width (in the Z direction) of the presser plate 507, and an upper part of the first lock body 510 extends slightly downward to the right in a front view. A right side face 512 of the first lock body 510 is an inclined surface extending downward to the right, and the right side face 512 includes, at a lower part thereof, an inclined surface 514 which is set back with respect to an upper part and a middle part thereof in a front view. A left side face 511 of the first lock body 510 extends perpendicular to the bottom face of the first lock body 510, and when attached to the presser plate 507, extends perpendicular to an upper face 508 of the presser plate 507. The inclined surface 514 and the left side face 511 correspond to a first engagement unit which slidably comes into engagement with a first guide unit.

The first lock body 510 includes, at an upper part of a back face thereof, a recessed groove so as to form a click 515. The click 515 is slidably locked to a front face of the protruding line 567 of the retaining piece 561. The first lock body 510 also includes, on a front face thereof, a protruding line 517 extending along the right side face 512. The protruding line 517 is slidably fitted into a first guiding groove 542 of the holder 521, and the protruding line 517 has a width L2 smaller than a width L1 of the first guiding groove 542. The protruding line 517 and the right side face 512 correspond to a second engagement unit which slidably comes into engagement with a second guide unit.

The gate cutting mechanism 501 having the above constitution is fixed to the housing part 608 of the fixed die 603 in the following manner. The presser plate 507 of the movable piece 505 is fitted into an upper part of the attaching part 577 of the sliding piece 571 with the cutter 591 attached thereto, and the click 515 of the first lock body 510 and the click 585 of the second lock body 580 are fitted to the protruding line 567 of the retaining piece 561, with the front face 584 of the second lock body 580 of the sliding piece 571 abutted with the back face of the first lock body 510 of the movable piece 505.

With the retaining piece 561, the sliding piece 571, and the movable piece 505 coupled together, they are incorporated into the holder 521 and are fixed to the housing part 608 of the fixed die 604.

An operation and effects of the molding die 500 and the gate cutting mechanism 501 of the present embodiment will be described with reference to an exemplary case where a molded product P is molded by injection molding in the molding die 500.

When the mold is closed, the sliding piece 571 is arranged such that a tip end of the cutter 591 is fitted into the recessed part 708 of the movable mold plate 711, and the protruding line 586 of the second lock body 580 is slidably fitted into the second guiding groove 552 of the holder 521. Further, the right side face 575 of the body 572 of the sliding piece 571 is in contact with the guide piece 630. The left side face 583 of the second lock body 582 of the sliding piece 571 is in contact with the left-side-wall inner surface 530b of the holder 521.

As for the movable piece 505, the bottom face of the presser plate 507 is in contact with the upper face of the cutter 591, and a tip end of the presser plate 507 is located within the cavity part (see Fig. 28). The bottom face of the first lock body 510 of the movable piece 505 is in contact with the upper face 573 of the body 572 of the sliding piece 571, and the protruding line 517 is slidably fitted into the first guiding groove 541 of the holder 521. In this state, the protruding line 517 is arranged such that a right side face thereof, when the first lock body 510 is viewed straightforwardly, is in contact with a right side surface 543 of the second guiding groove 541, and the inclined surface 514 is in contact with the inclined surface 531a of the stepped portion 528 of the holder 521. On the other hand, a left side face of the protruding line 517 is not in contact with and is separated from the left side surface 542 of the first guiding groove 541 (see Fig. 28). The left side face 511 of the first lock body 510 of the movable piece 505 is in contact with the left-side-wall inner surface 530a of the holder 521.

In this state, the runner R, the gate G, and the cavity part are communicated with each other. The cavity part is a space for molding the molded product P to be shaped by the cavity 606 of the fixed die 603 and the core 712 of the movable die 703 when the mold is closed. When the mold is closed, a molten resin is injected from a non-illustrated injection device, and the resin passes through a sprue (not illustrated) in the fixed die 603, and then through the runner R and the gate G, and fills in the cavity part. After a pressure holding step and a cooling step, the molded product P is taken out. The process of opening the mold is performed according to the following procedure.

Once the movable die 703 retracts and the mold starts to open, the retaining piece 561 is pushed downward (i.e., in the -Y direction) by the spring 470. The sliding piece 571 slidably coupled to the retaining piece 561 is guided by the second guiding groove 552 and moves diagonally downward to the right with respect to the holder 521. Thus, the cutter 591 attached to the sliding piece 571 slides in the -X direction with respect to the movable mold plate 711, and the blade in the through hole 592 moves across the gate G to cut the gate G connected to the molded product P (see Fig. 29).

At the same time, the movable piece 505 slidably coupled to the retaining piece 561 moves downward (i.e., first direction, -Y direction) such that the left side face of the protruding line 517 of the first lock body 510 comes into contact with the left side surface 542 of the first guiding groove 541 of the holder 521. At this point, unlike the sliding piece 571, the movable piece 505 does not move in the +X direction or in the -X direction. This is because when the mold is clamped, the left side face of the protruding line 517 of the first lock body 510 of the movable piece 505 is separated from the left side surface 542 of the first guiding groove 541 of the holder 521 (see Fig. 29).

Thus, the gate G can be cut with the molded product P pressed by the presser plate 507 of the movable piece 505 (see Fig. 29). In addition, as the cutter 591 slides rightward (i.e., in the -X direction), the through hole 592 also pulls the resin in the runner R rightward (i.e., in the -X direction) after the gate G is cut. Thus, the resin in the runner R can be easily removed from the runner R.

When the movable die 703 retracts further, the movable piece 505 moves diagonally downward to the right, i.e., in the second direction, as the protruding line 517 of the first lock body 510 is guided by the first guiding groove 541. At this time, the right side face 512 of the first lock body 510 is slidably in contact with the inclined surface 531a of the stepped portion 528a of the holder 521, so that the movable piece 505 moves diagonally downward to the right without staggering. Thus, the presser plate 507 of the movable piece 505 is moved away from the molded product P. Then, the molded product P is ejected by an ejector pin (not illustrated) such that it can be taken out.

As described above, the molding die 500 and the gate cutting mechanism 501 can achieve compact and simple configurations and can operate such that the gate G can be cut easily and reliably prior to taking out the molded product P. In particular, the gate G is cut with a part of the molded product P adjacent to the gate G pressed by the movable piece 505, and therefore, the gate G can be cut reliably and clearly. Further, the molding die 500 can move the movable piece 505 in conjunction with mold opening to allow a material left in the runner R to be removed, and therefore, the molding die 500 is highly convenient for use.

Moreover, the gate cutting mechanism 501 can be incorporated into the molding die 500 with the sliding piece 571, the movable piece 505, and the retaining piece 561 housed in the holder 521, and therefore, the gate cutting mechanism 501 can have a compact configuration and be easily attached to the molding die 500. In particular, the holder 521, the retaining piece 561, the sliding piece 571 including the cutter 591, and the movable piece 505 can be assembled into a single independent unit; the gate cutting mechanism 501 as a single unit can be more easily attached to the molding die 500.

Other embodiments of the sliding mechanism and the undercut processing mechanism according to the present invention will be described below.

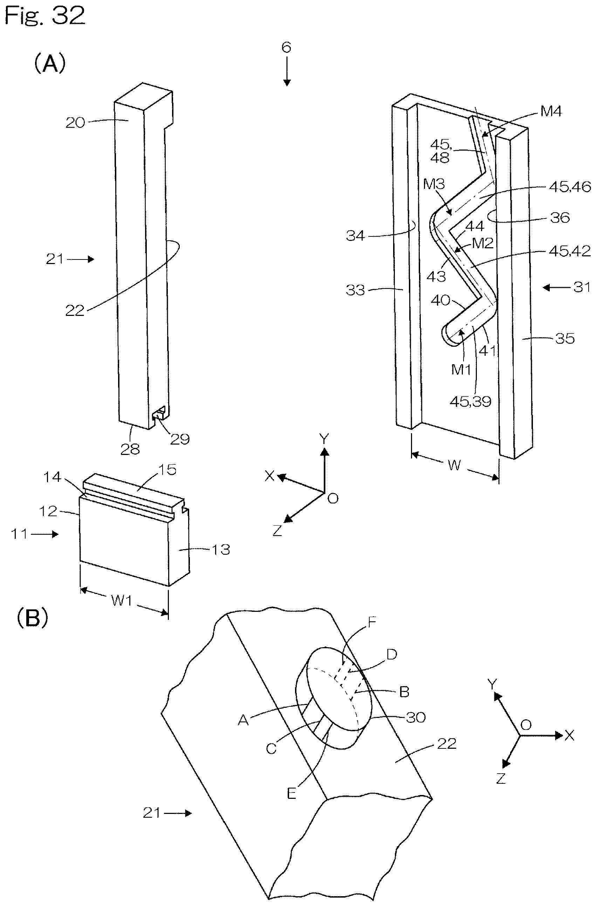

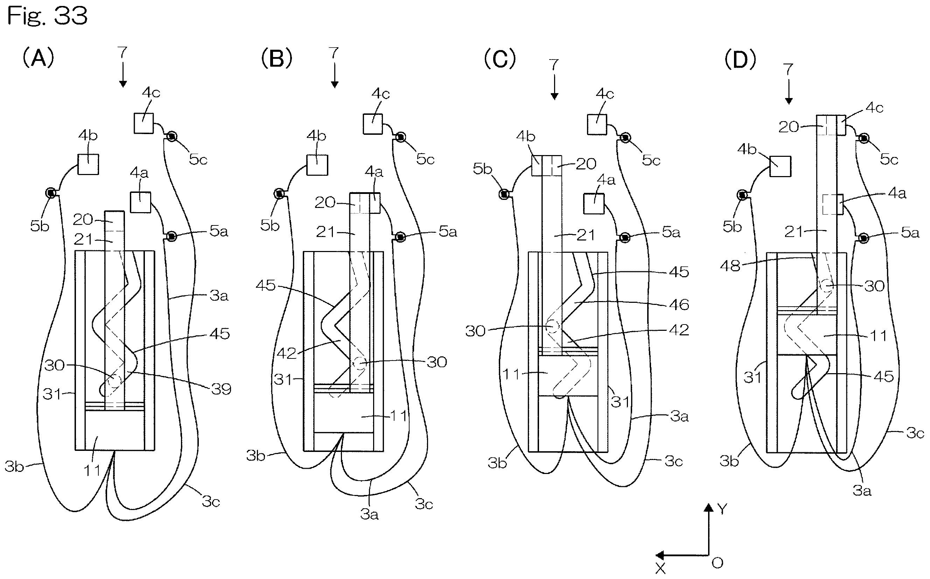

Fig. 32 is an exploded view showing features of a sliding mechanism 6 according to an eighth embodiment of the present invention. Fig. 33 shows a changeover switch 7 which employs the sliding mechanism 6 according to the eighth embodiment of the present invention. Features corresponding to the features of the sliding mechanism 1 and the changeover switch 2 of the first embodiment as shown in Fig. 1 to Fig. 3 are denoted with like reference numerals, and description thereof is omitted.

The sliding mechanism 6 according to the eighth embodiment of the present invention has a same basic configuration as that of the sliding mechanism 1 of the first embodiment. However, the shapes of the guiding groove 45 and the click 30 differ from the shapes of the guiding groove 38 and the click 23 of the first embodiment. Further, the upper face 14 of the first piece 11 and the bottom face 28 of the second piece 21 are coupled together through a dovetail groove structure. Specifically, a protruding line (dovetail-groove protruding line) 15 is located on the upper face 14 of the first piece 11, and a dovetail groove 29 which slidably receives the protruding line 15 is located on the bottom face 28 of the second piece 21.

In the present embodiment, the second piece 21 corresponds to a slider; the guiding body 31 corresponds to a guide body; the guiding groove 45 corresponds to a guide unit; the first guiding part 39 corresponds to a first guide unit; and the second guiding part 42 corresponds to a second guide unit. The click 30 corresponds to an engagement unit; a first sliding surface of the click 30 corresponds to a first engagement unit; and a second sliding surface of the click 30 corresponds to a second engagement unit. The first piece 11 corresponds to a coupling member, and the left- and right-side-wall inner surfaces 34, 36 of the holder 31 correspond to a coupling member guide unit.

In the sliding mechanism 6 of the eighth embodiment, the guiding groove 45 includes four guiding parts, namely, a first guiding part 39 extending in a first direction, a second guiding part 42 extending in a second direction, a third guiding part 46 extending in a third direction, and a fourth guiding part 48 extending in a fourth direction. As with the guiding part of the first embodiment, the guiding parts are sequentially connected in the order of the first guiding part 39, the second guiding part 42, the third guiding part 46, and the fourth guiding part 48. The four guiding parts including their connection parts has a same width (which is a distance between left and right side surfaces). The first guiding part 39 and the third guiding part 46 of the guiding groove 45 are arranged such that their center axes M1, M3 are parallel to each other. That is, the first direction is parallel to the third direction. In contrast, the second direction and the fourth direction differ from all other directions than themselves.

If, in the case where the guiding groove includes three or more guiding parts, the three or more guiding parts extend in two different directions (herein, parallel guiding directions are considered as a same direction), it is possible to use a same click 23 as that of the first embodiment. This applies to the case where the guiding groove 45 only includes the first guiding part 39, the second guiding part 42, and the third guiding part 46 in the sliding mechanism 6 according to the eighth embodiment of the present invention.

In the sliding mechanism 6 according to the eighth embodiment of the present invention, however, the guiding groove 45 includes the four guiding parts 39, 42, 46, 48, and the second direction of the second guiding part 42 is different from the fourth direction 48, so that the sliding mechanism 6 of the eighth embodiment includes three different guiding directions. Due to its configuration, the click 23 of the first embodiment is not applicable to an application with three different guiding directions. In such a case, the click 30 may be shaped in a cylindrical or columnar form, as shown in Fig. 32 (B). A click having a round external shape in a transverse section and an outer diameter fittable into the guiding parts without a gap can be applicable to even an application with three or more guiding directions.

In Chart (A) of Fig. 33, the click 30 comes into line contact with the opposite side surfaces 40, 41 of the first guiding part 39 at two lines, namely, line A and line B in Chart (B) of Fig. 32. Thus, the line A and line B of the click 30 serve as first sliding surfaces. At an interface between the first guiding part 39 and the second guiding part 42 in Chart (B) of Fig. 33, the click 30 comes into line contact at two lines, namely, line C and line D in Chart (B) of Fig. 32. Further, when moving in the second guiding part 42 in Fig. 33, the click 30 comes into line contact with the opposite side surfaces 43, 44 at two lines, namely, line E and line F in Chart (B) of Fig. 32. Thus, the line E and line F of the click 30 serve as second sliding surfaces. Since the third guiding part 46 is parallel to the first guiding part 39 as shown in Fig. 33, when the click 30 moves in the third guiding part 46, the click 30 comes into line contact at two lines, namely, line A and line B in Chart (B) of Fig. 32, as with the case of moving in the first guiding part 39. Since the fourth guiding part 48 extends in a direction different from directions of the all other guiding parts as shown in Fig. 33, when the click 30 moves in the fourth guiding part 48, the click 30 comes into line contact with the opposite side surfaces of the fourth guiding part 48, at other lines than the line A, the line B, the line C, the line D, the line E, and the line F in Chart (B) of Fig. 32.

In the sliding mechanism 6 of the eighth embodiment, the first piece 11 and the second piece 21 are coupled together through a dovetail groove structure. Such a structure has advantages in that it prevents the constituting members from easily disassembled, so that the sliding mechanism 6 can be assembled into a single unit, and moreover, in that a posture of the second piece 21 can be maintained constant.

In the sliding mechanism 6 of the eighth embodiment, as with the first embodiment, if the upper face 14 of the first piece 11 and the bottom face 28 of the second piece 21 are simply brought into surface contact, the second piece 21 would be tilted to the left and right around the click 30 as a pivot point, when a force acts on a tip end portion 20 of the second piece 21 to move the tip end portion 20 to the left and right (+X direction, -X direction). In contrast, where the first piece 11 and the second piece 21 are coupled together through a dovetail groove structure, the opposite side faces 12, 13 of the first piece 11 are in surface contact with the left- and right-side-wall inner surfaces 34, 36 of the guiding body 31, so that the second piece 21 will not be tilted to the left and right.

The changeover switch 7 as shown in Fig. 33 can turn on and off a first lamp 5a to a third lamp 5c in the same manner as the changeover switch 2 as shown in Fig. 3. Since the guiding groove 45 includes the four guiding parts 39, 42, 46, 48, the switch 7 can make a switchover to turn on and off four lamps.

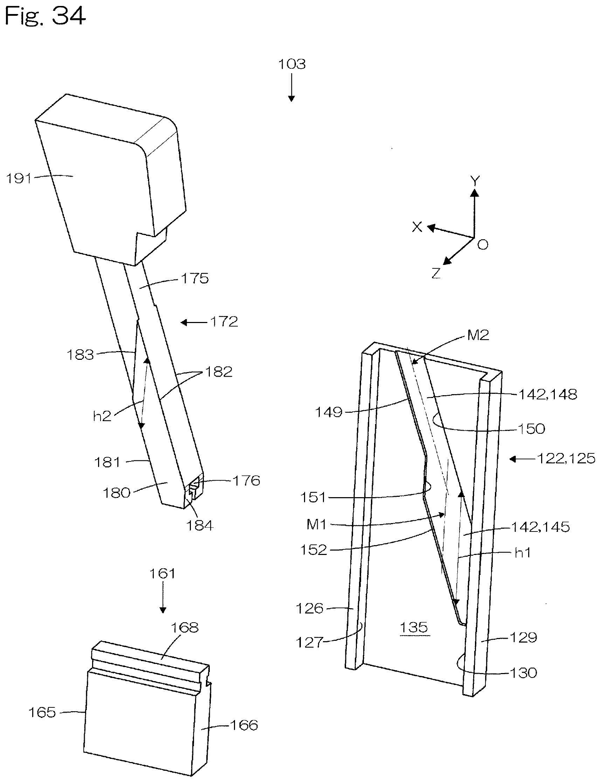

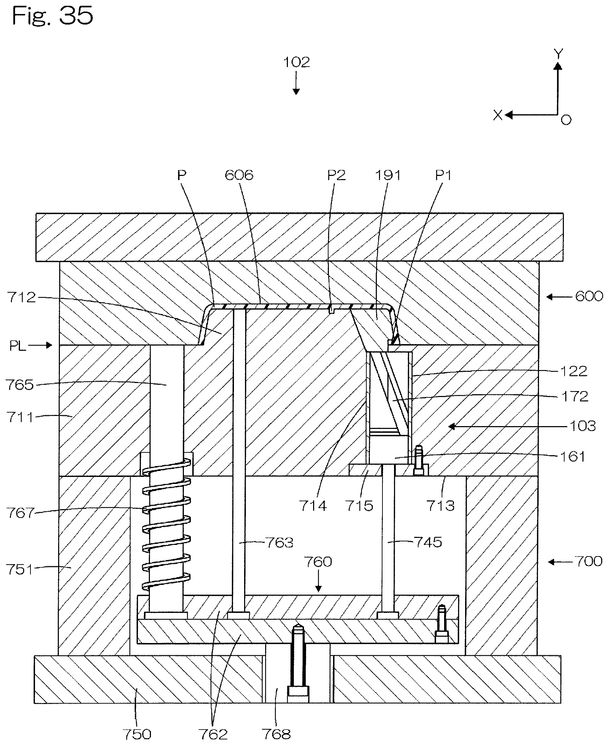

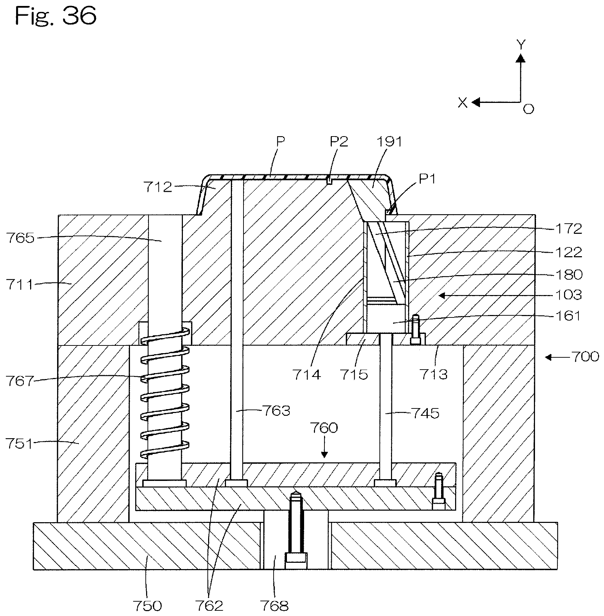

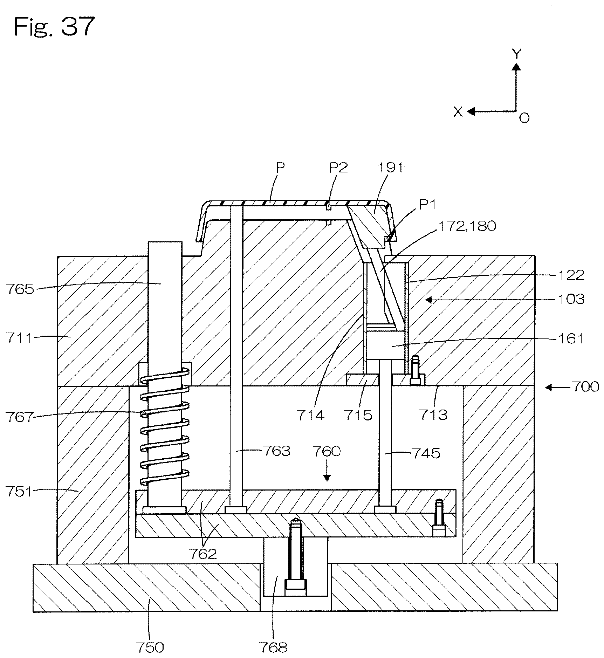

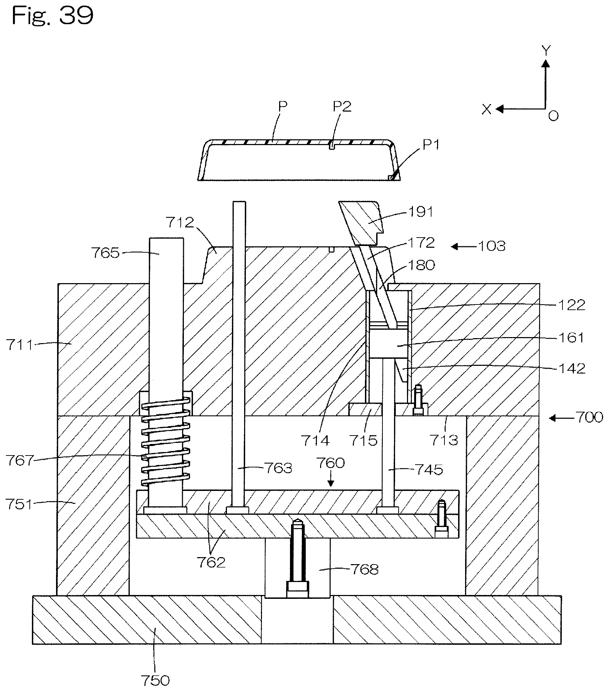

Fig. 34 is an exploded view showing features of an undercut processing mechanism 103 according to a ninth embodiment of the present invention. Fig. 35 is a cross-sectional view of a molding die 102 including the undercut processing mechanism 103 according to a ninth embodiment of the present invention when the mold is closed, and Fig. 36 is a cross-sectional view of the molding die 102 after the mold is opened. Fig. 37 to Fig. 39 show cross-sectional views of the molding die 102 including the undercut processing mechanism 103 according to the ninth embodiment of the present invention during a process of ejecting a molded product P. Features corresponding to the features of the undercut processing mechanism 101 and the molding die 100 of the third embodiment as shown in Fig. 6 to Fig. 10 are denoted with like reference numerals, and description thereof is omitted. For the sake of convenience, in the following description, the "upper" side means the side of the fixed die 600 in Fig. 35, and the "lower" side means the side of the movable die 700 in Fig. 35. In the following description, the "left" side corresponds to the left side in Fig. 35, and the "right" side means the opposite side, unless otherwise specifically noted.

The molding die 102 including the undercut processing mechanism 103 according to the ninth embodiment of the present invention has a same basic configuration as that of the molding die 100 including the undercut processing mechanism 101 according to the third embodiment of the present invention. The following description will mainly focus on differences from the molding die 100 including the undercut processing mechanism 101 of the third embodiment.

In the molding die 102 of the nineth embodiment, the shape of the molded product P, the shapes and positional relation of the undercut portion P1 and the protruding portion P2 are the same as those in the molding die 100 of the third embodiment. As with the undercut processing mechanism 101 of the third embodiment, the undercut processing mechanism 103 of the present embodiment employs the sliding mechanism 1 of the first embodiment. However, the undercut processing mechanism 103 of the present embodiment differs from the undercut processing mechanism 101 of the third embodiment in terms of the first direction and the second direction in which a sliding piece 172 including a molding core 191 at a tip end thereof, which corresponds to the second piece 21, is guided. In association therewith, the configuration of a guiding groove 142 is different from that of the guiding groove 141 of the third embodiment.

In the molding die 102 of the nineth embodiment, a holder 122 corresponds to the guiding body 31 of the sliding mechanism 1 of the first embodiment; and the sliding piece 172 including the molding core 191 at the tip end thereof corresponds to the second piece 21. The sliding piece 172 corresponds to a slider, and the holder 122 corresponds to a guide body. As described later, a guiding groove 142 corresponds to a guide unit; a first guiding part 145 corresponds to a first guide unit; and a second guiding part 148 corresponds to a second guide unit. A click 180 corresponds to an engagement unit; a first sliding surface of the click 180 corresponds to a first engagement unit; and a second sliding surface of the click 180 corresponds to a second engagement unit. The retaining piece 161 and the sliding piece 172 are slidably coupled together through a dovetail groove structure. The retaining piece 161 corresponds to a coupling member, and left- and right-side-wall inner surfaces 127, 130 of the holder 122 correspond to a coupling member guide unit.

The holder 122 is the same as the holder 121 of the third embodiment, except for the guiding grooves 142 which are located on the front-face-wall inner surface and the back-face-wall inner surface 135 of the holder 122 and guide the sliding piece 172. Each guiding groove 142 is a recessed groove and includes a first guiding part 145 which guides the sliding piece 172 in the first direction and a second guiding part 148 which guides the sliding piece 171 in the second direction.

The first guiding part 145 is parallel to a mold opening direction of the molding die 102 (i.e., Y direction), and the second guiding part 148 is inclined with respect to the mold opening direction of the molding die 102 (i.e., Y direction). The first guiding part 145 and the second guiding part 148 are connected to each other, and a center axis M1 of the first guiding part 145 and a center axis M2 of the second guiding part 148 intersect with each other (see Fig. 34).

The first guiding part 145 has a larger height h1 (in the Y direction) than a height h2 (in the Y direction) of each click 180 (see Fig. 34). Therefore, when the mold is clamped, there is a space above each click 180. The first guiding part 145 guides the molding core 191 attached to the sliding piece 172 such that the molding core 191 ejects the molded product P in the mold opening direction (i.e., first direction, Y direction) in a synchronized manner with the ejector mechanism 760. The second guiding part 148 guides the sliding piece 172 diagonally upward to the left (i.e., in the second direction) such that the molding core 191 attached to the sliding piece 172 is removed from the undercut portion P1. In this regard, the direction in which the molding core 191 is removed from the undercut portion P1 means a direction in which the molding core 191 is removed from the undercut portion P1 without deforming or damaging the undercut portion P1.

The center axis M2 of the second guiding part 148 is defined depending on the shape of the undercut portion P1 of the molded product P, in particular, on an extent of projection of the undercut portion P1 in the X direction and a stroke of an ejection pin 745, so that the molding core 191 can be removed from the undercut portion P1 of the molded product P upon ejection of the molded product P. The first guiding part 145 and the second guiding part 148 guide the molding core 191 such that the molding core 191 which has been removed from the undercut portion P1 does not collide with the protruding portion P2 which is located ahead in a removal direction of the undercut portion P1 (i.e., X direction).

The sliding piece 172 has a same basic configuration as that of the sliding piece 171 of the third embodiment. Upper side faces 183 and lower side faces 184 of the clicks 180 come into contact with left side surfaces 151 of the first guiding parts 145 of the guiding grooves 142 in the holder 122 and a right-side-wall inner surface 130 of the holder 122, respectively, in order to guide the molding core 191 in the demolding direction (i.e., Y direction). Until the molding core 191 is removed from the undercut portion P1, left side faces 181 and right side faces 182 of the clicks 180 are in contact with left side surfaces 149 and right side surfaces 150 of the second guiding parts 148 of the guiding grooves 142 in the holder 122, respectively. The opposite upper side faces 183 and lower side faces 184 of the clicks 180 serve as first sliding surfaces, and the opposite left side faces 181 and right side faces 182 of the clicks 180 serve as second sliding surfaces.

An operation of the undercut processing mechanism 103 in the molding die 102 will be described. When the mold is clamped, the sliding piece 172 is arranged such that the left side faces 181 of the clicks 180 are in contact with the inclined surfaces 152 of the first guiding parts 145, the upper side faces 183 are in contact with the left side surfaces 151 of the first guiding parts 145, and the lower side faces 184 are in contact with the right-side-wall inner surfaces 130 of the holder 122 (see Fig. 35). After the mold is opened (see Fig. 36), the ejector rod 768 is pushed up through a non-illustrated ejection device, and the ejector mount plates 762 move upward (i.e., in the Y direction). In association therewith, the ejector pin 763 which is disposed so as to stand on the ejector mount plates 762 ejects the molded product P in the Y direction (see Fig. 8). At the same time, the sliding piece 172 is also guided by the first guiding parts 145 so as to move upward, and the molding piece 191 ejects the molded product P in the Y direction (see Fig. 37).

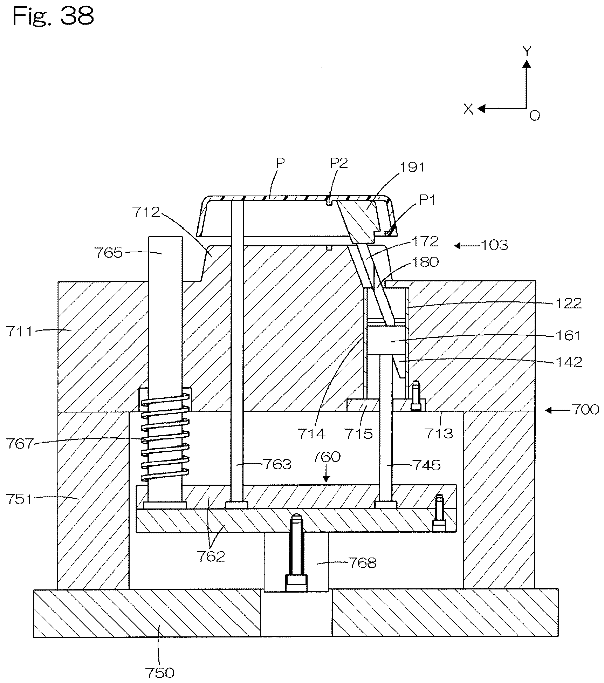

In association with the movement of the ejector mount plates 762, once the right side faces 182 of the sliding piece 172 are moved to come into contact with the right side surfaces 150 of the second guiding parts 148, the sliding piece 172 moves in the second direction along the second guiding parts 148, while the left side faces 181 and the right side faces 182 of the clicks 180 slide on the left side surfaces 149 and the right side surfaces 150 of the second guiding parts 148, respectively. Thus, the molding core 191 is moved simultaneously in the Y direction and the X direction away from the undercut portion P1 (see Fig. 38).

The first guiding parts 145 and the second guiding parts 148 of the guiding grooves 142 allow movement in the X direction to the extent that the molding core 191 does not collide with the protruding portion P2 when the ejector mount plates 762 are moved to a highest position. Therefore, the molding core 191 does not collide with the protruding portion P2 (see Fig. 38).

The effects and advantages of the undercut processing mechanism 103 of the nineth embodiment and the molding die 102 including the same are essentially the same as those of the undercut processing mechanism 101 of the third embodiment and the molding die 100 including the same.

The undercut processing mechanism 103 can be incorporated into the molding die 102 with the sliding piece 172 and the retaining piece 161 housed in the holder 122, and therefore, the undercut processing mechanism 103 can have a compact configuration and be easily attached to the molding die 102. In particular, the holder 122, the retaining piece 161, the sliding piece 172, and the molding core 191 can be assembled into a single independent unit; the undercut processing mechanism 103 as a single unit can be more easily attached to the molding die 102.

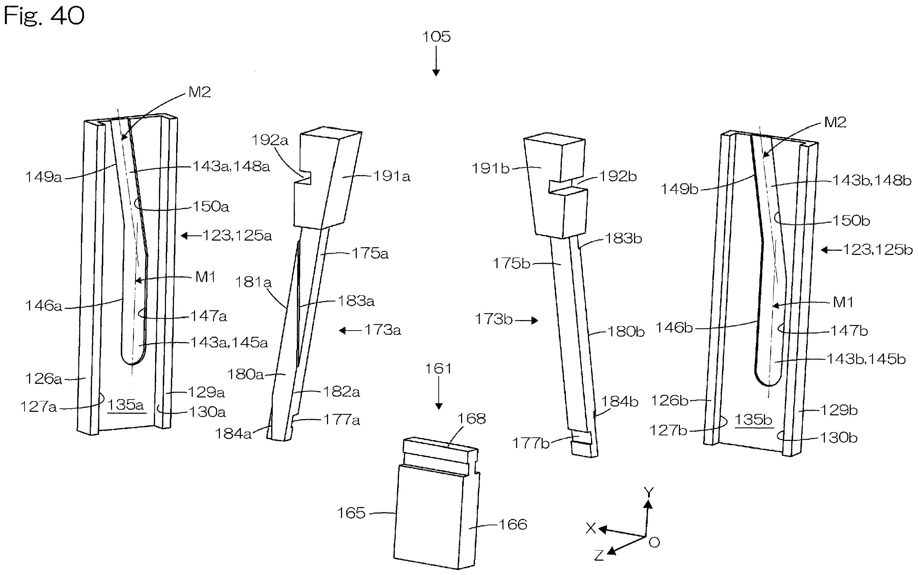

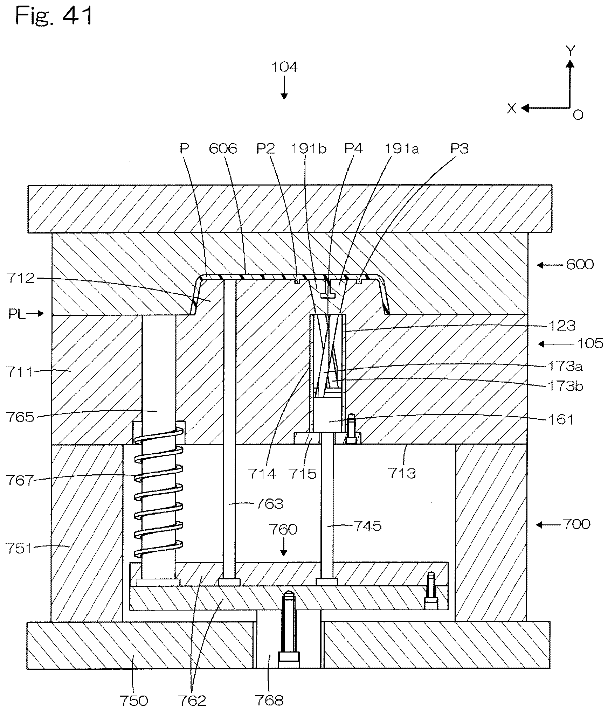

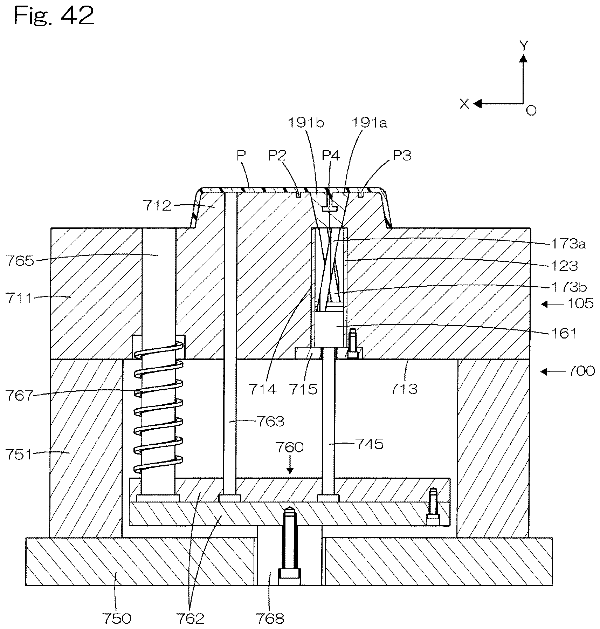

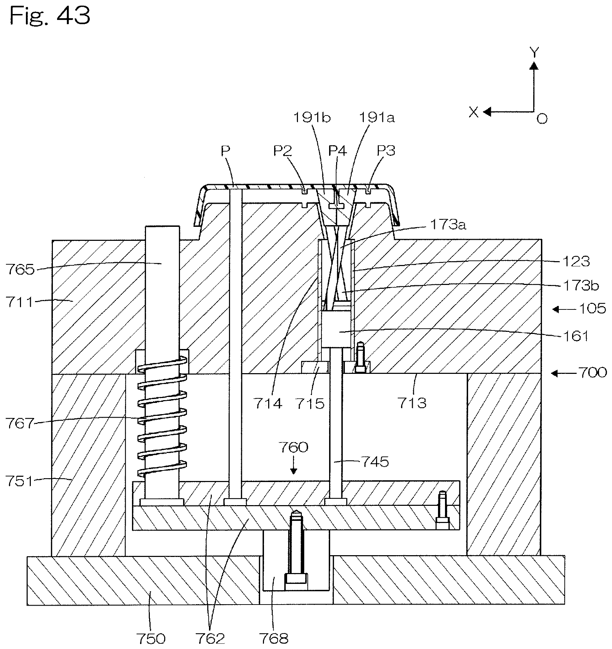

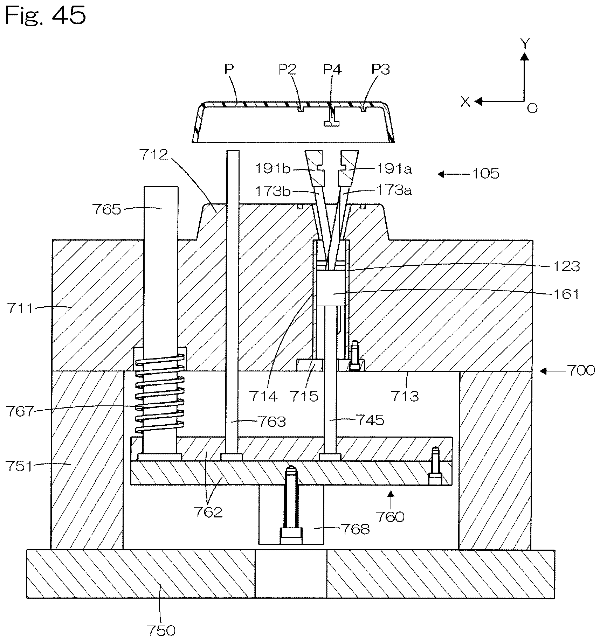

Fig. 40 is an exploded view showing features of an undercut processing mechanism 105 according to a tenth embodiment of the present invention. Fig. 41 is a cross-sectional view of a molding die 104 including an undercut processing mechanism 105 according to the tenth embodiment of the present invention when the mold is closed, and Fig. 42 is a cross-sectional view of the molding die 104 after the mold is opened. Fig. 43 to Fig. 45 show cross-sectional views of the molding die 104 including the undercut processing mechanism 105 according to the tenth embodiment of the present invention during a process of ejecting a molded product P. Features corresponding to the features of the undercut processing mechanism 101 and the molding die 100 of the third embodiment as shown in Fig. 6 to Fig. 10 are denoted with like reference numerals, and description thereof is omitted. For the sake of convenience, in the following description, the "upper" side means the side of the fixed die 600 in Fig. 41, and the "lower" side means the side of the movable die 700 in Fig. 41. In the following description, the "left" side corresponds to the left side in Fig. 41, and the "right" side means the opposite side, unless otherwise specifically noted.

As with the molding die 100 including the undercut processing mechanism 101 of the third embodiment, the molding die 104 including the undercut processing mechanism 105 according to the tenth embodiment of the present invention includes a fixed die 600 and a movable die 700 and is configured to mold a molded product P including an undercut portion P4. The following description will mainly focus on differences from the molding die 100 including the undercut processing mechanism 101 of the third embodiment

The molded product P to be molded by the molding die 104 of the tenth embodiment includes an undercut portion P4 which is located at a middle right position and protrudes inward. The undercut portion P4 has an inverted T shape and includes a tip end portion extending to the left and right. The molded product P also includes a protruding portion P2 which is located leftward (in the +X direction) with respect to the undercut portion P4 and protrudes inward and a protruding portion P3 which is located rightward (i.e., in the -X direction) with respect to the undercut portion P4 and protrudes inward.

As with the undercut processing mechanism 101 of the third embodiment, the undercut processing mechanism 105 of the present embodiment employs the sliding mechanism 1 of the first embodiment. However, due to the position and shape of the undercut portion P4, the undercut processing mechanism 105 of the present embodiment significantly differs from the undercut processing mechanism 101 of the third embodiment in terms of the structures and configurations of the molding core and the sliding piece.

In the molding die 104 of the tenth embodiment, a holder 123 corresponds to the guiding body 31 of the sliding mechanism 1 of the first embodiment, and sliding pieces 173a, 173b respectively including molding cores 191a, 191b at tip ends thereof correspond to the second piece 21. The sliding pieces 173a, 173b correspond to a slider, and the holder 123 corresponds to a guide body. As described later, guiding grooves 143a, 143b correspond to a guide unit; first guiding parts 145a, 145b correspond to a first guide unit; and second guiding parts 148a, 148b correspond to a second guide unit. Clicks 180a, 180b correspond to an engagement unit; first sliding surfaces of the clicks 180a, 180b correspond to a first engagement unit; and second sliding surfaces of the click 180a, 180b correspond to a second engagement unit. The retaining piece 161 and the sliding pieces 173a, 173b are slidably coupled to each other. The retaining piece 161 corresponds to a coupling member, and left- and right-side-wall inner surfaces 127a, 127b, 130a, 130b of the holder 122 correspond to a coupling member guide unit.

The holder 123 includes two half holder members 125a, 125b which, when they are used, are assembled into a columnar shape such that guiding grooves 143a, 143b on the respective half holder members 125a, 125b are opposed to each other. The holder 123 has a same configuration as the holder 121 of the third embodiment, except for guiding grooves 143a, 143b which are located on a front-face-wall inner surface 135a and a back-face-wall inner surface 135b of the holder 123 and guide the sliding pieces 173a, 173b.

Since the two half holder members 125a, 125b have a same shape and a same structure, their structure and the like will be described with reference to one half holder member 125a. The letters "a" and "b" used with the reference numerals are intended to distinguish the two half holder members 125a, 125b. Left side walls 126a, 126b of the holder 123 of the present embodiment have a same configuration as the left side wall 126 of the holder 121 of the third embodiment.

The guiding groove 143a is a recessed groove and includes a first guiding part 145a which guides the sliding piece 173a in the first direction and a second guiding part 148a which guides the sliding piece 173a in the second direction. The first guiding part 145a extends parallel to a mold opening direction of the molding die 104 (i.e., Y direction), and the second guiding part 148a is inclined with respect to the mold opening direction of the molding die 104 (i.e., Y direction). The first guiding part 145a and the second guiding part 148a are connected to each other, and a center axis M1 of the first guiding part 145a and a center axis M2 of the second guiding part 148a intersect with each other (see Fig. 40).

The first guiding part 145a guides the sliding piece 173a such that a molding core 191a attached to the sliding piece 173a ejects the molded product P in the mold opening direction (i.e., first direction, Y direction) in a synchronized manner with the ejector mechanism 760. The second guiding part 148a guides the sliding piece 173a diagonally upward to the right (i.e., in the second direction) such that the molding core 191a attached to the sliding piece 173a is removed from the undercut portion P4. In this regard, the direction in which the molding core 191a is removed from the undercut portion P4 means a direction in which the molding core 191a is removed from the undercut portion P4 without deforming or damaging the undercut portion P4. Note that the second guiding part 148b guides the sliding piece 173b diagonally upward to the left (i.e., in the second direction) such that the molding core 191b attached to the sliding piece 173b is removed from the undercut portion P4.

The center axis M2 of the second guiding part 148a is defined depending on the shape of the undercut portion P4 of the molded product P, in particular, on an extent of projection of the undercut portion P4 in the X direction and a stroke of an ejection pin 745, so that the molding core 191a can be removed from the undercut portion P4 of the molded product P upon ejection of the molded product P. The first guiding part 145a and the second guiding part 148a guide the molding core 191a such that the molding core 191a which has been removed from the undercut portion P4 does not collide with the protruding portion P3 which is located ahead in a removal direction of the undercut portion P4 (i.e., -X direction). Similarly, the first guiding part 145b and the second guiding part 148b guide the molding core 191b which has been removed from the undercut portion P4 does not collide with the protruding portion P2 which is located ahead in a removal direction of the undercut portion P4 (i.e., +X direction).

In the present embodiment, there are two sliding pieces 173a, 173b. Since the two sliding pieces 173a, 173b have a same shape and a same structure, their structure and the like will be described with reference to one sliding piece 173a. The letters "a" and "b" used with the reference numerals are intended to distinguish the two sliding pieces 173a, 173b. For example, the click 180a of the sliding piece 173a of the present embodiment has a same configuration as the click 180 of the sliding piece 171 of the third embodiment.

The sliding piece 173a has a same basic configuration as that of the sliding piece 171 of the third embodiment. An upper side face 183a and a lower side face 184a of the click 180a come into contact with a left side surface 146a and a right side surface 147a of the first guiding part 145a of the guiding groove 143a in the half holder member 125a, respectively, in order to guide the molding core 191a in the demolding direction (i.e., Y direction). Until the molding core 191a is removed from the undercut portion P4, a left side face 181a and a right side face 182a of the click 180a are in contact with a right side surface 150a and a left side surface 149a of the second guiding part 148a of the guiding groove 143a in the holder 125a, respectively. The opposite upper side face 183a and lower side face 184a of the click 180a serve as first sliding surfaces, and the opposite left side face 181a and right side face 182a of the click 180a serve as second sliding surfaces.

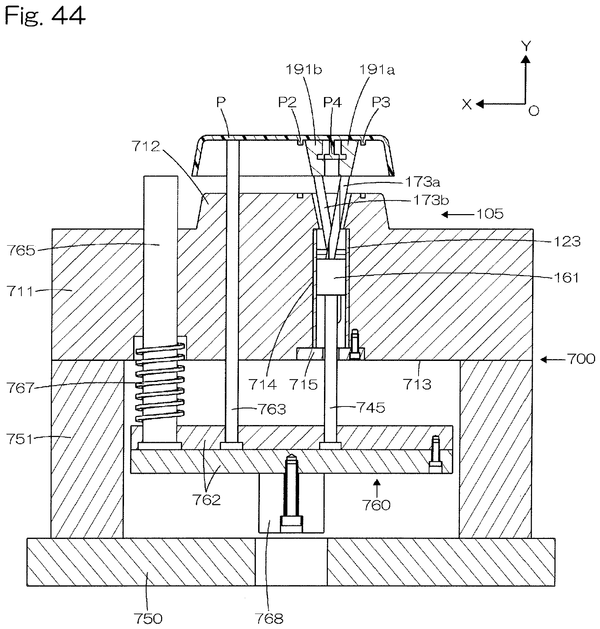

The sliding piece 173a includes the click 180a only on the front face of the sliding piece173a when the sliding piece 173a incorporated into the molding die 104 is viewed straightforwardly, and the sliding piece 173a does not include a click on the back face thereof. Similarly, the sliding piece 173b includes the click 180b only on the back face of the sliding piece 173b when the sliding piece 173b incorporated into the molding mold 104 is viewed straightforwardly, and the sliding piece 173b does not include a click on the front face thereof (see Fig. 44).

The sliding piece 173a includes, at a lower part of the back face, a recessed groove 177a which comes into engagement with the protruding line 168 of the retaining piece 161. The back face refers to a face opposite to the face on which the click 180a is located. The sliding piece 173b includes, at a lower part of the front face, a recessed groove 177b which comes into engagement with the protruding line 168 of the retaining piece 161. The front face refers to a face opposite to the face on which the click 180b is located.

The molding core 191a and the molding core 191b include recessed grooves 192a, 192b, respecrively, for molding the undercut portion P4.

The holder 123, the retaining piece 161, the sliding piece 173a including the molding core 191a, and the sliding piece 173b including the molding core 191b having the above constitution are incorporated into the holder 123, with the recessed groove 177a of the sliding piece 173a receiving the front face of the protruding line 168 of the retaining piece 161, and the recessed groove 177b of the sliding piece 173b receiving the back face of the protruding line 168 of the retaining piece 161.

An operation of the undercut processing mechanism 105 in the molding die 104 will be described. After the mold is opened (see Fig. 42), the ejector rod 768 is pushed up through a non-illustrated ejection device, and the ejector mount plates 762 move upward (i.e., in the Y direction). In association therewith, the ejector pin 763 which is disposed so as to stand on the ejector mount plates 762 ejects the molded product P in the Y direction. At the same time, the sliding pieces 173a, 173b are ejected by the first retaining piece 161 and is guided by the first guiding parts 145 so as to move upward, and the molding cores 191a, 191b eject the molded product P in the Y direction (see Fig. 43).

In association with the movement of the ejector mount plates 762, once the upper side face 183a of the click 180a of the sliding piece 173a is moved to come into contact with the right side surface 150a of the second guiding part 148a, the sliding piece 173a thereafter moves in the second direction along the second guiding part 148a, while the left side face 181a and the right side face 182a of the click 180a slide on the right side surface 150a and the left side surface 149a of the second guiding part 148a, respectively. Thus, the molding core 191a is moved simultaneously in the Y direction and the -X direction away from the undercut portion P4 (see Fig. 44).

Similarly, in association with the movement of the ejector mount plates 762, once the upper side face 183b of the click 180b of the sliding piece 173b is moved to come into contact with the right side surface 150b of the second guiding part 148b, the sliding piece 173b thereafter moves in the second direction along the second guiding part 148b, while the left side face and the right side face of the click 180b slide on the right side surface 150b and the left side surface 149b of the second guiding part 148b, respectively. Thus, the molding core 191b is moved simultaneously in the Y direction and the +X direction away from the undercut portion P4 (see Fig. 44).

The first guiding parts 145a, 145b and the second guiding parts 148a, 148b of the guiding grooves 143a, 143b allow movement in the X direction to the extent that the molding cores 191a, 191b do not collide with the protruding portions P3, P2 when the ejector mount plates 762 are moved to a highest position. In the present embodiment, the sliding pieces 173a, 173b incorporated into the molding die 104 move equally in a laterally symmetrical manner. However, the two sliding pieces 173a, 173b may move to different extents. In the present embodiment, the protruding portions P3, P2 of the molded product P are other members for the molding cores 191a, 191b to avoid collision with. Also in other embodiments, a protruding portion of the molded product P is another member for the molding core 191 to avoid collision with.

As described above, the molding die 104 and the undercut processing mechanism 105 can achieve compact and simple configurations and can operate such that in conjunction with an operation of taking out the molded product P from the molding die 104, the retaining piece 161 moves upward while sliding inside the holder 123, and the sliding pieces 173a, 173b are guided by the holder 123 such that the molding cores 191a, 191b are removed from the undercut portion P4. Therefore, the undercut portion P4 can be demolded easily and reliably. In addition, even where the molded product P includes the protruding portions P2, P3 which are located ahead in the direction(s) of demolding the undercut portion P4, the molded product P can be demolded reliably without collision with the protruding portions P2, P3.

The undercut processing mechanism 105 can be incorporated into the molding die 104 with the sliding pieces 173a, 173b and the retaining piece 161 housed in the holder 123, so that the undercut processing mechanism can have a compact configuration and be easily attached to the molding die 104. In particular, the holder 123, the retaining piece 161, the sliding pieces 173a, 173b, and the molding cores 191a, 191b can be assembled into a single independent unit; the undercut processing mechanism 105 as a single unit can be more easily attached to the molding die 104.

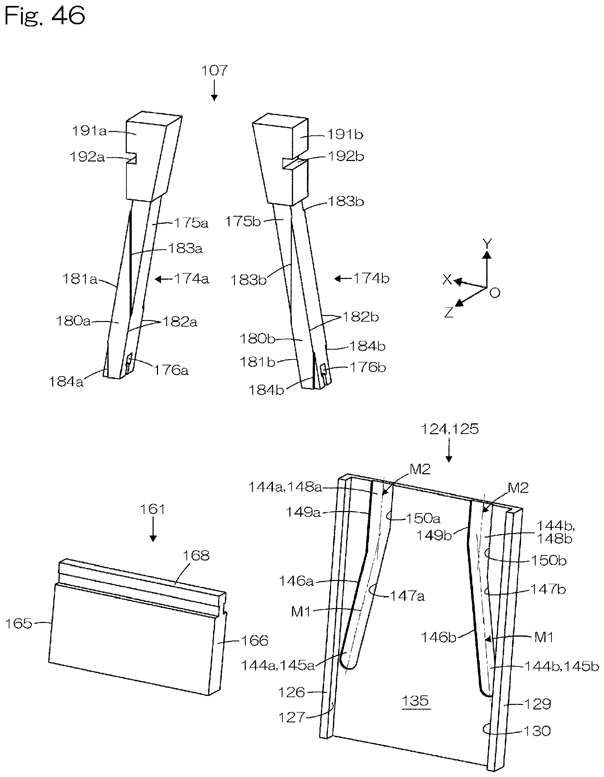

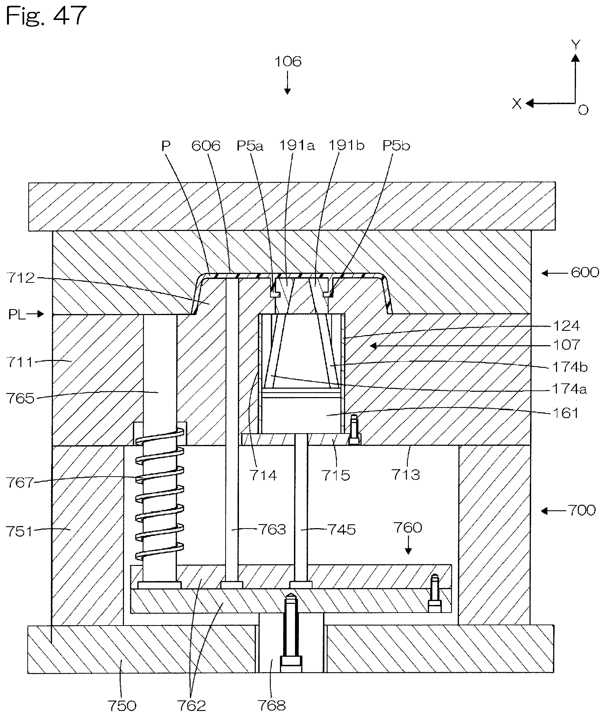

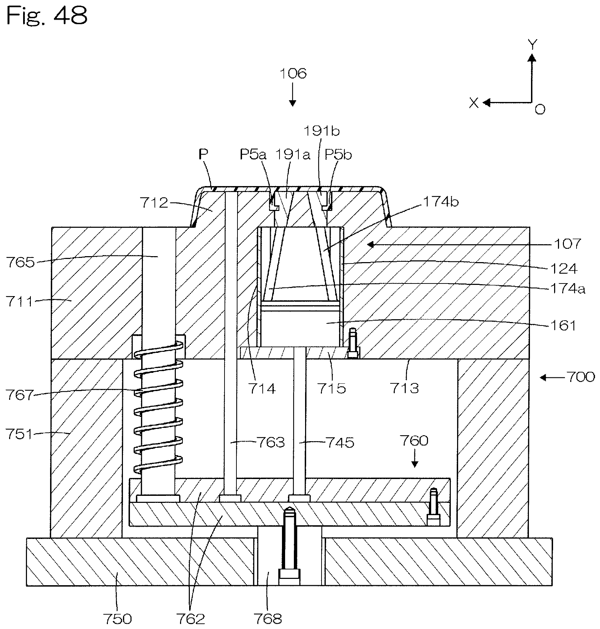

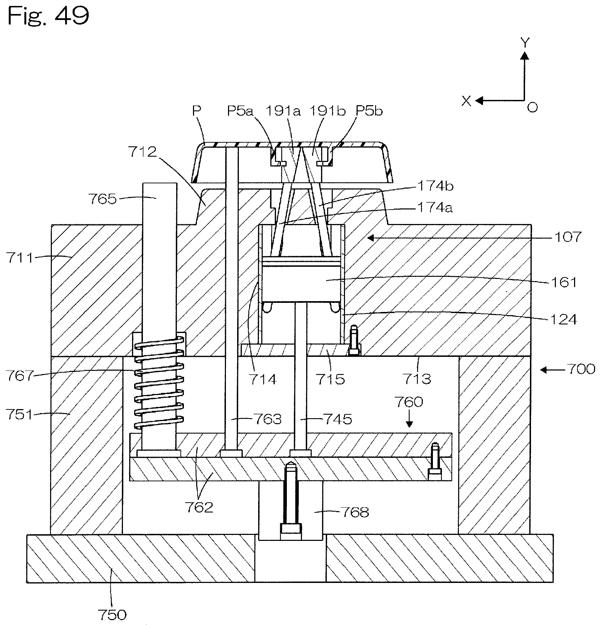

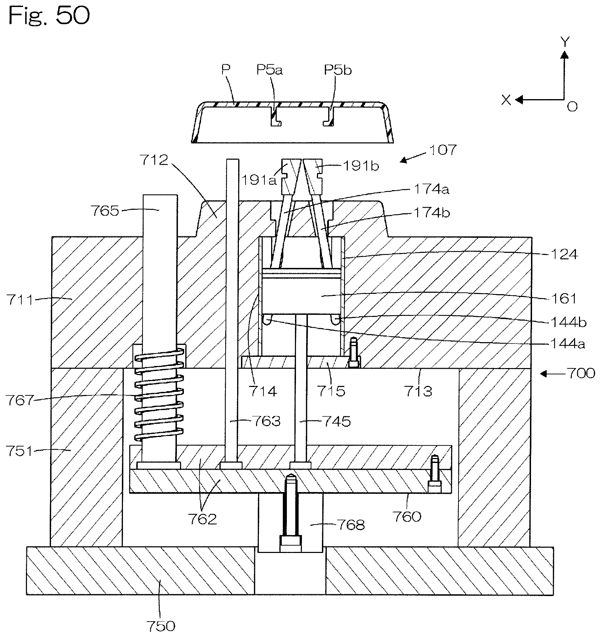

Fig. 46 is an exploded view showing features of an undercut processing mechanism 107 according to an eleventh embodiment of the present invention. Fig. 47 is a cross-sectional view of a molding die 106 including the undercut processing mechanism 107 according to the eleventh embodiment of the present invention when the mold is closed, and Fig. 48 is a cross-sectional view of the molding die 106 when the mold is opened. Fig. 49 and Fig. 50 show cross-sectional views of the molding die 106 including the undercut processing mechanism 107 according to the eleventh embodiment of the present invention during a process of ejecting a molded product P. Features corresponding to the features of the undercut processing mechanism 101 and the molding die 100 of the third embodiment as shown in Fig. 6 to Fig. 10 are denoted with like reference numerals, and description thereof is omitted. For the sake of convenience, in the following description, the "upper" side means the side of the fixed die 600 in Fig. 47, and the "lower" side means the side of the movable die 700 in Fig. 47. In the following description, the "left" side corresponds to the left side in Fig. 47, and the "right" side means the opposite side, unless otherwise specifically noted.

As with the molding die 100 including the undercut processing mechanism 101 of the third embodiment, the molding die 106 including the undercut processing mechanism 107 according to the eleventh embodiment of the present invention includes a fixed die 600 and a movable die 700 and is configured to mold a molded product P including undercut portions P5a, P5b. The following description will mainly focus on differences from the molding die 100 including the undercut processing mechanism 101 of the third embodiment.

The molded product P to be molded by the molding die 106 of the eleventh embodiment includes, at the center of the molded product P, two undercut portions P5a, P5b which are located apart from each other. The undercut portion P5a which is located leftward in a front view has an inversed L shape and includes a protrusion extending in the -X direction at a lower end thereof. On the other hand, the undercut portion P5b which is located rightward in a front view has an L shape and includes a protrusion extending in the +X direction at a lower end thereof.

As with the undercut processing mechanism 101 of the third embodiment, the undercut processing mechanism 107 of the present embodiment employs the sliding mechanism 1 of the first embodiment. However, due to the positions and shapes of the undercut portions P5a, P5b, the undercut processing mechanism 107 of the present embodiment significantly differs from the undercut processing mechanism 101 of the third embodiment in terms of the structures and configurations of the molding core and the sliding piece.

In the molding die 106 of the eleventh embodiment, a holder 124 corresponds to the guiding body 31 of the sliding mechanism 1 of the first embodiment, and sliding pieces 174a, 174b respectively including molding cores 191a, 191b at their tip ends correspond to the second piece 21. The sliding pieces 174a, 174b correspond to a slider, and the holder 124 corresponds to a guide body. As described later, guiding grooves 144a, 144b correspond to a guide unit; first guiding parts 145a, 145b correspond to a first guide unit; and second guiding parts 148a, 148b correspond to a second guide unit. Clicks 180a, 180b correspond to an engagement unit; first sliding surfaces of the clicks 180a, 180b correspond to a first engagement unit; and second sliding surfaces of the clicks 180a, 180b correspond to a second engagement unit. The retaining piece 161 and the sliding pieces 174a, 174b are slidably coupled together through a dovetail groove structure. The retaining piece 161 corresponds to a coupling member, and left- and right-side-wall inner surfaces 127, 130 of the holder 124 correspond to a coupling member guide unit.

The holder 124 includes a pair of half holder members 125 which are assembled into a columnar shape when used. The holder 124 has a same configuration as the holder 121 of the third embodiment, except for guiding grooves 144a, 144b which are located on a front-face-wall inner surface and a back-face-wall inner surface 135 of the holder 124 and guide the sliding pieces 174a, 174b.

On each of the front-face-wall inner surface and the back-face-wall inner surface 135 of the holder 124, the guiding grooves 144a, 144b are located in a laterally symmetrical manner with a gap therebetween. Each guiding groove 144a is a recessed groove and includes a first guiding part 145a which guides the sliding piece 174a in the first direction and a second guiding part 148a which guides the sliding piece 174a in the second direction. The first guiding part 145a is inclined with respect to a mold opening direction of the molding die 106 (i.e., Y direction), and the second guiding part 148a is parallel to the mold opening direction of the molding die 106 (i.e., Y direction). The first guiding part 145a and the second guiding part 148a are connected to each other, and a center axis M1 of the first guiding part 145a and a center axis M2 of the second guiding part 148a intersect with each other (see Fig. 46).

The first guiding part 145a guides the sliding piece 174a diagonally upward to the right (i.e., in the first direction) such that the molding core 191a attached to the sliding piece 174a is removed from the undercut portion P5a in a synchronized manner with the ejector mechanism 760. In this regard, the direction in which the molding core 191a is removed from the undercut portion P5a means a direction in which the molding core 191a is removed from the undercut portion P5a without deforming or damaging the undercut portion P5a. The second guiding part 148a guides the sliding piece 174a such that the molding core 191a attached to the sliding piece 174a ejects the molded product P in the mold opening direction (second direction, Y direction) in a synchronized manner with the ejector mechanism 760.

The center axis M1 of the first guiding part 145a is defined depending on the shape of the undercut portion P5a of the molded product P, in particular, on an extent of projection of the undercut portion P5a in the -X direction and a stroke of an ejection pin 745, so that the molding core 191a can be removed from the undercut portion P5a of the molded product P upon ejection of the molded product P. The first guiding part 145a and the second guiding part 148a guide the molding core 191a such that the molding core 191a which has been removed from the undercut portion P5a does not collide with the molding core 191b. The molding core 191b is another member for the molding core 191a to avoid collision with, whereas the molding core 191a is another member for the molding core 191b to avoid collision with.

The guiding groove 144b only differs from the guiding groove 144a in the direction of the first guiding part 145b and has otherwise a same configuration as the guiding groove 144a. Therefore, it is only necessary to substitute the letter "a" with the letter "b" of the reference signs in the above description.

In the present embodiment, there are two sliding pieces 174a, 174b. Since the two sliding pieces 174a, 174b have a same shape and a same structure, their structure and the like will be described with reference to one sliding piece 174a. The letters "a" and "b" used with the reference numerals are intended to distinguish the two sliding pieces 174a, 174b. For example, a click 180a of the sliding piece 174a and a click 180b of the sliding piece 174b of the present embodiment have a same configuration as the click 180 of the sliding piece 171 of the third embodiment.

The sliding piece 174a has a same basic configuration as that of the sliding piece 171 of the third embodiment. An upper side face 183a and a lower side face 184a of each click 180a come into contact with a left side surface 149a and a right side surface 150a of the second guiding part 148a of the guiding groove 144a in the holder 124, respectively, in order to guide the molding core 191a in the demolding direction (i.e., Y direction). Until the molding core 191a is removed from the undercut portion P5a, a left side face 181a and a right side face 182a of that click 180a are in contact with a left side surface 146a and a right side surface 147a of the first guiding part 145a of the guiding groove 144a in the holder 124, respectively. The opposite upper side face 183a and lower side face 184a of the click 180a serve as second sliding surfaces, and the opposite left side face 181a and right side face 182a of the click 180a serve as first sliding surfaces.

The molding core 191a and the molding core 191b include recessed grooves 192a, 192b for molding the undercut portions P5a, P5b, respectively.

The holder 124, the retaining piece 161, the sliding piece 174a including the molding core 191a, and the sliding piece 174b including the molding core 191b having the above constitution are incorporated into the holder 124, with dovetail grooves 176a, 176b receiving the protruding line 168 of the retaining piece 161.

An operation of the undercut processing mechanism 107 in the molding die 106 will be described. After the mold is opened (see Fig. 48), the ejector rod 768 is pushed up through a non-illustrated ejection device, and the ejector mount plates 762 move upward (i.e., in the Y direction). In association therewith, the ejector pin 763 which is disposed so as to stand on the ejector mount plates 762 ejects the molded product P in the Y direction. At the same time, the retaining piece 161 also moves upward (i.e., in the Y direction).

The sliding piece 174a engaged with the retaining piece 161 moves in the first direction along the first guiding parts 145a, while the left side faces 181a and the right side faces 182a of the clicks 180a slide on the left side surfaces 146a and the right side surfaces 147a of the first guiding parts 145a, respectively. Thus, the molding core 191a is moved simultaneously in the Y direction and the -X direction and is removed from the undercut portion P5a. Similarly, the sliding piece 174b moves in the first direction along the first guiding parts 145b, while the left side faces 181b and the right side faces 182b of the clicks 180b slide on the left side surfaces 146b and the right side surfaces 147b of the first guiding parts 145b, respectively. Thus, the molding core 191b is moved simultaneously in the Y direction and the +X direction and is removed from the undercut portion P5b (see Fig. 49).

In association with the movement of the ejector mount plates 762, once the upper side faces 183a of the clicks 180a of the sliding piece 174a are moved to come into contact with the right side surfaces 150a of the second guiding parts 148a, the sliding piece 174a moves in the second direction along the second guiding parts 148a, while the upper side faces 183a and the lower side faces 184a of the clicks 180a slide on the right side surfaces 150a and the left side surfaces 149a of the second guiding parts 148a, respectively. Thus, the molding core 191a moves in the Y direction.

Similarly, in association with the movement of the ejector mount plates 762, once the upper side faces 183b of the clicks 180b of the sliding piece 174b are moved to come into contact with the left side surfaces 149b of the second guiding parts 148b, the sliding piece 174b moves in the second direction along the second guiding parts 148b, while the upper side faces 183b and the lower side faces 184b of the clicks 180b slide on the left side surfaces 149b and the right side surfaces 150b of the second guiding parts 148b, respectively. Thus, the molding core 191b moves in the Y direction.

The first guiding parts 145a, 145b and the second guiding parts 148a, 148b of the guiding grooves 144a, 144b allow movement in the X direction to the extent that the molding cores 191a, 191b do not collide with each other when the ejector mount plates 762 are moved to a highest position (see Fig. 50). In the present embodiment, the sliding pieces 174a, 174b incorporated into the molding die 106 move equally in a laterally symmetrical manner. However, the two sliding pieces 174a, 174b may move to different extents.

As described above, the molding die 106 and the undercut processing mechanism 107 can achieve compact and simple configurations and can operate such that in conjunction with an operation of taking out the molded product P from the molding die 106, the retaining piece 161 moves upward while sliding inside the holder 124, and the sliding pieces 174a, 174b are guided by the holder 124 to move such that the molding cores 191a, 191b are removed from the undercut portions P5a, P5b. Therefore, the undercut portions P5a, P5b can be demolded easily and reliably. In addition, the two sliding pieces 174a, 174b are configured to avoid colliding with each other after the undercut portions P5a, P5b are demolded.

The undercut processing mechanism 107 can be incorporated into the molding die 106 with the sliding pieces 174a, 174b and the retaining piece 161 housed in the holder 124, and therefore, the undercut processing mechanism 107 can have a compact configuration and be easily attached to the molding die 106. In particular, the holder 124, the retaining piece 161, the sliding pieces 174a, 174b, and the molding cores 191a, 191b can be assembled into a single independent unit; the undercut processing mechanism 107 as a single unit can be more easily attached to the molding die 106.

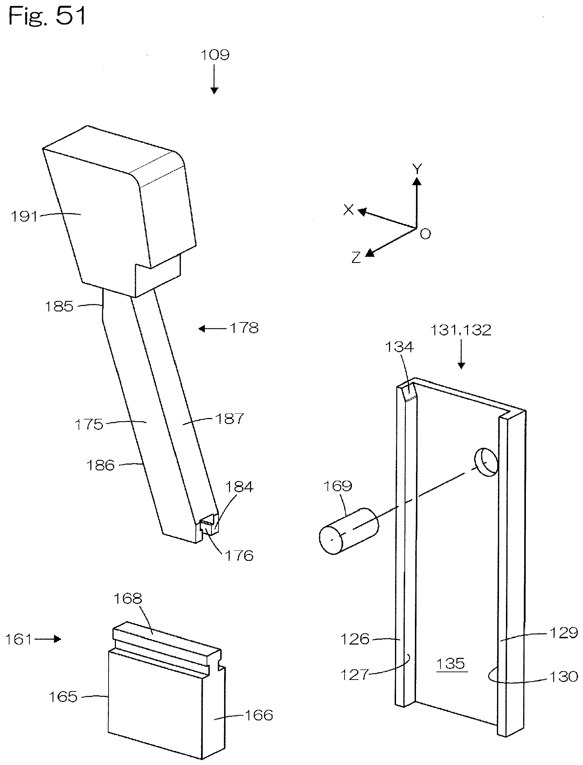

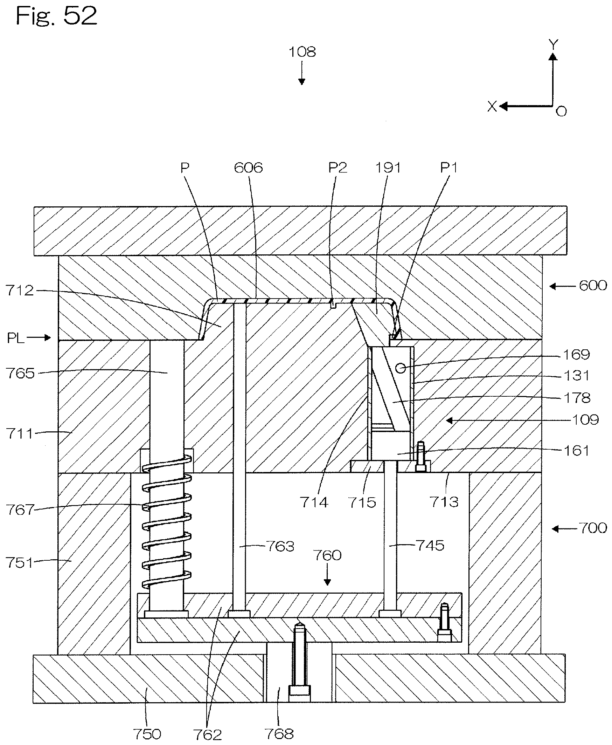

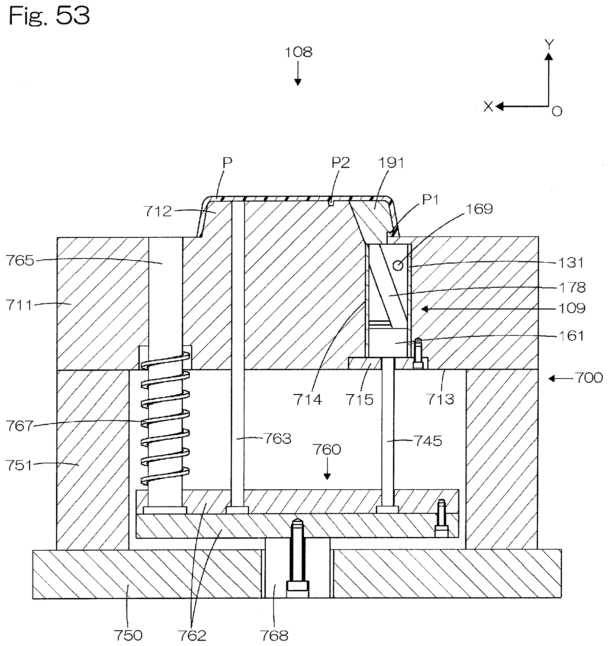

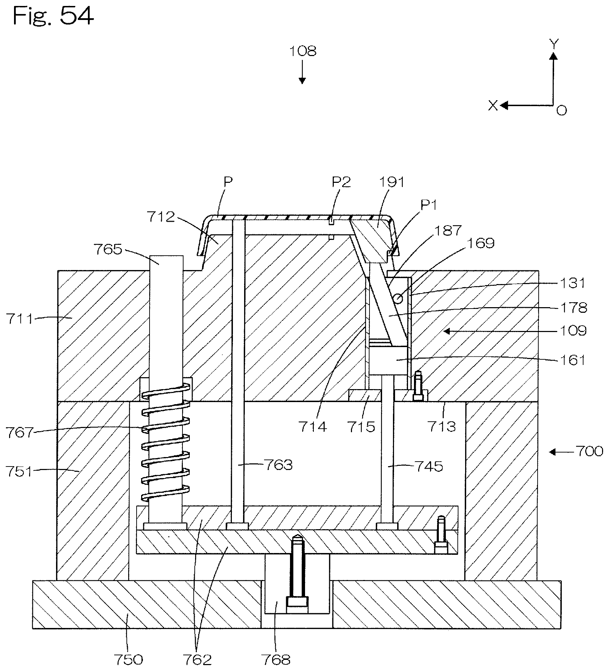

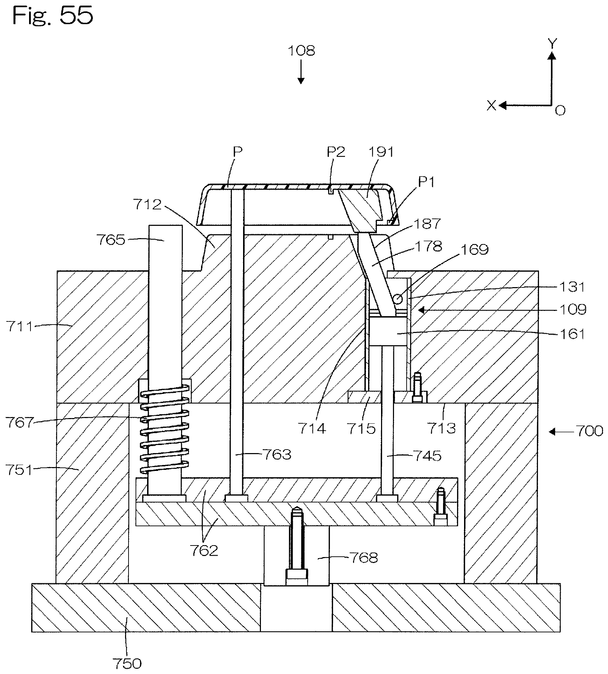

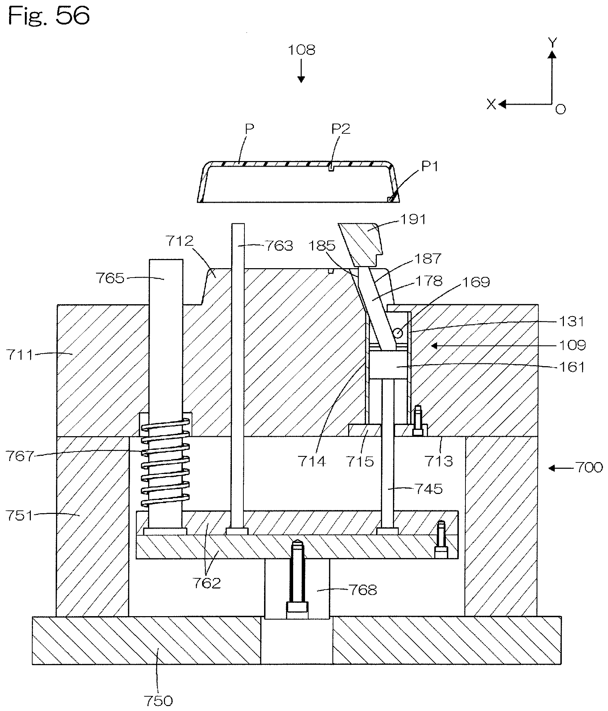

Fig. 51 is an exploded view showing features of an undercut processing mechanism 109 according to a twelfth embodiment of the present invention. Fig. 52 is a cross-sectional view of a molding die 108 including the undercut processing mechanism 109 according to the twelfth embodiment of the present invention when the mold is closed, and Fig. 53 is a cross-sectional view of the molding die 108 when the mold is opened. Fig. 54 and Fig. 55 show cross-sectional views of the molding die 108 including the undercut processing mechanism 109 according to the twelfth embodiment of the present invention during a process of ejecting a molded product P. Fig. 56 shows the molded product P ejected from the molding die 108 including the undercut processing mechanism 109 according to the twelfth embodiment of the present invention. Features corresponding to the features of the undercut processing mechanism 101 and the molding die 100 of the third embodiment as shown in Fig. 6 to Fig. 10 are denoted with like reference numerals, and description thereof is omitted. For the sake of convenience, in the following description, the "upper" side means the side of the fixed die 600 in Fig. 52, and the "lower" side means the side of the movable die 700 in Fig. 52. In the following description, the "left" side corresponds to the left side in Fig. 52, and the "right" side means the opposite side, unless otherwise specifically noted.

As with the molding die 100 including the undercut processing mechanism 101 according to the third embodiment of the present invention, the molding die 108 including the undercut processing mechanism 109 according to the twelfth embodiment of the present invention includes a fixed die 600, a movable die 700, and the undercut processing mechanism 109 and is configured to mold a molded product P including an undercut portion. However, the undercut processing mechanism 109 has a different structure. The following description will mainly focus on differences from the molding die 100 including the undercut processing mechanism 101 of the third embodiment.

In the molding die 108 of the twelfth embodiment, the shape of the molded product P, the shapes and positional relation of the undercut portion P1 and the protruding portion P2 are the same as those in the molding die 100 of the third embodiment. As with the undercut processing mechanism 101 of the third embodiment, the undercut processing mechanism 109 of the present embodiment guides a sliding piece 178 including a molding core 191 at a tip end thereof, which corresponds to the second piece 21, in the first direction and the second direction. However, the undercut processing mechanism 109 includes a first guide unit and a second guide unit which are different from those of the undercut processing mechanism 101, for guiding the sliding piece 178 in the first direction and the second direction, respectively.

In the molding die 108 of the twelfth embodiment, a holder 131 corresponds to the guiding body 31 of the sliding mechanism 1 of the first embodiment, and the sliding piece 178 including the molding core 191 at the tip end thereof corresponds to the second piece 21. The sliding piece 178 corresponds to a slider, and the holder 131 corresponds to a guide body. Left and right side walls of the holder 131 correspond to a first guide unit, and a knock pin 169 and an inclined surface 134 of the holder 131 correspond to a second guide unit. The retaining piece 161 and the sliding piece 178 are slidably coupled together through a dovetail groove structure. The retaining piece 161 corresponds to a coupling member, and left- and right-side-wall inner surfaces 127, 130 of the holder 131 correspond to a coupling member guide unit.

The holder 131 includes a pair of holder halves 132 are assembled into a columnar shape when used. The holder 131 does not include a guiding groove for guiding the sliding piece 178 but, instead, includes a knock pin 169 attached to an inside of the holder 131. The knock pin 169 has a cylindrical shape and is located at an upper right part of the holder 131 in a front view. In the holder 131, the left-side-wall inner surface 127 and the right-side-wall inner surface 130 guide the sliding piece 178 in the mold opening direction (i.e., Y direction), which is the first direction, and the inclined surface 134 at the upper left part of the holder 131 and the knock pin 169 guide the sliding piece 178 in the upper left direction, which is the second direction. Here, the first direction is parallel to the mold opening direction (i.e., Y direction), and the second direction is inclined with respect to the mold opening direction (i.e., Y direction).

The knock pin 169 guides the sliding piece 178 diagonally upward to the left (second direction) such that the molding core 191 attached to the sliding piece 178 is removed from the undercut portion P1. In this regard, the direction in which the molding core 191 is removed from the undercut portion P1 means a direction in which the molding core 191 is removed from the undercut portion P1 without deforming or damaging the undercut portion P1.

The position of the knock pin 169 is defined depending on the shape of the undercut portion P1 of the molded product P, in particular, on an extent of projection of the undercut portion P1 in the X direction and a stroke of an ejection pin 745, so that the molding core 191 can be removed from the undercut portion P1 of the molded product P upon ejection of the molded product P. Also, the knock pin 169 guides the molding core 191 such that the molding core 191 which has been removed from the undercut portion P1 does not collide with the protruding portion P2 which is located ahead in a removal direction of the undercut portion P1 (i.e., X direction).

The sliding piece 178 does not include a click. Instead, an upper side face 185 and a lower side face 184 of a body 175 of the sliding piece 178 serve as first sliding surfaces, and a left side face 186 and a right side face 187 of the body 175 serve as second sliding surface. Until the sliding piece 178 comes into contact with the knock pin 169, the upper side face 185 and the lower side face 184 are in contact with the left-side-wall inner surface 127 and the right-side-wall inner surface 130 of the holder 131 and guide the molding core 191 in the first direction. After the body 175 comes into contact with the knock pin 169, the left side face 186 and the right side face 187 of the body 175 of the sliding piece 178 guide the molding core 191 in the second direction, with the left side face 186 slidably in contact with the inclined surface 134 of the holder 131 and the right side face 187 slidably in contact with the knock pin 169.

An operation of the undercut processing mechanism 109 in the molding die 108 will be described. When the mold is clamped, the upper side face 185 and the lower side face 184 of the body 175 of the sliding piece 178 are in contact with the left-side-wall inner surface 127 and the right-side-wall inner surface 130 of the holder 131, respectively (see Fig. 52). After the mold is opened (see Fig. 53), the ejector rod 768 is pushed up through a non-illustrated ejection device, and the ejector mount plates 762 move upward (i.e., in the Y direction). In association therewith, the ejector pin 763 which is disposed so as to stand on the ejector mount plates 762 ejects the molded product P in the Y direction. In this case, the sliding piece 178 is also guided by the opposite side wall inner surfaces of the holder 131 so as to move upward, and the molding core 191 ejects the molded product P in the Y direction (see Fig. 54).

In association with the movement of the ejector mount plates 762, once the right side face 187 of the body of the sliding piece 178 is moved to come into contact with the knock pin 169, the sliding piece 178 moves in the second direction, while the right side face 187 of the body slides on the knock pin 169, and the left side face 186 of the body slides on the inclined surface 134 of the holder 131. Thus, the molding core 191 is moved simultaneously in the Y direction and the X direction away from the undercut portion P1. The position of the knock pin 169 is defined so as to allow movement in the X direction to the extent that the molding core 191 does not collide with the protruding portion P2 when the ejector mount plates 762 are moved to a highest position. Therefore, the molding core 191 does not collide with the protruding portion P2.

The effects and advantages of the undercut processing mechanism 109 of the twelfth embodiment and the molding die 108 including the same are essentially the same as those of the undercut processing mechanism 101 of the third embodiment and the molding mold 100 including the same.

The undercut processing mechanism 109 can be incorporated into the molding die 108 with the sliding piece 178 and the retaining piece 161 housed in the holder 131, and therefore, the undercut processing mechanism 109 can have a compact configuration and be easily attached to the molding die 108. In particular, the holder 131 including the knock pin 169, the retaining piece 161, the sliding piece 178, and the molding core 191 can be assembled into a single independent unit; the undercut processing mechanism 109 as a single unit can be more easily attached to the molding die 108.

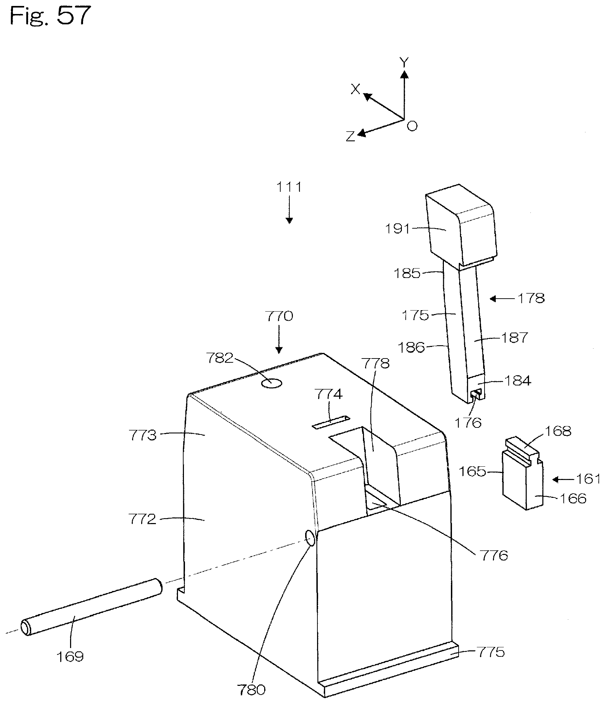

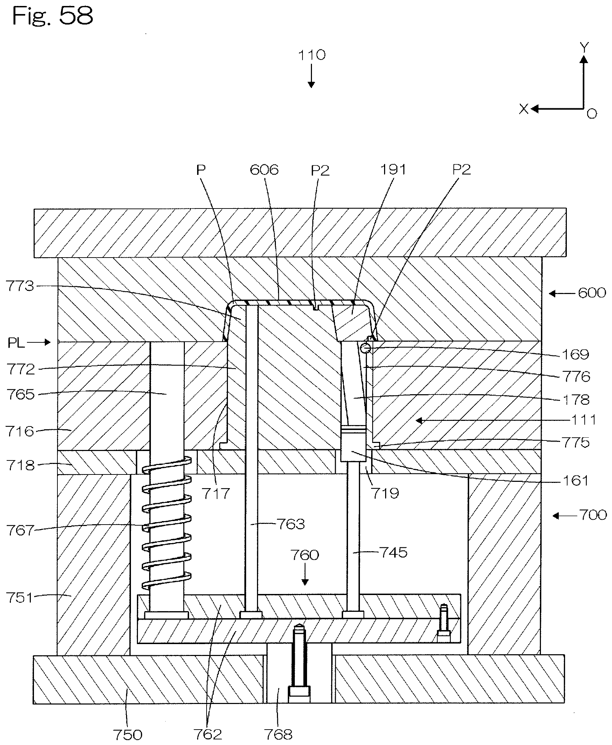

Fig. 57 is an exploded view showing features of an undercut processing mechanism 111 according to a thirteenth embodiment of the present invention. Fig. 58 is a cross-sectional view of a molding die 110 including the undercut processing mechanism 111 according to the thirteenth embodiment of the present invention in a mold closed state. Features corresponding to the features of the undercut processing mechanism 109 and the molding die 108 of the twelfth embodiment as shown in Fig. 51 to Fig. 56 are denoted with like reference numerals, and description thereof is omitted. For the sake of convenience, in the following description, the "upper" side means the side of the fixed die 600 in Fig. 58, and the "lower" side means the side of the movable die 700 in Fig. 58. In the following description, the "left" side corresponds to the left side in Fig. 58, and the "right" side means the opposite side, unless otherwise specifically noted.

The molding die 110 including the undercut processing mechanism 111 according to the thirteenth embodiment of the present invention shares many common points with the undercut processing mechanism 109 and the molding die 108 of the twelfth embodiment, like for example in that the molding core 191 attached to the sliding piece 178 includes the knock pin 169 which guides the sliding piece 178 diagonally upward to the left (in the second direction) such that the molding core 191 is removed from the undercut portion P1. The following description will mainly focus on differences from the molding die 108 including the undercut processing mechanism 109 of the twelfth embodiment.

In the molding die 110 of the thirteenth embodiment, the shape of the molded product P, the shapes and positional relation of the undercut portion P1 and the protruding portion P2 are the same as those in the molding die 108 of the twelfth embodiment. The undercut processing mechanism 111 does not include an independent holder but includes a holder 776 integrated into a receiving body 770 attached to a movable mold plate 716. A movable receiving plate 718 is attached to a bottom part of the movable mold plate 716.

In the molding die 110 of the thirteenth embodiment, the holder 776 corresponds to the guiding body 31 of the sliding mechanism 1 of the first embodiment, the sliding piece 178 including the molding core 191 at a tip end thereof corresponds to the second piece 21. The sliding piece 178 corresponds to a slider, and the holder 776 corresponds to a guide body. Left and right side walls of the holder 776 correspond to a first guide unit, and the knock pin 169 and an inclined surface at an upper left part of the holder 776 correspond to a second guide unit. The retaining piece 161 and the sliding piece 178 are slidably coupled together through a dovetail groove structure. The retaining piece 161 corresponds to a coupling member, and left- and right-side-wall inner surfaces of the holder 776 correspond to a coupling member guide unit.

The receiving body 770 includes a core 773 for molding an inner surface of a molded product P at an upper part of a body 772 of the receiving body 770, and a recessed part 774 for molding the protruding portion P2 of the molded product P on an upper face of the receiving body 770. The receiving body 770 is fitted into a recessed part 717 in the movable mold plate 716 and is fixed to the movable mold plate 716 through the movable receiving plate 718 with flanges 775 at a bottom part of the body 772 engaged with the recessed part 717.

The holder 776 penetrates the body 772 in the vertical direction. The holder 772 includes, at an upper part thereof, a recessed part 778 connected to the holder 772. The recessed part 778 is a receiving hole which receives the molding core 191, and the molding core 191 is slidably received into the recessed part 778 without a gap. The receiving body 770 also includes an attachment hole 780 to which the knock pin 169 is attached and a through hole 782 through which the ejector pin 763 is inserted.

Since the holder 776 has a same basic configuration as and same effects as those of the holder 131 of the undercut processing mechanism 109 of the twelfth embodiment, description thereof is omitted. Since the position and the effect of the knock pin 169 are also the same as those of the knock pin 169 of the undercut processing mechanism 109 of the twelfth embodiment, description thereof is omitted. The sliding piece 178 of the present embodiment is identical to the sliding piece 178 of the undercut processing mechanism 109 of the twelfth embodiment.

The movable receiving plate 718 is attached to the bottom part of the movable mold plate 716 so as to support the receiving body 770. The movable receiving plate 718 includes a through hole 719 which allows the retaining piece 161 to freely move therethrough.

The operation, effects and advantages of the molding die 110 and the undercut processing mechanism 111 are essentially the same as those of the molding die 108 and the undercut processing mechanism 109 of the twelfth embodiment.

The undercut processing mechanism 111 can be incorporated into the molding die 110 with the sliding piece 178 and the retaining piece 161 housed in the holder 776, and therefore, the undercut processing mechanism 111 can have a compact configuration and be easily attached to the molding die 110. In particular, the receiving body 770 including the holder 776 including the knock pin 169, the retaining piece 161, the sliding piece 178, and the molding core 191 can be assembled into a single independent unit; the undercut processing mechanism 111 as a single unit can be more easily attached to the molding die 110.

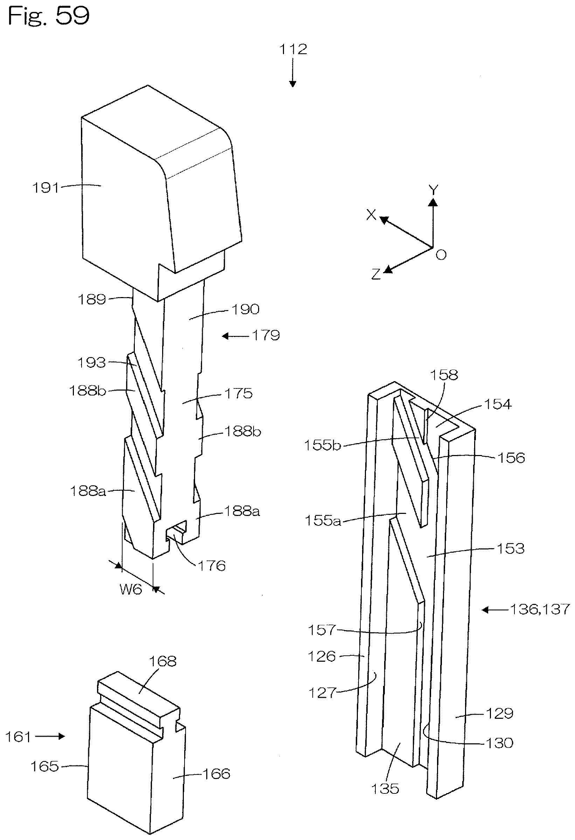

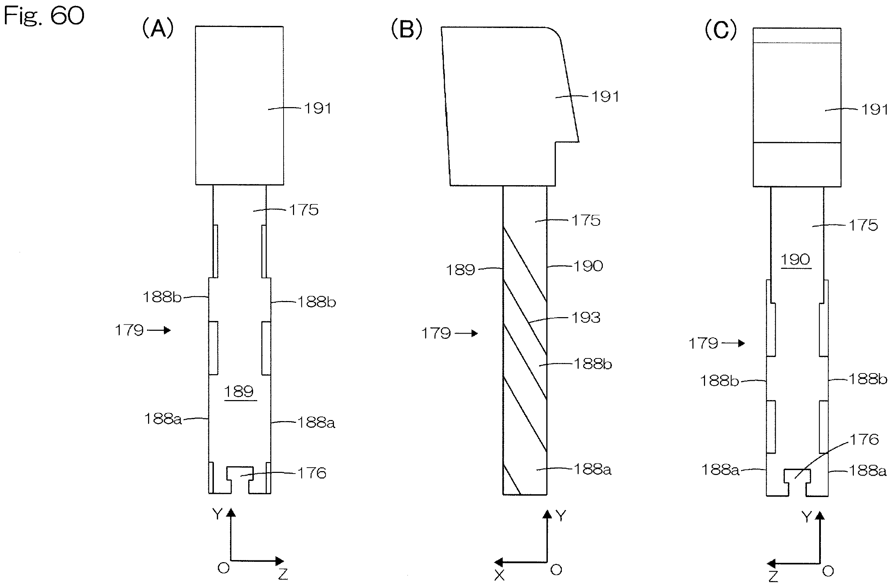

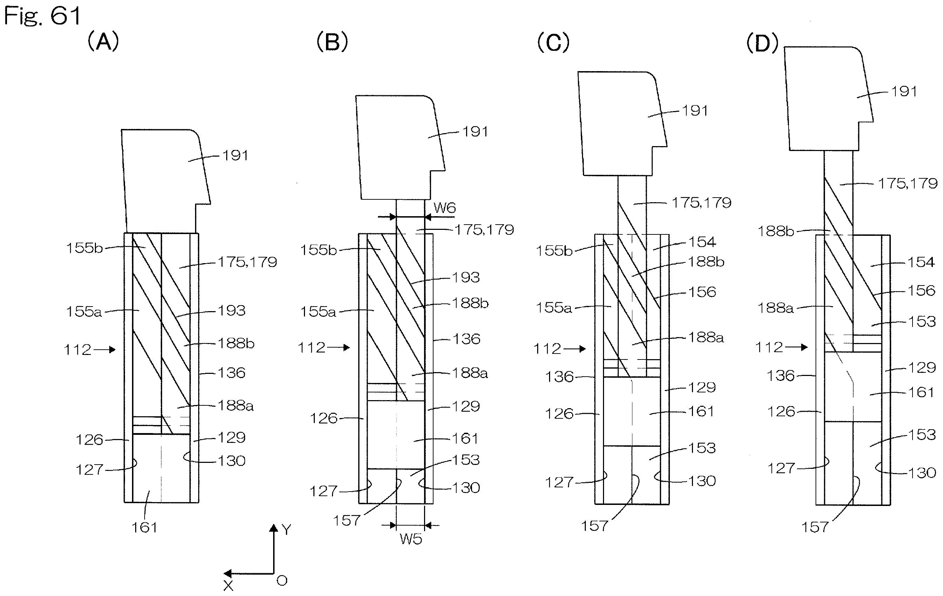

Fig. 59 is an exploded view showing features of an undercut processing mechanism 112 according to a fourteenth embodiment of the present invention. Charts (A), (B), and (C) of Fig. 60 show a left-side view, a front view, and a right-side view, respectively, of a sliding piece 179 including the molding core 191 of the undercut processing mechanism 112 according to the fourteenth embodiment of the present invention. Fig. 61 illustrates an operation of the undercut processing mechanism 112 according to the fourteenth embodiment of the present invention. Features corresponding to the features of the undercut processing mechanism 101 and the molding die 100 of the third embodiment as shown in Fig. 6 to Fig. 10 are denoted with like reference numerals, and description thereof is omitted. In the following description, it should be understood that instead of the undercut processing mechanism 101, the undercut processing mechanism 112 is incorporated into the molding die 100. In the present embodiment, the "left" side means a far side in the X direction and corresponds to the left side in Chart (A) of Fig. 61.

The undercut processing mechanism 112 is configured to mold the undercut portion PI when the molded product P is molded, and to be removed from the undercut portion PI upon ejection of the molded product P in a synchronized manner with the ejector mechanism 760, so that the molded product P can be demolded from the molding die. The undercut processing mechanism 112 of the present embodiment employs the sliding mechanism 1 of the first embodiment.

The undercut processing mechanism 112 includes: a holder 136; the sliding piece 179 including, at the tip end thereof, the molding core 191 which molds the undercut portion PI of the molded product P; and the retaining piece 161 which slidably retains the sliding piece 179. As with the undercut processing mechanism 101 of the third embodiment, the undercut processing mechanism 112 of the present embodiment guides sliding piece 179 including a molding core 191 at a tip end thereof, which corresponds to the second piece 21, in the first direction and the second direction. However, the undercut processing mechanism 112 includes a first guide unit and a second guide unit which are different from those of the undercut processing mechanism 101, for guiding the sliding piece in the first direction and the second direction, respectively.

The holder 136 of the present embodiment corresponds to the guiding body 31 of the sliding mechanism 1 of the first embodiment; the sliding piece 179 including the molding core 191 at the tip end thereof corresponds to the second piece 21; and the retaining piece 161 corresponds to the first piece 11. In the present embodiment, the sliding piece 179 corresponds to a slider, and the holder 136 corresponds to a guide body. As described later, guiding grooves 153, 154, 155 (155a, 155b) correspond to a guide unit; the guiding groove 153 and the guiding groove 154 correspond to a first guide unit; and the guiding groove 155 corresponds to a second guide unit. The body 175 of the sliding piece 179 corresponds to a first engagement unit, and clicks 188 (188a, 188b) correspond to a second engagement unit. The retaining piece 161 and the sliding piece 179 are slidably coupled together through a dovetail groove structure. The retaining piece 161 corresponds to a coupling member, and left- and right-side-wall inner surfaces 127, 130 of the holder 136 correspond to a coupling member guide unit.

The holder 136 includes two half holder members 137 of a same shape which are assembled together. In the holder 136, the inner surface 127 of the left side wall 126 and the inner surface 130 of the right side wall 129 serve as guides for the retaining piece 161, and the holder 136 includes guiding grooves 153, 154, 155 for guiding the sliding piece 179 on the front-face-wall inner surface and the back-face-wall inner surface 135.

The guiding grooves 153 and the guiding grooves 154 are recessed grooves for guiding the sliding piece 179 in the first direction and guide the sliding piece 179 in the Y direction. The guiding grooves 153 and the guiding grooves 154 extend parallel to the mold opening direction of the molding die 100 (i.e., Y direction) on the front-face-wall inner surface and the back-face-wall inner surface 135 of the holder 136. The guiding grooves 154 are located at above the guiding grooves 153 and connect to the guiding grooves 153 seemingly without a step in a front view. The guiding grooves 154, however, have a smaller groove depth than that of the guiding grooves 153, and there is stepped portions at the interface 156 between the guiding grooves 154 and the guiding grooves 153 (see Fig. 59).

The guiding grooves 153 and the guiding grooves 154 have a width W5 which is approximately half of the width of the front-face-wall inner surface and the back-face-wall inner surface 135 of the holder 136. Right side surfaces of the guiding grooves 153 and of the guiding grooves 154 are flush with the right-side-wall inner surface 130 of the holder 136 when the holder 136 is viewed straightforwardly (see Fig. 61).

The guiding grooves 155 (155a, 155b) are recessed grooves for guiding the sliding piece 179 in the second direction and guides the sliding piece 179 diagonally upward to the left. The guiding grooves 155 are located next to the guiding grooves 153 and the guiding grooves 154 to the left on the front-face-wall inner surface and the back-face-wall inner surface 135 of the holder 136 in a front view. Of the guiding grooves 155, the guiding grooves 155a are located at middle positions in the Y direction, and the guiding grooves 155b are located at upper positions in the Y direction.

The two guiding grooves 155a, 155b are arranged such that in a front view, the left sides of the grooves 155a, 155b are on the left-side-wall inner surface 127 of the holder 136, and the right sides of the grooves 155a, 155b connect to the guiding grooves 153. Upper sides of the guiding grooves 155b linearly meet lower sides of the guiding grooves 154 in a front view. The guiding grooves 155a, 155b have a groove depth equal to that of the guiding grooves 153.

The sliding piece 179 includes the linear body 175 having a rectangular cross section, and the body 175 includes a tip end portion to which the molding core 191 is attached and a lower end including the dovetail groove 176 which slidably engages with the protruding line 168 of the retaining piece 161. The body 175 has a slightly smaller thickness in an upper part than the rest of the body and is stepped in a side view (see Fig. 60). The step of the body 175 has a height equal to that of the step at the interfaces 156 between the guiding grooves 154 and the guiding grooves 153.

The body 175 of the sliding piece 179 has a width W6 substantially equal to a width W5 of the guiding grooves 153, and the sliding piece 179 can be slidably fitted into the guiding grooves 153, 154 without a gap (see Chart (B) of Fig. 61). The sliding piece 179 moves in the Y direction, which is the first direction, while sliding on the left side surfaces 157 of the guiding grooves 153, the left side surfaces 158 of the guiding grooves 154 and further the right-side-wall inner surface 130 of the holder 136 as sliding surface.

The sliding piece 179 includes, on a front face and a back face of the body 175, clicks 188 (188a, 188b) which are fitted into the guiding grooves 155 (155a, 155b). The clicks 188a are located at lower positions in the Y direction, and the clicks 188b are located at middle positions in the Y direction. The clicks 188a, 188b are arranged so as to define recessed grooves above and below the respective clicks 188a, 188b. Therefore, the clicks 188a, 188b may be considered as protruding lines.

The clicks 188 (188a, 188b) have a height (thickness) equal to the depth of the guiding grooves 155 (155a, 155b). The clicks 188 (188a, 188b) are inclined so as to be parallel to the guiding grooves 155 (155a, 155b) when the body 175 and the holder 136 are viewed straightforwardly. Each click 188a has a width substantially equal to a width of each guiding groove 155a, so that the clicks 188a can be slidably fitted into the guiding grooves 155a without a gap. Similarly, each click 188b has a width substantially equal to a width of each guiding groove 155b, so that the clicks 188b can be slidably fitted into the guiding grooves 155b without a gap.

An operation of the undercut processing mechanism 112 will be described. When the mold is clamped, a left side face 189 of the body 175 of the sliding piece 179 is in contact with the left side surfaces 157 of the guiding grooves 153 and the left side surfaces 158 of the guiding grooves 154, and the right side face 190 of the body 175 is in contact with the right-side-wall inner surface 130 of the holder 131 (see Chart (A) of Fig. 61). In the undercut processing mechanism 112, when the mold is clamped, the left and right side faces 189, 190 of the body 175 of the sliding piece 179 are in contact with the guiding grooves 153, 154 and the holder 131 over a wide area in the vertical direction, so that the sliding piece 179 will not be displaced, even when a large load is applied to the molding core 191 laterally (in the ± X directions).

When the retaining piece 161 is ejected in the Y direction, the retaining piece 161 moves in the Y direction, while the left-side-wall inner surface 127 and the right-side-wall inner surface 130 of the holder 136 serve as guides. The sliding piece 179 coupled to the retaining piece 161 moves in the Y direction, while the left side surfaces 157 of the guiding grooves 153, the left side surfaces 158 of the guiding grooves 154, and the right-side-wall inner surface 130 of the holder 136 serve as guides (see Chart (B) of Fig. 61).

Once the sliding piece 179 is moved, and upper sides 193 of the clicks 188b of the sliding piece 179 come into contact with the interfaces 156 of the holder 136 (see Chart (B) of Fig. 61), the sliding piece 179 moves upward to the left, while the clicks 188a are guided by the guiding grooves 155a, and the clicks 188b are guided by the guiding grooves 155b (see Chart (C) of Fig. 61, Chart (D) of Fig. 61).

The operation, effects and advantages of the undercut processing mechanism 112 and the molding die 100 incorporating the same are essentially the same as those of the molding die 100 and the undercut processing mechanism 101 of the third embodiment.

The undercut processing mechanism 112 can be incorporated into the molding die with the sliding piece 179 and the retaining piece 161 housed in the holder 136, and therefore, the undercut processing mechanism 112 can have a compact configuration and be easily attached to the molding die. In particular, the holder 136, the retaining piece 161, the sliding piece 179, and the molding core 191 can be assembled into a single independent unit; the undercut processing mechanism 112 as a single unit can be more easily attached to the molding die.

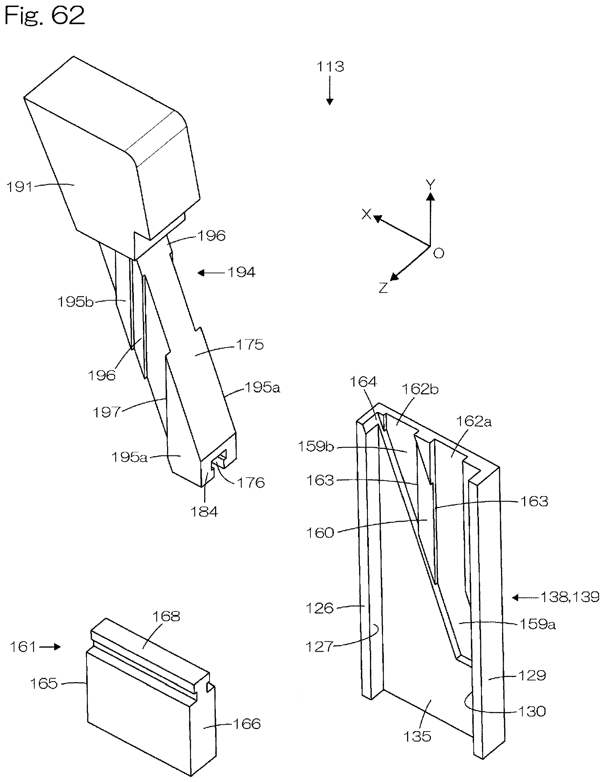

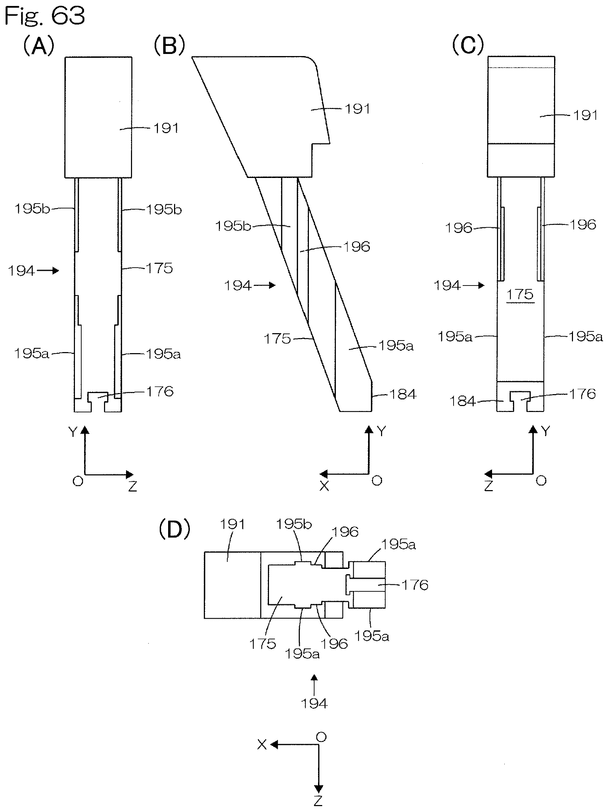

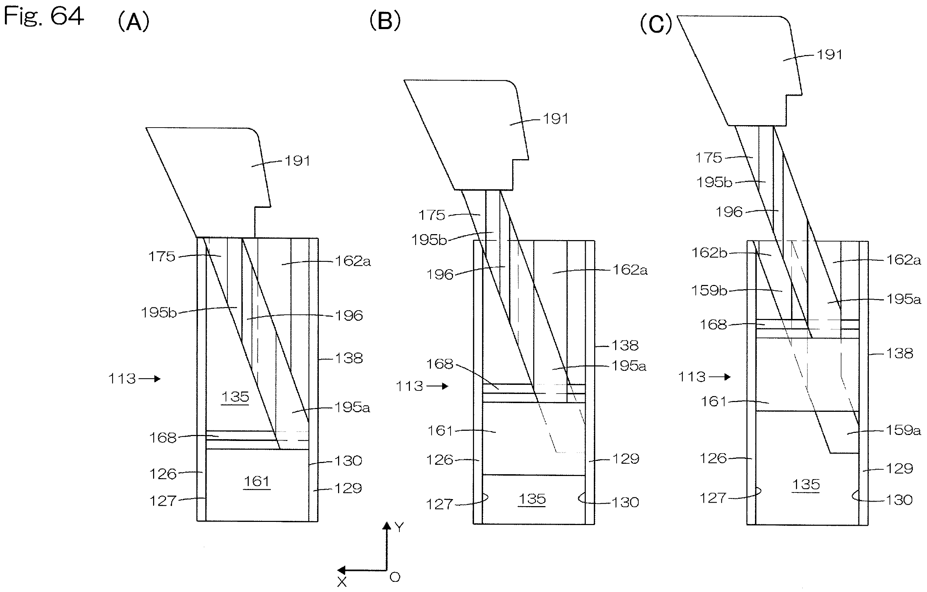

Fig. 62 is an exploded view showing features of an undercut processing mechanism 113 according to a fifteenth embodiment of the present invention. Charts (A), (B), (C), and (D) of Fig. 63 show a left-side view, a front view, a right-side view, and a bottom view, respectively, of a sliding piece 194 including the molding core 191 of the undercut processing mechanism 113 according to the fifteenth embodiment of the present invention. Fig. 64 illustrates an operation of the undercut processing mechanism 113 according to the fifteenth embodiment of the present invention. Features corresponding to the features of the undercut processing mechanism 101 and the molding die 100 of the third embodiment as shown in Fig. 6 to Fig. 10 are denoted with like reference numerals, and description thereof is omitted. In the following description, it should be understood that instead of the undercut processing mechanism 101, the undercut processing mechanism 113 is incorporated into the molding die 100. In the present embodiment, the "left" side means a far side in the X direction and corresponds to the left side in Chart (A) of Fig. 64.

As with the undercut processing mechanism 101 of the third embodiment, the undercut processing mechanism 113 is attached to the molding die 100 and is configured to mold the undercut portion PI when the molded product P is molded, and to be removed from the undercut portion PI upon ejection of the molded product P in a synchronized manner with the ejector mechanism 760, so that the molded product P can be demolded from the molding die. The undercut processing mechanism 113 of the present embodiment employs the sliding mechanism 1 of the first embodiment.

The undercut processing mechanism 113 includes: a holder 138; a sliding piece 194 including, at a tip end thereof, a molding core 191 which molds an undercut portion PI of a molded product P; and a retaining piece 161 which slidably retains the sliding piece 194. As with the undercut processing mechanism 101 of the third embodiment, the undercut processing mechanism 113 of the present embodiment guides the sliding piece 194 including the molding core 191 at the tip end thereof, which corresponds to the second piece 21, in the first direction and the second direction. However, the undercut processing mechanism 113 includes a first guide unit and a second guide unit which are different from those of the undercut processing mechanism 101, for guiding the sliding piece 194 in the first direction and the second direction, respectively.

The holder 138 of the present embodiment corresponds to the guiding body 31 of the sliding mechanism 1 of the first embodiment; the sliding piece 194 including the molding core 191 at the tip end thereof corresponds to the second piece 21; and the retaining piece 161 corresponds to the first piece 11. In the present embodiment, the sliding piece 194 corresponds to a slider, and the holder 138 corresponds to a guide body. As described later, guiding grooves 159 (159a, 159b), 160, 162 (162a, 162b) and an inclined surface 164 correspond to a guide unit; the guiding grooves 159, the guiding grooves 160 and the inclined surfaces 164 correspond to a first guide unit; and the guiding grooves 162 corresponds to a second guide unit. A body 175 of the sliding piece 194 corresponds to a first engagement unit, and clicks 195 (195a, 195b) correspond to a second engagement unit. The retaining piece 161 and the sliding piece 194 are slidably coupled together through a dovetail groove structure. The retaining piece 161 corresponds to a coupling member, and left- and right-side-wall inner surfaces 127, 130 of the holder 138 correspond to a coupling member guide unit.

The holder 138 includes two half holder members 139 of a same shape which are assembled together. In the holder 138, the inner surface 127 of the left side wall 126 and the inner surface 130 of the right side wall 129 serve as guides for the retaining piece 161, and the holder 138 includes guiding grooves 159 (159a, 159b), 160, 162 (162a, 162b) which guide the sliding piece 194 on the front-face-wall inner surface and the back-face-wall inner surface 135. The holder 138 also includes an inclined surface 164 at an upper end of the left side wall 126, and the inclined surface 164 serves as a guide which guides the sliding piece 194 in the first direction.

The guiding grooves 159 and the guiding grooves 160 are recessed grooves which guide the sliding piece 194 in the first direction and are located on the front-face-wall inner surface of the back-face-wall inner surface 135 of the holder 136 to guide the sliding piece 194 diagonally upward to the left. The guiding grooves 160 are located between the guiding grooves 159a and the guiding grooves 159b and linearly connect to these grooves seemingly without a step in a front view. The guiding grooves 159a and the guiding grooves 159b has a same groove depth, and the guiding grooves 160 have a smaller groove depth than that of the guiding grooves 159, so that there are stepped portions 163 at interfaces between the guiding grooves 159a and the guiding grooves 160 and interfaces between the guiding grooves 159b and the guiding grooves 160 (see Fig. 62).

The guiding grooves 162 (162a, 162b) are recessed grooves which guide the sliding piece 194 in the second direction and are located on the front-face-wall inner surface and the back-face-wall inner surface 135 of the holder 136 to guide the sliding piece 194 in the Y direction. When the holder 136 is viewed straightforwardly, the guiding grooves 162 are located on both sides of the guiding grooves 160, so that the guiding grooves 162a are located on the right of the guiding grooves 160, and the guiding grooves 162b are located on the left of the guiding grooves 160. The guiding grooves 162a have a groove depth equal to that of the guiding grooves 159a, and the guiding grooves 162a and the guiding grooves 159a are connected to each other without a step. Similarly, the guiding grooves 162b have a groove depth equal to that of the guiding grooves 159b, and the guiding grooves 162b and the guiding grooves 159b are connected to each other without a step.

The sliding piece 194 includes the linear body 175 having a rectangular cross section, and the body 175 includes a tip end portion to which the molding core 191 is attached and a lower end including the dovetail groove 176 which slidably engages with the protruding line 168 of the retaining piece 161. The body 175 includes two clicks 195a, 195b on each of a front face and a back face thereof (see Fig. 62). The clicks 195a are located at lower parts of the body 175, and the clicks 195b are located at upper parts of the body 175. The clicks 195a and the clicks 195b are separated from each other.

The clicks 195a and the clicks 195b have a same click height, and the clicks 195a, 195b are shaped so as to define recessed parts adjacent to the clicks. Therefore, the clicks 195a, 195b may be considered as protruding lines. The clicks 195a are configured to be slidably fitted into the guiding grooves 162a without a gap, and the clicks 195b are configured to be slidably fitted into the guiding grooves 162b without a gap.

Next to the clicks 195b to the right, there is stepped portions 196 which are a step lower than the clicks 195b. Each stepped portions 196 is constructed such that a sum of a height of the stepped portion 196 and a height of a guiding groove 160 in the holder 138 corresponds to a height of each click 195a, 195b.

An operation of the undercut processing mechanism 113 will be described. When the mold is clamped, the sliding piece 194 is placed such that the lower side face 184 of the body 175 is in contact with the right-side-wall inner surface 130 of the holder 138, the clicks 195a of the body 175 are fitted into the guiding grooves 159a, the clicks 195b of the body 175 are fitted into the guiding grooves 159b, and the stepped portions 196 are fitted into the guiding grooves 160 without a gap (see Chart (A) of Fig. 64). In the undercut processing mechanism 113, when the mold is clamped, the respective parts of the body 175 of the sliding piece 194 are in contact with the holder 138, the guiding grooves 159a, 159b, the guiding grooves 160, and further the inclined surface 164 over a wide area in the vertical direction, so that the sliding piece 194 will not be displaced, even when a large load is applied to the molding core 191 laterally (in the ± X directions).

When the retaining piece 161 is ejected in the Y direction, the retaining piece 161 moves in the Y direction, while the left-side-wall inner surface 127 and the right-side-wall inner surface 130 of the holder 138 serve as guides. The sliding piece 194 slidably coupled to the retaining piece 161 moves in the upper left direction, which is the first direction, while the guiding grooves 159a, 159b, the guiding grooves 160, and further the inclined surface 164 serve as guides (see Chart (B) of Fig. 64).

Once the sliding piece 194 is moved, and left side faces 197 of the clicks 195a of the sliding piece 194 come into contact with the stepped portions 163 of the guiding grooves 160 of the holder 138 (see Chart (B) of Fig. 64), the sliding piece 194 moves in the Y direction, while the clicks 195a are guided by the guiding grooves 162a and the clicks 195b are guided by the guiding grooves 162b (see Chart (C) of Fig. 64).

The operation, effects and advantages of the undercut processing mechanism 113 and the molding die 100 including the same are essentially the same as those of the molding die 100 and the undercut processing mechanism 101 of the third embodiment.

The undercut processing mechanism 113 can be incorporated into the molding die with the sliding piece 194 and the retaining piece 161 housed in the holder 138, and therefore, the undercut processing mechanism 113 can have a compact configuration and be easily attached to the molding die. In particular, the holder 138, the retaining piece 161, the sliding piece 194, and the molding core 191 can be assembled into a single independent unit; the undercut processing mechanism 113 as a single unit can be more easily attached to the molding die.

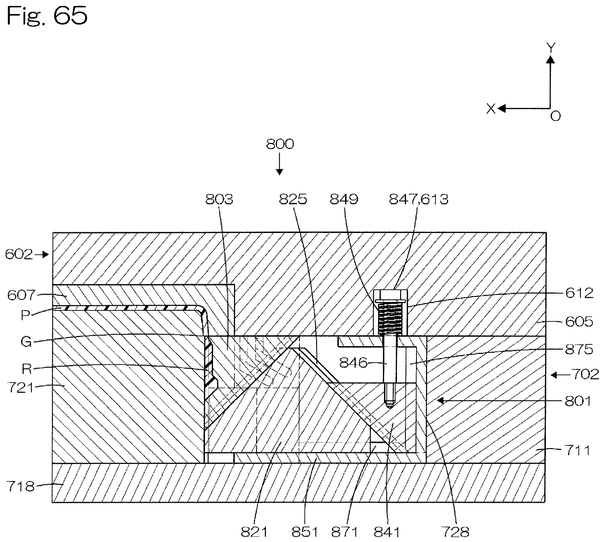

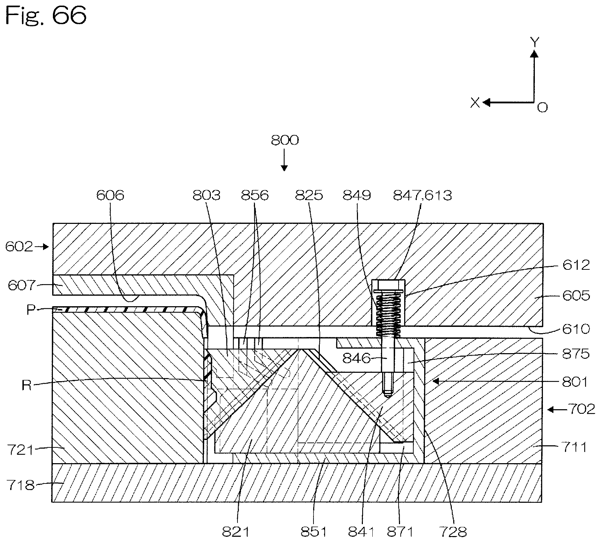

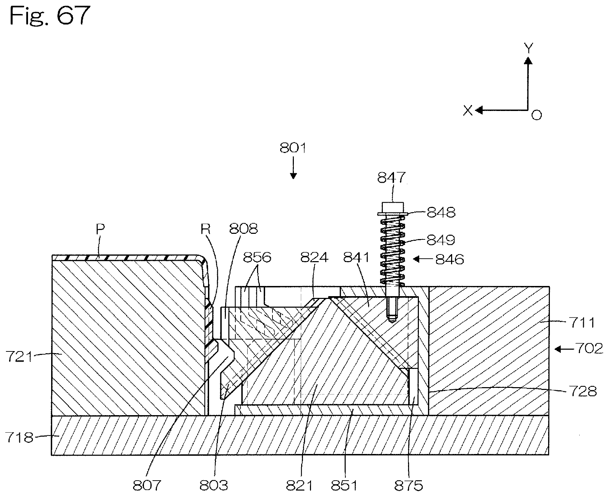

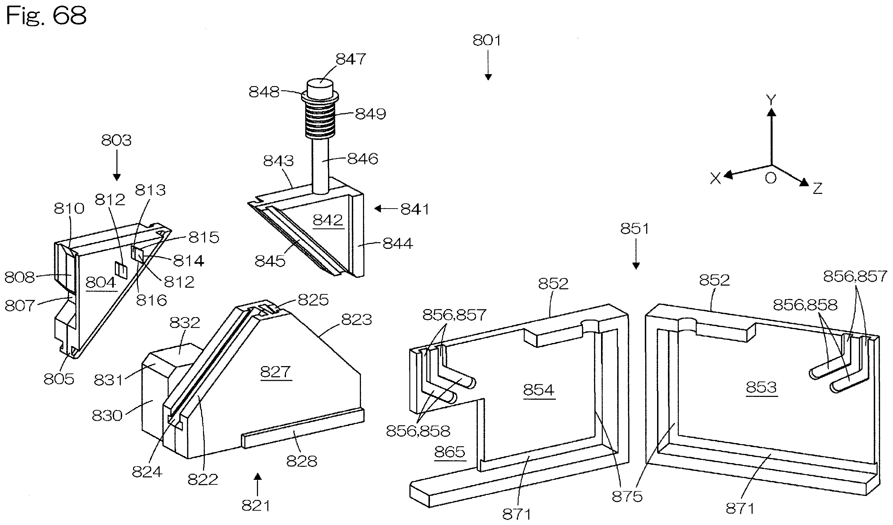

Fig. 65 is a cross-sectional view of a molding die 800 including a gate tearing mechanism 801 according to a sixteenth embodiment of the present invention in a mold closed state. Fig. 66 is a cross-sectional view of the molding die 800 including the gate tearing mechanism 801 according to the sixteenth embodiment of the present invention during a process of opening the mold, and Fig. 67 is a cross-sectional view of the molding die 800 when the mold is opened. Fig. 68 is an exploded view showing features of the gate tearing mechanism 801 according to the sixteenth embodiment of the present invention. Features corresponding to the features of the molding die 200 and the gate cutting mechanism 201 according to the fourth embodiment of the present invention as shown in Fig. 11 to Fig. 16 are denoted with like reference numerals, and description thereof is omitted.

As with the molding die 200, the molding die 800 includes: a fixed die 602 which molds an external surface of a molded product P; a movable die 702 which molds an internal surface of the molded product P; and further a gate tearing mechanism 801 which tears a gate G. For the sake of convenience, in the following description, the "upper" side means the side of the fixed die 602 in Fig. 65, and the "lower" side means the side of the movable die 702 in Fig. 65. In the following description, the "left" side corresponds to the left side in Fig. 65, and the "right" side means the opposite side, unless otherwise specifically noted.

The fixed die 602 includes a fixed mold plate 605 and a receiving body 607 including a cavity 606 for shaping the outer surface of the molded product P. The fixed mold plate 605 includes, in a bottom face 610 thereof, a recessed part 612 which receives a spring 849 which maintains a position of a driving piece 841 as described later. The receiving body 607 has a toppled L shape in a front view and includes a lower right end which extends downward (i.e., in the -Y direction) and partly defines a runner groove which shapes a runner R.

The movable die 702 includes: a movable mold plate 711; a receiving body 721 including a core which shapes the inner surface of the molded product P; and a movable receiving plate 718. The movable mold plate 711 includes a recessed part 728 which has a substantially rectangular shape in a front view and is configured to receive components of the gate tearing mechanism 801 such as a holder 851 (see Fig. 66).

The gate tearing mechanism 801 is operable to tear a gate G connecting a molded product P to a runner R and is configured to tear the gate G by a tearing piece in conjunction with opening of the molding die 800 and thereafter to move the tearing piece away from the gate G and the runner R so as to allow a material left in the runner R to be removed. The gate tearing mechanism 801 of the present embodiment employs the sliding mechanism 1 of the first embodiment.

The gate tearing mechanism 801 includes: a tearing piece 803 which tears a gate G; a retaining piece 821 which is slidably coupled to the tearing piece 803 to slide the tearing piece 803; a driving piece 841 which is slidably coupled to the retaining piece 821 to slide the retaining piece 821; and a holder 851 which houses the retaining piece 821 and the like in an advanceable and retractable manner.

The tearing piece 803 of the present embodiment corresponds to the second piece 21 of the sliding mechanism 1 of the first embodiment; the retaining piece 821 corresponds to the first piece 11; and the holder 851 corresponds to the guiding body 31. In the present embodiment, the tearing piece 803 corresponds to a slider, and the holder 851 corresponds to a guide body. As described later, a guiding groove 856 corresponds to a guide unit; a first guiding part 857 corresponds to a first guide unit; and a second guiding part 858 corresponds to a second guide unit. A click 812 corresponds to an engagement unit; a first sliding surface of the click 812 corresponds to a first engagement unit; and a second sliding surface of the click 812 corresponds to a second engagement unit. The retaining piece 821 and the tearing piece 803 are slidably coupled together through a dovetail groove structure. The retaining piece 821 corresponds to a coupling member, and a guiding groove 871 of the holder 851 corresponds to a coupling member guide unit.

The holder 851 houses the retaining piece 821 in an advanceable and retractable manner and guides the retaining piece 821 laterally (in the +X direction and the -X direction). Further, the holder 851 guides the retaining piece 803 such that the tearing piece 803 tears the gate G, and the tearing piece 803 after tearing the gate G is moved away from the gate G and the runner R. The holder 851 includes two half holder members 852 of a substantially same shape which are assembled together so as to have a box-like column shape which defines an inner space therein and is open on a left side face and a left part of an upper face of the holder 851 with respect to the center. The holder 851 may be constituted by a plurality of divided members or be integrated with the movable mold plate 711.

As with the holder 221 of the fourth embodiment, the holder 851 guides the tearing piece 803 in the first direction and subsequently in the second direction. The opening on the left side face of the holder 851 allows the tearing piece 803 and the retaining piece 821 to move in and out. The half holder member 852 constituting a back face side of the holder 851 includes a recessed part 865 which opens on the left side face of the holder 851. The recessed part 865 is a space which receives a block member 830 attached to the retaining piece 821. The holder 851 includes, in a right part of the upper face thereof, an insertion hole through which a support pin 846 coupled to the driving piece 841 is inserted.

The holder 851 includes guiding grooves 856 which guide the tearing piece 803 on a front-face-wall inner surface 853 and a back-face-wall inner surface 854 of the holder 851. The holder 851 also includes guiding grooves 871 which guide the retaining piece 821 and guiding grooves 875 which guide the driving piece 841 on the front-face-wall inner surface 853 and the back-face-wall inner surface 854.

The guiding grooves 856 are recessed grooves located at upper left positions on the front-face-wall inner surface 853 and the back-face-wall inner surface 854, each guiding grooves 856 having a dog-legged shape (see Fig. 68). There are two guiding grooves 856 arranged next to each other in the lateral direction in each half holder member. Each guiding groove 856 includes a first guiding part 857 which guides the tearing piece 803 in the first direction and a second guiding part 858 which guides the tearing piece 803 in the second direction. The first guiding part 857 extends in the vertical direction (i.e., Y direction), and the second guiding part 858 is inclined diagonally downward to the right such that a lower part of the second guiding part 858 is located on the right side. The first guiding part 857 and the second guiding part 858 are connected to each other, and a center axis of the first guiding part 857 and a center axis of the second guiding part 858 intersect with each other (see Fig. 68).

The first guiding part 857 guides the tearing piece 803 such that the tearing piece 803 tears the gate G in conjunction with mold opening. On the other hand, the second guiding part 858 guides the tearing piece 803 such that the tearing piece 803 after tearing the gate G is moved away from the gate G and the runner R in conjunction with mold opening.

The guiding grooves 871 are recessed grooves located at lower ends of the front-face-wall inner surface 853 and the back-face-wall inner surface 854 and extend in a horizontal direction (i.e., X direction) (see Fig. 68). The guiding grooves 871 slidably receive protruding lines 828 of the retaining piece 821 and guide the retaining piece 821 in the horizontal direction (i.e., X direction) in conjunction with mold opening.

The guiding grooves 875 are recessed grooves located at right ends of the front-face-wall inner surface 853 and the back-face-wall inner surface 854 and extend in the vertical direction (i.e., Y direction) (see Fig. 68). The guiding grooves 875 slidably receive the protruding lines 844 of the driving piece 841 and guide the driving piece 841 in the vertical direction (i.e., Y direction) in conjunction with mold opening.

The tearing piece 803 is configured to tear a gate G and is a substantially triangular body which is shaped, in a front view, as an upper half of a cuboid member cut along a diagonal thereof with a lower half removed and includes a bottom face inclined diagonally upward to the right. The tearing piece 803 includes a protruding line (dovetail-groove protruding line) 805 on a bottom face thereof. The protruding line 805 slidably comes into engagement with a dovetail groove 824 on a left inclined surface 822 of the sliding piece 821.

The tearing piece 803 includes a first groove part 807 located at a middle position on a left side face of the tearing piece 803 and a second groove part 808 located above the first groove part 807 and communicated with the first groove part 807. The first groove part 807 and the second groove part 808 serve as runner grooves which shape a runner R. The first groove part 807 has a trapezoidal shape, and a back face wall of the tearing piece 803 includes a trapezoidal cutout so as to connect to the first groove part 807. On the other hand, there is no cutout on a front face wall 804 of the tearing piece 803, and a part of the front face wall 804 located at the first groove part 807 serves as a flashboard.

The second groove part 808 is most recessed at the middle and includes inclined surfaces so as to expand toward the upper face, front face and back face of the tearing piece 803. The upper face connected to the second groove part 808 includes a slight cutout so as to define a recess 810. The recess 810 shapes the gate G.

The tearing piece 803 includes clicks 812 to be fitted the guiding grooves 856 of the holder 851. The clicks 812 are located on upper parts of the front face wall 804 and the back face wall in a protruding manner. Therefore, the clicks 812 may be considered as protruding lines. The clicks 812 are adapted to the guiding grooves 856 of the holder 851, and there are two such clicks 812 on each of the front face wall 804 and the back face wall. Although there may be a single pair of such a click 812 and a guiding groove 856, provision of two pairs of the clicks 812 and the guiding grooves 856 makes it possible to move the tearing piece 803 more reliably and more precisely, further to distribute a force applied to the clicks 812 and to prevent rotation of the tearing piece 803.

Left side faces 813 and right side faces 814 of the clicks 812 serve as first sliding surfaces which come into contact with left side surfaces and right side surfaces of the first guiding parts 857 of the holder 851, respectively. Upper side faces 815 and lower side faces 816 of the clicks 812 serve as second sliding surfaces which come into contact with upper side surfaces and lower side surfaces of the second guiding parts 858 of the holder 851, respectively, in order to move the tearing piece 803 after tearing the gate G away from the gate G and the runner R.

The retaining piece 821 is configured to move the tearing piece 803 to tear the gate G and has a substantially trapezoidal shape in a front view. The retaining piece 821 includes a left side face 822 and a right side face 823 formed as inclined surfaces. The left inclined surface 822 includes a dovetail groove 824 which slidably receives the protruding line (dovetail-groove protruding line) 805 of the tearing piece 803, and the right inclined surface 823 includes a dovetail groove 825 which slidably receives a protruding line (dovetail-groove protruding line) 845 of the driving piece 841. The retaining piece 821 also includes, at lower ends of a front face wall 827 and a back face wall thereof, protruding lines 828 which are slidably fitted into the guiding grooves 871 of the holder 851.

The retaining piece 821 includes a block member 830 on the back face side of the retaining piece 821. The block member 830 has a rectangular shape having a height about half the height of the retaining piece 821 and includes an inclined surface 831 at a front upper part thereof. When the mold is clamped (closed), the inclined surface 831 connects to the first groove part 807 of the tearing piece 803 to define a part of the runner groove.

The driving piece 841 is configured to move the retaining piece 821 such that the tearing piece 803 tears the gate G and is a triangular body which is shaped, in a front view, as an upper half of a cuboid member cut along a diagonal thereof with a lower half removed and includes a bottom face inclined diagonally upward to the left. The driving piece 841 includes protruding lines 844 which extend in the vertical direction (i.e., Y direction) at right ends of a front face wall 842 and a back face wall 843 of the driving piece 841 and are slidably fitted into the guiding grooves 875 of the holder. The driving piece 841 also includes, on the left inclined surface, a protruding line (dovetail-groove protruding line) 845 which slidably engages with the dovetail groove 825 on the right inclined surface 823 of the sliding piece 821.

A support pin 846 extending upward (i.e., in the Y direction) is attached to an upper face of the driving piece 841. The support pin 846 has a flange 848 at an upper part thereof, and a spring 849 is fitted between the upper face of the driving piece 841 and the flange 848 with the support pin 846 inserted through the spring 849.

The gate tearing mechanism 801 having the above constitution is incorporated into the holder 851 such that the protruding line 805 of the tearing piece 803 is fitted into the dovetail groove 824 of the retaining piece 821, the protruding line 845 of the driving piece 841 is fitted into the dovetail groove 825 of the retaining piece 821, and the support pin 846 protrudes from the holder 851. In this state, the clicks 812 of the tearing piece 803 are fitted into the guiding grooves 856 of the holder 851, the protruding lines 828 of the retaining piece 821 are fitted into the guiding grooves 871 of the holder 851, and the protruding lines 844 of the driving piece 841 are fitted into the guiding grooves 875 of the holder 851. The gate tearing mechanism 801 incorporating the respective pieces is fitted into the recessed part 728 of the movable mold plate 711, and the holder 851 is fixed to the movable mold plate 711.

An operation and effects of the molding die 800 and the gate tearing mechanism 801 of the present embodiment will be described with reference to an exemplary case where a molded product P is molded by injection molding in the molding die 800.

When the mold is closed, the tearing piece 803 is located at a leftmost position (in the X direction), and the left side face of the tearing piece 803 is in contact with the receiving body 721. The lower right end of the receiving body 607 is in contact with the upper face 832 of the block member 830. These parts shape a runner R and a gate G. When the mold is closed, the retaining piece 821 is located at a leftmost position (in the X direction). When the mold is closed, an upper end 847 of the support pin 846 is in contact with the bottom face 613 of the recessed part 612, and the driving piece 841 is a lowermost position. Also, the spring 849 is in a most compressed state with the support pin 846 inserted therethrough (see Fig. 65).

When the mold is closed, parting faces (PL faces) of the fixed die 602 and the movable die 702 are fitted together to define a cavity part. Then, a molten resin is injected from a non-illustrated injection device, and the resin passes through a sprue (not illustrated), then through the runner R and the gate G and fills in the cavity part. After a pressure holding step and a cooling step, the mold is opened, and a molded product P is taken out. The processes of opening the mold and taking out the molded product P are performed according to the following procedure.

Once the movable die 702 retracts and the mold starts to open, the holder 851 of the gate tearing mechanism 801 descends in the -Y direction integrally with the movable die 702. On the other hand, the driving piece 841 slidably fitted into the holder 851 remains at the same position as the position when the mold is closed because the spring 849 acts so as to push up the flange 848. For this reason, when the mold starts to open, the driving piece 841 ascends relative to the holder 851 (see Fig. 66).

When the driving piece 841 ascends relative to the holder 851, the retaining piece 821 engaged with the driving piece 841 is guided by the guiding grooves 871 to move to the right (i.e., in the -X direction). Further, when the retaining piece 821 moves to the right (i.e., in the -X direction), the tearing piece 803 engaged with the retaining piece 821 is guided by the first guiding parts 857 of the guiding grooves 856 to move in the -Y direction (see Fig. 66). Thus, the gate G is torn, and further the resin in the runner R is pulled back.

When the tearing piece 803 descends to tear the gate G, the block member 830 moves rightward (i.e., in the -X direction), so that a space is created between the block member 830 and the receiving body 721. Further, a space is also created between the upper face 832 of the block member 830 and the bottom face of the receiving body 607. Therefore, the resin in the runner R which is pulled back as the gate G is torn can be withdrawn to the space. Thus, it is possible to prevent breakage of the resin in the runner R and simplify the recovery mechanism for the resin.

After the tearing piece 803 tears the gate G in conjunction with mold opening, as the gap further increases between the fixed die 602 and the movable die 702, the tearing piece 803 moves along the second guiding parts 858, while the second sliding surfaces slides in the second guiding parts 858 of the guiding grooves 856. Thus, the tearing piece 803 moves in the -X direction so as to secure a necessary space to remove the resin which is torn and left in the runner R (see Fig. 67). Then, a non-illustrated ejector mount plate moves up, and the molded product P and the resin left in the runner R are ejected by the ejector pin.

As described above, the molding die 800 and the gate tearing mechanism 801 can achieve compact and simple configurations and can operate such that the gate G can be torn easily and reliably prior to taking out the molded product P. In addition, the tearing piece 803 after tearing the gate G is moved away from the gate G and the runner R in conjunction with mold opening, so that the molded product P and the material left in the runner R can be easily removed. In particular, the gate tearing mechanism 801 can tear the gate G without breaking the material in the runner R, and therefore, the mechanism for removing the material left in the runner R is simplified.

Further, the gate tearing mechanism 801 can be incorporated into the molding die 800 with the tearing piece 803, the retaining piece 821, and the driving piece 841 housed in the holder 851, and therefore, the gate tearing mechanism 801 can have a compact configuration and be easily attached to the molding die 800. In particular, the holder 851, the tearing piece 803, the retaining piece 821, and the driving piece 841 can be assembled into a single independent unit; the gate cutting mechanism 801 as a single unit can be more easily attached to the molding die 800.

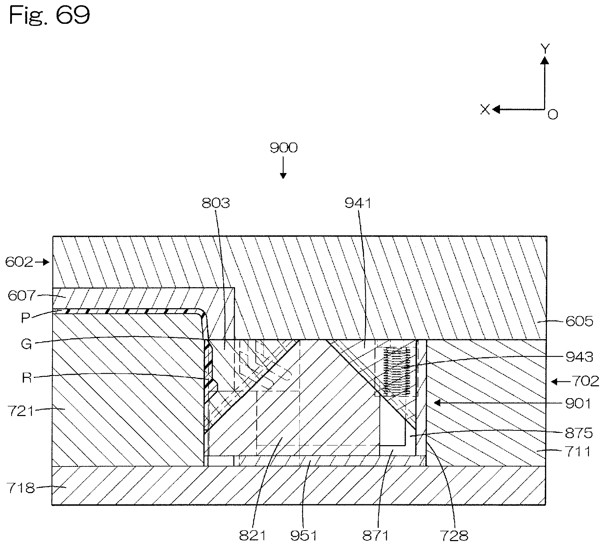

Fig. 69 is a cross-sectional view of a molding die 900 including a gate tearing mechanism 901 according to a seventeenth embodiment of the present invention in a mold closed state. Features corresponding to the features of the molding die 800 and the gate tearing mechanism 801 according to the sixteenth embodiment of the present invention as shown in Fig. 65 to Fig. 68 are denoted with like reference numerals, and description thereof is omitted. The following description will mainly focus on differences from the molding die 800 and the gate tearing mechanism 801 of the sixteenth embodiment of the present invention. For the sake of convenience, in the following description, the "upper" side means the side of the fixed die 602 in Fig. 69, and the "lower" side means the side of the movable die 702 in Fig. 69. In the following description, the "left" side corresponds to the left side in Fig. 69, and the "right" side means the opposite side, unless otherwise specifically noted.

The configuration and operation of the molding die 900 of the seventeenth embodiment are essentially the same as those of the molding die 800 of the sixteenth embodiment. The gate tearing mechanism 901 of the seventeenth embodiment also has a same basic configuration as that of the gate tearing mechanism 801 of the sixteenth embodiment. However, in the gate tearing mechanism 901, the configuration of a driving piece 941 which slides a retaining piece 821 is different from that of the driving piece 841. In association therewith, the configuration of a holder 951 which houses the retaining piece 821 in an advanceable and retractable manner is partly different from that of the holder 851.

As with the gate tearing mechanism 801 of the sixteenth embodiment, the gate tearing mechanism 901 is configured to tear a gate G by a tearing piece 803 in conjunction with opening the molding die 900 and then to move the tearing piece 803 away from the gate G and a runner R so as to allow a material left in the runner R to be removed. The gate tearing mechanism 901 of the present embodiment also employs the sliding mechanism 1 of the first embodiment. The tearing piece 803 and the retaining piece 821 are identical to those of the sixteenth embodiment.

The driving piece 841 of the sixteenth embodiment maintains its own position when the mold is opened, using the support pin 846 attached to the upper part of the driving piece 841 and the spring 849 which is inserted by the support pin 846, whereas the driving piece 941 includes a plate member extending in the Z direction on an upper face thereof and maintains its own position using a spring 943 disposed below the plate member. The configuration of the driving piece 941 is otherwise the same as that of the driving piece 841.

The holder 951 has substantially the same configuration as that of the holder 851 of the sixteenth embodiment, except that an entire upper face of the holder 951 is open, unlike the holder 851. In addition, the holder 951 includes a recessed part which receives the plate member of the driving piece 941 at an upper right end on a front face wall thereof and, similarly, a recessed part which receives the plate member of the driving piece 941 at an upper right end on a back face wall thereof. The configuration of the holder 951 is otherwise the same as that of the holder 851.

The gate tearing mechanism 901 having the above constitution is arranged such that the protruding line 805 of the tearing piece 803 is fitted into the dovetail groove 824 of the retaining piece 821, and the protruding line 845 of the driving piece 941 is fitted into the dovetail groove 824 of the retaining piece 821. The clicks 812 of the tearing piece 803 are fitted into the guiding grooves 856 of the holder 951, the protruding lines 828 of the retaining piece 821 are fitted into the guiding grooves 871 of the holder 951, and the protruding lines 844 of the driving piece 941 are fitted into the guiding grooves 875 of the holder 951 (see Fig. 65 to Fig. 68). The gate tearing mechanism 901 incorporating the respective pieces is fitted into the recessed part 728 of the movable mold plate 711, and the holder 951 is fixed to the movable mold plate 711.

An operation and effects of the molding die 900 and the gate tearing mechanism 901 of the seventeenth embodiment will be described with reference to an exemplary case where a molded product P is molded by injection molding in the molding die 900. Since the operation and effects of the molding die 900 and the gate tearing mechanism 901 of the seventeenth embodiment are essentially the same as those of the molding die 800 and the gate tearing mechanism 801 of the sixteenth embodiment, only important points will be described with reference to Fig. 65 to Fig. 68.

When the mold is closed, the tearing piece 803 is located at a leftmost position (in the X direction), and the left side face of the tearing piece 803 is in contact with the receiving body 721. Also, the lower right end of the receiving body 607 is in contact with the upper face 832 of the block member 830. These parts shape a runner R and a gate G. When the mold is closed, the retaining piece 821 is located at a leftmost position (in the X direction). When the mold is closed, the driving piece 941 is arranged such that a ceiling face of the plate member is in contact with the bottom face 610 of the fixed mold plate 605, and the spring 943 is in a most compressed state (see Fig. 69). When the mold is opened, the spring 943 acts so as to push up the plate member of the driving piece 941 slidably fitted into the holder 951. Accordingly, even when the mold starts to open, the driving piece 941 maintains the same position as before mold opening and thus moves upward relative to the holder 951.

The processes of molding a molded product P, tearing a gate G, and taking out the molded product P and a resin left in a runner R are performed in the same manner as those in the molding die 800 and the gate tearing mechanism 801 of the sixteenth embodiment.

The molding die 900 and the gate tearing mechanism 901 have essentially the same effects, advantages and characteristics as those of the molding die 800 and the gate tearing mechanism 801. However, the gate tearing mechanism 901 has an advantage that processing to the fixed die 602 is not particularly necessary when incorporating the fixed die 602 into the molding die 900.

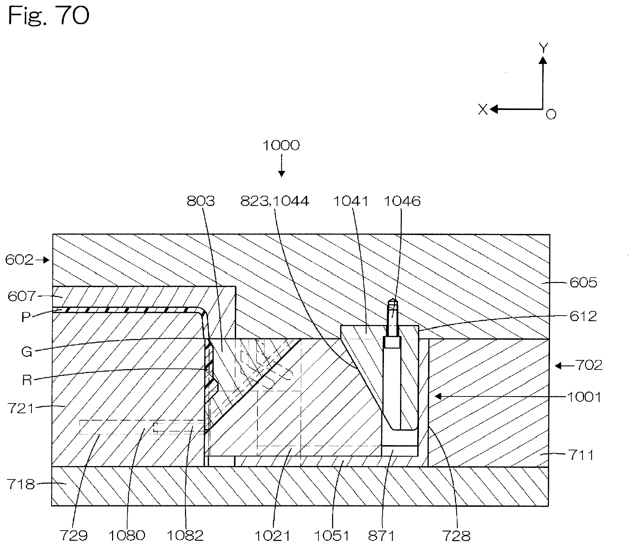

Fig. 70 is a cross-sectional view of a molding die 1000 including a gate tearing mechanism 1001 according to an eighteenth embodiment of the present invention in a mold closed state. Features corresponding to the features of the molding die 800 and the gate tearing mechanism 801 according to the sixteenth embodiment of the present invention as shown in Fig. 65 to Fig. 68 as well as the molding die 900 and the gate tearing mechanism 901 according to the seventeenth embodiment of the present invention as shown in Fig. 69 are denoted with like reference numerals, and description thereof is omitted. The following description will mainly focus on differences from the molding dies 800, 900 and the gate tearing mechanisms 801, 901 of the sixteenth and seventeenth embodiments of the present invention. For the sake of convenience, in the following description, the "upper" side means the side of the fixed die 602 in Fig. 70, and the "lower" side means the side of the movable die 702 in Fig. 70. In the following description, the "left" side corresponds to the left side in Fig. 70, and the "right" side means the opposite side, unless otherwise specifically noted.

The molding die 1000 of the eighteenth embodiment has essentially the same configuration and operation as those of the molding die 800 of the sixteenth embodiment. The gate tearing mechanism 1001 of the eighteenth embodiment also has a same basic configuration as that of the gate tearing mechanism 801 of the sixteenth embodiment but differs from the gate tearing mechanism 801 in terms of a driving unit which slides a retaining piece 1021. In association therewith, the configurations of the retaining piece 1021 and a holder 1051 are partly different from those of the retaining piece 821 and the holder 851.

As with the gate tearing mechanism 801 of the sixteenth embodiment, the gate tearing mechanism 1001 is configured to tear a gate G by a tearing piece 803 in conjunction with opening the molding die 1000 and then to move the tearing piece 803 away from the gate G and a runner R so as to allow a material left in the runner R to be removed. The gate tearing mechanism 1001 of the present embodiment also employs the sliding mechanism 1 of the first embodiment. The tearing piece 803 is identical to that of the sixteenth embodiment.

As with the retaining piece 821, the retaining piece 1021 is configured to slide the tearing piece 803. Unlike the retaining piece 821, the retaining piece 1021 does not include a dovetail groove on a right inclined surface 823 thereof. The right inclined surface 823 of the retaining piece 1021 is slidably in contact with an inclined surface 1044 of a locking block 1041. The retaining piece 1021 has a same configuration as the retaining piece 821, except that there is no dovetail groove on the right inclined surface 823.

In the present embodiment, a driving unit which slides the retaining piece 1021 is a gas spring 1080. The gas spring 1080 is a known gas spring including a cylinder body and an expandable rod 1082 attached to the cylinder body. The gas spring 1080 is attached to a recessed part 729 in the receiving body 721 such that an advancing and retracting direction of the rod 1082 coincides with a sliding direction of the retaining piece 1021, and a tip end of the rod 1082 is in contact with a front face of the block member 830.

The locking block 1041 is slidably in contact with the retaining piece 1021 and is configured to position the retaining piece 1021 when the mold is closed and to restrict movement (slide) of the retaining piece 1021 when the mold is being opened. The locking block 1041 is a block-like member which is shaped by diagonally cutting a left part of a cuboid member off to shape a left side face of the locking block 1041 as an inclined surface 1044 inclined downward to the right. When the locking block 1041 is incorporated into the holder 1051, the inclined surface 1044 is slidably in contact with the right inclined surface 823 of the retaining piece 1021.

An upper part of the locking block 1041 is fitted into the recessed part 612 of the fixed mold plate 605, and the locking block 1041 is fixed to the fixed mold plate 605 by a fixing bolt 1046. When attached to the fixed mold plate 605, the locking block 1041 mostly projects downward.

The holder 1051 has a same configuration as the holder 951, except that the holder 1051 does not include the guiding grooves 875 and a recessed part for receiving a plate member.

The gate tearing mechanism 1001 having the above constitution is incorporated into the holder 1051 with the protruding line 805 of the tearing piece 803 fitted into the dovetail groove 824 of the retaining piece 1021. In this state, the clicks 812 of the tearing piece 803 are fitted into the guiding grooves 856 of the holder 1051, and the protruding lines 828 of the retaining piece 1021 are fitted into the guiding grooves 871 of the holder 1051 (see Fig. 65 to Fig. 68). With the tearing piece 803 and the retaining piece 1021 incorporated into the holder 1051, the gate tearing mechanism 1001 is fitted into the recessed part 728 of the movable mold plate 711, and the holder 1051 is fixed to the movable mold plate 711.

An operation and effects of the molding die 1000 and the gate tearing mechanism 1001 of the eighteenth embodiment will be described with reference to an exemplary case where a molded product P is molded by injection molding in the molding die 1000. Since the operation and effects of the molding die 1000 and the gate tearing mechanism 1001 of the eighteenth embodiment are essentially the same as those of the molding die 800 and the gate tearing mechanism 801 of the sixteenth embodiment, only important points will be described.

When the mold is closed, the tearing piece 803 is located at a leftmost position (in the X direction), and the left side face of the tearing piece 803 is in contact with the receiving body 721. Also, the lower right end of the receiving body 607 is in contact with the upper face 832 of the block member 830. These parts shape a runner R and a gate G. When the mold is closed, the retaining piece 1021 is in contact with the receiving body 721. The gas spring 1080 is arranged such that the tip end of the rod 1082 is in contact with the front face of the block member 830. As the mold is being opened, the movable die 702 descends to create a gap between the movable die 702 and the fixed die 602, and the retaining piece 1021 is pushed by the gas spring 1080 to move in the -X direction. In this state, the right inclined surface 823 of the retaining piece 1021 is slidably in contact with the inclined surface 1044 of the locking block 1041.

The processes of molding a molded product P, tearing a gate G, and taking out the molded product P and a resin left in a runner R are performed in the same manner as those in the molding die 800 and the gate tearing mechanism 801 of the sixteenth embodiment. The molding die 1000 and the gate tearing mechanism 1001 have essentially the same effects, advantages and characteristics as those of the molding die 800 and the gate tearing mechanism 801.

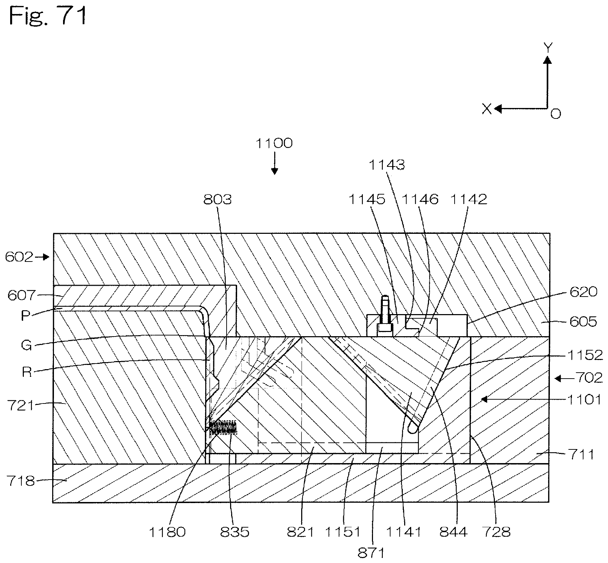

Fig. 71 is a cross-sectional view of a molding die 1100 including a gate tearing mechanism 1101 according to a nineteenth embodiment of the present invention in a mold closed state. Features corresponding to the features of the molding die 800 and the gate tearing mechanism 801 according to the sixteenth embodiment of the present invention as shown in Fig. 65 to Fig. 68 are denoted with like reference numerals, and description thereof is omitted. The following description will mainly focus on differences from the molding die 800 and the gate tearing mechanism 801 of the sixteenth embodiment of the present invention. For the sake of convenience, in the following description, the "upper" side means the side of the fixed die 602 in Fig. 71, and the "lower" side means the side of the movable die 702 in Fig. 71. In the following description, the "left" side corresponds to the left side in Fig. 71, and the "right" side means the opposite side, unless otherwise specifically noted.

The molding die 1100 of the nineteenth embodiment has essentially the same configuration and operation as those of the molding die 800 of the sixteenth embodiment. The gate tearing mechanism 1001 of the nineteenth embodiment also has a same basic configuration and a same operation as those of the gate tearing mechanism 801 of the sixteenth embodiment but differs from the driving piece 841 in terms of a driving piece 1141 which slides the retaining piece 821. In association therewith, the configuration of a holder 1151 partly differs from that of the holder 851.

As with the gate tearing mechanism 801 of the sixteenth embodiment, the gate tearing mechanism 1101 is configured to tear a gate G by a tearing piece 803 in conjunction with opening the molding die 1100 and then to move the tearing piece 803 away from the gate G and a runner R so as to allow a material left in the runner R to be removed. The gate tearing mechanism 1101 of the present embodiment also employs the sliding mechanism 1 of the first embodiment. The tearing piece 803 and the retaining piece 821 are identical to those of the sixteenth embodiment. The block member 830 also have a same basic configuration as that of the block member 830 of the sixteenth embodiment but additionally includes a recessed part 835 which houses a spring 1180 on a left side face of the block member 830.

As with the driving piece 841, the driving piece 1141 is configured to move the retaining piece 821 such that the tearing piece 803 tears a gate G. The driving piece 1141 has a triangular shape in a front view and includes, at right ends of a front face wall and a back face wall of the driving piece 1141, protruding lines 844 which are slidably fitted into guiding grooves of the holder 1151. Each protruding line 844 is arranged such that an upper part thereof is located rightward with respect to a lower part thereof in a front view. The driving piece 1141 also includes, on the left inclined surface thereof, a protruding line (dovetail-groove protruding line) which slidably come into engagement with the dovetail groove 825 on the right inclined surface 823 of the sliding piece 821.

The driving piece 1141 integrally includes a hook 1142 having a toppled L shape on an upper face of the driving piece 1141. The hook 1142 includes a base part connected to the upper face of the driving piece 1141 and a horizontal part connected to the base part and is arranged such that a tip end 1143 of the horizontal part is directed to the left.

The driving piece 1141 is locked to a locking hook 1145 attached to the fixed mold plate 605. The locking hook 1145 is a hook having a toppled L shape and is fixed to a recessed part 620 in the fixed mold plate 605. The locking hook 1145 is fixed to the recessed part 620 such that a tip end 1146 of a horizontal part thereof is directed to the right and the horizontal part is located lower than the base part (see Fig. 71). For this reason, there is a space above the horizontal part of the locking hook 1145.

When the mold is clamped, the driving piece 1141 is locked such that the horizontal part of the hook 1142 is placed on the horizontal part of the locking hook 1145. The recessed part 620 has a longer length (in the X direction) than a sum of lengths of the locking hook 1145 and the hook 1142. Therefore, when the driving piece 1141 locked to the locking hook 1145 is moved to the right (i.e., in the -X direction) to a maximum extent possible, the driving piece 1141 can be disengaged from the locking hook 1145 and also be moved out from the fixed mold plate 605.

The holder 1151 has a same basic configuration as that of the holder 851 but differs from the holder 851 in that the holder 1151 has an entirely open upper face. The guiding grooves 875 which slidably receive the protruding lines 844 of the driving piece 1141 are adapted to the protruding lines 844 of the driving piece 1141 and extend diagonally upward to the right in a front view. The holder 1151 also includes an inclined surface 1152 extending along the guiding grooves 875. The inclined surface 1152 is slidably in contact with the right inclined surface of the driving piece 1141. Except for the above points, the holder 1151 has a same configuration as the holder 851.

The spring 1180 pushes out the retaining piece 821 in the -X direction.

The gate tearing mechanism 1101 having the above constitution is incorporated into the holder 1151 with the protruding line 805 of the tearing piece 803 fitted into the dovetail groove 824 of the retaining piece 821, and the protruding line of the driving piece 1141 fitted into the dovetail groove 825 of the retaining piece 821. In this state, the clicks 812 of the tearing piece 803 are fitted into the guiding grooves 856 of the holder 1151; the protruding lines 828 of the retaining piece 821 are fitted into the guiding grooves 871 of the holder 1151; and the protruding lines 844 of the driving piece 1141 are fitted into the guiding grooves 875 of the holder 1151 (see Fig. 65 to Fig. 68). The gate tearing mechanism 1101 incorporating the respective pieces is fitted into the recessed part 728 of the movable mold plate 711, and the holder 1151 is fixed to the movable mold plate 711.

An operation and effects of the molding die 1100 and the gate tearing mechanism 1101 of the nineteenth embodiment will be described with reference to an exemplary case where a molded product P is molded by injection molding in the molding die 1100. Since the operation and effects of the molding die 1100 and the gate tearing mechanism 1101 of the nineteenth embodiment are essentially the same as those of the molding die 800 and the gate tearing mechanism 801 of the sixteenth embodiment, only important points will be described.

When the mold is closed, the tearing piece 803 is located at a leftmost position (in the X direction), and the left side face of the tearing piece 803 is in contact with the receiving body 721. Also, the lower right end of the receiving body 607 is in contact with the upper face 832 of the block member 830. These parts shape a runner R and a gate G. When the mold is closed, the hook 1142 of the driving piece 1141 is locked to the locking hook 1145. Since the hook 1142 is locked to the locking hook 1145, it is possible to drive the respective pieces with a larger force than a force of the spring 1180. The spring 1180 is in a compressed state, and a tip end of the spring 1180 is in contact with the receiving body 721.

As the mold is being opened, the movable die 702 descends to create a gap between the movable die 702 and the fixed die 602, and the driving piece 1141 moves upward relative to the holder 1151, so that the retaining piece 821 slidably engaged with the driving piece 1141 moves in the -X direction. Although the spring 1180 is expanded in association with mold opening, the spring 1180 continues to push the retaining piece 821 in the -X direction.

When the retaining piece 821 moves rightward (i.e., in the -X direction), the tearing piece 803 engaged with the retaining piece 821 is guided by the first guiding parts 857 of the guiding grooves 856 to move in the -Y direction. Thus, the gate G is torn, and further the resin in the runner R is pulled back. When the tearing piece 803 descends to tear the gate G, the block member 830 moves rightward (i.e., in the -X direction), so that a space is created between the block member 830 and the receiving body 721. Further, a space is also created between the upper face 832 of the block member 830 and the bottom face 613 of the receiving body 607. Therefore, the resin in the runner R which is pulled back as the gate G is torn can be withdrawn to the space.

After the tearing piece 803 tears the gate G in conjunction with mold opening, as the gap further increases between the fixed die 602 and the movable die 702, the tearing piece 803 moves along the second guiding parts 858, while the second sliding surfaces slide in the second guiding parts 858 of the guiding grooves 856. Thus, the tearing piece 803 moves in the -X direction so as to secure a necessary space to remove the resin which is torn and left in the runner R. Then, a non-illustrated ejector mount plate moves up, and the molded product P and the resin left in the runner R are ejected by the ejector pin.

Since the driving piece 1141 moves diagonally upward to the right along the guiding grooves 875 of the holder 1151, when the gap increases between the fixed die 602 and the movable die 702 in conjunction with mold opening, the hook 1142 is disengaged from the locking hook 1145. The driving piece 1141 disengaged from the locking hook 1145 moves integrally with the movable mold plate 711 through the holder 1151. Even when the driving piece 1141 is disengaged from the locking hook 1145, the respective pieces remain at same positions because the spring 1180 continuously pushes the retaining piece 821 in the-X direction.

The molding die 1100 and the gate tearing mechanism 1101 have essentially the same effects, advantages and characteristics as those of the molding die 800 and the gate tearing mechanism 801.

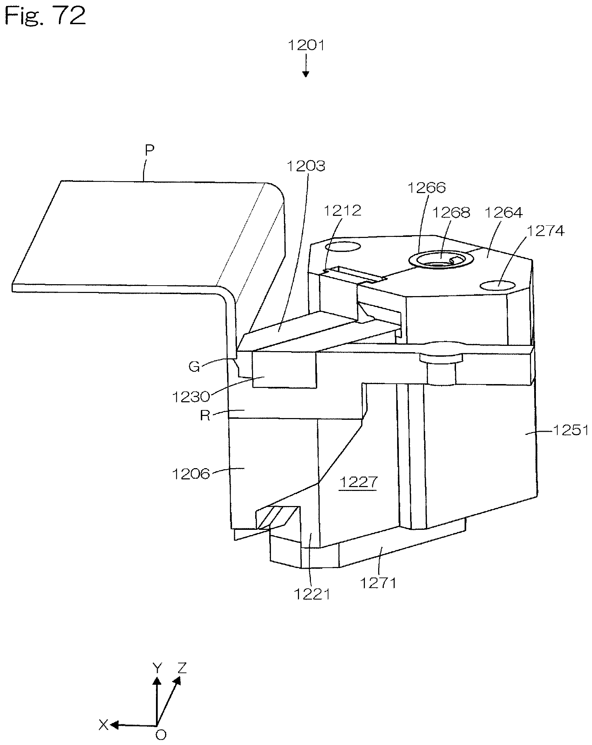

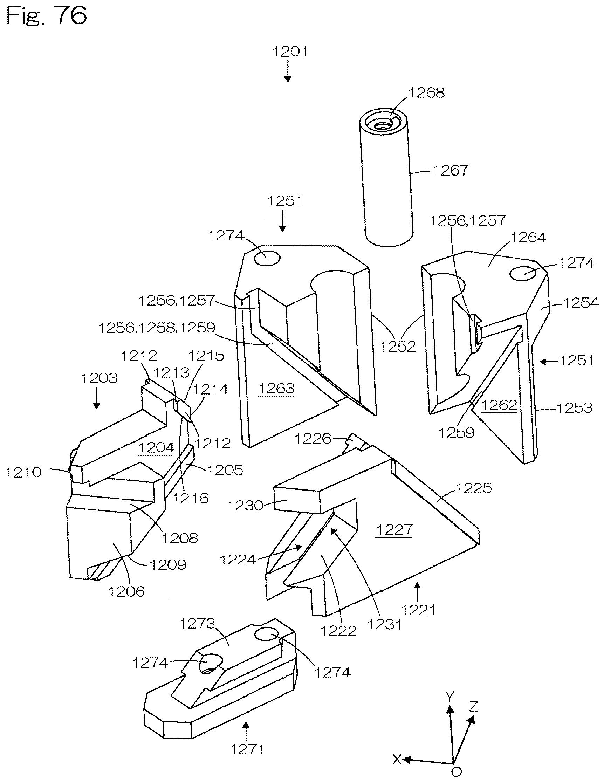

Fig. 72 to Fig. 75 are perspective views illustrating operations of a gate tearing mechanism 1201 according to a twentieth embodiment of the present invention. Fig. 76 is an exploded view showing features of the gate tearing mechanism 1201 according to the twentieth embodiment of the present invention. For the sake of convenience, in the following description, the "upper" side means the side of the molded product P in Fig. 72, and the "lower" side means the side of the guiding piece 1271 in Fig. 72. In the following description, the "left" side corresponds to the left side in Fig. 72, and the "right" side means the opposite side, unless otherwise specifically noted.

As with the gate tearing mechanism 801 according to the sixteenth embodiment of the present invention, the gate tearing mechanism 1201 according to the twentieth embodiment of the present invention is incorporated into and used in a molding die including a fixed die which molds an external surface of a molded product P and a movable die which molds an internal surface of the molded product P. Such a molding die which includes the fixed die and the movable die and is capable of being used with the gate tearing mechanism 1201 incorporated therein is not limited to a particular type.

As with the gate tearing mechanism 801, the gate tearing mechanism 1201 is operable to tear a gate G connecting a molded product P to a runner R and is configured to tear a gate G by a tearing piece 1203 in conjunction with opening the molding die and then to move the tearing piece 1203 away from the gate G and a runner R so as to allow a material left in the runner R to be removed. The gate tearing mechanism 1201 of the present embodiment also employs the sliding mechanism 1 of the first embodiment.

The gate tearing mechanism 1201 includes a tearing piece 1203 which tears a gate G; a retaining piece 1221 which is slidably engaged with the tearing piece 1203 to slide the tearing piece 1203; a holder 1251 which partially houses the tearing piece 1203 and the retaining piece 1221 and slides the retaining piece 1221; and a guiding piece 1271 which guides the retaining piece 1221 (see Fig. 76).

The tearing piece 1203 of the present embodiment corresponds to the second piece 21 of the sliding mechanism 1 of the first embodiment; the retaining piece 1221 corresponds to the first piece 11; and the holder 1251 corresponds to the guiding body 31. In the present embodiment, the tearing piece 1203 corresponds to a slider, and the holder 1251 corresponds to a guide body. As described later, a guiding groove 1256 corresponds to a guide unit; a first guiding part 1257 corresponds to a first guide unit; and a second guiding part 1258 corresponds to a second guide unit. A click 1212 corresponds to an engagement unit; a first sliding surface of the click 1212 corresponds to a first engagement unit; and a second sliding surface of the click 1212 correspond to a second engagement unit. The retaining piece 1221 and the tearing piece 1203 are slidably engaged with each other. The retaining piece 1221 corresponds to an engaging member, and the guiding piece 1271 corresponds to an engaging member guide unit.

The tearing piece 1203 is configured to shape a gate G and to tear the gate G. The tearing piece 1203 includes a protrusion 1210 which extends in the Z direction at an upper tip end of the tearing piece 1203 and is configured to shape the gate G. The protrusion 1210 is tapered toward a tip end thereof (in the X direction). The tip end of the tearing piece 1203 is located on a side on which the protrusion 1210 is located, which corresponds to the left side in Fig. 76. At an upper part opposite from the protrusion 1210, the tearing piece 1203 includes the clicks 1212 which are slidably fitted into the guiding grooves 1256 of the holder 1251. The clicks 1212 are located on upper parts of a front face wall 1204 and a back face wall of the tearing piece 1203 in a protruding manner. Therefore, the clicks 1212 may be considered as protruding lines.

A left side face 1213 and a right side face 1214 of each click 1212 serve as first sliding surfaces which come into contact with a left side surface and a right side surface of a corresponding first guiding part 1257 of the guiding grooves 1256 of the holder 1251, respectively. An upper side face 1215 and a lower side face 1216 of a click 1212 serve as second sliding surfaces which come into contact with an upper side surface and a lower side surface of a second guiding part 1258 of the guiding groove 1256 of the holder 1251 in order to move the tearing piece 1203 after tearing the gate G away from the gate G and the runner R.

The tearing piece 1203 includes a protruding portion 1206 extending in the -X direction below the protrusion 1210. The protruding portion 1206 includes, at an upper part thereof, an L-shaped recessed part 1208 which serves as a part of a runner groove which shapes the runner R. A bottom face of the protruding portion 1206 is an inclined surface 1209. The inclined surface 1209 inclines downward to the front and slidably comes into contact with an inclined surface 1222 of the retaining piece 1221. A bottom face of the tearing piece 1203 is an inclined surface which is inclined toward the front, and a protruding line 1205 is located at a lower end of the front face wall 1204 and extends along the bottom face. The protruding line 1205 is slidably fitted into a recessed groove of the retaining piece 1221.

The retaining piece 1221 is configured to move the tearing piece 1203 so as to tear the gate G. The retaining piece 1221 has an inclined surface 1222 as a left side face, and the inclined surface 1222 includes a recessed part 1224 which is shaped in a chased manner and slidably receives a lower part of the tearing piece 1203. The recessed part 1224 extends upward to the right and includes, on a side thereof, a recessed groove (not illustrated) which receives the protruding line 1205 of the tearing piece 1203. The inclined surface 1209 of the tearing piece 1203 slidably comes into contact with the inclined surface 1222.

The retaining piece 1221 also includes a protruding portion 1230 which protrudes frontward at an upper part of the front face wall 1227. The protruding portion 1230 and the inclined surface 1222 defines a recessed part 1231 which receives the protruding portion 1206 of the tearing piece 1203. The protruding portion 1230 is a closing part which closes an upper part of the recessed part 1208 of the protruding portion 1206 which is fitted into the recessed part 1231.

The retaining piece 1221 includes a right side face as an inclined surface which is inclined downward to the right, and includes protruding lines 1225, 1226 extending along the right side face on the front face wall 1227 and the back face wall of the retaining piece 1221. The protruding lines 1225, 1226 are slidably fitted into guiding grooves 1259 of the holder 1251. The retaining piece 1221 includes, at a bottom part thereof, a dovetail groove which slidably receives a protruding line (dovetail-groove protruding line) 1273 of the guiding piece 1271.

The guiding piece 1271 is slidably coupled to the retaining piece 1221 and guides the retaining piece 1221. The guiding piece 1271 is shaped by a flat plate-like member and a protruding line (dovetail-groove protruding line) 1273 located on an upper face of the flat plate-like member. When the gate tearing mechanism 1201 is incorporated into the molding die, the guiding piece 1271 is fixed to the movable die. The guiding piece 1271 of the present embodiment includes a bolt insertion hole 1274 for fixing the guiding piece 1271 to the movable die.

The holder 1251 partially houses the tearing piece 1203 and the retaining piece 1221 and guides the tearing piece 1203 such that the tearing piece 1203 tears the gate G and the tearing piece 1203 after tearing the gate G is moved away from the gate G and the runner R. The holder 1251 includes two half holder members 1252 of a substantially same shape which are assembled together. The holder 1251 may be constituted by a plurality of divided members or be integrated with the fixed die.

The holder 1251 includes a body 1253 having a substantially cuboid shape and a flange 1254 which is located at an upper part of the body 1253 and is integrated to the body 1253. The body 1253 is open on a left side face thereof and includes a housing part 1260 therein which partially houses the tearing piece 1203 and the retaining piece 1221. The housing part 1260 narrows down to the right (to the rear) and includes an inclined surface 1261 extending downward to the right thereinside. The second guiding part 1258 of the guiding groove 1256 and guiding grooves 1259 extend along the inclined surface 1261.

The holder 1251 includes the guiding grooves 1256 which guide the tearing piece 1203 at a center upper part and a back-face-wall inner surface 1263 of the holder 1251. The guiding groove 1256 located on the back-face-wall inner surface 1263 has a dog-legged shape and includes a first guiding part 1257 which guides the tearing piece 1203 in the first direction and a second guiding part 1258 which guides the tearing piece 1203 in the second direction. The first guiding part 1257 extends in the vertical direction (i.e., Y direction), and the second guiding part 1258 is inclined diagonally downward to the right such that a lower part thereof is located on the right. The first guiding part 1257 and the second guiding part 1258 are connected to each other, and a center axis of the first guiding part 1257 and a center axis of the second guiding part 1258 intersect with each other (see Fig. 76). On the other hand, the guiding groove 1256 located at the center upper part only includes a first guiding part 1257 which guides the tearing piece 1203 in the first direction

The first guiding parts 1257 guide the tearing piece 1203 such that the tearing piece 1203 tears the gate G in conjunction with mold opening. On the other hand, the second guiding part 1258 guides the tearing piece 1203 such that the tearing piece 1203 after tearing the gate G is moved away from the gate G and the runner R in conjunction with mold opening. The second guiding part 1258 of the guiding groove 1256 on the back-face-wall inner surface 1263 also serves as a guiding groove 1259 which slidably receives the protruding line 1226 of the retaining piece 1221. Another guiding groove 1259 which receives the protruding line 1225 of the retaining piece 1221 is located on a front-face-wall inner surface 1262 of the holder 1251. These two guiding grooves 1259 guide movement of the retaining piece 1221.

The holder 1251 also includes a stopper receiving hole 1266 which houses a stopper 1267 for preventing movement of the retaining piece 1221. The stopper receiving hole 1266 opens on the upper face 1264 and includes a lower end communicated with the housing part 1260. The flange 1254 includes a bolt insertion hole 1274 for fixing the holder 1251 to the fixed die.

The stopper 1267 is a bottomed cylindrical member which prevents movement of the retaining piece 1221 and includes a spring 1268 placed therein. The stopper 1267 is slidably inserted into the stopper receiving hole 1266 such that a lower end of the stopper 1267 projects into the housing part 1260. Once the retaining piece 1221 retracts, and a movement restricting part (not illustrated) on the retaining piece 1221 hits the stopper 1267, the movement is prevented.

The spring 1268 is placed in the stopper 1267 and presses the stopper 1267 downward (i.e., in the -Y direction) when the gate tearing mechanism 1201 is incorporated into the molding die.

An operation and effects of the gate tearing mechanism 1201 of the present embodiment will be described with reference to an exemplary case where a molded product P is molded by injection molding when the gate tearing mechanism 1201 is incorporated into a molding die similar to that as shown in Fig. 65 which includes the fixed die 602 and the movable die 702. Features corresponding to the features of the fixed die 602 and the movable die 702 as shown in Fig. 65 are denoted with like reference numerals, and description thereof is omitted.

The gate tearing mechanism 1201 is incorporated into the holder 1251 with the protruding line 1205 of the tearing piece 1203 fitted into the dovetail groove of the retaining piece 1221, and the protruding portion 1206 of the tearing piece 1203 fitted into the recessed part 1231 of the retaining piece 1221. In this state, the clicks 1212 of the tearing piece 1203 are fitted into the first guiding parts 1257 of the guiding grooves 1256 of the holder 1251, and the protruding line 1225 and the protruding line 1226 of the retaining piece 1221 are fitted into the guiding grooves 1259 of the holder 1251.

The holder 1251 is arranged such that the flange 1254 is fixed to the fixed mold plate 605, and when the mold is closed, the body 1253 of the holder 1251 is located in the recessed part 728 of the movable die 702. The guiding piece 1271 is fixed to the bottom face of the recessed part 728 of the movable die 702.

When the mold is closed, the tearing piece 1203 is at a position for shaping a gate G and a runner R. The retaining piece 1221 is also located next to the tearing piece 1203 to shape the runner R. At this point, the tearing piece 1203 and the retaining piece 1221 are projected to a maximum extent from the holder 1251 (see Fig. 72).

When the mold is closed, parting faces (PL faces) of the fixed die 602 and the movable die 702 are fitted together to define a cavity part. Then, a molten resin is injected from a non-illustrated injection device, and the resin passes through a sprue (not illustrated), then through the runner R and the gate G and fills in the cavity part. After a pressure holding step and a cooling step, the mold is opened, and a molded product P is taken out. The processes of opening the mold and taking out the molded product P are performed according to the following procedure.

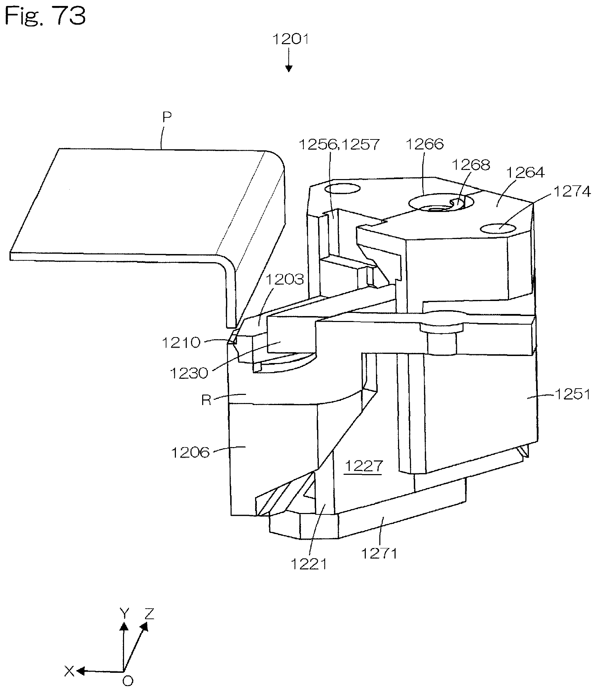

Once the movable die 702 retracts and the mold starts to open, the retaining piece 1221 slidably coupled to the guiding piece 1271 and the tearing piece 1203 slidably engaged with the retaining piece 1221 descend along with the movable die 702. On the other hand, the holder 1251 remains in the same position because it is fixed to the fixed die 602. Therefore, when the mold starts to open, the holder 1251 ascends relative to the tearing piece 1203 and the retaining piece 1221 (see Fig. 73).

At the same time, the clicks 1212 of the tearing piece 1203 are guided in the first guiding parts 1257 of the guiding grooves 1256 and move in the -Y direction with respect to the molded product P. Thus, the gate G is torn, and the resin in the runner R is pulled back. The protruding line 1225 of the retaining piece 1221 is guided by the second guiding part 1258 of the guiding groove 1256. At the same time, since the retaining piece 1221 is slidably engaged with the guiding piece 1271, the retaining piece 1221 retracts toward the side of the holder 1251 without changing its height position relative to the molded product P (see Fig. 73).

When the tearing piece 1203 descends to tear the gate G, if the retaining piece 1221 descends along with the tearing piece 1203, and the protruding portion 1230 pushes the runner R down, a shearing force would act on the resin in the runner R, resulting in breakage of the runner R. In the gate tearing mechanism 1201 of the present embodiment, however, when the tearing piece 1203 descends to tear the gate G, the retaining piece 1221 has retracted and is away from the runner R, so that only the tearing piece 1203 pushes the runner R down. When the tearing piece 1203 pushes down the runner R in such a state, the runner R deflects, so that it is possible to prevent breakage of the runner R (see Fig. 73).

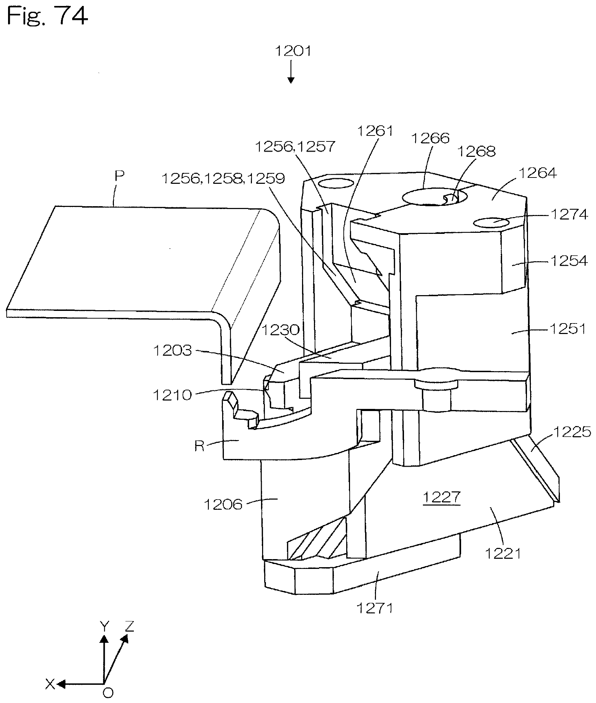

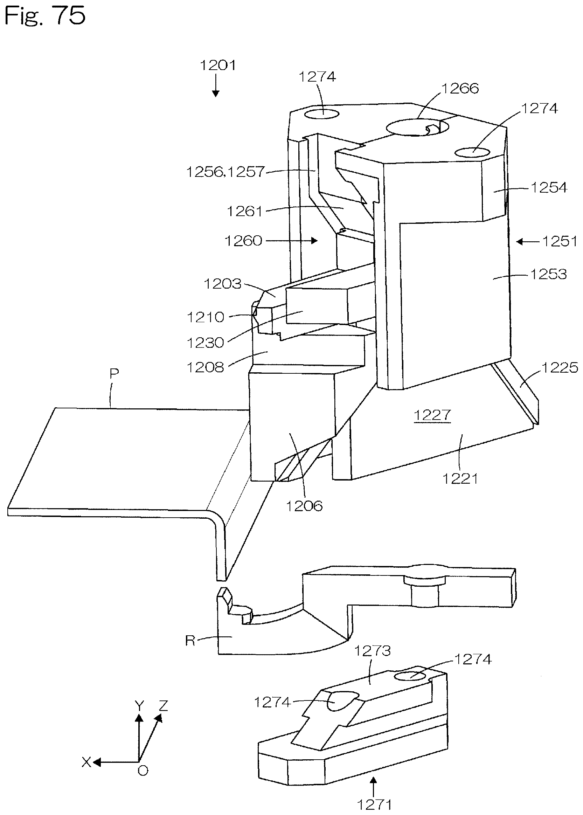

After the tearing piece 1203 tears the gate G in conjunction with mold opening, as the gap further increases between the fixed die 602 and the movable die 702, the tearing piece 1203 moves along the second guiding part 1258, while the second sliding surfaces of the click 1212 slide in the second guiding part 1258 of the guiding groove 1256. Thus, the tearing piece 1203 moves away from the runner R (see Fig. 74). When the movable die 702 descends further, the retaining piece 1221 is disengaged from the guiding piece 1271, and the retaining piece 1221 is connected to the holder 1251 together with the tearing piece 1203. Thus, a necessary space is secured to take out the molded product P and the resin which is torn and left in the runner R (see Fig. 75). Then, a non-illustrated ejector mount plate moves up, and the molded product P and the resin left in the runner R are ejected by the ejector pin.

As described above, the gate tearing mechanism 1201 can achieve a compact and simple configuration and can operate such that the gate G can be torn easily and reliably prior to taking out the molded product P. In addition, the tearing piece 1203 after tearing the gate G is moved away from the gate G and the runner R in conjunction with mold opening, so that the molded product P and the material left in the runner R can be easily removed. In particular, the gate tearing mechanism 1201 can tear the gate G without breaking the material in the runner R, and therefore, the mechanism for removing the material left in the runner R is simplified.

Further, the gate tearing mechanism 1201 can be incorporated into the molding die with the tearing piece 1203 and the retaining piece 1221 housed in the holder 1251, and therefore, the gate tearing mechanism 1201 can have a compact configuration and be easily attached to the molding die. In particular, the holder 1251, the tearing piece 1203, the retaining piece 1221, and the guiding piece 1271 can be assembled into a single independent unit; the gate cutting mechanism 1201 as a single unit can be more easily attached to the molding die.

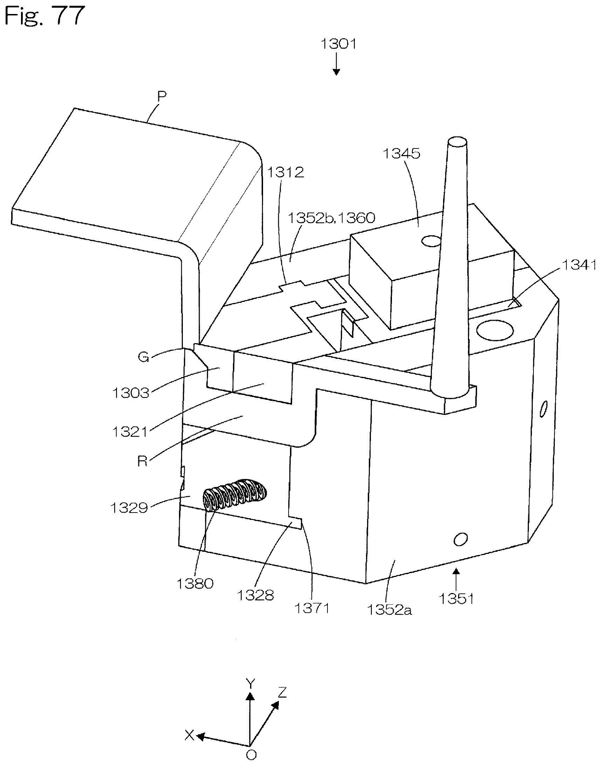

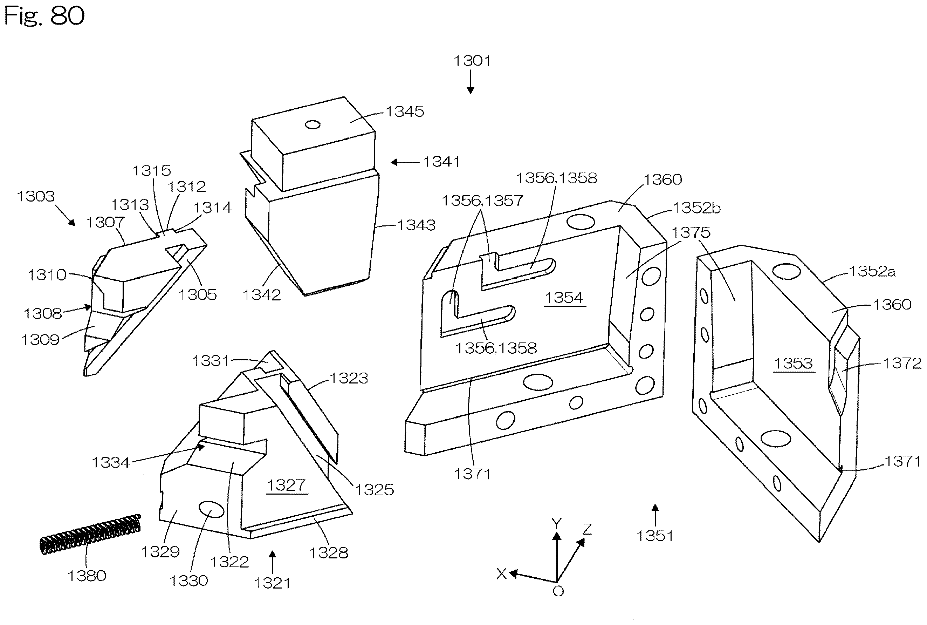

Fig. 77 to Fig. 79 are perspective views illustrating operations of a gate tearing mechanism 1301 according to a twenty-first embodiment of the present invention. Fig. 80 is an exploded view showing features of the gate tearing mechanism 1301 according to the twenty-first embodiment of the present invention. For the sake of convenience, in the following description, the "upper" side means the side of the molded product P in Fig. 77, and the "lower" side means the side of the spring 1380 in Fig. 77. In the following description, the "left" side corresponds to the left side in Fig. 77, and the "right" side means the opposite side, unless otherwise specifically noted.

As with the gate tearing mechanism 801 according to the sixteenth embodiment of the present invention, the gate tearing mechanism 1301 according to the twenty-first embodiment of the present invention is incorporated into and used in a molding die including a fixed die which molds an external surface of a molded product P and a movable die which molds an internal surface of the molded product P. Such a molding die which includes the fixed die and the movable die and is capable of being used with the gate tearing mechanism 1301 incorporated therein is not limited to a particular type.

As with the gate tearing mechanism 1201, the gate tearing mechanism 1301 is operable to tear a gate G connecting a molded product P to a runner R and is configured to tear a gate G by a tearing piece 1303 in conjunction with opening the molding die and then to move the tearing piece 1303 away from the gate G and a runner R so as to allow a material left in the runner R to be removed. The gate tearing mechanism 1301 of the present embodiment also employs the sliding mechanism 1 of the first embodiment.

The gate tearing mechanism 1301 includes a tearing piece 1303 which tears a gate G; a retaining piece 1321 which is slidably engaged with the tearing piece 1303 to slide the tearing piece 1303; a driving piece 1341 which is slidably engaged with the retaining piece 1321 to slide the retaining piece 1321; and a holder 1351 which houses the retaining piece 1321 and the like in an advanceable and retractable manner (see Fig. 80).

The tearing piece 1303 of the present embodiment corresponds to the second piece 21 of the sliding mechanism 1 of the first embodiment; the retaining piece 1321 corresponds to the first piece 11; and the holder 1351 corresponds to the guiding body 31. In the present embodiment, the tearing piece 1303 corresponds to a slider, and the holder 1351 corresponds to a guide body. As described later, a guiding groove 1356 corresponds to a guide unit; a first guiding part 1357 corresponds to a first guide unit; and a second guiding part 1358 corresponds to a second guide unit. A click 1312 corresponds to an engagement unit; a first sliding surface of the click 1312 corresponds to a first engagement unit; and a second sliding surface of the click 1312 corresponds to second engagement unit. The retaining piece 1321 and the tearing piece 1303 are slidably engaged with each other. The retaining piece 1321 corresponds to an engaging member, and a recessed groove 1371 of the holder 1351 corresponds to an engaging member guide unit.

The tearing piece 1303 is configured to shape a gate G and tearing the gate G. The tearing piece 1303 includes a protrusion 1310 which extends in the Z direction at an upper tip end of the tearing piece 1303 and is configured to shape the gate G. The protrusion 1310 is tapered toward a tip end thereof. The tip end of the tearing piece 1303 is located on a side on which the protrusion 1310 is located, which corresponds to the left side in Fig. 80. On a back face wall 1307 of the tearing piece 1303, there are two clicks 1312 which are slidably fitted into two guiding grooves 1356 in the holder 1351. The two clicks 1312 are located on the back face wall 1307 in a protruding manner. Therefore, the clicks 1312 may be considered as protruding lines. Although there may be a single pair of such a click 1312 and a guiding groove 1356, provision of two pairs of the clicks 1312 and the guiding grooves 1356 makes it possible to move the tearing piece 1303 more reliably and more precisely, further to distribute a force applied to the clicks 1312 and to prevent rotation of the tearing piece 1303.

Left side faces 1313 and right side faces 1314 of the clicks 1312 serve as first sliding surfaces which come into contact with left side surfaces and right side surfaces of the first guiding parts 1357 of the guiding grooves 1356 of the holder 1351. Upper side faces 1315 and lower side faces of the clicks 1312 serve as second sliding surfaces which come into contact with upper side surfaces and lower side surfaces of the second guiding parts 1358 of the guiding grooves 1356 of the holder 1351 in order to move the tearing piece 1303 after tearing the gate G away from the gate G and a runner R.

The tearing piece 1303 includes a recessed part 1308 extending in the X direction below the protrusion 1310. The recessed part 1308 includes a bottom face which is an inclined surface 1309 extending downward to the front. The tearing piece 1303 includes a bottom face which is an inclined surface inclined toward the front and a front face including a protruding line 1305 which is located at a lower end of the front face and extends along the bottom face (see Fig. 80). The protruding line 1305 is slidably fitted into a recessed groove 1331 of the retaining piece 1321.

The retaining piece 1321 is configured to move the tearing piece 1303 to tear the gate G. The retaining piece 1321 includes a recessed part 1334 on the front side (see Fig. 80). A bottom face of the recessed part 1334 is an inclined surface 1322 extending downward to the front. The recessed part 1344 is arranged such that when the tearing piece 1303 is incorporated into the retaining piece 1321, the recessed part 1344 is connected to the recessed part 1308 of the tearing piece 1303. The recessed part 1334 has a same size and a same shape as those of the recessed part 1308 of the tearing piece 1303 and is arranged such that when the tearing piece 1303 is incorporated into the retaining piece 1321, the inclined surface 1322 of the recessed part 1334 of the retaining piece 1321 is flush with the inclined surface 1309 of the recessed part 1308 of the tearing piece 1303. The recessed part 1308 and the recessed part 1334 serve as runner grooves.

The retaining piece 1321 includes, on back face wall thereof, a recessed groove 1331 which extends upward to the right and slidably receives the protruding line 1305 of the tearing piece 1303. The retaining piece 1321 includes a right side face 1323 as an inclined surface extending downward to the right and a recessed groove 1325 on a front face thereof. The recessed groove 1325 slidably receives a protruding line of the driving piece 1341. The retaining piece 1321 also includes, at lower parts of a front face wall 1327 and a back face wall thereof, protruding lines 1328 which are slidably fitted into recessed grooves 1371 of the holder 1351.

The retaining piece 1321 includes a spring receiving hole 1330 which is located on a front face 1329 below the inclined surface 1322 of the retaining piece 1321 and receives the spring 1380. The spring 1380 has one end in contact with the movable die and the other end in contact with a bottom face of the spring receiving hole 1330 and pushes the retaining piece 1321 toward the driving piece 1341.

The driving piece 1341 is configured to move the retaining piece 1321 such that the tearing piece 1303 tears the gate G. A left side face 1342 of the driving piece 1341 is an inclined surface, and the left side face 1342 is slidably in contact with a left side surface of the recessed groove 1325 of the retaining piece 1321. The driving piece 1341 also includes a protruding line which extends along the left side face 1342 and is slidably fitted into the recessed groove 1325 of the retaining piece 1321. A right side face 1343 of the driving piece 1341 is also slightly inclined, and the driving piece 1341 is tapered toward a bottom thereof in a front view.

The driving piece 1341 includes, on an upper face thereof, an attaching part 1345 for attaching the driving piece 1341 to the fixed die. With the attaching part 1345 fitted into a recessed part in the fixed mold plate, the driving piece 1341 is fixed thereto by a fixing screw or the like. When the driving piece 1341 is attached to the fixed mold plate, a lower part of the driving piece 1341 with respect to the attaching part 1345 projects from the fixed mold plate.

The holder 1351 houses the retaining piece 1321 in an advanceable and retractable manner. Further, the holder 1351 guides the tearing piece 1303 such that the tearing piece 1303 tears the gate G and the tearing piece 1303 after tearing the gate G is moved away from the gate G and the runner R. The holder 1351 includes two half holder members 1352a, 1352b which are assembled together so as to have a box-like column shape which defines an inner space therein with an open left side face and an open upper face. The holder 1351 may be constituted by a plurality of divided members or be integrated with the movable mold plate 711 (see Fig. 65).

The opening on the left side face of the holder 1351 allows the tearing piece 1303 and the retaining piece 1321 to move in and out. The opening on the upper face of the holder 1351 allows the driving piece 1341 to move in and out.

The holder 1351 includes, on a back-face-wall inner surface 1354 thereof, a guiding groove 1356 which guides the tearing piece 1303. The holder 1351 further includes, at lower parts of a front-face-wall inner surface 1353 and the back-face-wall inner surface 1354 thereof, guiding grooves (recessed grooves) 1371 which guide the retaining piece 1321. The holder 1351 includes a right inner wall surface 1375 which is an outwardly inclined surface extending upward. The right inner wall surface 1375 comes into contact with the right side face 1343 of the driving piece 1341.

Each guiding grooves 1356 is a recessed groove located at an upper left position on the back-face-wall inner surface 1354 and has a reversed L shape (see Fig. 80). There are two such guiding grooves 1356 arranged next to each other in the lateral direction. Each guiding groove 1356 includes a first guiding part 1357 which guides the tearing piece 1303 in the first direction and a second guiding part 1358 which guides the tearing piece 1303 in the second direction. The first guiding part 1357 extends in the vertical direction (i.e., Y direction), and the second guiding part 1358 extends in the horizontal direction (lateral direction) such that a far end thereof is located on the right side. The first guiding part 1357 and the second guiding part 1358 are connected to each other, and a center axis of the first guiding part 1357 and a center axis of the second guiding part 1358 intersect with each other (see Fig. 80).

The first guiding part 1356 guides the tearing piece 1303 such that the tearing piece 1303 tears the gate G in conjunction with mold opening. On the other hand, the second guiding part 1357 guides the tearing piece 1303 such that the tearing piece 1303 after tearing the gate G is moved away from the gate G and the runner R in conjunction with mold opening.

The guiding grooves 1371 are recessed grooves located at lower ends of the front-face-wall inner surface 1353 and the back-face-wall inner surface 1354 and extend in the horizontal direction (i.e., X direction) (see Fig. 80). The guiding grooves 1371 receive the protruding lines 1328 of the retaining piece 1321 and guide the retaining piece 1321 in the horizontal direction (i.e., lateral direction) in conjunction with mold opening.

The holder 1351 also includes, at a left tip end of the half holder member 1352a, a runner groove 1372 which defines a part of the runner R.

An operation and effects of the gate tearing mechanism 1301 of the present embodiment will be described with reference to an exemplary case where a molded product P is molded by injection molding when the gate tearing mechanism 1301 is incorporated into a molding die similar to that as shown in Fig. 65 which includes the fixed die 602 and the movable die 702. Features corresponding to the features of the of the fixed die 602 and the movable die 702 as shown in Fig. 65 are denoted with like reference numerals, and description thereof is omitted.

The gate tearing mechanism 1301 is incorporated into the holder 1351 with the protruding line 1305 of the tearing piece 1303 fitted into the recessed groove 1331 of the retaining piece 1321, and the protruding line of the driving piece 1341 fitted into the recessed groove 1325 of the retaining piece 1321. In this state, the clicks 1312 of the tearing piece 1303 are fitted into the first guiding parts 1357 of the guiding grooves 1356 of the holder 1351, and the protruding lines 1328 of the retaining piece 1321 are fitted into the guiding grooves 1371 of the holder 1351.

The holder 1351 is incorporated into and fixed to the recessed part 728 in the movable mold plate 711. When the holder 1351 is fixed to the movable mold plate 711, an upper face 1360 of the holder 1351 is flush with the upper face of the movable mold plate 711. The attaching part 1345 of the driving piece 1341 is incorporated into and fixed to the recessed part 612 in the fixed mold plate 605. When the driving piece 1341 is fixed to the fixed mold plate 605, the driving piece 1341 except for a fixing part 1345 thereof projects from the bottom face 610 of the fixed mold plate 605.

When the mold is closed, the tearing piece 1303 is located at a position where the tearing piece 1303 shapes the gate G and the runner R. The retaining piece 1321 is also located next to the tearing piece 1303 so as to shape the runner R (see Fig. 77). When the mold is closed, parting faces (PL faces) of the fixed die 602 and the movable die 702 are fitted together to define a cavity part. Then, a molten resin is injected from a non-illustrated injection device, and the resin passes through a sprue (not illustrated), then through the runner R and the gate G and fills in the cavity part. After a pressure holding step and a cooling step, the mold is opened, and a molded product P is taken out. The processes of opening the mold and taking out the molded product P are performed according to the following procedure.

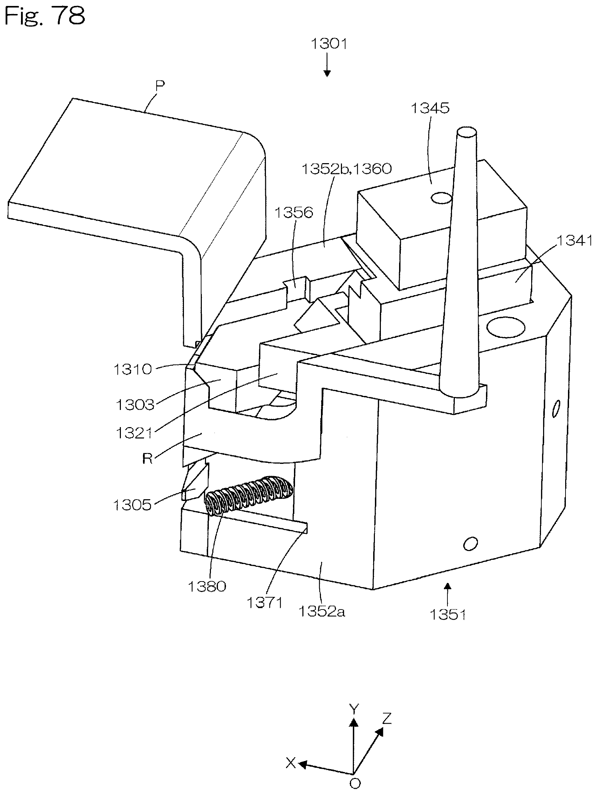

Once the movable die 702 retracts and the mold starts to open, the retaining piece 1321 as well as the tearing piece 1303 slidably engaged with the retaining piece 1321 in the holder 1351 descend along with the movable die 702. On the other hand, the driving piece 1341 remains in the same position because it is fixed to the fixed die 602. Therefore, when the mold starts to open, the driving piece 1341 ascends relative to the retaining piece 1321 (see Fig. 78).

Thus, the retaining piece 1321 is guided by the guiding grooves 1371 of the holder 1351 to retract. The tearing piece 1303 slidably engaged with the retaining piece 1321 moves in the -Y direction as the retaining piece 1321 retracts. More specifically, the clicks 1312 of the tearing piece 1303 are guided by the first guiding parts 1357 of the guiding grooves 1356 and move in the -Y direction with respect to the molded product P. Thus, the gate G is torn, and the resin in the runner R is pulled back (see Fig. 78).

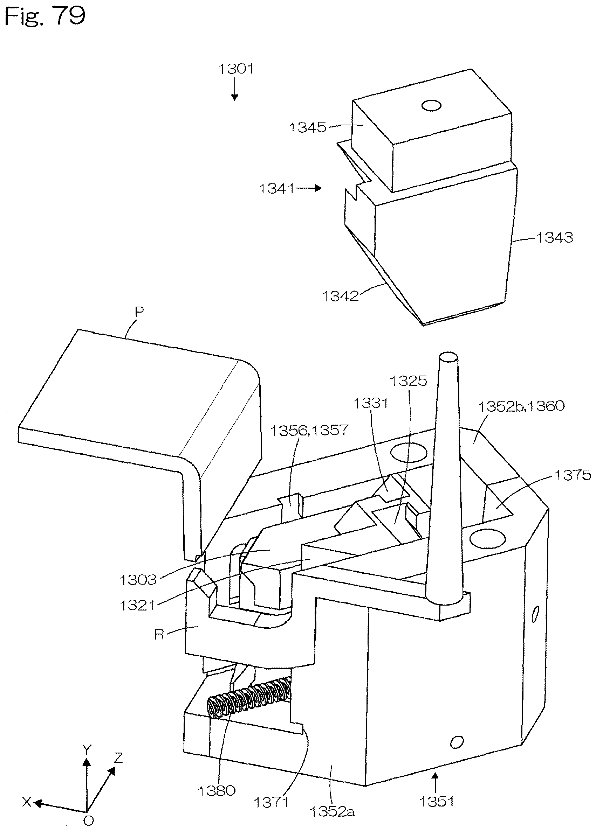

After the tearing piece 1303 tears the gate G in conjunction with mold opening, as the gap further increases between the fixed die 602 and the movable die 702, the tearing piece 1303 moves along the second guiding parts 1358, while the second sliding surfaces of the clicks 1312 slide in the second guiding parts 1358 of the guiding grooves 1356. Thus, the tearing piece 1303 moves away from the runner R. When the movable mold 702 descends further, a necessary space is secured to take out the molded product P and the resin which is torn and left in the runner R (see Fig. 79). Then, a non-illustrated ejector mount plate moves up, and the molded product P and the resin left in the runner R are ejected by the ejector pin. Even when the driving piece 1341 is disengaged from the retaining piece 1321, the retaining piece 1321 and the tearing piece 1302 remain at same positions because the spring 1380 pushes the retaining piece 1321.

As described above, the gate tearing mechanism 1301 can achieve a compact and simple configuration and can operate such that the gate G can be torn easily and reliably prior to taking out the molded product P. In addition, the tearing piece 1303 after tearing the gate G is moved away from the gate G and the runner R in conjunction with mold opening, so that the molded product P and the material left in the runner R can be easily removed. In particular, the gate tearing mechanism 1301 can tear the gate G without breaking the material in the runner R, so that the mechanism for removing the material left in the runner R is simplified.

Further, the gate tearing mechanism 1301 can be incorporated into the molding die with the tearing piece 1303 and the retaining piece 1321 housed in the holder 1351, and therefore, the gate tearing mechanism 1301 can have a compact configuration and be easily attached to the molding die. In particular, the holder 1351, the tearing piece 1303, the retaining piece 1321, and the driving piece 1341 can be assembled into a single independent unit; the gate cutting mechanism 1301 as a single unit can be more easily attached to the molding die.

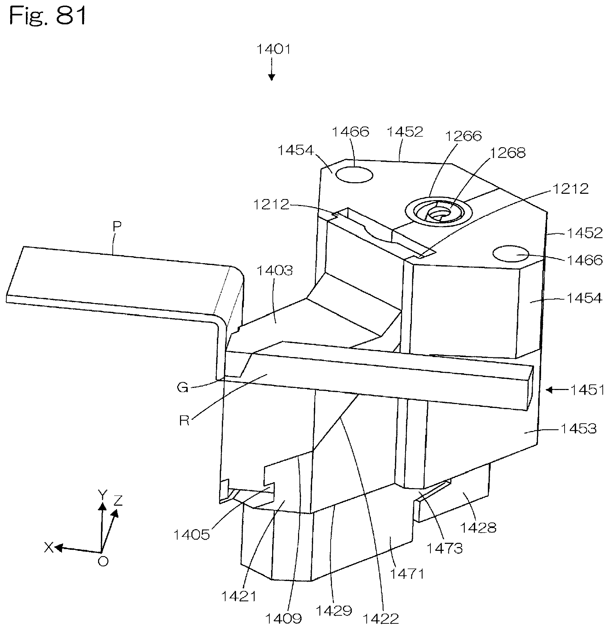

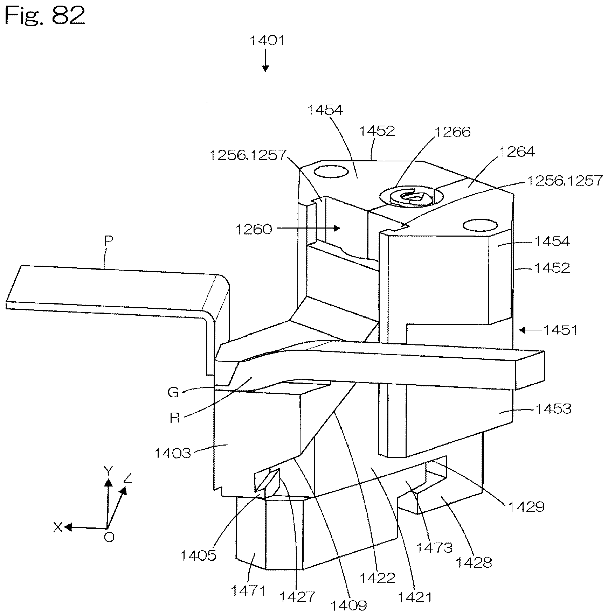

Fig. 81 and Fig. 82 are perspective views illustrating operations of a gate tearing mechanism 1401 according to a twenty-second embodiment of the present invention. The gate tearing mechanism 1401 according to the twenty-second embodiment of the present invention has a same basic configuration as that of and shares many common points with the gate tearing mechanism 1201 according to the twentieth embodiment of the present invention. Features corresponding to the features of the gate tearing mechanism 1201 according to the twentieth embodiment of the present invention as shown in Fig. 72 to Fig. 76 are denoted with like reference numerals, and description thereof is omitted. For the sake of convenience, in the following description, the "upper" side means the side of the flange 1454 of the holder 1451 in Fig. 81 and the "lower" side means the side of the guiding piece 1471 in Fig. 81. In the following description, the "left" side corresponds to the left side in Fig. 81, and the "right" side means the opposite side, unless otherwise specifically noted.

As with the gate tearing mechanism 801 according to the sixteenth embodiment of the present invention, the gate tearing mechanism 1401 according to the twenty-second embodiment of the present invention is incorporated into and used in a molding die including a fixed die which molds an external surface of a molded product P and a movable die which molds an internal surface of the molded product P. Such a molding die which includes the fixed die and the movable die and is capable of being used with the gate cutting mechanism 1401 incorporated therein is not limited to a particular type.

The gate cutting mechanism 1401 is operable to cut a gate G connecting a molded product P to a runner R and is configured to tear a gate G by a cutting piece 1403 in conjunction with opening the molding die and then to move the cutting piece 1403 away from the gate G and a runner R so as to allow a material left in the runner R to be removed. The gate cutting mechanism 1401 of the present embodiment also employs the sliding mechanism 1 of the first embodiment.

The gate cutting mechanism 1401 includes: a cutting piece 1403 which cuts a gate G; a retaining piece 1421 which is slidably engaged with the cutting piece 1403 to slide the cutting piece 1403; a holder 1451 which partially houses the cutting piece 1403 and the retaining piece 1421 and slides the retaining piece 1421; and a guiding piece 1471 which guides the retaining piece 1421 (see Fig. 81).

The cutting piece 1403 of the present embodiment corresponds to the second piece 21 of the sliding mechanism 1 of the first embodiment; the retaining piece 1421 corresponds to the first piece 11; and the holder 1451 corresponds to the guiding body 31. In the present embodiment, the cutting piece 1403 corresponds to a slider; and the holder 1451 corresponds to a guide body. As described later, a guiding groove corresponds to a guide unit; a first guiding part corresponds to a first guide unit; and a second guiding part corresponds to a second guide unit. A click 1212 of the cutting piece 1403 corresponds to an engagement unit; a first sliding surface of the click 1212 corresponds to a first engagement unit; and a second sliding surface of the click 1212 corresponds to a second engagement unit. The retaining piece 1421 and the cutting piece 1403 are slidably engaged with each other. The retaining piece 1421 corresponds to an engaging member, and the guiding piece 1471 corresponds to an engaging member guide unit.

The cutting piece 1403 is configured to shape a gate G and to cut the gate G. The cutting piece 1403 includes, at an upper tip end thereof, a narrow recessed part for shaping a gate G and an L-shaped recessed part which serves as a part of a runner groove for shaping a runner R. The side of the tip end of the cutting piece 1403 corresponds to the left side in Fig. 81. At upper parts of the cutting piece 1403 opposite from the tip end side, the cutting piece 1403 includes the clicks 1212 which are slidably fitted into the guiding grooves 1256 of the holder 1451. The clicks 1212 are located at upper parts of a front face wall and a back face wall of cutting piece 1403 in a protruding manner. Therefore, the clicks 1212 may be considered as protruding lines.

The clicks 1212 have the same structure as the clicks 1212 as shown in Fig. 76, and left side faces 1213 and right side faces 1214 of the clicks 1212 serve as first sliding surfaces which come into contact with left side surfaces and right side surfaces of first guiding parts 1257 of guiding grooves 1256 of the holder 1451. Upper side faces 1215 and lower side faces 1216 of the clicks 1212 serve as second sliding surfaces which come into contact with upper side surfaces and lower side surfaces of second guiding parts 1258 of the guiding groove 1256 of the holder 1451 in order to move the cutting piece 1403 after cutting the gate G away from the gate G and the runner R (see Fig. 76).

A bottom face of the cutting piece 1403 is an inclined surface inclined downward to the front, and the cutting piece 1403 includes, at a lower end thereof, a protruding line 1405. The protruding line 1405 is slidably fitted into a recessed groove of the retaining piece 1421. Above the protruding line 1405, the cutting piece 1403 includes an inclined surface 1409 which is parallel to the protruding line 1405 and is slidably into contact with a left side face of the retaining piece 1421.

The retaining piece 1421 is configured to move the cutting piece 1403 so as to cut the gate G. The left side face of the retaining piece 1421 is an inclined surface 1422 which includes a recessed groove 1427 which slidably receives the protruding line 1405 of the cutting piece 1403. The inclined surface 1422 of the retaining piece 1421 is slidably in contact with the inclined surface 1409 of the cutting piece 1403.

The structure of a right side face of the retaining piece 1421 is similar to that of the right side face of the retaining piece 1221. Referring to Fig. 76, the right side face of the retaining piece 1421 is an inclined surface which is inclined downward to the right, and the protruding lines 1225, 1226 are located on the front face wall 1227 and the back face wall and extend along right side face. The protruding lines 1225, 1226 are slidably fitted into the second guiding parts 1258 of the guiding grooves 1256 of the holder 1451.

The retaining piece 1421 includes an inversed L-shaped click 1428 at a right bottom part thereof. Between a bottom face 1429 of the retaining piece 1421 and the click 1428, there is a recessed part which slidably receives a protrusion 1473 at a rear end of the guiding piece 1471.

The guiding piece 1471 includes, at the rear end thereof, the protrusion 1473 which comes into engagement with the click 1428 of the retaining piece 1421, and guides the retaining piece 1421 through the protrusion 1473. When the gate cutting mechanism 1401 is incorporated into the molding die, the guiding piece 1471 is fixed to the movable die.

The holder 1451 partially houses the cutting piece 1403 and the retaining piece 1421 and guides the cutting piece 1403 such that the cutting piece 1403 cuts the gate G and the cutting piece 1403 after cutting the gate G is moved away from the gate G and the runner R. The holder 1451 includes two half holder members 1452 of a substantially same shape which are assembled together. The holder 1451 may be constituted by a plurality of divided members or be integrated with the fixed die.

The holder 1451 has a same configuration as the holder 1251. The holder 1451 will be described with reference to Fig. 76. The holder 1451 includes a body 1453 having a substantially cuboid shape and a flange 1454 integrated with the body 1453 at an upper part of the body 1453. The body 1453 is open on a left side face thereof and includes a housing part 1260 therein which partially houses the cutting piece 1403 and the retaining piece 1421. The housing part 1260 narrows to the right and includes an inclined surface 1261 which is inclined downward to the right inside the housing part 1260. The second guiding parts 1258 of the guiding grooves 1256 extend along the inclined surface 1261.

The holder 1451 includes the guiding grooves 1256 which guide the cutting piece 1403 on the front-face-wall inner surface 1262 and the back-face-wall inner surface 1263 of the holder 1451. Each guiding groove 1256 has a dog-legged shape and includes a first guiding part 1257 which guides the cutting piece 1403 in the first direction and a second guiding part 1258 which guides the cutting piece 1403 in the second direction. The first guiding part 1257 extends in the vertical direction (i.e., Y direction), and the second guiding part 1258 is inclined diagonally downward to the right such that a lower part thereof is located on the right. The first guiding part 1257 and the second guiding part 1258 are connected to each other, and a center axis of the first guiding part 1257 and a center axis of the second guiding part 1258 intersect with each other (see Fig. 76).

The first guiding parts 1257 guide the cutting piece 1403 such that the cutting piece 1403 cuts the gate G in conjunction with mold opening. On the other hand, the second guiding parts 1258 guide the cutting piece 1403 such that the cutting piece 1403 after cutting the gate G is moved away from the gate G and the runner R in conjunction with mold opening. The second guiding parts 1258 also receive the protruding lines 1225, 1226 of the retaining piece 1421 and guide movement of the retaining piece 1421.

The holder 1451 includes a stopper receiving hole 1266 which houses a stopper 1267 for preventing movement of the retaining piece 1421. The stopper insertion hole 1266 opens on the upper face 1264 and includes a lower end communicated with the housing part 1260 (see Fig. 76). The flange 1454 includes a bolt insertion hole 1466 for fixing the holder 1451 to the fixed die.

The stopper 1267 is a bottomed cylindrical member which prevents movement of the retaining piece 1421 and includes a spring 1268 placed therein. The stopper 1267 is slidably inserted into the stopper receiving hole 1266 such that a lower end of the stopper 1267 projects into the housing part 1260. Once the retaining piece 1421 retracts, and a movement restricting part (not illustrated) on the retaining piece 1421 hits the stopper 1267, the movement is prevented.

The spring 1268 is placed in the stopper 1267 and presses the stopper 1267 downward (i.e., in the -Y direction) when the gate cutting mechanism 1401 is incorporated into the molding mold.

An operation and effects of the gate cutting mechanism 1401 of the present embodiment will be described with reference to an exemplary case where a molded product P is molded by injection molding when the gate cutting mechanism 1401 is incorporated into a molding die similar to that as shown in Fig. 65 which includes the fixed die 602 and the movable die 702. Features corresponding to the features of the of the fixed die 602 and the movable die 702 as shown in Fig. 65 are denoted with like reference numerals, and description thereof is omitted.

The gate cutting mechanism 1401 is incorporated into the holder 1451 with the protruding line 1405 of the cutting piece 1403 fitted into the recessed groove 1427 of the retaining piece 1421. In this state, the clicks 1212 of the cutting piece 1403 are fitted into the first guiding parts 1257 of the guiding grooves 1256 of the holder 1451, and the protruding lines 1225, 1226 of the retaining piece 1421 are fitted into the second guiding parts 1258 of the guiding grooves 1256 of the holder 1451 (see Fig. 76). The holder 1451 is arranged such that the flange 1454 of the holder 1451 is fixed to the fixed mold plate 605, and when the mold is closed, the body 1453 of the holder 1451 is located in the recessed part 728 of the movable die 702. The guiding piece 1471 is fixed to the bottom face of the recessed part 728 of the movable die 702, and the protrusion 1473 is engaged with the click 1428 of the retaining piece 1421.

When the mold is closed, the cutting piece 1403 is at a position for shaping a gate G and a runner R (see Fig. 81). When the mold is closed, parting faces (PL faces) of the fixed die 602 and the movable die 702 are fitted together to define a cavity part. Then, a molten resin is injected from a non-illustrated injection device, and the resin passes through a sprue (not illustrated), then through the runner R and the gate G and fills in the cavity part. After a pressure holding step and a cooling step, the mold is opened, and a molded product P is taken out. The processes of opening the mold and taking out the molded product P are performed according to the following procedure.

Once the movable die 702 retracts and the mold starts to open, the retaining piece 1421 slidably engaged with the guiding piece 1471 and the cutting piece 1403 slidably engaged with the retaining piece 1421 descend along with the movable die 702. On the other hand, the holder 1451 remains in the same position because it is fixed to the fixed die 602. Therefore, when the mold starts to open, the holder 1451 ascends relative to the cutting piece 1403 and the retaining piece 1421 (see Fig. 82).

At the same time, the clicks 1212 of the cutting piece 1403 are guided by the first guiding parts 1257 of the guiding grooves 1256 in the holder 1451 and move in the -Y direction with respect to the molded product P. Thus, the gate G is torn as a shearing force acts thereto, and the resin in the runner R is pulled back. The retaining piece 1421 is guided by the second guiding parts of the guiding grooves in the holder 1451. At the same time, the click 1428 slidably comes into contact with the protrusion 1473 of the guiding piece 1471, so that the retaining piece 1421 retracts toward the side of the holder 1451 without largely changing a height position relative to the molded product P (see Fig. 82).

In the gate cutting mechanism 1401 of the present embodiment, when the cutting piece 1403 descends to cut the gate G, the runner R is pushed down. Since the cutting piece 1403 includes the recessed part for shaping the gate G and the L-shaped recessed part which serves as a part of a runner groove for shaping a runner R, a space is creased below the runner R when the cutting piece 1403 descends. This allows the runner R to deflect, so that it is possible to prevent breakage of the runner R (see Fig. 82).

After the cutting piece 1403 cuts the gate G in conjunction with mold opening, as the gap further increases between the fixed die 602 and the movable die 702, the cutting piece 1403 moves along the second guiding parts 1258, while the second sliding surfaces of the clicks 1212 slide in the second guiding parts 1258 of the guiding grooves 1256 of the holder 1451. Thus, the cutting piece 1403 moves away from the runner R. When the movable die 702 descends further, the retaining piece 1421 is disengaged from the guiding piece 1471, and the retaining piece 1421 is connected to the holder 1451 together with the cutting piece 1403. Thus, a necessary space is secured to take out the molded product P and the resin which is torn and left in the runner R. Then, a non-illustrated ejector mount plate moves up, and the molded product P and the resin left in the runner R are ejected by the ejector pin.

As described above, the gate cutting mechanism 1401 can achieve a compact and simple configuration and can operate such that the gate G can be cut easily and reliably prior to taking out the molded product P. In addition, the cutting piece 1403 after cutting the gate G is moved away from the gate G and the runner R in conjunction with mold opening, so that the molded product P and the material left in the runner R can be easily removed. In particular, the gate cutting mechanism 1401 can cut the gate G without breaking the material in the runner R, so that the mechanism for removing the material left in the runner R is simplified.

Further, the gate cutting mechanism 1401 can be incorporated into the molding die with the cutting piece 1403 and the retaining piece 1421 housed in the holder 1451, and therefore, the gate cutting mechanism 1401 can have a compact configuration and be easily attached to the molding die. In particular, the holder 1451, the cutting piece 1403, the retaining piece 1421, and the guiding piece 1471 can be assembled into a single independent unit; the gate cutting mechanism 1401 as a single unit can be more easily attached to the molding die.

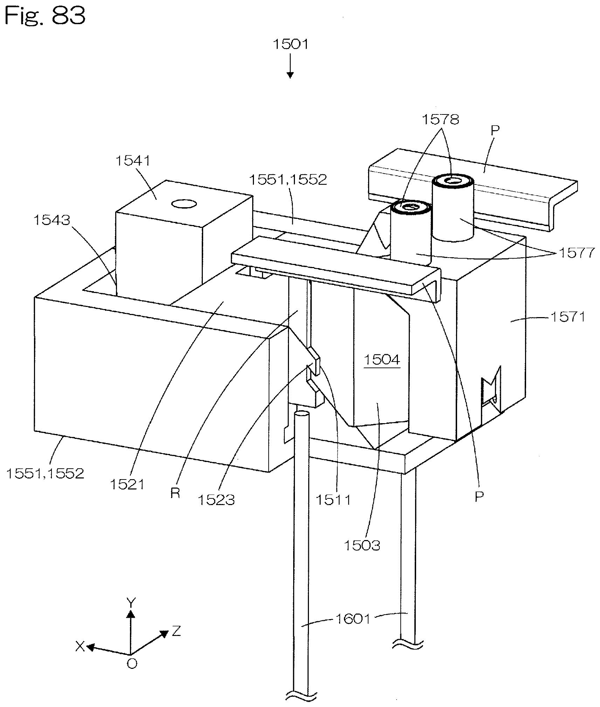

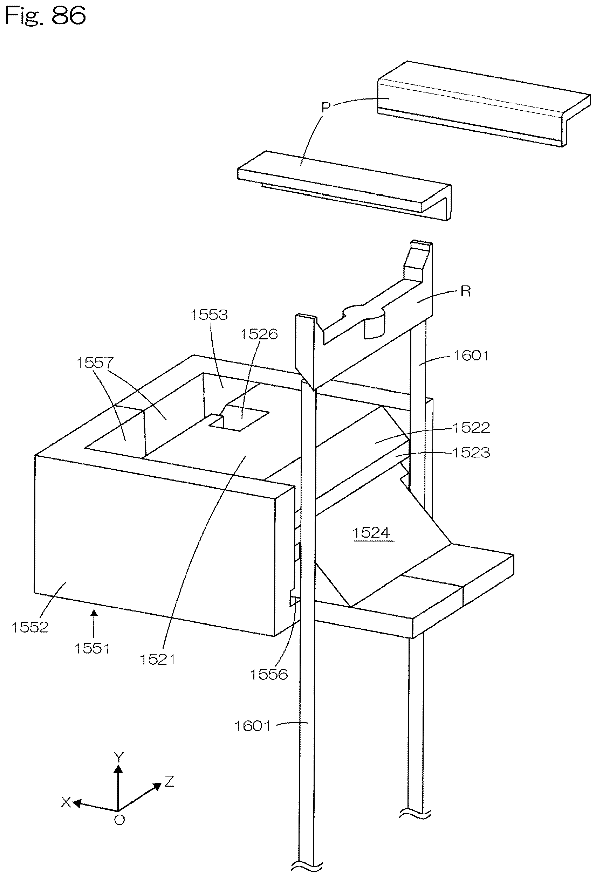

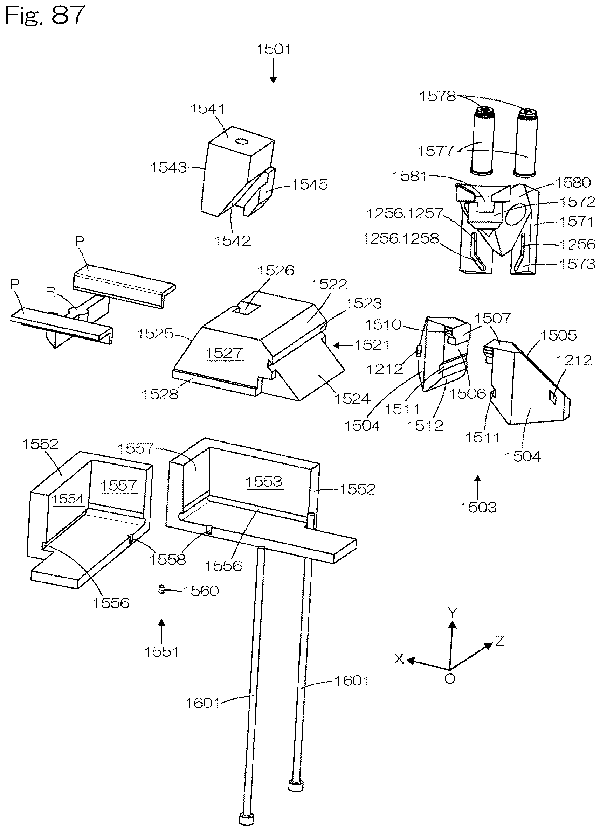

Fig. 83 to Fig. 86 are perspective views illustrating operations of a gate tearing mechanism 1501 according to a twenty-third embodiment of the present invention. Fig. 87 is an exploded view showing features of the gate tearing mechanism 1501 according to the twenty-third embodiment of the present invention. The gate tearing mechanism 1501 according to the twenty-third embodiment of the present invention has a same basic configuration as and shares many common points with the gate tearing mechanism 1201 according to the twentieth embodiment of the present invention. Features corresponding to the features of the gate tearing mechanism 1201 according to the twentieth embodiment of the present invention as shown in Fig. 72 to Fig. 76 are denoted with like reference numerals, and description thereof is omitted. For the sake of convenience, in the following description, the "upper" side means the side of the molded product P in Fig. 83, and the "lower" side means the side of the ejector pin 1601 in Fig. 83. In the following description, the "left" side corresponds to the left side in Fig. 83, and the "right" side means the opposite side, unless otherwise specifically noted.

As with the gate tearing mechanism 801 according to the sixteenth embodiment of the present invention, the gate tearing mechanism 1501 according to the twenty-third embodiment of the present invention is incorporated into and used in a molding die including a fixed die which molds an external surface of a molded product P and a movable die which molds an internal surface of the molded product P. Such a molding die which includes the fixed die and the movable die and is capable of being used with the gate tearing mechanism 1501 incorporated therein is not limited to a particular type.

The gate tearing mechanism 1501 is operable to tear a gate G connecting a molded product P to a runner R and is configured to tear a gate G by a tearing piece 1503 in conjunction with opening the molding die and then to move the tearing piece 1503 away from the gate G and a runner R so as to allow a material left in the runner R to be removed. The gate tearing mechanism 1501 of the present embodiment also employs the sliding mechanism 1 of the first embodiment.

The gate tearing mechanism 1501 includes: a tearing piece 1503 which tears a gate G; a retaining piece 1521 which is slidably engaged with the tearing piece 1503 to slide the tearing piece 1503; a driving piece 1541 which is engaged with the retaining piece 1521 to retract the retaining piece 1521; a holder 1551 which partially houses and guides the retaining piece 1521 and the driving piece 1541; and a tearing piece holder 1571 which guides the tearing piece 1503 (see Fig. 87).

The tearing piece 1503 of the present embodiment corresponds to the second piece 21 of the sliding mechanism 1 of the first embodiment; the retaining piece 1521 corresponds to the first piece 11; and the tearing piece holder 1571 corresponds to the guiding body 31. In the present embodiment, the tearing piece 1503 corresponds to a slider, and the tearing piece holder 1571 corresponds to a guide body. As described later, a guiding groove 1256 corresponds to a guide unit; a first guiding part corresponds to a first guide unit; and a second guiding part corresponds to a second guide unit. A click 1212 corresponds to an engagement unit; a first sliding surface of the click 1212 corresponds to a first engagement unit; and a second sliding surface of the click 1212 corresponds to a second engagement unit. The retaining piece 1521 and the tearing piece 1503 are slidably engaged with each other. The retaining piece 1521 corresponds to an engaging member, and a guiding groove 1556 in the holder 1551 corresponds to an engaging member guide unit.

The tearing piece 1503 is configured to shape a gate G and cutting the gate G. In the present embodiment, the gate tearing mechanism 1501 includes two tearing piece 1503 in order to adapt to a molding die which molds two molded products P. The two tearing piece 1503 have the same structure and the same size. Each tearing piece 1503 includes a protruding portion 1507 at an upper part thereof and a narrow recessed part 1510 at a side of the protruding portion 1507, the recessed part 1510 being configured to shape a gate G. A left side face 1506 below the protruding portion 1507 serves as a part of a runner groove for shaping a runner R. The left side face 1506 includes, at a lower part thereof, a recessed groove 1511 extending in the Z direction. The recessed groove 1511 is engaged with a protruding line 1523 of the retaining piece 1521.

A side face wall 1504, which is located on a back face side when the protruding portion 1507 of each tearing piece 1503 is viewed straightforwardly, includes a click 1212 which is slidably fitted into a guiding groove 1256 of the tearing piece holder 1571. The click 1212 is located on the side face wall 1504 in a protruding manner. Therefore, the click 1212 may be considered as a protruding line.

These clicks 1212 have the same structure as that of the clicks 1212 as shown Fig. 76, left side faces 1213 and right side faces 1214 of the clicks 1212 serve as first sliding surfaces which come into contact with left side surfaces and right side surfaces of first guiding parts 1257 of guiding grooves 1256 of the tearing piece holder 1571. Upper side faces 1215 and lower side faces 1216 of the clicks 1212 serve as second sliding surfaces which come into contact with upper side surfaces and lower side surfaces of second guiding parts 1258 of guiding grooves 1256 of the tearing piece holder 1571 in order to move the tearing piece 1503 after tearing the gate G away from the gate G and the runner R (see Fig. 76).

A back face wall 1505, which is also located on the back face side when the protruding portion 1507 of each tearing piece 1503 is viewed straightforwardly, is an inclined surface which inclines downward to the rear (to the side opposite to the protruding portion 1507). The back face wall 1505 slidably comes into contact with an inclined surface located on the front side of the tearing piece holder 1571. A side face of the tearing piece 1503 which is opposite to the side face wall 1504 in a plan view slidably comes into contact with a protruding portion 1572 of the tearing piece holder 1571. The tearing piece 1503 also includes an inclined surface 1512 which is located below the recessed groove 1511 and slidably comes into contact with an inclined surface of the retaining piece 1521.

The tearing piece holder 1571 engages with the two tearing pieces 1503 and guides them such that the two tearing pieces 1503 simultaneously tear the gates G and the tearing pieces 1503 after tearing the gates G are moved away from the gates G and the runner R. The tearing piece holder 1571 includes a protruding portion 1572 on the front face side thereof, and inclined surfaces located on both sides of the protruding portion 1572 slidably come into contact with side faces of the tearing pieces 1503 which are opposite to the side face walls 1504 in a plan view.

The protruding portion 1572 includes, at a tip end portion thereof, a recessed part 1581 which defines a part of a sprue. On opposite sides of the protruding portion 1572, a runner R connected to the sprue is shaped, and a bottom face of the protruding portion 1572 serves as a part of a runner groove which shapes the runner R.

On opposite side-face inner walls 1573 of the tearing piece holder 1571, there are the guiding grooves 1256 which slidably receive the clicks 1212 of the tearing piece 1503. Each guiding groove 1256 has a dog-legged shape and includes a first guiding part 1257 which guides the tearing piece 1503 in the first direction and a second guiding part 1258 which guides the tearing piece 1503 in the second direction. The first guiding part 1257 extends in the vertical direction (i.e., Y direction), and the second guiding part 1258 is inclined diagonally downward. The first guiding part 1257 and the second guiding part 1258 are connected to each other, and a center axis of the first guiding part 1257 and a center axis of the second guiding part 1258 intersect with each other (see Fig. 87).

The first guiding part 1257 guides the tearing piece 1503 such that the tearing piece 1503 tears the gate G in conjunction with mold opening. On the other hand, the second guiding part 1258 guides the tearing piece 1503 such that the tearing piece 1503 after tearing the gate G is moved away from the gate G and the runner R in conjunction with mold opening.

The tearing piece holder 1571 also includes stopper insertion holes which house stoppers 1577 for preventing movement of the tearing pieces 1503. Each stopper insertion hole opens on the upper face 1574 and includes a lower end which penetrates a front inclined surface 1580 of the holder 1571.

Each stopper 1577 is a bottomed cylindrical member which prevents movement of the tearing piece 1503 and includes a spring 1578 placed therein. The stoppers 1577 are slidably inserted into the stopper insertion holes such that lower ends of the stoppers 1577 project from the front inclined surface 1580. Once the tearing pieces 1503 retract, and movement restricting parts (not illustrated) on the tearing pieces 1503 hit the stoppers 1577, the movement is prevented.

The springs 1578 are placed in the stoppers 1577 and press the stoppers 1577 downward (i.e., in the -Y direction) when the gate tearing mechanism 1501 is incorporated into the molding mold.

The retaining piece 1521 is configured to move the tearing pieces 1503 such that the tearing pieces 1503 tear the gates G. The retaining piece 1521 includes an inclined surface 1522 at an upper part of a right side face thereof as shown in Fig. 87 and a protruding line 1523 extending in the Z direction which is shaped by a recessed part located below the inclined surface 1522. The protruding line 1523 is slidably fitted into the recessed grooves 1511 of the two tearing pieces 1503. The inclined surface 1522 of the retaining piece 1521 serves as a part of the runner groove for shaping the runner R. At a lower part of the right side face of the retaining piece 1521, there is an inclined surface 1524 which slidably comes into contact with the inclined surfaces 1512 of the tearing pieces 1503.

A left side face of the retaining piece 1521 is an inclined surface 1525 extending downward to the left, and the inclined surface 1525 includes a dovetail groove 1526 which slidably receives a click 1545 of the driving piece 1541. The retaining piece 1521 includes, on a front-face outer wall 1527 and a back-face outer wall thereof, protruding lines 1528 which extend in the X direction and are slidably fitted into guiding grooves (recessed grooves) 1556 in the holder 1551.

The holder 1551 partially houses the retaining piece 1521 and the driving piece 1541 and guides the tearing pieces 1503 such that the tearing pieces tear 1503 the gates G and the tearing pieces 1503 after tearing the gates G are moved away from the gates G and the runner R. The holder 1551 includes two half holder members 1552 of a same shape and a same size which are assembled together so as to have a box-like column shape with an open right side face and an open upper face. The holder 1551 may be constituted by a plurality of divided members or be integrated with the movable mold plate 711.

The holder 1551 includes guiding grooves 1556 which guide the retaining piece 1521 on a front-face-wall inner surface 1554 and a back-face-wall inner surface 1553 thereof. The guiding grooves 1556 are recessed grooves extending in the horizontal direction (i.e., X direction) and are configured to receive the protruding lines 1528 on the retaining piece 1521 to guide the retaining piece 1521 in the horizontal direction (i.e., X direction) in conjunction with mold opening. A left-side inner wall surface 1557 of the holder 1551 is an outwardly inclined surface extending upward. The left-side inner wall surface 1557 comes into contact with a left side face 1543 of the driving piece 1541. The holder 1551 also includes, on a bottom face thereof, a recessed part 1558 which receives a ball plunger 1560.

The driving piece 1541 is configured to move the retaining piece 1521 such that the tearing pieces 1503 tear the gates G. A right side face of the driving piece 1541 is an inclined surface 1542, and the inclined surface 1542 slidably comes into contact with the left side face 1525 of the retaining piece 1521. The driving piece 1541 also includes a click 1545 which extends along the inclined surface 1542 and is slidably fitted into the recessed groove 1526 of the retaining piece 1521. The click 1545 is located on the inclined surface 1542 in a protruding manner. Thus, the click 1545 may be considered as a protruding line. The left side face 1543 of the driving piece 1541 is also slightly inclined, and the driving piece 1541 narrows to a lower part thereof in a front view.

With the driving piece 1541 fitted into a recessed part in the fixed mold plate, the driving piece 1541 is fixed thereto by a fixing screw or the like. When the driving piece 1541 is attached to the fixed mold plate, the inclined surface 1542 and the click 1545 project from the fixed mold plate.

An operation and effects of the gate tearing mechanism 1501 of the present embodiment will be described with reference to an exemplary case where a molded product P is molded by injection molding when the gate tearing mechanism 1501 is incorporated into a molding die similar to that as shown in Fig. 65 which includes the fixed die 602 and the movable die 702. Features corresponding to the features of the of the fixed die 602 and the movable die 702 as shown in Fig. 65 are denoted with like reference numerals, and description thereof is omitted.

A process of incorporating the respective pieces of the gate tearing mechanism 1501 will be described blow. The two tearing pieces 1503 are arranged such that the respective recessed grooves 1511 receives the protruding line 1523 of the retaining piece 1521, and the two tearing pieces 1503 are engaged with the retaining piece 1521. The clicks 1212 of the two tearing pieces 1503 are fitted into the first guiding parts 1257 of the guiding grooves 1256 of the tearing piece holder 1571, and the two tearing pieces 1503 are engaged with the tearing piece holder 1571. The tearing piece holder 1571 is fixed to the fixed mold plate 605.

In this state, the protruding lines 1528 of the retaining piece 1521 are fitted into the guiding grooves 1556 of the holder 1551. An upper part of the driving piece 1541 is fixed to the fixed mold plate 605, and the click 1545 is fitted into the dovetail groove 1526 of the retaining piece 1521. In this state, the left side face 1543 of the driving piece 1541 is in contact with the left-side inner wall surface 1557 of the holder 1551. The holder 1551 is fixed to the recessed part 728 of the movable die 702.

When the mold is closed, the tearing pieces 1503 are located at positions where the tearing pieces 1503 shape the gates G and the runner R. When the mold is closed, parting faces (PL faces) of the fixed die 602 and the movable die 702 are fitted together to define a cavity part. Then, a molten resin is injected from a non-illustrated injection device, and the resin passes through a sprue (not illustrated), then through the runner R and the gates G and fills in the cavity part. After a pressure holding step and a cooling step, the mold is opened, and molded products P are taken out. The processes of opening the mold and taking out the molded products P are performed according to the following procedure.

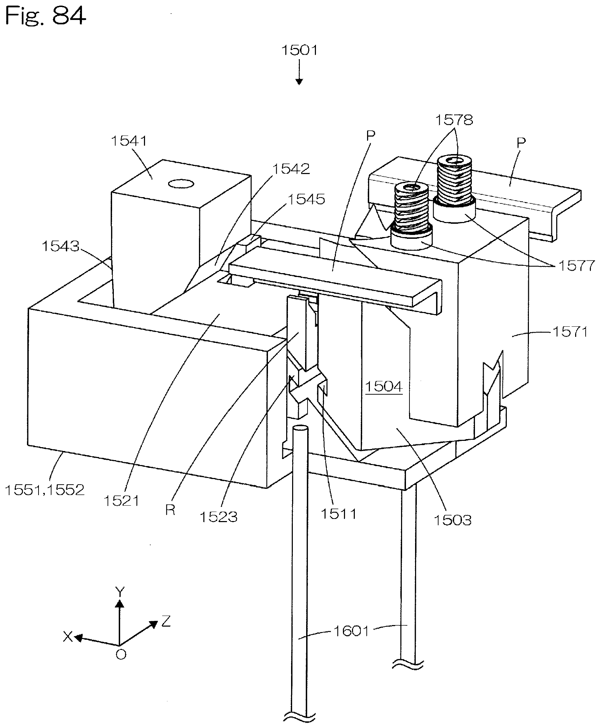

Once the movable die 702 retracts and the mold starts to open, the holder 1551 and the retaining piece 1521 engaged with the holder 1551 descend along with the movable die 702. On the other hand, the driving piece 1541 and the tearing piece holder 1571 remain in the same positions because they are fixed to the fixed die 602. Therefore, when the mold starts to open, the driving piece 1541 and the tearing piece holder 1571 ascend relative to the tearing pieces 1503 and the retaining piece 1521 (see Fig. 84).

When the driving piece 1541 ascends relative to the holder 1551, the retaining piece 1521 retracts (in the X direction). In association therewith, the tearing pieces 1503 engaged with the retaining piece 1521 are guided by the first guiding parts 1257 of the guiding grooves 1256 of the tearing piece holder 1571 and moves in the -Y direction with respect to the molded product P. Thus, the gates G are torn, and the resin in the runner R is pulled back (see Fig. 84).

After the tearing pieces 1503 tear the gates G in conjunction with mold opening, as the gap further increases between the fixed die 602 and the movable die 702, the tearing pieces 1503 move along the second guiding parts 1258, while the second sliding surfaces of the clicks 1212 slide in the second guiding part 1258 of the guiding grooves 1256 of the tearing piece holder 1571. Thus, the tearing pieces 1503 move away from the runner R. When the tearing pieces 1503 move in the -X direction and come into contact with the stoppers 1577, the tearing pieces 1503 stop moving. The retaining piece 1521 is fixed in position because of the ball plunger 1560 attached to the holder 1551. Thus, an original state can be recovered smoothly when the mold is cramped (closed). Instead of the ball plunger 1560, it is possible to use a plate spring or any other elastic body.

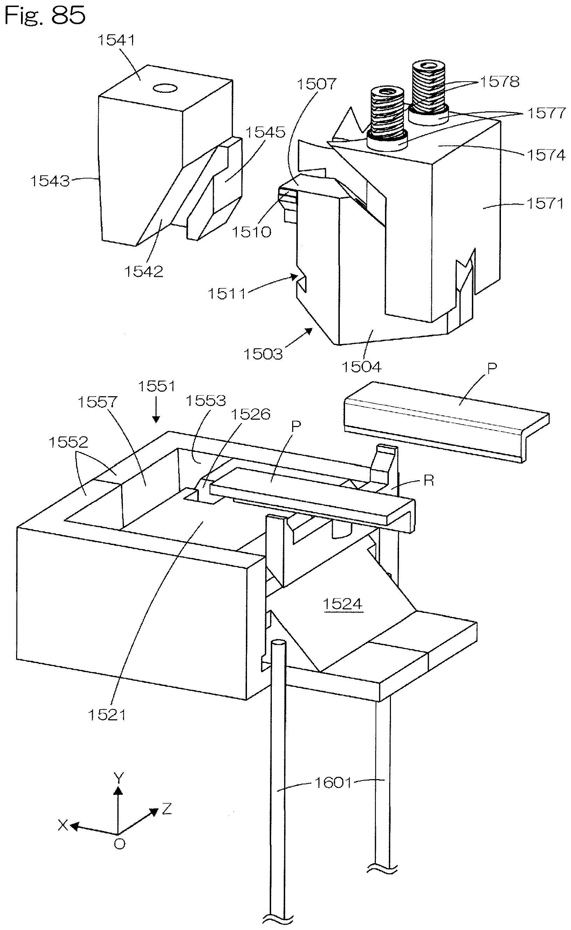

When the movable die 702 descends further, the tearing pieces 1503 are disengaged from the retaining piece 1521, and the tearing pieces 1503 are locked to the tearing piece holder 1571 (see Fig. 85). Thus, a necessary space is secured to take out the molded products P and the resin which is torn and left in the runner R. Then, a non-illustrated ejector mount plate moves up, the resin left in the runner R is ejected by the ejector pin 1601, and the molded products P are also ejected by a non-illustrated ejector pin.

As described above, the gate tearing mechanism 1501 can achieve a compact and simple configuration and can operate such that the gates G can be torn easily and reliably prior to taking out the molded products P. The gate tearing mechanism 1501 can be suitably used in a molding which molds two molded products P. In addition, the tearing pieces 1503 after tearing the gates G are moved away from the gates G and the runner R in conjunction with mold opening, so that the molded products P and the material left in the runner R can be easily removed. In particular, the gate tearing mechanism 1501 can tear the gates G without breaking the material in the runner R, so that the mechanism for removing the material left in the runner R is simplified.

Further, the gate tearing mechanism 1501 can be incorporated into the molding die with the two tearing pieces 1503, the retaining piece 1521, and the driving piece 1541 housed in the holder 1551, and therefore, the gate tearing mechanism 1501 can have a compact configuration and be easily attached to the molding die. In particular, the holder 1551, the tearing pieces 1503, the retaining piece 1521, the driving piece 1541, and the tearing piece holder 1571 can be assembled into a single independent unit; the gate tearing mechanism 1501 as a single unit can be more easily attached to the molding die.

As described above, the sliding mechanisms, the undercut processing mechanisms, the gate cutting mechanisms, the gate tearing mechanisms, the fixed dies, the movable dies, and the molding dies according to the present invention are described with reference to the sliding mechanisms, the undercut processing mechanisms, the gate cutting mechanisms, the gate tearing mechanisms, the fixed dies, the movable dies, and the molding dies according to the first to the twenty-third embodiments. However, the present invention is not limited to the above embodiments, and modification may be made without departing the scope of the present invention.

In the gate tearing mechanism of the sixteenth embodiment, the tearing piece is moved away from the gate and the runner after tearing the gate. Alternatively, the mechanism may be configured such that the tearing piece is moved away from a part of the runner after tearing the gate. This is applicable to the gate tearing mechanisms according to other embodiments. The gate cutting mechanisms may also be configured such that the cutting piece, or the cutter, or the like is moved away from a part of the runner.

The gate tearing mechanisms according to the above embodiments are configured to tear a gate, in other words, to break a gate. Depending on the application, however, it may be required to apply a load to a gate, to extend a gate, or to crack a gate. Depending on the application, it may be required to move a piece away from a gate or a runner or a part of a runner after applying a load to the gate, extending the gate, or cracking the gate

A mechanism which applies a load to a gate, or extends a gate, or cracks a gate may employ any of the gate tearing mechanisms according to the above embodiments. It is only necessary to replace the tearing piece of the gate tearing mechanism with a pulling piece which applies a load to a gate, or extends a gate, or cracks a gate, and such a mechanism can be considered as a gate pulling mechanism. In addition, since an operation of tearing a gate is considered as an aspect of an operation of pulling a gate, the gate pulling mechanism is a generalized concept including the gate tearing mechanism, and thus the gate tearing mechanism according to the present invention may be considered as a gate pulling mechanism according to the present invention.

The undercut processing mechanisms, the gate cutting mechanisms, and the gate tearing mechanisms according to the above embodiments employ cylindrical holders. However, holders useable in the undercut processing mechanisms, the gate cutting mechanisms, and the gate tearing mechanisms according to the present invention are not limited to cylindrical holders. Holders useable in the undercut processing mechanisms, the gate cutting mechanisms, and the gate tearing mechanisms according to the present invention are only required to be capable of housing respective pieces such as a retaining piece in an advanceable and retractable manner and of including a guide unit such as a guiding groove. In addition, housing respective pieces such as a retaining piece may include partially housing them, and housing may be considered as retainment. For example, a component having a shape and structure similar to those of the channel-shaped guiding body of the first embodiment may be used as a holder.

Further, fixing positions of the holders, the driving pieces, or the like are not limited to those of the above embodiments. For example, in the gate tearing mechanism according to the twenty-first embodiment, the holder is fixed to the movable mold plate. However, it is only necessary that the holder is fixed to the movable die or a member which integrally moves with the movable die. Similarly, in the gate tearing mechanism according to the twenty-first embodiment, the driving piece is fixed to the fixed mold plate. However, it is only necessary that the driving piece is fixed to the fixed die or a member which integrally moves with the fixed die. These also apply to other embodiments and to any other members than the holders and the driving pieces.

In the third embodiment, the undercut processing mechanism is incorporated into the movable die. However, the undercut processing mechanism may be incorporated into the fixed die. Similarly, the undercut processing mechanisms, the gate cutting mechanisms, and the gate tearing mechanisms according to other embodiments of the present invention may be incorporated into the fixed die or the movable die in a reverse manner.

The driving mechanisms and driving sources for the undercut processing mechanisms, the gate cutting mechanisms, the gate tearing mechanisms according to the present invention are not limited to those of the present embodiments. Two or more undercut processing mechanisms according to the present invention may be incorporated into a single molding die. A combination of an undercut processing mechanism according to the present invention and a gate cutting mechanism or a gate tearing mechanism according to the present invention may be incorporated into a single molding die.

In the description of the undercut processing mechanism 112 according to the fourteenth embodiment of the present invention and the undercut processing mechanism 113 according to the fifteenth embodiment of the present invention, they are described as being incorporated into the molding die 100. However, molding dies capable of incorporating and being used with the undercut processing mechanism 112 according to the fourteenth embodiment of the present invention and the undercut processing mechanism 113 according to the fifteenth embodiment of the present invention are not limited to the molding die 100.

In the previously described embodiments of the present invention, a spring and a gas spring are used as pressing members. However, a different pressing member may be used instead of a spring and a gas spring. Further, a spring may be used in place of a gas spring, or a gas spring may be used in place of a spring in a reverse manner. Other pressing members may include elastic bodies other than springs, ball plungers for position fixing, or any other mechanisms or members may be used alternatively.

In the first embodiment, a recessed groove is used as a guide unit, and a click is used as an engagement unit which engages with the guide unit. However, a protruding line may be used as a guide unit, and a recessed groove may be used as an engagement unit which engages with the guide unit. This also applies to other embodiments. In the above embodiments, a coupling structure (coupling mechanism) using a protruding line (dovetail-groove protruding line) and a dovetail groove is described. The arrangement of the protruding line (dovetail-groove protruding line) and the dovetail groove may be reversed. A coupling structure (coupling mechanism) using a dovetail-groove protruding line and a dovetail groove is an aspect of an engagement structure (engagement mechanism) including a protruding line or a protrusion or a click and a groove for guiding it and is encompassed in the engagement structure (engagement mechanism). Therefore, the first piece 11 of the first embodiment may be considered as an engaging member, and the left- and right-side-wall inner surfaces 34, 36 of the guiding body 31 may be considered as an engaging member guide unit. This is applicable to other embodiments of the present invention. An engagement structure (engagement mechanism) including a protruding line or a protrusion or a click and a groove for guiding it may not necessarily be a dovetail groove structure (dovetail groove mechanism).

In the sliding mechanisms, the undercut processing mechanisms, the gate cutting mechanisms, and the gate tearing mechanisms according to the present invention, the cross sectional shapes of inclined grooves, protruding lines, fitting parts, engaging parts, or locking parts which are brought to be fitted or engaged with each other are not limited to rectangular shapes as illustrated. The cross sectional shapes may be round, triangular, or the like. In the sliding mechanisms, the undercut processing mechanisms, the gate cutting mechanisms, and the gate tearing mechanisms according to the present invention, respective guide units and restricting units for the holders, the retaining pieces, and the sliding pieces are not limited to those of the above embodiments. For example, a linear guide or the like may be used.

In the gate cutting mechanisms, the gate tearing mechanisms, and the molding dies including the same according to the present invention, the gate G is not limited to a particular type. The gate may be of any type such as a side gate, an overlap gate, a submarine gate. In addition, the runner may be of any type such as a cold runner and even a hot runner.

In the gate tearing mechanism according to the twenty-third embodiment of the present invention, the ejector pin fixed to the ejector mount plate is used to take out the molded products P and the resin left in the runner R. However, the molded products P or the material left in the runner R is not necessarily taken out by the ejector pin. Instead of the ejector pin, a robot arm or a human hand may be used. This is applicable to other gate tearing mechanisms and gate cutting mechanisms.

In the sliding mechanisms, the undercut processing mechanisms, the gate cutting mechanisms, the gate tearing mechanisms, and the molding dies according to the present invention, the respective components may have chamfering, round chamfering, or the like at corners or side ridges.

Materials of the respective components used in the sliding mechanisms, the undercut processing mechanisms, the gate cutting mechanisms, the gate tearing mechanisms, and the molding dies according to the present invention are not limited to particular materials. Suitable materials may be employed which are equivalent to those used for components of known undercut processing mechanisms, gate cutting mechanisms, gate tearing mechanisms, and molding dies. It should be noted that for sliding surfaces of the respective components, it is preferable to use a material having good slidablity or a surface processed material so as to have good slidablity.

The sliding mechanisms, the undercut processing mechanisms, the gate cutting mechanisms, the gate tearing mechanisms, and the molding dies according to the present invention may be applied to sliding mechanisms, undercut processing mechanisms, gate cutting mechanisms, gate tearing mechanisms, and molding dies which open horizontally, or vertically, or in other directions.

The undercut processing mechanisms, the gate cutting mechanisms, the gate tearing mechanisms, and the molding dies according to the present invention may suitably used in, besides injection molding dies, other molding die such as die-cast molds as well as mold press molding dies.

Each of the sliding mechanisms, the undercut processing mechanisms, the gate cutting mechanisms, and the gate tearing mechanisms according to the present invention can be assembled into an independent single unit. Therefore, such a sliding mechanism may be considered as a slide device; such an undercut processing mechanism may be considered as an undercut processing device; such a gate cutting mechanism may be considered as agate cutting device; such a gate tearing mechanism may be considered as a gate tearing device; and such a gate pulling mechanism may be considered as a gate pulling device.

The above embodiments are described with reference to the examples where the sliding mechanisms according to the present invention are employed in the undercut processing mechanisms, the gate cutting mechanisms, the gate tearing mechanisms, and the gate pulling mechanisms. However, the sliding mechanisms according to the present invention may also be used as a cutter mechanism or a cutting device which cuts a processing target. The sliding mechanisms according to the present invention may also be incorporated, as a sliding mechanism or a slide device, into other devices than the molding dies, such as a conveying device and a processing device.

Although the present invention has been described in terms of the preferred examples thereof with reference to the drawings, those skilled in the art would readily arrive at various changes and modifications in view of the present specification without departing from the scope of the invention. Accordingly, such changes and modifications are included within the scope of the present invention defined by the appended claims.

### [Reference Numerals]

1, 6, 50 ···· sliding mechanism
11 ···· first piece
15 ···· protruding line
21, 61 ···· second piece
23, 30, 63 ···· click
24, 64 ···· side face
25, 65 ···· side face
26, 68 ···· side face
27 ···· side face
29 ···· dovetail groove
31, 81 ···· guiding body
34, 84 ···· left-side-wall inner surface
36, 86 ···· right-side-wall inner surface
38, 45, 88 ···· guiding groove
39, 89 ···· first guiding part
40, 90 ···· side surface
41, 91 ···· side surface
42, 92 ···· second guiding part
43, 93 ···· side surface
44 ···· side surface
46 ···· third guiding part
48 ···· fourth guiding part
68 ···· side face
73 ···· side face
87 ···· upper inner surface
100, 102, 104, 106, 108, 110, 800, 900, 1000, 1100 ···· molding die
101, 103, 105, 107, 109 ···· undercut processing mechanism
111, 112, 113 ···· undercut processing mechanism
121, 122, 123, 124, 131, 136, 138 ···· holder
127, 127a, 127b, 227, 327, 427, 527a ···· left-side-wall inner surface
130, 130a, 130b, 230, 330, 430 ···· right-side-wall inner surface
134, 164 ···· inclined surface
141, 142, 143a, 143b, 144a, 144b ···· guiding groove
153, 154, 155a, 155b, 159, 159a, 159b ···· guiding groove
160, 162a, 162b, 856, 1256, 1356 ···· guiding groove
145, 145a, 145b, 245, 252, 857, 1257, 1357 ···· first guiding part
146, 146a, 146b, 157, 158, 246 ···· left side surface
147, 147a, 147b, 187, 247 ···· right side surface
148, 148a, 148b, 248, 858, 1258, 1358 ···· second guiding part
149, 151, 249, 253, 311 ···· left side surface
150, 150a, 150b, 250, 254 ···· right side surface
161, 261, 361, 461, 561, 821, 1021, 1221, 1321, 1421, 1521 ···· retaining piece
168, 268, 567 ···· protruding line
169 ···· knock pin
171, 172, 173a, 173b, 174a, 174b, 178, 179 ···· sliding piece
176, 176a, 176b, 276, 376, 467 ···· dovetail groove
177a, 177b ···· recessed groove
179, 194, 271, 371, 471, 571 ···· sliding piece
180, 180a, 180b, 181a, 181b ···· click
188a, 188b, 195a, 195b, 280 ···· click
181, 181a, 186, 189, 190, 197, 281, 285 ···· left side face
182, 182a, 187, 282, 286 ···· right side face
183, 183a, 183b, 185, 283 ···· upper side face
184, 184a, 184b, 284 ···· lower side face
191, 191a, 191b ···· molding core
200, 300, 400, 500 ···· molding die
201, 202, 301, 401, 501, 1401 ···· gate cutting mechanism
221, 321, 421, 521, 776, 851, 1051, 1151, 1251, 1351, 1451 ···· holder
241, 871, 1556 ···· guiding groove
291,491, 591 ···· cutter
367 ···· lock groove
391 ···· first cutter
395 ···· second cutter
405, 505 ···· movable piece
407 ···· presser
408, 409 ···· click
412, 413, 415 ···· protruding line
417 ···· left side face
418 ···· right side face
419 ···· upper side face
420 ···· lower side face
441 ···· first guiding groove
445 ···· first guiding part
448 ···· second guiding part
468, 469 ···· protruding line
507 ···· presser plate
512 ···· right side face
514 ···· inclined surface
531, 531a ···· inclined surface
541 ···· first guiding groove
542 ···· left side surface
543 ···· right side surface
600, 602, 603 ···· fixed die
700, 702, 703 ···· movable die
801,901, 1001, 1101, 1201, 1301, 1501 ···· gate tearing mechanism
803, 1203, 1303, 1503 ···· tearing piece
812, 1212, 1312 ···· click
828, 1273, 1328, 1528 ···· protruding line
841, 941 ···· driving piece
1271 ···· guiding piece
1371 ···· recessed groove
1403 ···· cutting piece
1571 ···· tearing piece holder
P ···· molded product
P1, P4, P5a, P5b ···· undercut portion
P2, P3 ···· protruding portion
G ···· gate
R ···· runner

## Claims

1. A sliding mechanism **characterized by** comprising:
a slider; and
a guide body including a guide unit configured to guide the slider in predetermined directions; wherein
the slider is guided by the guide unit to move in the predetermined directions,
the predetermined directions at least include a first direction and a second direction which are different from each other, and
the guide unit at least includes: a first guide unit configured to guide the slider in the first direction; and a second guide unit configured to guide the slider in the second direction.

2. The sliding mechanism as claimed in claim 1, **characterized by** further comprising
an engaging member configured to slidably engage with the slider, and
an engaging member guide unit configured to guide the engaging member such that the slider can advance and retract.

3. The sliding mechanism as claimed in claim 1 or 2, **characterized in that** the guide body includes the engaging member guide unit.

4. The sliding mechanism as claimed in any one of claims 1 to 3, **characterized in that** the guide body is a holder.

5. The sliding mechanism as claimed in any one of claims 1 to 4, **characterized in that** the sliding mechanism is assembled as a single unit.

6. The sliding mechanism as claimed in any one of claims 1 to 5, **characterized in that** the guide unit is capable of moving the slider in the first direction and subsequently in the second direction or in the second direction and subsequently in the first direction.

7. The sliding mechanism as claimed in any one of claims 1 to 6, **characterized in that**
the first direction extends in one of four shapes including a linear shape, a linear shape having a partially curved part, a curved shape, and a curved shape having a partially linear part, and
the second direction extends in one of four shapes including a linear shape, a linear shape having a partially curved part, a curved shape, and a curved shape having a partially linear part.

8. The sliding mechanism as claimed in any one of claims 1 to 7, **characterized in that**
the slider includes an engagement unit configured to slidably engage with the guide unit, and
the engagement unit includes: a first engagement unit configured to slidably engage with the first guide unit; and a second engagement unit configured to slidably engage with the second guide unit.

9. The sliding mechanism as claimed in claim 8, **characterized in that**
the guide unit includes a recessed groove, and
the engagement unit includes a click or a protrusion or a protruding line configured to be slidably fitted into the recessed groove.

10. The sliding mechanism as claimed in claim 8, **characterized in that**
the guide unit includes a click or a protrusion or a protruding line, and
the engagement unit includes a recessed groove configured to slidably receive the click or the protrusion or the protruding line.

11. The sliding mechanism as claimed in any one of claims 8 to 10, **characterized in that** the engagement unit includes two or more sliding surfaces configured to come into surface contact with the guide unit, or two or more sliding sides configured to come into line contact with the guide unit, or three or more sliding points configured to come into point contact with the guide unit.

12. An undercut processing mechanism comprising the sliding mechanism as claimed in any one of claims 1 to 11, the undercut processing mechanism being configured to remove, from an undercut portion of a molded product, a molding core configured to mold the undercut portion.

13. The undercut processing mechanism as claimed in claim 12, **characterized in that** the guide body is a holder,
the slider is a sliding piece including the molding core, and
the guide unit is configured to guide the sliding piece such that the molding core is removed from the undercut portion, and the molding core avoids collision with another member.

14. The undercut processing mechanism as claimed in claim 12 or 13, **characterized in that** the undercut processing mechanism is assembled as a single unit.

15. A gate cutting mechanism comprising the sliding mechanism as claimed in any one of claims 1 to 11, the sliding mechanism being configured to cut a gate connected to a molded product.

16. The gate cutting mechanism as claimed in claim 15, **characterized in that** the guide body is a holder,
the slider is a sliding piece including a cutter configured to cut the gate, and
the guide unit is configured to guide the sliding piece such that the cutter cuts the gate, and the cutter after cutting the gate is moved away from the gate.

17. The gate cutting mechanism as claimed in claim 15, **characterized in that** the gate cutting mechanism comprises:
a sliding piece including a cutter configured to cut the gate; and
a pressing unit configured to press an area in the vicinity of the gate of the molded product so as to prevent the area in the vicinity of the gate from moving when the cutter cuts the gate,
wherein the guide body is a holder,
the slider is a pressing unit, and
the guide unit is configured to guide the pressing unit so as to prevent the area in the vicinity of the gate from moving when the cutter cuts the gate and to guide the pressing unit such that the pressing unit is moved away from the molded product after the cutter cuts the gate.

18. The gate cutting mechanism as claimed in claim 15, **characterized in that** the guide body is a holder,
the slider is a cutting piece configured to cut the gate, and
the guide unit is configured to guide the cutting piece such that the cutting piece cuts the gate, and the cutting piece after cutting the gate is moved away from the gate, or a runner connected to the gate, or a part of the runner.

19. The gate cutting mechanism as claimed in any one of claims 15 to 18, **characterized in that** the gate cutting mechanism is assembled as a single unit.

20. A gate pulling mechanism comprising the sliding mechanism as claimed in any one of claims 1 to 11, the gate pulling mechanism being configured to pull a gate connected to a molded product to apply a load to the gate, or to extend the gate, or to crack the gate, or to tear the gate.

21. The gate pulling mechanism as claimed in claim 20, **characterized in that** the guide body is a holder,
the slider is a pulling piece configured to pull the gate,
the guide unit is configured to guide the pulling piece such that the pulling piece applies a load to the gate, or extends the gate, or cracks the gate, or tears the gate, and
the guide unit is further configured to guide the pulling piece such that the pulling piece after applying the load to the gate, or extending the gate, or cracking the gate, or tearing the gate is moved away from the gate, or a runner connected to the gate, or a part of the runner.

22. The gate pulling mechanism as claimed in claim 20 or 21, **characterized in that** the gate pulling mechanism is assembled as a single unit.

23. A fixed die or a movable die comprising the sliding mechanism as claimed in any one of claims 1 to 11, or the undercut processing mechanism as claimed in any one of claims 12 to 14, or the gate cutting mechanism as claimed in any one of claims 15 to 19, or the gate pulling mechanism as claimed in any one of claims 20 to 22.

24. A molding die comprising the sliding mechanism as claimed in any one of claims 1 to 11, or the undercut processing mechanism as claimed in any one of claims 12 to 14, or the gate cutting mechanism as claimed in any one of claims 15 to 19, or the gate pulling mechanism as claimed in any one of claims 20 to 22.

25. A molded product molded by the fixed die or the movable die as claimed in claim 23, or the molding die as claimed in claim 24.
